Europäisches Patentamt

(19) European Patent Office

Office européen des brevets

(11) **EP 0 478 796 B1**

(12) **EUROPEAN PATENT SPECIFICATION**

(45) Date of publication and mention
of the grant of the patent:
**17.03.1999 Bulletin 1999/11**

(21) Application number: **91907506.9**

(22) Date of filing: **15.04.1991**

(51) Int. Cl.$^6$: **B23K 9/095**

(86) International application number:
**PCT/JP91/00490**

(87) International publication number:
**WO 91/16168 (31.10.1991 Gazette 1991/25)**

(54) **MAG ARC-WELDING METHOD AND WELDING APPARATUS**

VERFAHREN ZUM MAG-LICHTBOGENSCHWEISSEN UND SCHWEISSAPPARAT

PROCEDE DE SOUDAGE A L'ARC MAG ET APPAREIL DE SOUDAGE

(84) Designated Contracting States:
**DE GB**

(30) Priority: **17.04.1990 JP 102102/90**
**01.10.1990 JP 264493/90**
**01.10.1990 JP 264494/90**
**16.11.1990 JP 311957/90**
**28.12.1990 JP 418489/90**

(43) Date of publication of application:
**08.04.1992 Bulletin 1992/15**

(73) Proprietor: **DAIHEN CORPORATION**
**Osaka-shi, Osaka 532 (JP)**

(72) Inventors:
• **HARADA, Shoji**
**Osaka-shi Osaka 550 (JP)**
• **UEYAMA, Tomoyuki**
**Toyonaka-shi, Osaka 561 (JP)**
• **NAKAMATA, Toshiaki**
**Osaka-shi Osaka 546 (JP)**
• **SHIBATA, Masuo**
**Takarazuka-shi, Hyogo 665 (JP)**
• **OGAWA, Shunichi**
**Takasuki-shi, Osaka 569 (JP)**
• **MATSUMOTO, Ichiro**
**Higashiosaka-shi, Osaka 579 (JP)**
• **DOI, Toshimitsu**
**Nishinomiya-shi, Hyogo 662 (JP)**
• **NAKAI, Hiroshi**
**Izumi-shi, Osaka 590-02 (JP)**

(74) Representative:
**Gura, Henry Alan et al**
**MEWBURN ELLIS**
**York House**
**23 Kingsway**
**London WC2B 6HP (GB)**

(56) References cited:
**EP-A- 0 063 619**     **EP-A- 0 063 619**
**EP-A- 0 333 195**     **JP-A- 1 254 385**
**JP-A-61 279 366**     **US-A- 4 301 355**

• **PATENT ABSTRACTS OF JAPAN vol. 10, no. 238**
**(M-508)16 August 1986**
• **WELDING INTERNATIONAL vol. 4, no. 5, 1990,**
**ABINGTON (GB) pages 399 - 407 , XP000126217**
**YAMAMOTO ET AL. 'The development of welding**
**current control systems for spatter reduction'**
• **WELDING INTERNATIONAL no. 11, 1990,**
**ABINGTON (GB) pages 905 - 907 , XP000151125**
**PFEIFFER 'investigations into the arc and**
**spatter behaviour of pulsed MAG welding'**

**Description**

The present invention relates to a method and apparatus for pulse MAG or MIG arc welding which can obtain a welding bead having a regular waveform appearance or showing an appropriate cross-sectional shape

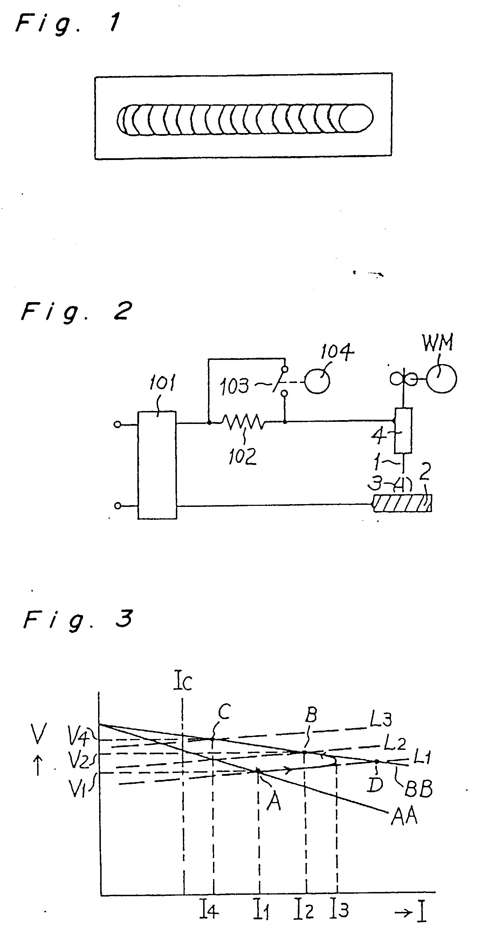

In the recent years, aluminum and aluminum alloy (referred to an aluminum hereinafter) have been used widely for interior structures of buildings, various vehicles and transportation machines. Welded joints of these structures are directly visible and hence are required to have a good appearance in addition to a sufficient mechanical strength. As an arc welding method showing a welding beads of good appearance, a widely used method is a TIG arc welding method having a filler wire added thereto. The welded joint obtained with this method (referred to a TIG filler arc welding method hereinafter) has a bead with a regular wave form (referred to a scale bead hereinafter) as shown in Fig. 1. The welding bead according to the TIG filler arc welding method has a better appearance than that of the MIG arc welding method.

The TIG arc welding method is slower than the MIG arc welding method which melts the consumable electrode, and has a lower production efficiency. Therefore, there have been various proposals to develop the MIG arc welding method to achieve a welding bead appearance similar to the scale bead of the TIG arc welding method.

As one instance, a MIG arc welding method is disclosed in the Japanese Patent Publication (examined) Syo 46-650 in which the arc spray is changed alternatively between high and low values. In order to actually operate this method, the electric power supplied to the arc is alternatively changed between the relatively high and relatively low values (for example 3:2).

Fig 2 shows a block diagram of an electric source for use in this welding method. Fig. 3 is a graph showing a V-I characteristic between an output current (horizontal axis) and an output voltage (vertical axis) (referred to V-I characteristic hereinafter) and an arc characteristic. 101 denotes an output circuit for welding electric source; 102, a resistor for switching the V-I characteristic of the output circuit for welding electric circuit 101; 103, a contact for shortcircuiting and opening the resistor 101; and 104, a timer for switching periodically the contact 103. 1 denotes a consumable electrode wire (referred to a consumable electrode hereinafter) transferred to a workpiece 2 through an electrical supply tip 4 at a predetermined speed by a wire supply motor WM. An arc 3 is generated between the consumable electrode 1 and the workpiece 2 to weld the workpiece 2.

Fig. 3 shows a V-I characteristic AA applied between the consumable electrode 1 and the workpiece 2 when the resistor 102 is connected to the output circuit, a V-I characteristic BB when the resistor 102 is short circuited and arc characteristics at arc lengths of L1 to L3 are shown by dotted lines L1 to L3. It is assumed that an operation point is crossing point A of full line AA and dotted line L1 of Fig. 3 when the consumable electrode 1 is transferred at predetermined value of wire supply speed WF1. At this time, the welding current is in I1 and the arc voltage is in V1.

There are three methods for switching the electric power.

(1) A first method is to switch an output voltage applied across the consumable electrode 1 and the workpiece 2. For example, in Fig. 3, when the V-I characteristic is switched from AA to BB, the welding current I1 does not change but the operation point moves usually to B point of the V-I characteristic curve BB because the wire supply speed and the welding current are not perfectly proportional to each other. However, at the transition, the arc length L1 does not rapidly change with the rapid change in the V-I characteristic curve into the BB curve. Therefore, the operation point moves from a point A on the arc characteristic curve L1 the same as the above curve to a point D. The change causes an increase in the welding current and then an increase in the wire melting speed which results in an increase in the arc length. Then, the arc length changes from the curve L1 to a longer arc length characteristic curve L2 and finally moves to a point B. Therefore, the welding current changes largely from I1 to I3 in a transient state and from I1 to I2 in a steady state.

(2) A second method is to switch the wire supply speed. For example, in Fig. 3, when the wire supply speed is switched, the switching is carried out so as to change the arc length on the V-I characteristic AA and hence the operation point changes from a point B to a point C. Accordingly, the welding electric current changes largely from I2 to I4 and the arc length moves from the operation point of the arc characteristic curve L2 to the operation point of the curve L3.

(3) A third method is to change the V-I characteristic of above case (1) and the wire supply speed at case (2) simultaneously. Accordingly, the welding electric current changes largely from I1 to I4.

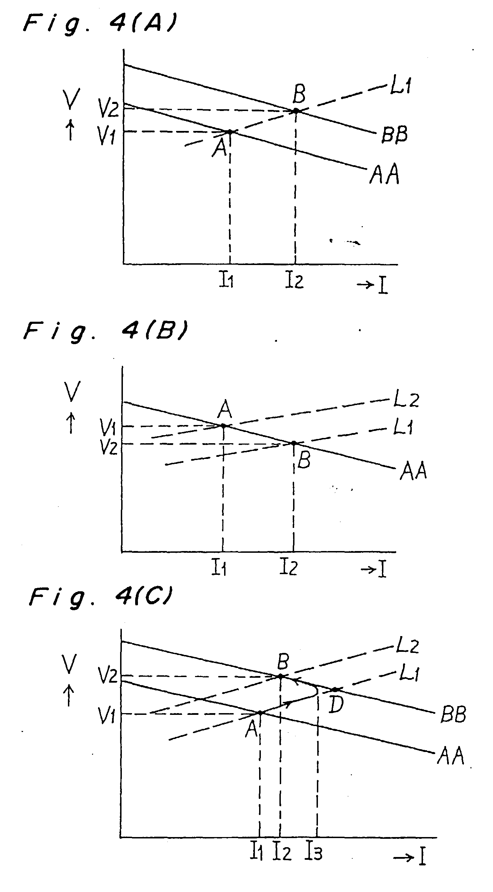

A second prior art example is the MAG welding method described in Japanese Patent Publication (examined) Sho 49-48057 in which the consumable electrode is supplied at a predetermined speed by using a constant voltage characteristic of a welding electric source. The welding method changes periodically the welding current and simultaneously changes the welding wire supply speed with a change in the welding current. That is, this method is to switch between a high electric current (a high output voltage) due to a high speed of wire supply and a low current (a low output voltage) due to a low speed of wire supply and to control input heat. Fig. 4 (A) to (C) are graphs showing V-I characteristic curves AA and BB between the output current of the welding source (horizontal axis) and the output voltage (vertical axis) and arc characteristic curves Li and L2.

There are three practical methods for controlling the input heat mentioned above.

(1) A first method is not to change the arc length between the high current and the low current phases. As shown in Fig. 4 (A), for example, when both the V-I characteristic of the welding source and the wire supply speed are switched, the operation point moves from the operation point A at the crossing point of the V-I characteristic curve AA and the arc characteristic curve L1 to the operation point B of the crossing point of the V-I characteristic curve BB and the arc characteristic curve L1. At this time, the welding current changes largely from I1 to I2 while the arc length is L1 on the same curve does not change.

(2) A second method is to change to a larger degree the wire supply speed than the case (1) when the arc length does not change. That is, with a high current, the wire supply speed is increased and the arc length is made shorter while with a low current, the wire supply speed is reduced and the arc length is longer. For example, as shown in Fig. 4 (B), when the wire supply speed is switched, the operation point moves from the crossing point A of the V-I characteristic curve AA and the arc characteristic curve L2 to the crossing point B of the V-I characteristic curve AA and the arc characteristic curve L2. In this time, the welding current changes largely from I1 to I2 while the arc length changes from L2 to L1.

(3) A third method is to change the wire supply speed to a smaller degree than the case (1) where the arc length does not change. In the high current phase, the wire supply speed is reduced and the arc length is increased while in the low current phase, the wire supply speed is increased and the arc length is reduced. For example, as shown in Fig. 4 (C), when both of the V-I characteristic of the welding source and the wire supply speed are switched, the operation point in the steady state moves from the crossing point A of the V-I characteristic curve AA and the arc characteristic curve L1 to a crossing point B of the V-I characteristic curve BB and the arc characteristic curve L2. However, in the transient state, even when the V-I characteristic curve changes rapidly into the curve BB, the arc length does not rapidly change. However, the operation point moves from the point A to the point D with the same arc length to each other, while the welding current increases. As a result, the wire melting speed is also higher and the arc length is longer. The arc length moves from the curve Li to the curve L2 and finally the operation point moves to the point B. Therefore, the welding current changes largely from I1 to I3 in the transient state and from I1 to I2 in the steady state.

A third prior art example is the pulse MIG welding method described in the Japanese Patent Publication (unexamined) Syo 62-279087 in which a base current or base voltage is switched between a spray transfer and a short circuit transfer to form a scale bead without melting down thin aluminum plate.

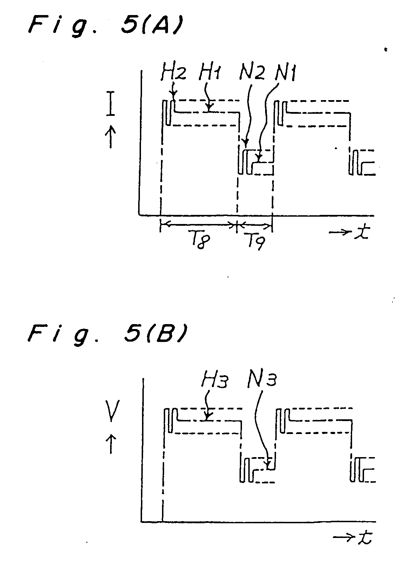

(1) For example, with a welding current having the waveform shown in Fig. 5 (A), a pulse welding source is used comprising a constant pulse current in which pulse current magnitude, pulse width or pulse frequency is a constant value and a variable base current permits the spray transfer and the short circuit transfer to be carried out alternatively by changing the base current periodically to a large degree.

(2) A welding voltage having the waveform shown in Fig. 5 (B), uses a pulse welding source outputting a welding voltage composed of a pulse voltage in which pulse voltage magnitude, pulse width or pulse frequency is a constant value and variable base voltage permits the spray transfer and the short circuit transfer to be carried out alternatively by changing the base voltage periodically to a large degree.

Accordingly, this prior art method switches the wire feed rate as shown in Fig. 5(A) and hence changes periodically the average value of welding current to a large scale by changing the welding current values into an average value H1 at the high current period T8 and the average value N1 at the low current period T9. Thus, it is possible to switch between the spray transfer and the short circuit transfer. Further this prior art method switches the output power of the base electric source in a large scale as shown in Fig. 5(B). In the method shown in Fig. 5 (B), there are small scale welding current value changes in the steady state but large scale changes in the transient state in a similar way to that of the first prior art example described.

In the welding method of the first prior art example, it is necessary to switch alternatively the arc spray value between a high and low values at a current range higher than the critical current Ic necessary for the spray transfer. Accordingly, the wire feed rate must be switched at the same time and thus the welding current I2 necessary for obtaining a high arc spray value is higher than the critical current Ic. This prevents the use of this method for welding a thin plate.

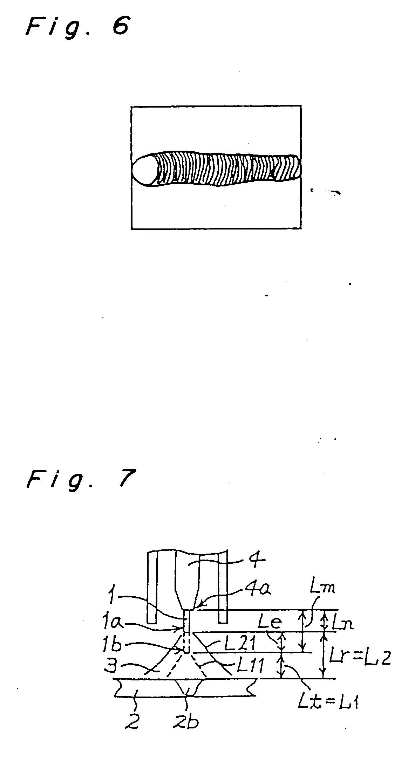

Further, the method causes a relatively large scale change of the welding current (for example 2:3) and can be applicable for a working step such as a step to make a large scale change of the arc force, or to change the penetration depth or to change the amount and the shape of the reinforcement by changing the amount of the deposited metal. However, the method is not suitable for obtaining a bead appearance of the molten pool surface, for example, a scale bead with a constant size of the penetration depth and the reinforcement. As a result, the welding method according to the first prior art example gives a bead appearance as shown in Fig. 6 and cannot match the appearance of a scale bead having a regular ripple pattern as shown in Fig. 1 in connection with the TIG filler arc welding method.

The welding method according to the second prior art example makes large scale changes in the welding current (in the embodiment, 260 [A] and 100 [A], 90 [A] or 60 [A]) to control the input heat by switching periodically the output voltage of the welding source of constant voltage characteristic and the wire feed rate.

Therefore, in a similar way to that of the welding method of the first prior art example, the welding method of the second prior art example causes relatively large scale welding current changes and can be applicable for a working step such as a step to make a large scale change of the arc force, or change the penetration depth or change the amount and the shape of the reinforcement by changing the amount of the deposited metal. Therefore, in a similar manner to the welding method of the first prior art example, the welding method of the second prior art example is not suitable for obtaining the results for which the present invention aims.

The welding method of the third prior art example makes periodic large scale changes in the base current or the base voltage to switch between the spray transfer and the short circuit transfer while keeping constant values of pulse current, pulse voltage, pulse width or a pulse frequency. The object of this welding method is to achieve a scale bead without melting thin aluminum plate. However, the method requires switching between spray transfer and short circuit transfer to be repeated periodically. During the short circuit transfer, the heading terminal of wire is in contact with the molten pool to carry out the metal transfer. As a result, the bead appearance by this third prior art welding method is also as shown in Fig. 6 in a similar way to the first prior art method and does not obtain a scale bead as shown in Fig. 1.

When the above welding methods are adapted for the present invention, there appears at least one problem, as follows.

(1) When the short circuit transfer is carried out, a large drop of the molten metal is transferred irregularly.

The conventional MIG arc welding method is to change the amount of molten wire by changing largely the average value of the welding current with the switching of the wire feed rate. An aluminum alloy A-5183 plate in a thickness of 4 mm is welded by the MIG arc welding method based on the switching between spray transfer and short circuit transfer under the following welding conditions; electrode, aluminum alloy consumable electrode A-5183 of thickness of 1.2 mm; switching period, 2 Hz between a first setting condition of welding current 90 A and welding voltage 19 V and a second setting condition of welding current 180 A and welding voltage 21 V; and a welding speed, 40 cm/min. As a result, the bead appearance so obtained is as that shown in Fig. 6 and cannot match the appearance of a scale bead having a regular ripple pattern as shown in Fig. 1, obtained with the TIG filler arc welding method.

In particular, in high speed welding of a thin plate, it is necessary to decrease the welding current in addition to increasing the pulse switching frequency to more than 3 Hz. Hence, it is possible to set the second welding condition at the welding current necessary for the spray transfer. However, the first condition is to set a low welding current which permits not spray transfer but short circuit transfer. As a result, a large drop of molten metal at the heading end of the wire is in contact with the molten pool and hence it is difficult to make a welding bead as the scale bead obtained with the TIG filler arc welding method.

(2) When the wire feed rate is switched, the response time is low due to the mechanical inertia.

On the other hand, in connection with the welding of thin plate at high speed, it is necessary to elevate the switching frequency between the first welding condition setting value and the second welding condition setting value in response to the welding speed. Otherwise, the weld beads are different in the height and width between the area where the molten metal transfers and the area where the molten metal does not transfer. However, in a conventional MIG arc welding method to change largely the average value of the welding current, it has been necessary to make large changes of the wire feed rate. Hence, the response time is lowered by the mechanical inertia of a wire feed motor and feed mechanism, and the switching frequency is only 3 HZ. In addition, the mechanical inertia makes the switching boundary uncertain. As a result, it is difficult to obtain the scale bead having a regular ripple pattern as shown with the TIG arc welding method.

(3) The welding current has a large variation value.

In the conventional welding source, the welding current varies to a large degree upon the switching of the wire feed rate, because of the constant voltage characteristic of both the first welding condition and the second welding condition. Further, upon the switching of the output voltage of the welding electric source, there is a large variation of the welding current in the transient state because of the constant voltage characteristic. With the large variation in the welding current, there is a large variation in the arc strength, in the penetration depth, or in the height and the shape of the reinforcement due to the variation in the amount of the deposited metal. As a result, it is not possible to change only the surface of the molten metal.

(4) When the wire feed rate is switched, the variation in the arc length is low.

In order to keep the welding at the constant arc length with the MIG or MAG arc welding method, it is necessary to maintain the following equation in principle:

$$\text{wire feed rate} = \text{wire melting speed} \tag{1}$$

(The wire melting speed is a function of the welding current value.)

In a welding electric source having a constant voltage characteristic, the welding current varies with the variation in the wire feed rate as described above. The welding current is approximately proportional to the power of 1.05 to 1.5 of the wire feed rate depending upon the variation in the quality of the consumable electrode or the arc length etc.

In equation (1), the variation in the arc length can be achieved by the variation in the wire feed rate or wire melting speed, that is, the welding current. However, in a welding source having a constant voltage characteristic, since the welding current is determined by the wire feed rate, only the welding current is not set previously with the constant speed of the wire feed rate. Accordingly, in the welding source having a constant voltage characteristic, a method to change the wire feed rate is adopted first. The change in the wire feed rate results in the change in the wire melting speed resulted from the change in the welding current. As a result, the variation in the arc length is small.

Further, a method to change the output voltage with the change in the V-I characteristic of the welding electric source having a constant voltage characteristic determines the arc length by the output voltage and the welding current when the wire is fed at a constant speed. Accordingly, it is not possible for this method to change the arc length by the direct control of the welding current.

An object of the present invention is to provide a MAG or MIG arc welding method and a welding apparatus capable of at least mitigating some or all of the problems described above associated with the prior art methods or apparatus and being characterized by the following features:

(1) no short circuit transfer;
(2) no switching of the wire feed rate in principle;
(3) no large variation in the welding current; and
(4) switching periodically the wire melting speed, that is, the welding current by a small amount in view of the equation, (wire feed rate) = (wire melting speed).

With regard to the switching the output current of the welding electric source, it is possible to make large changes in the arc length by switching the welding output current of the welding source without changing the wire feed rate. A process to set or control the switching output current can suppress the variation in the output current at the transient state within the tolerance of 10 %. As a result, it is possible to make the transferring drops of the molten metal more uniform in size and to prevent a short circuit due to large drop size of the molten metal even with the short arc length. Further, it is possible to elevate the switching frequency F to 25 Hz without changing the wire feed rate.

In the welding source according to the prior art, the welding output voltage only can be switched but the welding current itself can not be switched. It is possible to change the output current due to the self controlling effect of the V-I characteristic of the welding source by switching the wire feed rate with an use of welding source having constant voltage characteristic. Accordingly, it is not possible for the welding source having the constant voltage characteristic according to the prior art to set or control the output current value of the welding source. Therefore, it is not possible for the prior art to set or control the variation value of the output current in the manner that can be achieved by the present invention.

The present invention is able to change the arc length by switching the welding output current without changing the wire feed rate (referred to a basic welding method hereinafter). In addition to the basic welding method, the present invention can provide another welding method described in the following. When the basic welding method is applied to butt welding or lap welding as will be described later, it is possible for the basic welding method to carry out welding even with a large gap. In such a case, since there is not the molten metal to fill the gap, the reinforcement can be obtained by increasing the wire feed rate by 5 to 20% and then increasing the wire melting speed. This welding method is referred to an additional welding method hereinafter.

According to a first aspect of the present invention, there is provided a MAG or MIG arc welding method for achieving a molten metal transfer by changing an arc length while feeding a consumable wire at a predetermined wire feeding rate and suppressing a change in an arc force said method comprising the steps of changing the melting rate of the consumable feed wire by switching between a first welding current having a value $I1$ and a second welding current having a value $I2$ which is larger than said first welding current value $I1$ at a switching frequency F maintained within a range from about 0.5 Hz to about 25 Hz, maintaining said arc at a first length $Lt$ having a value larger than 2 mm when said first welding current is supplied and at a second length $Lr$ having a value larger than said first arc length $Lt$ when said second welding current is supplied, and maintaining a ratio between said second welding current value $I2$ and said first welding current value $I1$ from about 1.03 to about 1.20.

In such a welding method the first and second welding currents I1 and I2 may be set so that a differential voltage ΔVa between a first arc voltage Va1 at said first arc length Lt and a second arc voltage Va2 at said second arc length Lr is maintained within a range from about 0.3 V to about 4.0 V.

It may be arranged that said first welding current value I1 is set to a value capable of generating a first spray transfer with a momentary short-circuit at said first arc length Lt and said second welding current value I2 is set to a value capable of generating a second spray transfer without a momentary short-circuit at said second arc length Lr.

Alternatively, it may be arranged that said first welding current I1 is a pulse current having a pulse current value, a pulse width, a pulse frequency and a base current value, said pulse current value being set to a value capable of generating a first spray transfer with a momentary short circuit at said first arc length Lt, and said second welding current value I2 is set to a value capable of generating a second spray transfer without a momentary short circuit at said second arc length Lr.

In performing the method according to the invention the first welding current may be a first pulse current group comprising a series of first current pulses and having first pulse current parameters including a first pulse current value, a first pulse width, a first pulse frequency and a first base current value, said first pulse current parameters being set to obtain said first arc length, and said second welding current may be a second pulse current group comprising a series of second current pulses and having second pulse current parameters including a second pulse current value, a second pulse width, a second pulse frequency and a second base current value, said second pulse current parameters being set to obtain said second arc length.

It may be further arranged that said switching frequency F and an arc length difference Le between said first arc length Lt and said second arc length Lr are set within a range defined by a graph having an axis of abscissas representative of said switching frequency F and an axis of ordinates representative of said arc length difference Le, said range being defined by an area above a curved plot on said graph, said curve being defined by a line connecting a first point located at F = 0.5 Hz and Le = 2.5 mm, a second point located at F = 12 Hz and Le = 1.0 mm, and a third point located at F = 25 Hz and Le = 0.5 mm.

According to another aspect of the invention, a pulse MAG or MIG arc welding apparatus is provided for carrying out an arc welding operation by supplying a pulse welding current while switching the same between a first pulse current group (P1) for generating a short arc length and a second pulse current group (P2) for generating a long arc length, said apparatus comprising an arc voltage detection circuit (VS) for detecting an arc voltage value and outputting an arc voltage detection signal (Vd) corresponding thereto, an arc voltage setting circuit (VS) for setting a value of arc voltage in accordance with welding conditions and outputting an arc voltage setting signal (Vs) corresponding thereto, a comparison circuit (CM2) for comparing said arc voltage detection signal (Vd) and arc voltage setting signal (Vs) and outputting a difference between said two signals as an arc voltage control signal, a pulse condition control signal generation circuit (IPB) for generating a pulse condition control reference signal (Ipb) for controlling a preselected condition from among four pulse control conditions in common with said first and second pulse current groups (P1),(P2) in accordance with said arc voltage control signal (Cm2), said four pulse control conditions comprising pulse frequency, pulse width, base current value and peak current value, a first pulse current setting circuit (IS1) for setting the remaining three pulse control conditions for said first pulse current group (P1) which have not been preselected and for outputting first pulse current group (P1) setting signals corresponding to said remaining pulse control conditions, a second pulse current setting circuit (IS2) for setting the remaining three pulse control conditions for said second pulse current group (P2) which have not been preselected and for outputting second pulse current group (P2) setting signals including setting signals corresponding to said remaining pulse control conditions, a switching circuit (HL) for generating a switching signal (H1) for switching said first and second pulse current setting circuits (IS1),(IS2) alternatively at a frequency ranging from 0.5 to 25 Hz, a pulse frequency signal generation circuit for generating a pulse frequency signal (Vf1,Vf2) in response to either the pulse frequency control reference signal (Fp3) if there is output from said pulse condition control signal generation circuit (IPB), or, the pulse frequency setting signal (Fp) output alternatively from each of said first and second pulse current setting circuits (IS1),(IS2) if said pulse frequency control signal (Vf3) is not output from said pulse condition control signal generation circuit (IPB), a pulse frequency and width signal generation circuit (DF(3)) for outputting a pulse frequency and width signal (Df3) in response to the pulse frequency control signal (Vf3) and pulse width setting signal (Tp) if the pulse frequency control reference signal (Fp3) is output from said pulse condition control signal generation circuit (IPB), the pulse frequency signal (Vf1,Vf2) and pulse width control signal (Tp3) if the pulse width control signal (Tp3) is output from said pulse condition control signal generation circuit (IPB), or the pulse frequency signal (Vf1,Vf2) and pulse width setting signal (Tp) if the peak current control signal (Ip3) or base current control signal (Ib3) is output from said pulse condition control signal generation circuit (IPB), a pulse current control circuit for outputting first pulse control signal (Pf1) and second pulse control signal (Pf2) alternatively in response to the pulse frequency and width signal (Df3), the peak current setting signal (Ip) and base current setting signal (Ib) if the pulse frequency control reference signal (Tp3) or the pulse width control signal (Tp3) is output from said pulse condition control signal generation circuit, the pulse frequency and width signal (Df3), the peak current control signal (Ip3) and base current setting signal (Ib) if the peak current control signal (Ip3) is output from said pulse condition control signal generation circuit (IPB), or the pulse frequency and width signal (Df3), the peak current setting signal (Ip) and base current control signal (Ib3) if the base current control signal (Ib3) is output from said pulse condition control signal generation circuit (IPB), and a welding power source control circuit (PS) for outputting the first pulse current group (P1) when the first pulse control signal (Pf1) is output from said pulse current control circuit and the second pulse current group (P2) when the second pulse control signal (Pf2) is output from said pulse current control circuit.

It may be preferred that said pulse condition control signal generation circuit (IPB) generates a pulse frequency control reference signal (Fp3) for controlling the pulse frequency in common with said first and second pulse current groups (P1),(P2) as said pulse condition control signal (Ipb) and said pulse frequency signal (Vf1,Vf2) generation circuit generates a pulse frequency signal (Vf1,Vf2) in response to said pulse frequency control reference signal (Fp3) input thereto.

It may also be preferred that said pulse condition control signal generation circuit (IPB) generates a base current value control signal for controlling the base current in common with said first and second pulse current groups (P1),(P2) as said pulse condition control signal (Ipb).

According to a further aspect of the invention, a pulse MAG or MIG arc welding apparatus is provided comprising an arc voltage detection circuit (VD) for detecting an arc voltage value and outputting an arc voltage detection signal (Vd) corresponding thereto, a first arc voltage setting circuit (VS1) for setting a value of arc voltage in according with welding conditions and outputting a first arc voltage setting signal (Vs1) corresponding thereto, a second arc voltage setting circuit (VS2) for setting a value of arc voltage in accordance with welding conditions and outputting a second arc voltage setting signal (Vs2) corresponding thereto, a comparison circuit (CM2) for comparing said arc voltage detecting signal and arc voltage setting signal (Vs) and outputting a difference between said two signals as an arc voltage control signal (Cm2), a pulse condition control signal generation circuit (IPB) for generating a pulse condition control signal (Ipb) for controlling one preselected pulse control condition from among four pulse control conditions in common with said first and second pulse current groups (P1),(P2) in accordance with said arc voltage control signal (Cm2), said four pulse control conditions comprising pulse frequency, pulse width, base current value and peak current value, a pulse current setting circuit (IS) for setting remaining three pulse control conditions for said first pulse current group (P1) and said second pulse current group (P2) which have not been preselected and for outputting pulse current group setting signals including setting signals corresponding to remaining said three pulse control conditions other than said pulse condition control signal (Ipb), a switching circuit (HL) for generating a switching signal (H1) for switching said first and second pulse current setting circuits (IS1),(IS2) alternatively at a frequency ranging from 0.5 to 25 Hz, a pulse frequency signal (Vf1,Vf2) generation circuit for generating a pulse frequency signal (Vf1,Vf2) in response to either the pulse frequency control reference signal (Fp3) if output from said pulse condition control signal generation circuit (IPB), or, the pulse frequency setting signal (Fp) output from said pulse current setting circuit (IS) if not output from said pulse condition control signal generation circuit (IPB), a pulse frequency and width signal generation circuit (DF(3)) for outputting a pulse frequency and width signal (Df3) in response to the pulse frequency control signal (Vf3) and pulse width setting signal (Tp) if the pulse frequency control reference signal (Fp3) is output from said pulse condition control signal generation circuit (IPB), or the pulse frequency signal (Vf1,Vf2) and pulse width control signal (Tp3) if the pulse width control signal (Tp3) is output from said pulse condition control signal generation circuit (IPB), or the pulse frequency signal (Vf1,Vf2) and pulse width setting signal (Tp) if the peak current control signal (Ip3) or base current control signal (Ib3) is output from said pulse condition control signal generation circuit (IPB), a pulse current control circuit for outputting first pulse control signal (Pf1) and second pulse control signal (Pf2) alternatively in response to the pulse frequency and width signal (Df3), the peak current setting signal (Ip) and base current setting signal (Ib) if the pulse frequency control reference signal (Fp3) or the pulse width control signal (Tp3) is output from said pulse condition control signal generation circuit (IPB), or the pulse frequency and width signal (Df3), the peak current control signal (Ip3) and base current setting signal (Ib) if the peak current control signal (Ip3) is output from said pulse condition control signal generation circuit (IPB), or the pulse frequency and width signal (Df3), the peak current setting signal (Ip) and base current control signal (Ib3) if the base current control signal (Ib3) is output from said pulse condition control signal generation circuit, and a welding power source control circuit (PS) for outputting the first pulse current group (P1) when the first pulse control signal (Pf1) is output from said pulse current control circuit and the second pulse current group (P2) when the second pulse control signal (Pf2) is output from said pulse current control circuit.

Apparatus according to the invention may further comprise a first wire feed rate setting circuit IM1 for outputting a wire feed rate setting signal Im1, a second wire feed rate setting circuit IM2 for outputting a second wire feed rate setting signal Im2 and a wire feed rate switching circuit for outputting a switching wire feed rate signal S7 to a wire feed rate control circuit WC by switching, at a switching frequency F = 0.5 to 5Hz, between said first feed rate setting signal Im1 and said second wire feed rate setting signal Im2.

Referring now to Fig. 7 of the accompanying drawings, this is a structural model view showing a variation in the expansion of an arc 3 when an arc length Lr or Lt varies. In Fig. 7, the arc 3 extends between a wire terminal 1a or 1b of a consumable electrode 1 supplied with power from a terminal 4a of the power supplying tip 4, and workpiece 2. In arc welding of aluminum, the arc transfers easily to an area having an oxide film of aluminum on the workpiece 2 from the terminal of the consumable electrode. Hence, the actual arc length L11 or L21 is longer than apparent arc length Lr or Lt which is a shortest distance between the terminal 1a of wire and the surface of the workpiece 2. When the wire projection has a length of Ln, the apparent arc length is Lr. However, the actual arc length is L21 at the maximum. When the wire projection length is Lm, the apparent arc length (referred to simply as arc length hereinafter) is Lt but is actually L11. In such a way, in welding aluminum, the arc easily moves to the oxide film and the aluminum plate has a high cooling rate resulting from the low melting point of aluminum. A periodical variation in the arc length between Lt and Lr causes the actual arc length to change between a first arc length L11 and a second arc length L21. With a change in the actual arc length, the size of the molten pool can be directly changed. (This is different from the conventional art in which the molten pool is indirectly changed by the amount of molten wire and the arc force.) Accordingly, it is possible for the MAG or MIG arc welding method according to the present invention to obtain a scale bead having regular ripple pattern in a similar way to that of TIG filler arc welding method.

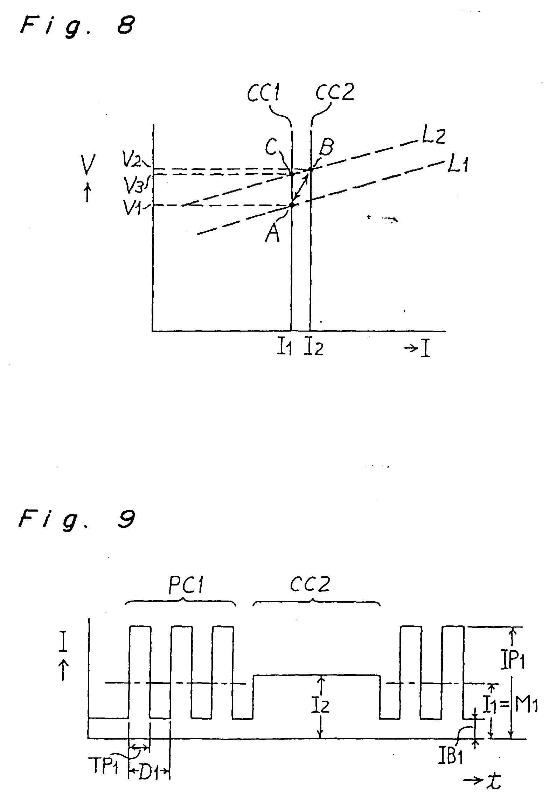

In Fig. 7, the variation in the wire projection length between the first welding condition setting value and the second welding condition setting value or the variation value Le in the arc length is expressed by the following equation; Le = Lr -Lt = Lm -Ln . Further it is noted that the arc length Lt and Lr in Fig. 7 are positioned on the characteristic curves L1 and L2 in Fig. 8 as described later.

A basic welding method according to the present invention is to change the arc length by changing the wire melting speed by switching the output current value of the welding source while keeping the wire feed rate constant. The following explains the basic welding method by reference to Fig. 8.

Fig. 8 relates to a case where a welding source outputting a direct current with a constant current characteristic supplies a first welding current for obtaining a first shorter arc length and a second welding source outputting a direct current with a constant characteristic supplies a second welding current for obtaining a second longer arc length. Fig. 8 is a graph showing V-I characteristic curves CC1 and CC2 and the arc characteristic curves L1 and L2 in which the output current I of a constant current source is indicated along the horizontal axis and the output voltage V is indicated along the vertical axis. When the first welding current value I1 is switched to a second value I2, the operation point moves from a point A on curve L1 for the first shorter arc length to a point B on the curve L2 for the second longer arc length. Thus, the arc voltage changes from V1 to V2. In this case, the variation in the welding current is expressed by $\Delta Ia = I2 -I1$ , the variation in the arc voltage, $\Delta Va = V2 -V1$ , and the variation in the arc length, $\Delta Le = L2 - L1$ .

Comparing the welding method according to the present invention shown in Fig. 8 and the prior art welding method shown in Figs. 3 and 4, in the movement of operation points A and B in Fig. 8, the variation in the welding current $\Delta Ia = I2 -I1$ can be limited to a value obtained from I2 and I1 which are predetermined by the welding source having a constant current characteristic. For example, it is possible to make the following limitation; I2/I1 = 1.03 to 1.10 according to the basic welding method and I2/I1 = 1.05 to 1.20 according to the additional welding method. However, in the movement of the operation points A-B, B-C or A-C shown in Fig. 3 or Fig. 4, it is not possible to set in advance or control the variation in the welding current. Hence, there appears a big variation of I1-I2, I1-I3, I1-I4 or I2-I4, with a further variation in the transient state. Also, regarding the movement of the operation points A and B in Fig. 8, the variation in the arc length Le = L2 -L1 is not limited by the switching range of the output voltage of a welding source with a constant voltage characteristic and can be made large by enlarging I2/I1 because the present method uses a welding source having a constant current characteristic.

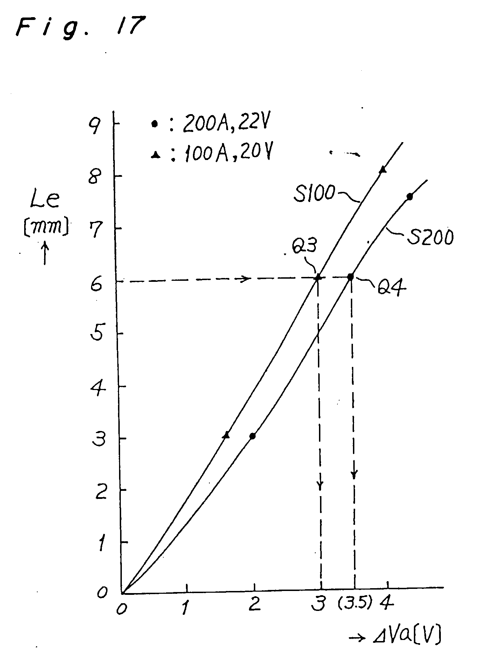

It is noted here that the operation point C in Fig. 8 will be explained later with reference to the embodiment shown in Fig. 17.

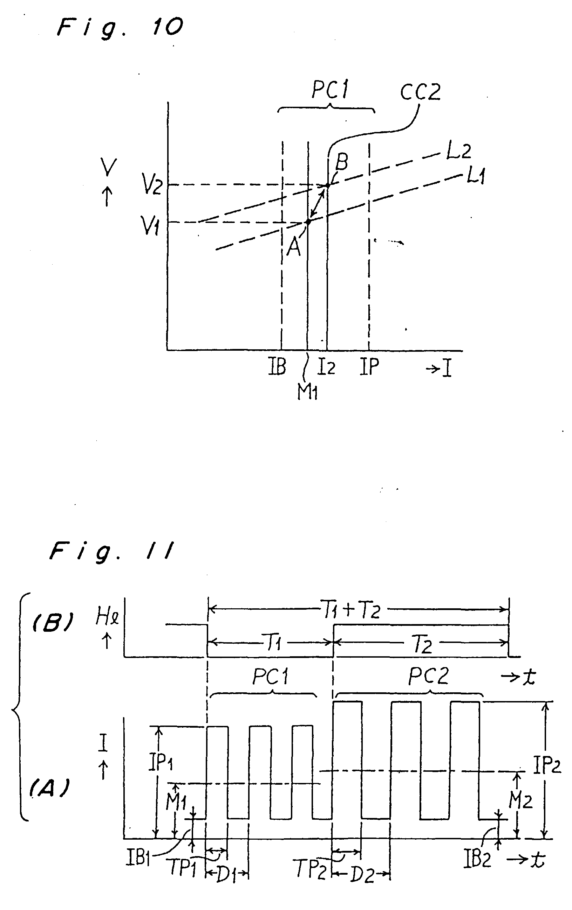

Figs. 9 and 10 indicate the case where a first welding current for obtaining a first shorter arc length is supplied from a welding source for outputting a pulse current having a constant current characteristic and second welding current for obtaining a second longer arc length is supplied from a welding source having a constant current characteristic the same as that of Fig. 8, but which does not supply a pulse current.

Fig. 9 is a graph of the welding current obtained by alternating a first welding current in the form of the pulse current PC1 and a second welding current in the form of the steady current CC2. IP1 denotes the pulse current value, TP1 denotes the pulse duration, D1 denotes the pulse period, that is, the inverse of the pulse frequency f1, IB1 denotes a base current value, I2 denotes a second welding current value, and M1 denotes an average welding current value in a group of current pulses. It is noted that the various values mentioned above have the following relationships.

$$D1 = 1/f1$$

$$I1 = M1 = [IP1 \times TP1 +IB1 \times (D1 - TP1)]/D1$$

Fig. 10 is a graph showing a V-I characteristic curve of a welding source outputting a first welding current as a pulse current PC1 and a second welding current as a steady current CC2 and the arc characteristic curves L1 and L2, the output current I of a constant current source being indicated along the horizontal axis and the output voltage V being indicated along the vertical axis. In Fig. 10, when the pulse current PC1 is switched to the steady current CC2 while keeping the wire feed rate constant, the change of operation point proceeds in the manner described for Fig. 8.

The difference between the welding method according to the present invention shown in Fig. 10 and the prior art method shown in Figs. 3 and 4 is also present in the method of Fig. 10. When the first welding current value I1 is in the vicinity of the critical current value Ic, it is possible for the welding method according to the present invention to prevent a short circuit even with the first shorter arc length because the molten metal to be transferred due to the pulse current does not form large drops.

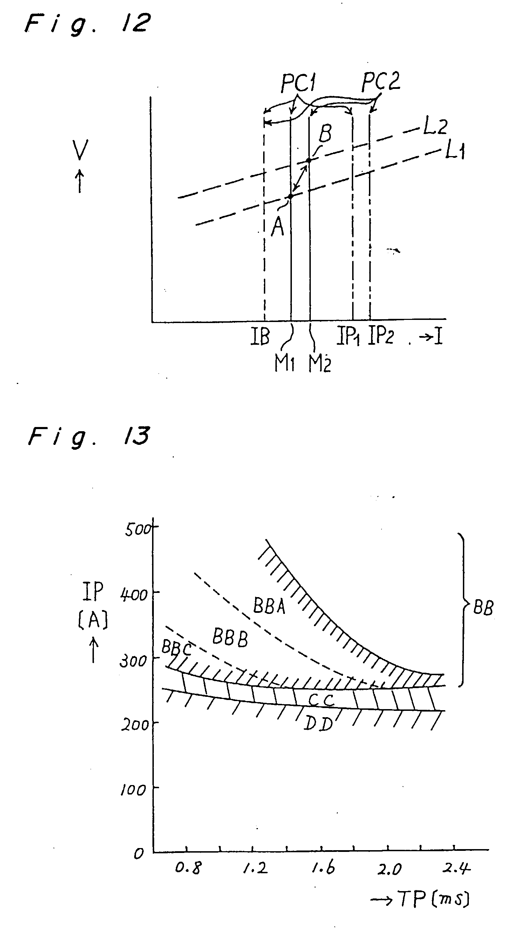

Figs. 11 and 12 are graphs illustrating a case where a first welding current for obtaining a first shorter arc length and a second welding current for obtaining a second longer arc length are each supplied as pulse currents PC1 and PC2, from the welding source.

Fig. 11(A) is a graph showing the variation with time of the welding current I composed of the alternation of the first and second pulse current groups PC1 and PC2. Fig. 11 (B) is a graph showing the variation with time of a switching signal H1 for switching periodically between a first pulse energizing period T1 for the first pulse current group and a second pulse energizing period T2 for the second pulse current group PC2. IP1 denotes a pulse current value, a reference character TP1 denotes a pulse duration, D1 denotes pulse period, that is, the inverse of the pulse frequency f1, IB1 denotes a base current value; T1 denotes a first pulse energizing period, and M1 denotes an average value of the welding current during the first pulse energizing period. It is noted that the various values mentioned above have the following relationships.

$$D1 = 1/f1$$

$$M1 = [IP1 \times TP1 + IB1 \times (D1 - TP1)]/D1$$

Furthermore, IP2 denotes a second pulse current value, TP2 denotes a second pulse duration, D2 denotes a second pulse period, that is, the inverse of the pulse frequency f2, IB2 denotes a second base current value, T2 denotes a second pulse energizing period, and M2 denotes an average value of the welding current during the second pulse energizing period. It is noted that the various values mentioned above have the following relationships.

$$D2 = 1/f2$$

$$M2 = [IP2 \times TP2 + IB2 \times (D2 - TP2)]/D2$$

Fig. 12 is a graph showing a V-I characteristic curve of a welding source outputting a first pulse current group PC1 and a second pulse current group PC2 and the arc characteristic curves L1 and L2, the output current I of a constant current source being indicated along the horizontal axis and the output voltage V along the vertical axis. In Fig. 12, when switching from the pulse current group PC1 to the second pulse current group PC2 while keeping the wire feed rate at a constant value, the charge proceeds in the manner described for Fig. 8.

The same difference exists between the welding method according to the present invention as shown in Fig. 12 and the prior art welding method as shown in Figs. 3 and 4 as between the method of Fig. 8 and that prior art method. When the average value M1 or M2 for the first or second energizing period is lower then the critical current value Ic, it is possible for the welding method according to the present invention to prevent a short circuit even with a short first arc length because the molten metal to be transferred due to the pulse current does not form large drops.

Listing the figures of the accompanying drawings:

Fig. 1 is a perspective view showing a scale bead in a regular ripple pattern obtained by a conventional TIG filler arc welding method.

Fig. 2 is a block diagram showing the output signal switching circuit for use in a conventional MIG welding method according to a first prior art example (Japanese Patent Publication (examined) SYO 46-650).

Fig. 3 is a graph showing a V-I curve and the arc characteristic curve of a welding source for use in the conventional MIG welding method according to a first prior art example.

Figs. 4(A) to (C) are graphs showing the V-I characteristic curve and the arc characters curves for use in the conventional MAG welding method according to a second prior art example (Japanese Patent Publication (examined) Syo 49-48057.

Figs. 5(A) and (B) are graphs showing a welding voltage waveform obtained by switching largely the base current with a variation in the wire feed rate through MIG method according to a third prior art example (Japanese Patent Publication (unexamined) Syo 62-279087) and by switching largely the base voltage with the variation in the waveform of welding current obtained by switching the average value of the welding current between high current and low current and in the output voltage of the base electric source.

Fig. 6 is a perspective view showing the appearance of a scale bead having no regular ripple pattern formed by the conventional MIG arc welding method.

Fig. 7 is a structural model view showing the expansion of the arc with the variation in the arc length performed in a welding method according to the present invention.

Fig. 8 is a graph showing the relationship between the V-I characteristic CC1 and CC2 of a welding source having a constant current characteristic and the arc characteristic L1 and L2.

Fig. 9 is a graph showing a welding current characteristic obtained with the alternation of a pulse current PC1 and a constant unpulsed current.

Fig. 10 is a graph showing the V-I characteristic curves of the pulse welding current PC1 and the constant current without the pulse and the arc characteristics L1 and L2.

Fig. 11(A) is a graph showing on a time base the welding current obtained with the alternation of first and second pulse current groups PC1 PC2; and Fig. 11(B) is a graph showing on a time base the switching signal for switching the first and second pulse energizing periods T1 and T2.

Fig. 12 is a graph showing the V-I characteristic curves of the first and second pulse currents PC1 and PC2 and the arc characteristic curves L1 and L2.

Fig. 13 is a graph showing the pulse energizing time and the form of the molten metal transferred corresponding to the pulse energizing time.

Fig. 14(A) is a graph showing the relationship between the average value of the welding current Ia (horizontal axis) and the average value of the arc voltage Va (vertical axis) obtained when the arc length L varies from a first arc length of 2 mm, which is the shortest length to produce a slight short circuit, to the second arc length of 12 mm or 15 mm which is longest; Fig. 14(B) is a structural model view showing the arc length L.

Fig. 15 is a graph showing the relationship between the variation in the arc voltage ΔVa and the variation in the arc length Le with a constant value of the wire feed rate in connection with aluminum welding.

Fig. 16 is a graph showing the variation in the arc length Le with variation in the welding current value and the arc voltage value while switching the wire feed rate, in connection with aluminum welding.

Fig. 17 is a graph showing a relationship between variation in the arc voltage ΔVa and variation in the arc length Le at a constant value of the wire feed rate, in connection with stainless steel welding.

Fig. 18 is a graph showing the variation in the arc length Le with variation in the welding current value and arc voltage at various wire feed rates, in connection with stainless steel welding.

Fig. 19 is a block diagram of one form of welding apparatus for effecting a welding method according to the present invention.

Fig. 20(A) is a perspective view of a scale bead obtained with a welding method performed in accordance with the present invention; Fig. 20 (B) is a sectional view showing, in the welding direction, the penetration depth of the bead obtained by the method according to the present invention; and Fig. 20 (C) is a sectional view showing the penetration depth of the bead obtained by a prior art welding method according to the prior art.

Fig. 21 is a graph showing a welding current waveform for use in another example of the welding method according the present invention.

Figs. 22 (A) and (B) are, respectively, a structural model view showing a time sequence of the separation of a molten metal drop from the terminal of wire when the first pulse current group produces one pulse to one molten drop transfer, and a graph showing against a time base the energized pulse current of the pulse current group.

Figs. 23 (A) and (B) are, respectively, a structural model view showing a time time sequence of the separation of a the molten metal drop from the terminal of wire when the first pulse current group produces a plurality of pulses to one molten metal drop transfer, and a graph showing against a time base the energized pulse current of the pulse current group.

Fig. 24 is a graph showing a slight short circuit transfer range in a method of operation in accordance with the invention and illustrating a form of the molten metal drop transfer against the relationship between pulse duration TP and pulse current IP when the welding is carried out by switching periodically between a first pulse current group and a second welding current while using aluminum wire of 1.2 mm diameter.

Fig. 25 is a graph showing a slight short circuit transfer range in a method of operation in accordance with the invention and illustrating a form of molten metal drop transfer against the relationship between pulse duration TP and pulse current IP when the welding is carried out by switching periodically between a first pulse current group and a second welding current while using aluminum wire of 1.6 mm diameter.

Fig. 26 is a graph showing the relationship between the average value of the welding current Ia and the maximum value of the arc length variation Le in connection with a welding method based on a plurality of pulses to one molten metal drop transfer shown by solid line CC, and a welding method based on one pulse to one molten metal drop transfer shown by a dotted line.

Fig. 27 is a block diagram of a welding apparatus effecting a pulse MAG arc welding method in accordance with the present invention.

Fig. 28 is a graph illustrating a form of the molten metal drop transfer against the relationship between pulse duration TP and pulse current IP when the welding is carried out by switching periodically between a first pulse current group and a second welding current while using a soft steel wire of 1.2 mm diameter.

Fig. 29 is a graph illustrating a form of the molten metal drop transfer against the relationship between pulse duration TP and pulse current IP when the MIG welding is carried out by switching periodically between a first pulse current group and a second welding current while using a stainless steel wire of 1.2 mm diameter.

Fig. 30 (A) is a structural model view showing a time sequence of the separation of a molten metal drop from the wire terminal when a first pulse current group produces a plurality of pulses to one molten metal drop transfer; Fig. 23 (B) is a graph showing against a time base the energized pulse current of the pulse current group.

Fig. 31 is a graph illustrating the relationship between a pulse duration TP and a pulse current IP when the MIG welding is carried out by switching periodically between a plurality of pulses to one molten metal drop transfer range of the first pulse current group and one pulse to one molten metal drop transfer range of the second pulse current group while using an aluminum wire of 1.2 mm diameter.

Fig. 32 is a graph illustrating the relationship between pulse duration TP and pulse current IP when the MIG welding is carried out by switching periodically between a plurality of pulses to one molten metal drop transfer range of a first pulse current group and one pulse to one molten metal drop transfer range of a second pulse current group under while an aluminum wire of 1.6 mm diameter.

Fig. 33 is a graph illustrating the relationship between pulse duration TP and pulse current IP when the MIG welding is carried out by switching periodically between a plurality of pulses to one molten metal drop transfer range of the first pulse current group and one pulse to a plurality of molten metal drops transfer range of the second pulse current group while using an aluminum wire of 1.2 mm diameter.

Fig. 34 is a graph illustrating the relationship between pulse duration TP and the maximum value of the arc length variation Le in connection with a welding method for switching periodically between a plurality of pulses to one molten metal drop transfer range of the first pulse current group and one pulse to a plurality of molten metal drops transfer range of the second pulse current group while using an aluminum wire of 1.6 mm diameter.

Fig. 35 is a graph showing the relationship between the average value of the welding current la and the maximum value of the arc length variation Le in connection with a welding method (solid line C) for switching between a plurality of pulses to one molten metal drop transfer range and one pulse to a plurality of molten metal drops transfer range and a welding method (dotted line Z) based on the one pulse to one molten metal drop transfer range, wherein each method uses an aluminum wire of 1.2 mm diameter.

Fig. 36 is a graph showing the relationship between the average value of the welding current la and the maximum value of the arc length variation Le in connection with a welding method (solid line C) for switching between a plurality of pulses to one molten metal drop transfer range and one pulse to a plurality of molten metal drops transfer range and a welding method (dotted line Z) based on the one pulse to one molten metal drop transfer range, wherein each method uses a stainless steel wire of 1.2 mm diameter

Fig. 37 is a graph illustrating the relationship between pulse duration TP and pulse current IP when the MIG welding is carried out by switching periodically between a plurality of pulses to one molten metal drop transfer range of the first pulse current group and one pulse to a plurality of molten metal drops transfer range of the second pulse current group when using an aluminum wire of 1.2 mm diameter.

Fig. 38 is a graph illustrating the relationship between pulse duration TP and pulse current IP when the MIG welding is carried out by switching periodically between a plurality of pulses to one pulse molten metal drop transfer range of the first pulse current group and one pulse to a plurality of molten metal drops transfer range of the second pulse current group when using an aluminum wire of 1.6 mm diameter.

Fig. 39 is a graph showing the experimental result on the relationship between welding current I and arc voltage V when the welding is carried out by controlling the pulse conditions to change the arc length Lt to Lr at a constant wire feed rate.

Fig. 40 is a graph showing the relationship between the average value of the welding current la and the maximum value of the arc length variation Le in connection with a welding method (solid line B) for switching between one pulse to one molten metal drop transfer range and one pulse to a plurality of molten metal drops transfer range and a welding method (dotted line Z) based on the one pulse to one molten metal drop transfer range.

Fig. 41 is a graph showing the relationship between welding current and arc voltage when a MAG arc welding is carried out at a predetermined wire feed rate and illustrating another example of a welding method according to the present invention.

Fig. 42 is a table for determining in advance the first arc voltage setting values Un corresponding to particular wire feed rate setting values Wn when a consumable electrode is fed at predetermined wire feed rate in accordance with a MAG welding method and for determining in advance the second arc voltage setting values Vn corresponding to particular first arc voltage setting values Un.

Fig. 43 is a table for determining in advance the first arc voltage setting values Un corresponding to particular first wire feed rate setting values when the consumable electrode is fed at a rate obtained by switching periodically between the first wire feed rate and the second wire feed rate in accordance with a MAG arc welding method, and for determining in advance the second arc voltage setting values Vn corresponding to particular first arc voltage setting values Un in accordance with second wire feed rate setting values Xn.

Fig. 44 is a graph showing a relationship between a switching frequency F (horizontal axis) necessary for producing the vibration at the molten pool and an arc length variation Le (vertical axis) between the first arc length Lt and the second arc length Lr when an aluminum plate AL is welded by a MIG welding method.

Fig. 45 is a graph showing a sectional view of the bead obtained by changing the average value of welding current Ia (horizontal axis) and the average value of an arc voltage Va (vertical axis) and showing also the arc length.

Fig. 46 is a graph showing variations in the formation of the scale bead obtained with variation in the average value of welding current Ia (horizontal axis) and the arc length variation value Le (vertical axis).

Fig. 47 is a perspective view showing the pitch of a scale bead obtained using a MIG arc welding method to change the arc length according to another example of the present invention.

Fig. 48 is a graph showing the sectional view and the arc length of a bead obtained with the variation in the average value of welding current Ia and the average value of arc voltages Va in a pulse MIG arc welding method applied to a copper plate.

Fig. 49 is a graph showing the sectional view and the arc length of a bead obtained with the variation in the average value of welding current Ia and the average value of arc voltages Va in a pulse MIG arc welding method applied to a stainless steel plate.

Fig. 50 is a graph showing an effect of producing a butt joint by an example of the welding method according to the present invention and showing also a comparison between the methods according to the present invention and according to the prior art.

Fig. 51 is a graph showing against a time base a pulse current used in the butt joint welding shown in Fig. 50

Fig. 52 is a graph showing an effect at the gap of a lap joint of performing an example of the welding method according to the present invention and showing also a comparison between the methods according to the present invention and according to the prior art.

Fig. 53 is a perspective view of a lap joint gap used in the welding shown in Fig. 52.

Figs. 54 (A), (B) and (C) are structural model views illustrating a phenomenon occurring with the increase in the gap of a butt joint when using an example of the method according to the invention, and Figs. 54 (D) and (E) are graphs showing against a time base the pulse current corresponding to the gaps of the butt joints shown in Figs. 54(A) and (B).

Figs. 55 (A) to (D) are structural model views for illustrating a phenomenon occurring with the decrease in the gap of butt joint in the butt welding method to which Fig. 54 relates.

Figs. 56 (A), (B) and (C) are structural model views illustrating a phenomenon occurring with the increase in the gap of lap joint when using another example of the welding method according to the invention, and Figs. 54 (D) and (E) are graphs showing against a time base the pulse current corresponding to the gaps of lap joints shown in Figs. 56 (A) and (B).

Figs. 57 (A) to (D) are structural model views for illustrating a phenomenon occurring with the decrease in the gap of lap joint in the lap welding method to which Fig. 56 relates.

Fig. 58 (A) is a structural model view illustrating the effect of the correction in the arc length carried out by an example of the welding method according to the invention when the gap of butt joint is increased and Fig. 58 (B) is a structural model view illustrating the effect of the correction of the arc length when the gap of butt joint is decreased.

Fig. 59 (A) is a structural model view illustrating the effect of the correction in the arc length carried out by the welding method to which Fig. 58 relates when the gap of lap joint is increased and Fig. 58 (B) is a structural model view illustrating the effect of the correction of the arc length when the gap of lap joint is decreased.

Fig. 60 illustrates sectional views of welding beads obtained at a, b, c and d points on the solid line of Fig. 50 when the welding method shown in Fig. 50 is carried out at a constant wire feed rate and at the switched wire feed rate, respectively.

Fig. 61 illustrates sectional views of welding beads obtained at a, b, c and d points on the solid line of Fig. 52 when the welding method shown in Fig. 52 is carried out at a constant wire feed rate and at the switched wire feed rate, respectively.

Fig. 62 is a graph showing the relationship between switching frequency and a cracking ratio in connection with an example of the welding method according to the invention.

Fig. 63 is a graph showing the relationship between the switching frequency F and the average crystal grain size SD in connection with the welding method to which Fig. 62 refers.

Fig. 64 illustrates the effect on the cracking in connection with a welding method according to the prior art in comparison to the welding method characterized by fine grain size to which Fig. 62 refers.

Fig. 65 is a graph showing the relationship between the arc length variation value Le and the amplitude PW of the vibration of the molten pool.

EP 0 478 796 B1

Fig. 66 is a graph showing the relationship between the arc length variation value Le and the average crystal grain size SD in connection with the welding method to which Fig. 62 refers.

Fig. 67 is a graph showing the relationship between the switching frequency F and the arc length variation value Le in connection with the welding method to which Fig. 62 refers.

Fig. 68 (A) is a perspective view of the weld bead obtained with another example of the welding method according to the invention; Fig. 68 (B) is a graph showing the time passage of the amplitude of vibration of the molten pool under welding in the direction of progress of the melt; and Fig. 68 (C) is a structural model view showing the convection of the welding metal in the molten pool.

Figs. 69 (A) and (B) indicate the radiation transmitting test results on the materials by a conventional MIG welding method and an example of a welding method according to the invention.

Figs. 70 (A) and (B) indicate waveforms of echo of an ultrasonic defect finding test carried out on materials subjected to a conventional MIG welding method and the welding method to which Fig. 69 relates.

Fig. 71 is a graph showing the relationship between average crystal grain size SD and height of the echo in connection with the welding method to which Fig. 69 relates.

Fig. 72 is a graph showing the relationship between switching frequency F and average crystal grain size SD in connection with the welding method to which Fig. 69 relates.

Fig. 73 is a graph showing the relationship between arc length variation value Le and amplitude PW of the vibration of the molten pool in connection with the welding method to which Fig. 69 relates.

Fig. 74 is a graph showing the relationship between arc length variation value Le and average crystal grain size SD in connection with the welding method to which Fig. 69 relates.

Fig. 75 is a graph showing the relationship between switching frequency F and arc length variation value Le in connection with the welding method to which Fig. 69 relates.

Fig. 76 is a graph showing the relationship between arc voltage variation value ΔVa and arc length variation value Le in connection with the welding method without using pulsing.

Fig. 77 is a graph showing the relationship between a switching frequency F and an average crystal grain size SD in connection with the welding method without using pulsing.

Fig. 78 is a graph showing the relationship between amplitude PW of the vibration of the molten pool and the number of pores BN per 50 mm of welding length in connection with the welding method without using pulsing.

Fig. 79 is a graph showing the relationship between switching frequency F and amplitude PW of the vibration of the molten pool in connection with another example of the welding method according to the invention.

Fig. 80 is a graph showing the relationship between switching frequency F and the number of pores BN per 50 mm of welding length in connection with the welding method to which Fig. 79 relates.

Fig. 81 is a graph showing the relationship between arc length variation value Le and the number of pores BN per 10 cm of welding length in connection with the welding method to which Fig. 79 relates.

Fig. 82 is a graph showing the relationship between arc length variation value Le and switching frequency F in order to generate the amplitude PW of the molten pool in a size more than 0.5 mm in connection with the welding method to which Fig. 79 relates.

Figs. 83 to 89 are block diagrams of respective embodiments of apparatus according to the invention employing pulse frequency control.

Fig. 90 is a block diagram of a circuit of a pulse frequency control signal generator shown in the block diagrams of Figs. 83 to 89.

Fig. 91 is a graph showing against a time base the output signal in the block diagram shown in Fig. 90.

Figs. 92 to 95 show the waveform of the output current of the welding apparatus shown in the block diagrams of Figs. 83 to 86 respectively.

Fig. 96 shows the waveform of the output current of the welding apparatus shown in the block diagrams of Fig. 87 to Fig. 89.

Fig. 97 shows the waveform of the output current of the welding apparatus shown in the block diagram of Fig. 88.

Figs. 98 to 100 are block diagrams of respective embodiments of according to the invention employing pulse duration control.

Fig. 101 is a graph showing against a time base the pulse duration control signal shown in the block diagrams of Figs. 98 to 100.

Fig. 102 shows the waveform of the output current of the welding apparatus shown in the block diagrams of Figs. 98 and 100.

Fig. 103 shows the waveform of the output current of the welding apparatus shown in the block diagram of Fig. 99.

Figs. 104 to 106 are block diagrams of respective embodiments of apparatus according to the invention employing current control.

Fig. 107 shows the waveform of the output current of the welding apparatus shown in the block diagrams of Fig. 104 and Fig. 106.

Fig. 108 shows the waveform of the output current of the welding apparatus shown in the block diagram of Fig. 105.

Figs. 109 to 111 are block diagrams of respective embodiment according to the invention employing pulse current value control.

Fig. 112 shows the waveform of the output current of the welding apparatus shown in the block diagrams of Figs. 109 and 111.

Fig. 113 shows the waveform of the output current of the welding apparatus shown in the block diagram of Fig. 110.


Description of the Symbols

1... consumable electrode (wire)
1a, 1b... terminal of the wire
2... welding workpiece
3... arc
4... electric supplying tip
4a... terminal of electric supplying tip
L11, L21... actual arc length
Ln, Lm... wire projection length
Lt, Lr... apparent first and second arc lengths
Le... variation value of wire projection length (apparent) arc length variation value
L1, L2... arc characteristic of arc length L1, and L2
1PnD... one pulse to a plurality of molten metal drops transfer range
1P1D... one pulse to one molten metal drop transfer range
nP1D... plurality of pulses to one molten metal drop range
P1, P1,..P1... first pulse current group
P2, P2,..P2... second pulse current group
IP... pulse current (value)
IP1... first pulse current value
IP2... second pulse current value
IP3 ...pulse current value
Ip31, IP32... first and second pulse current values
TP... pulse duration
TP1 first pulse duration
TP2... second pulse duration
Tp3... pulse duration
TP31, TP32... first and second pulse durations
f... pulse frequency
f1, f2... first and second pulse frequencies
f3... pulse frequency
f31, f32... first and second pulse frequencies
Ib... base current (value)
Ib1... first base current
IB2... second base current
IB3... base current
IB31, IN32... first and second base current values
f... switching frequency
WS... welding speed
WF, WF1, WF2, WF3... wire feed rate
Wf... wire feed rate setting value
D1... (first) pulse period
D2... second pulse period
I1... first welding current value
I2... second welding current value
T1... first welding current energizing time (first pulse energizing period)
T2... second welding current energizing time (second pulse energizing period)
Ds... duty ratio
M1... average value of welding current during first pulse energizing period

M2... average value of welding current during second pulse energizing period

I... welding current (value)

Ia... average value of welding current

ΔIa... variation value of welding current

V... arc voltage

Va... average value of arc voltage

Va1... first arc voltage value

Va2... second arc voltage value

ΔVa... variation value of arc voltage

WM... wire feed motor

WC... wire feed rate control circuit

WD... wire feed rate detection circuit

Im... average current setting circuit (wire feed rate setting circuit)

Im1... first welding current setting circuit (first wire feed rate setting circuit)

Im2... second welding current setting circuit (second wire feed rate setting circuit)

vs1... (first) arc voltage setting circuit

VS2... second arc voltage setting circuit

VD... arc voltage detection circuit

ID... welding current detection circuit

CM1... wire feed rate comparison circuit (first comparator)

CM2... (second) comparator

CM6... welding current comparator

IP1... (first) pulse current value setting circuit

IP2... second pulse current value setting circuit

TP1... (first) pulse duration setting circuit

TP2... second pulse duration setting circuit

FP1... (first) pulse frequency setting circuit

FP2... second pulse frequency setting circuit

IB1... (first) base current setting circuit

IB2... second base current setting circuit

IB3... base current controlling circuit

IP3... pulse current value controlling circuit

SW1... pulse current value switching circuit

SW2... pulse duration switching circuit

SW3... base current switching circuit

SW4... pulse frequency switching circuit

SW5... pulse base current switching circuit

SW6... arc voltage switching circuit

SW7... wire feed rate switching circuit (welding current switching circuit)

SWw8... constant current switching circuit

SW9... short circuit current switching circuit

SW10... pulse constant current switching circuit

PS... welding electric source controlling circuit

VF... pulse frequency signal generating circuit

VF3... pulse frequency control signal generating circuit

DF... pulse duration frequency signal generating circuit

DF3... pulse duration and frequency controlling signal generating circuit

HL... switching signal generating circuit

DT... duty ratio setting circuit

FT... energizing frequency setting circuit

IS1... first constant current setting circuit

IS2... second constant current setting circuit

IT... short circuit current setting circuit

SD... short circuit detection circuit

WS... welding speed setting circuit

Wc... wire feed rate controlling circuit

Wd... feed rate detection circuit

Im... average current setting signal (wire feed rate setting signal)

Im1... first welding current setting signal (first wire feed rate setting signal)

Im2... second welding current setting signal (second wire feed rate setting signal)

Vs1... (first) arc voltage setting signal

Vs2... second arc voltage setting signal

Vd... arc voltage detection signal

Id... welding current detection signal

Cm1... wire feed rate controlling signal

Cm2... arc voltage controlling signal

Cm6... welding current controlling signal

Vf... pulse frequency signal

Vf1, Vf2... first and second pulse frequency signals

Vf3... pulse frequency controlling signal

Vf31, Vf32... first and second pulse frequency controlling signals

H1... switching signal

Ip... pulse current value setting signal

Ip1, Ip2... first and second pulse current value setting signals

Ip3... pulse current controlling signal

Ip31, Ip32... first and second pulse current controlling signals

Tp... pulse duration setting signal

Tp1, Tp2... first and second pulse duration setting signals

Tp3... pulse duration controlling signal

Tp31, Tp32... first and second pulse duration setting signals

Fp... pulse frequency setting signal

Fp1, Fp2... first and second pulse frequency setting signals

Ib... base current setting signal

Ib1, Ib2... first and second base current setting signals

Ib3... base current controlling signal

Ib31, Ib32... first and second base current controlling signals

S1... switching pulse current signal

S2... switching pulse duration signal

S3.. switching base current signal

S4... switching pulse frequency signal

S5... switching pulse base current signal

S6... switching arc voltage signal

S7... switching wire feed rate signal

S8.. switching constant current signal

S9... short circuit switching signal

S10... pulse constant current switching signal

Df... pulse duration frequency signal

Df1, Df2... first and second pulse duration frequency signals

Df3... pulse duration frequency controlling signal

Df31, Df32... first and second pulse duration frequency controlling signals

Dt... energizing ratio signal

Pf... pulse controlling signal

Pf1, Pf2... first and second pulse controlling signals

It... short circuit current setting signal

Sd... short circuit detection signal

In connection with one preferred method for performing the invention, Fig. 13 shows various ranges for various forms of molten metal drop transfer on a graph having a pulse energizing time TP ms (referred to as pulse duration ) plotted along a horizontal axis and a pulse current IP A plotted along a vertical axis, when an aluminum plate is welded with aluminum wire of 1.2 mm diameter at an average welding current Ia =100 A, and a base current Ib = 30 A with a pulse MIG arc welding method. In Fig. 13, the range BB is a spray transfer range for a long arc length, while the range DD is a short circuit transfer range at which the arc disappears. In the range CC, the arc length is an intermediate length between a length in the spray transfer range BB and a length in the short circuit transfer range DD. The range CC has a slight short circuit generated therein. The molten metal transfer is carried out by the spray transfer. The range CC is a so called meso spray transfer range. Within the spray transfer range BB, the upper end of which is shown by an oblique full line, is a one pulse to one molten metal drop range where the pulse current and the molten metal transfer

16

are synchronized to each other. Further, this range is divided into a BBA range at which the arc length is more than 6 mm, a BBB range at which the arc length is 4 to 6 mm and BBC range at which the arc length is 2 to 4 mm.

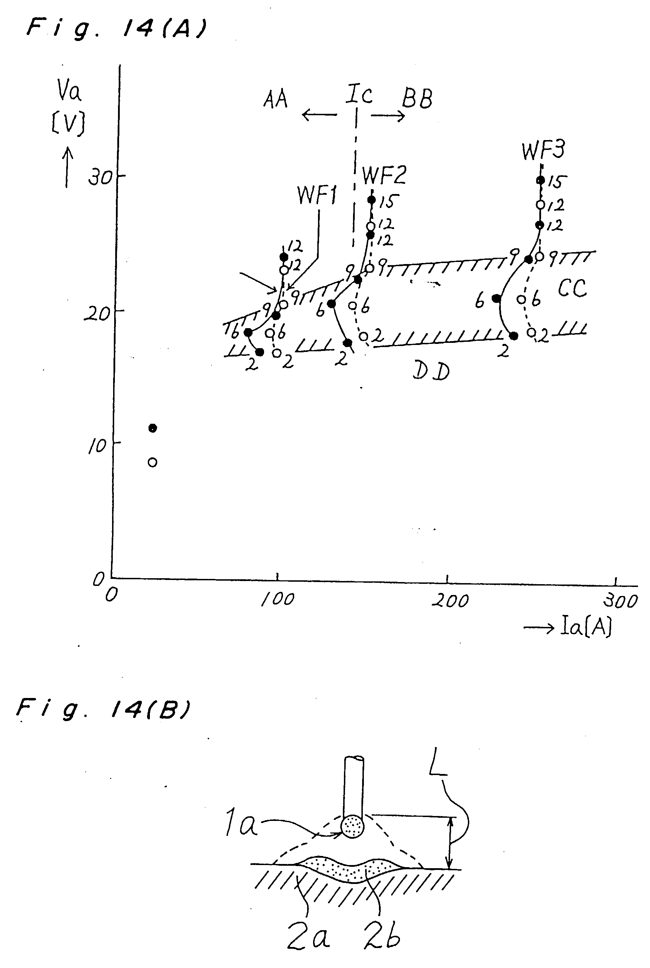

Fig. 14 (A) shows the relationship between an average value Ia A of the welding current (horizontal axis) and an average value Va V of arc voltage (horizontal axis) when aluminum alloy plate is welded with an aluminum alloy consumable electrode of 6 mm diameter through a MIG arc welding method. In Fig. 14 (A), a wire feed rate WF1 to WF3 is predetermined at a given value, and the distance between the terminal 4a of electrical supply tip and the surface of the welding material 2a is changed mechanically. The measurement is carried out of the relationship between the average value Ia A of welding current, the average value Va V of the arc voltage and arc length L mm shown in Fig. 14 (B). The current range AA lower than the critical current IC is a drop transfer range, and the current range BB higher than the critical current Ic is a spray transfer range. The range CC shown by an oblique line is a range having an intrinsic self-regulation effect of arc length, that is, a so called meso spray transfer range,and the range DD below the oblique line is a short circuit transfer range.

In a meso spray transfer range CC of Fig. 14 (A), the average value Ia of the welding current decreases with a decrease in the arc length L at the constant value of the wire feed rate WF as described above. This is equivalent to a fact that the amount of wire feed, that is, the melting speed of the wire fed, increases with a decrease in the arc length at a constant value of the welding current. As a result, the arc length is controlled automatically in a way that the arc length increases with an increase in the rate of wire melting resulting from the lowering of the arc voltage. This is an intrinsic self-regulation effect of arc length. This regulation can be seen with the welding of an aluminum plate.

In the meso spray transfer range CC in Fig. 14 (A), a white circle and a dotted line indicate a case in which the first pulse current group is controlled to be in one pulse to one molten drop mode, and a black circle and a solid line indicate the meso spray mode in which the first pulse current group or the first welding current value without pulse is set to be a value to generate a slight short circuit. In a range having the arc length of 2 to 9 mm of the meso spray transfer range in Fig. 14 (A), the meso spray mode shown by a solid line has a greater curvature than the one pulse to one molten metal drop mode shown by a dotted line. Accordingly, the first pulse current group or the first welding current set to the meso spray mode causes a large variation in the amount of wire melting at the same wire feed rate and welding current as that of other case. As a result, it is possible to make the slight short circuit time shorter, the slight short circuit number less and then the arc length shorter.

In view of this, the one pulse to one molten metal drop mode is set up at the spray transfer range BB while the meso spray mode to generate the slight short circuit is set up at the meso spray transfer range CC. A periodical switching between both modes repeats alternatively the enlargement of the molten pool due to the expansion of the arc and the reduction of the molten metal due to the convergence of the arc. As a result, the control of the molten metal has a larger effect than the control at the spray transfer range BB not to produce the short circuit. It is noted that the first pulse current group or the first welding current causes the slight short circuit to generate 2 to 8 times per sec and then the short circuit transfer is not carried out because the short circuit time is less than 1.5 msec per time in the welding method performed in accordance with the present invention. The conventional short arc welding method has the short circuit generated 20 to 100 times per sec and has a long short circuit more than 2 msec per time. There is accordingly a clear difference in the slight short circuit in the welding method performed in accordance with the present invention and in the welding method according to the prior art. The welding method of the invention differs clearly from the conventional welding method to repeat periodically the spray transfer and the short circuit transfer and can obtain the scale bead in a regular ripple pattern in a similar way to that of the TIG filler arc welding method.

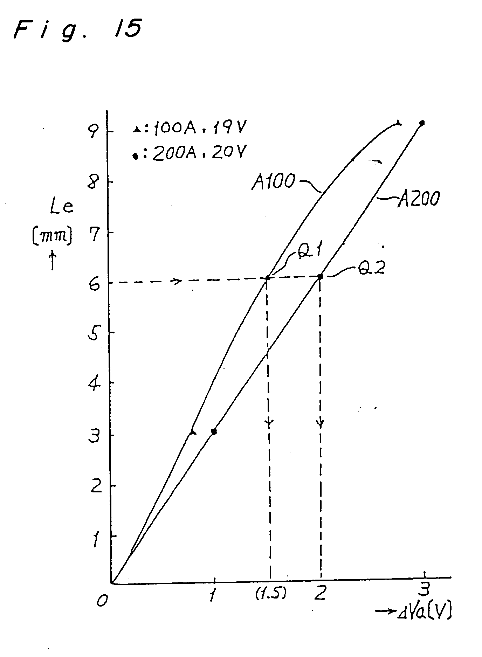

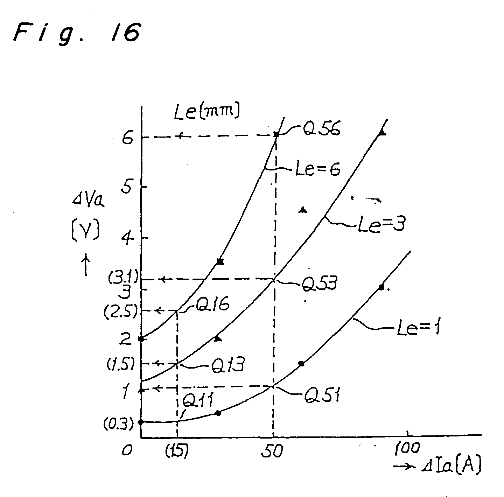

With reference to Figs. 15 and 16, the description will be directed to the relationship between the average value Ia A of the welding current or the variation value $\Delta$Ia A, the variation value $\Delta$Va V of the arc voltage and the variation value Le mm of the arc Length.

Fig. 15 relates to an embodiment of the basic welding method according to the present invention and is a graph showing the relationship between the variation value $\Delta$Va V of the arc voltage (horizontal axis) and the variation value Le mm of the arc length (vertical axis) with a constant setting of the wire feed rate. The welding conditions of Fig. 15 are as follows: electrode, aluminum wire 5183 of 1.2 mm diameter; pulse current value IP, 280 A; pulse duration TP, 1.2 ms; average value of the welding current Ia, 100 A as shown by curve 100, with average value of the arc voltage Va, 19 V; or average value of the welding current Ia, 200 A as shown by curve 200, with average value of arc voltage Va, 20 V. In the case when the set average value of welding current Ia changes from 100 A to 200 A, in order to obtain the arc length variation value of 6 mm the same as each other, if Ia = 100 A the arc voltage variation value is $\Delta$VA = 1.5 V as shown by a point Q1 on the curve A100, whereas Ia = 200 A the variation value $\Delta$Va =2.0 V as shown by a point Q2 on the curve A200. It is clear that the latter case has the arc voltage variation value higher than that of the former case. That is, an increase in the average value of the welding current Ia requires an increase in the arc voltage variation value $\Delta$Va in order to obtain the variation value of the arc length the same in both cases.

Fig. 16 is a graph showing the arc length variation value Le obtained with a case when welding is carried out at a larger welding current by changing largely the conventional wire feed rate, and the Le obtained by changing the welding current value and the arc voltage value in the additional welding method according to the present invention as mentioned above. The welding is carried out using an aluminum wire A5183 at the average value of the welding current Ia = 90 A and the arc voltage Va = 19 V. Fig. 16 shows the welding current variation value $\Delta$Ia A plotted along a horizontal axis and the arc voltage variation value $\Delta$Va V plotted along a vertical axis. The curves Le =1, Le =3 and Le =6 can be obtained by plotting the measurement points corresponding to the variation value Le of the arc length of 1, 3 and 6 mm, respectively. The case $\Delta$Ia =0 is the same case as that when the average value of the welding current Ia is made constant without changing the wire feed rate in the basic welding method of the present invention. In order to obtain Le =1, Le =3 and Le =6 mm, the arc voltage variation values must be 0.3, 1.1 and 2.0 V.

On the horizontal axis of Fig. 16, $\Delta$Ia =50 A corresponds to a case when the welding is carried out by switching the conventional wire feed rate to change largely the variation value of the welding current $\Delta$Ia. As shown by points Q51, Q53 and Q56, in order to obtain the arc length variation values Le =1, Le =3 and Le =6 mm, the arc voltages variation values are $\Delta$Va =1, 3.1 and 6 V, respectively.

In the additional welding method, when the variation value $\Delta$Ia is determined to be 15 A which is within a range of 10 to 15 % of the average value of the welding current, for example, 100 A, the arc length variation value Le =1, Le =3 and Le =6 mm can be obtained by determining the variation values of the arc voltage in the following way; $\Delta$Va =0.3, $\Delta$Va =1.5 and $\Delta$Va =2.5 V, respectively, which are lower than those of the conventional welding method.

In the conventional welding method changing largely the welding current, a large variation in the arc length requires a large arc voltage variation value $\Delta$Va. In order to achieve this, it is necessary to change largely one or more than two among the parameters of pulse current, pulse duration, pulse frequency and base current of the second pulse current group in response to the pulse current value, pulse duration, pulse frequency and the base current value of the first pulse current group. However, too large a base current prevents the molten metal transfer from synchronizing with the pulse. On the other hand, too large a pulse current value causes too strong an arc force and increases the penetration depth, which then results in melt down. Accordingly, it has not been possible for the conventional welding method having the welding current changed largely to also change the arc length largely.

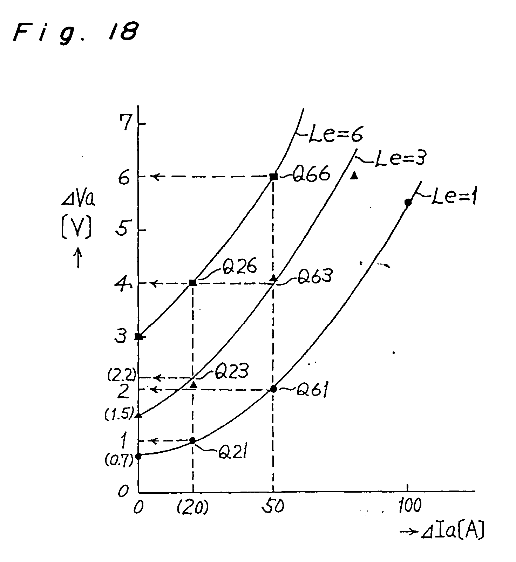

With reference to Figs. 17 and 18, the following description will be directed to the relationship among the average value of the welding current Ia, the variation value of the average welding current $\Delta$Ia A, the arc voltage variation value $\Delta$ Va V, and the arc length variation value Le mm.

Fig. 17 is a graph showing the relationship between the arc voltage variation value $\Delta$Va V and the arc length variation value Le mm when the basic welding method according to the present invention is carried out in a way that controls the wire feed rate to have the average value of the welding current Ia held at a constant value. The welding conditions of Fig. 17 are as follows: electrode = stainless steel SUS308 in a diameter 1.2mm; pulse current value IP =380 A; pulse duration TP =1.2 ms; average value of welding current Ia =100 A and arc voltage Va =20 V as shown by a curve S 100, or average value of welding current Ia =200 A and average value of arc voltage Va =22 V as shown by a curve S 200. In the case when the set average value of welding current Ia changes from 100 A to 200 A, in order to obtain the arc length variation value Le of 6 mm the same in each case, the arc voltage variation value is $\Delta$VA = 3.0 V as shown by a point Q3 on the curve S100 when Ia =100 A, whereas the arc voltage variation value is $\Delta$Va =3.5 V as shown by a point Q4 on the curve S200 when Ia =200 A. It is clear that the latter case has the variation value of the arc voltage higher than that of the former case. That is, an increase in the average value of the welding current Ia requires an increase in the arc voltage variation value $\Delta$Va in order to obtain the same variation value of the arc length in each case.

Fig. 18 is a graph showing the arc length variation value Le obtained when the welding is carried out at a larger welding current by changing largely the conventional wire feed rate and the Le obtained by changing the welding current value and the arc voltage value in the additional welding method according to the present invention as mentioned above. The welding was carried out using a stainless steel wire SUS 308 of diameter 1.2 mm at an average value of the welding current Ia = 90 A and an arc voltage Va = 19 V. The graph shown in Fig. 18 has the variation value of the welding current $\Delta$Ia A plotted along the horizontal axis and the arc voltage variation value $\Delta$Va V plotted along the vertical axis. The curves Le =1, Le =3 and Le =6 can be obtained by plotting the measuring points corresponding to the variation values Le of the arc length of 1, 3 and 6 mm, respectively.

The case $\Delta$Ia =0 is the same as that when the average value of the welding current Ia is made constant without changing the wire feed rate according to the basic welding method of the present invention. In order to obtain Le =1, Le =3 and Le =6 mm, the variation values of the arc voltage $\Delta$Va are 0.7, 1.5 and 3.0 V.

On the horizontal axis of Fig. 18, $\Delta$Ia =50 A corresponds to a case when the welding is carried out by switching the conventional wire feed rate to change largely the variation value of the welding current $\Delta$Ia. As shown by points Q61, Q63 and Q66, in order to obtain the variation values Le =1, Le =3 and Le =6 mm, the arc voltages variation values become $\Delta$Va =2, 4 and 6 V, respectively.

In the additional welding method according to the present invention, when the variation value $\Delta$Ia is determined to be 20 A, which is within a range of 10 to 20 % of the average value of the welding current, for example, 90 A, the arc length variation value Le =1, Le =3 and Le =6 mm can be obtained by determining the arc voltage variation value $\Delta$Va =1.0, $\Delta$Va =2.2 and $\Delta$Va =4.0 V, respectively which are lower than those of the conventional welding method.

Referring to Fig. 11, a switching signal shown in Fig. 11 (B) switches between the first pulse current group and the second current group with an energizing ratio $Ds = T2/(T1+T2)$ between the second pulse energizing period T2 and the first pulse energizing period T1. This switching frequency $F = 1/(T1+T2)$ is set to a suitable value, for example, 0.5 to 25 Hz in order to achieve the intended result. The pulse switching frequency is preferably selected in dependence on the welding speed from the following table.

Table 1

| welding speed [cm/min] | switching frequency [Hz] |
|---|---|
| 10--30 | 1.5 |
| 30--50 | 3 |
| 50--90 | 5 |
| 90--120 | 8 |
| 120--180 | 10 |
| 180--300 | 15 |

As shown in Table 1, the switching frequency is in closely related to the welding speed for obtaining a suitable welding result. Hence, it is possible to switch between the first pulse energizing period and the second energizing period by generating a switching signal at a frequency determined by the signal set to the welding speed.

In connection with the selection of the energizing ratio Ds, when the second pulse energizing period T2 is longer than the first energizing period, the arc length becomes larger and sputter is easily generated. Therefore, it is desirable that the second pulse energizing period T2 is shorter than the first energizing period T1, and the duty ratio $Ds = T2/(T1+T2)$ is preferably selected to be less than 0.5.

Further, when the variation value of the pulse current between the first pulse current IP1 and the second pulse current IP2 is large, sputter is easily generated with the switching of both currents at the same time. It is desirable to switch at different times in order to achieve a gradual increase or decrease shown by a step form, a slope form or the combination of the both.

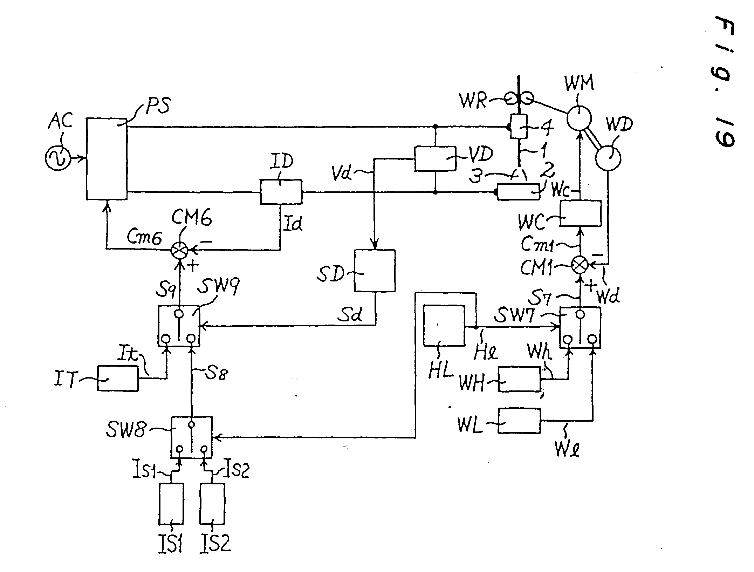

Fig. 19 is a block diagram of welding apparatus for carrying out the MIG arc welding in the meso spray transfer range in which the slight short circuit occurs as already described with reference to Fig. 14.

In general, welding in the meso spray transfer range can be carried out by using a welding output control circuit having a constant current characteristic. The wire feed rate is set in advance to a constant value and the arc length is controlled to be at a constant value according to the intrinsic self-regulation effect of arc length as mentioned above. When a short circuit occurs, this method detects the short circuit and energizes the welding current higher than that the current at a time when no shorting of the arc is generated, to make the re-ignition of the arc.

In the welding apparatus according to this embodiment, the MIG arc welding at this meso spray transfer range CC is carried out by using a welding output power having a constant current characteristic. Hence, there are two methods for switching periodically the arc length; one is to switch the setting value of the welding current, and another is to switch the wire feed rate. Because the wire feed rate is changed at the same time as the switching of the setting value of welding current, the present embodiment changes the arc length periodically by switching periodically the wire feed rate.

In Fig. 19, first and second wire feed rate setting circuits WH and WL are circuits to set the arc lengths with respect to the first and second welding conditions, and output first and second wire feed rate setting signals Wh and Wi, respectively. A switching circuit H generates a switching signal H1 to switch between the first and second welding conditions. A wire feed rate switching circuit SW7 generates a wire feed rate switching signal S7 by utilising the switching signal H1 to switch between the signal Wh and the signal Wi. A wire feed rate comparator circuit CM1 generates a wire feed rate control signal Cm1 obtained from the difference between the signal S7 and a rate detection signal Wd. A first constant current setting circuit IS1 generates a first constant setting signal Is1 for energizing the first constant current I1 for the small arc length. A second constant current setting circuit IS2 generates a second constant current setting signal Is2 for energizing a second constant current I2 for the long arc length. A constant current switching circuit SW8 generates a constant current switching signal S8, and a short circuit current setting circuit IT generates a short circuit setting signal It for energizing the welding current higher than that for the arc generation. A short circuit detection circuit SD generates a short circuit detection signal Sd when the short circuit is generated by an input of arc voltage detection signal Vd generated from an arc voltage detection circuit VD. A short circuit current switching circuit SW9 generates a short circuit switching signal S9 by switching the constant current switching signal S8 to the short circuit current setting signal It. A welding current comparator circuit CM6 receives a welding current detection signal Id from the short circuit switching signal S9 and a welding current detection circuit ID and outputs a welding current control signal Cm6 corresponding to the difference between both signals to a welding output control circuit PS to control the welding current. In such a case when an aluminum plate is welded by a MIG welding method at the meso spray transfer range CC, the variation in the arc voltage increases with the large variation in the arc length because the arc flies far away to the oxide film. Hence, it is difficult to control the arc length by detecting the arc voltage. Therefore, it is possible to control the penetration pattern by changing the arc length equivalent to the shortest distance between the terminal 1a of consumable electrode and the surface of molten pool of the welding material.

In Fig. 19, when the switching signal H1 switches between the first and second constant current setting circuits IS1 and IS2, the operation point mentioned before moves between points A and B. In Fig. 19, when switching between the first wire feed rate setting circuit WH and the second wire feed rate setting circuit WL, the operation point mentioned before moves between points A and B, and the arc length changes from Lt to Lr without changing the welding current I1 with a variation in the arc voltage value from V1 to V3.

There will now be described an embodiment of a pulse MAG arc welding method according to the invention, in which a first welding current of the pulse current group is set to a value to form the spray transfer accompanied with a slight short circuit with holding the wire feed rate at a nearly constant value. A second welding current value without pulse is switched periodically within the spray transfer range at which a slight short circuit does not generate. As shown in Fig. 7, the wire extension length Ln or Lm between the terminal 4a of the electric supply tip and the wire end terminal 1a or 1b is periodically switched between the two lengths and the arc length Lr or Lt of the shortest distance between the terminal 1a or 1b and the surface of workpiece 2 is periodically changed.

The welding method energizes the welding current obtained with the periodic switching between the first welding current of the pulse current group and the second welding current without pulse and is characterized by the following steps: First, the wire is fed at a constant rate determined in advance. A pulse current value, pulse energizing time and a pulse frequency as well as a base current value of the first welding current are set to values to permit the molten drop to transfer from the wire to the workpiece in a synchronizing way with each of the current pulses accompanied with a slight short circuit. The second welding current is energized within the spray transfer range at which the slight short circuit does not generate. The welding is carried out by changing periodically the arc length in accordance with the variation in the wire extension length between the terminal of the electric supply tip and the end terminal of the wire.

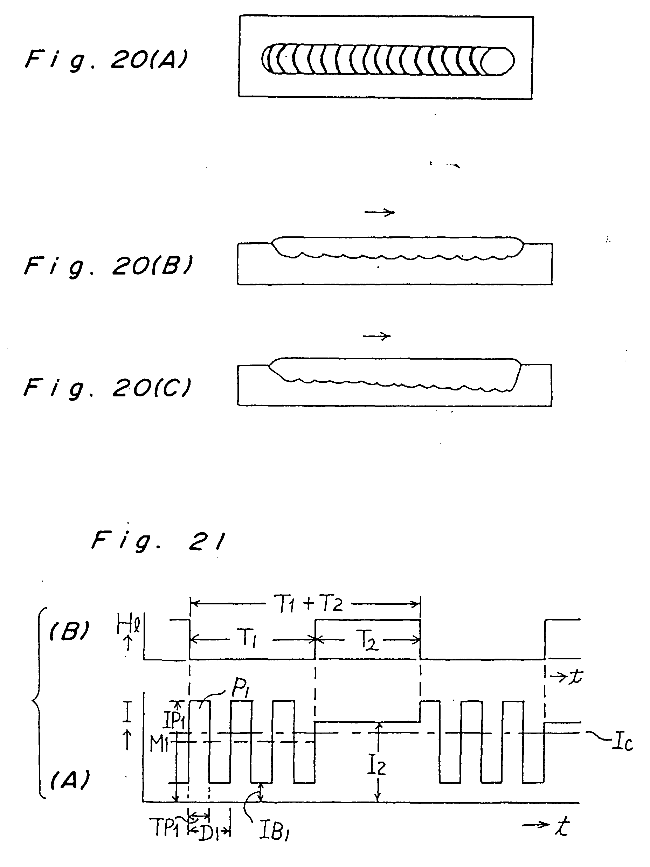

The next embodiment is a case where an aluminum alloy plate A5052 in thickness of 6 mm is welded by using an aluminum alloy A5183 electrode of 1.2 mm diameter with a pulse MIG arc welding method. Fig. 20 (A) shows the appearance of the bead obtained with the welding conditions described below. The bead has a regular ripple pattern the same as that obtained with TIG filler arc welding method as shown in Fig. 1.

A first welding current is a pulse current group having a constant characteristic and a second welding current is a direct current having a constant current characteristic. The average value of the welding current is Ia = 150 A.

first arc voltage Va1 =19.5 V
(slight short circuit transfer mode, arc length Lt =3 mm)
second arc voltage Va2 =22.5 V
(spray mode, arc length Lr =8mm)
switching frequency F = 2 Hz
welding speed WS =40 cm/min
pulse condition for slight short circuit spray transfer mode
pulse current value IP =320 A
pulse energizing time TP =1.2 ms
base current value IB =30 A

The penetration depth obtained with the welding conditions above increases along the welding direction according to the prior art as shown in Fig. 20 (C), On the other hand, the penetration depth is set to a given value in a synchronizing way to the switching frequency and is a steady depth as shown in Fig. 20 (B) in this embodiment of the welding method according to the present invention .

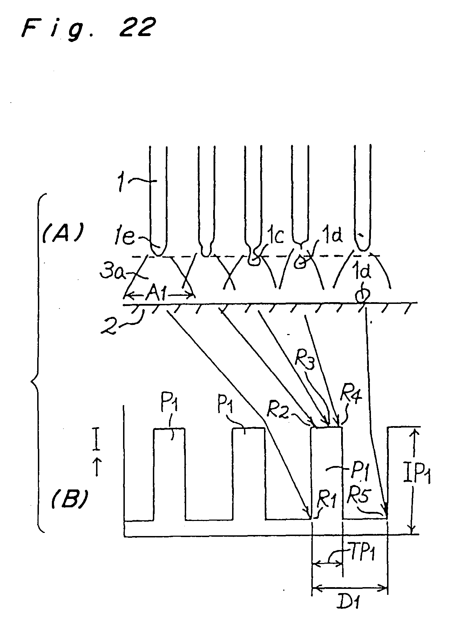

Fig. 21 (A) is a graph showing a waveform to be used in a further embodiment of the welding method according to the invention. A first welding current comprises pulse current groups and uses a short arc length in 2--4 mm to carry out the meso spray transfer accompanied occasionally with a slight short circuit during the spray transfer. The average value of the welding current is expressed by M1. The second welding current is a direct current to carry out the spray transfer without generation of the slight short circuit and uses the arc length more than 6 mm. The average value is expressed by I2. Fig. 21 (B) is a graph showing a switching signal H1 for switching between the first and second welding currents.

Figs. 22 to 24 are graphs illustrating a further embodiment of the welding method according to the invention.

Fig. 22 (A) is a structural model view showing the a sequence in which the molten metal drop separates from the terminal of the wire when operating in the mode in which one pulse transfers one molten metal drop. Fig. 22 (B) is a graph showing the pulse current against a time base. In Fig. 22 (B), P1 denotes each current pulse; IP1, the pulse current value; TP1, the pulse duration; D1, the pulse frequency. The instants R1 to R5 during the passage of each current pulse P correspond to the illustrated steps of melting at the wire terminal 1e, formation of molten bead 1c, separation of molten bead 1c from the wire terminal 1a and transportation of the molten metal drop to the welding material 2. In such a way, the one pulse to one molten metal drop mode 1P1D is carried out with each pulse to transfer the molten drop.

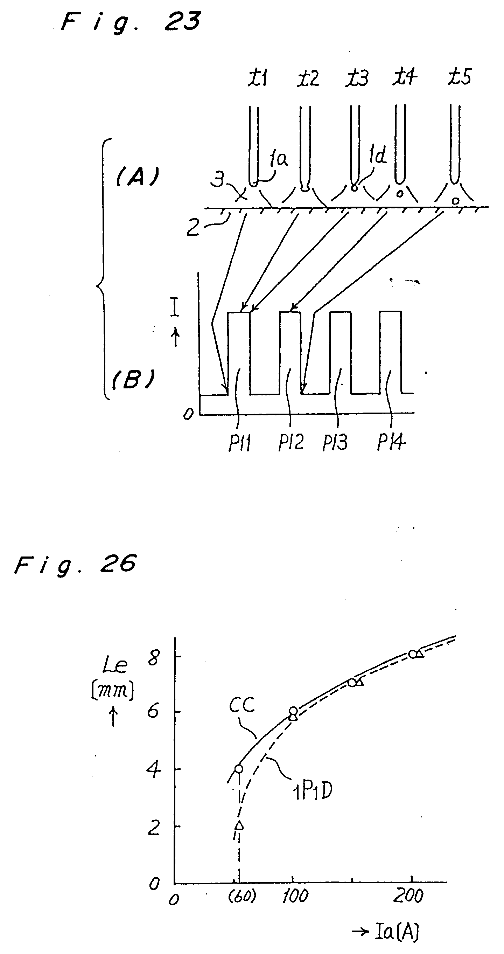

Fig. 23 (A) is a structural model view showing a sequence in which the molten metal drop separates form the wire terminal when operating in the mode in which a plurality of pulses transfer one molten metal drop. Fig. 23 (B) is a graph showing the pulse current against a time base.

When the arc length is made shorter by decreasing the pulse current IP or pulse duration TP or both to less than the 1P1D range mentioned above, at the time t3 shown in Fig. 23 (A), the state just after the separation of the molten bead 1d from the wire terminal 1a occurs in synchronism with the pulse P11 at the first position of the first pulse group. After that, the molten metal is not transferred with the pulses P12 to P14 at the second to the fourth positions. That is, in the first pulse current group, there is generated a plurality of pulses to one molten metal drop mode in which one current pulse among a plurality of pulses synchronizes with the one molten metal transfer. The plurality of pulses to one molten metal drop transfer range nP1D has no spatter generated therein and is practically useful in the same way as the one pulse to one molten metal drop range 1P1D.

However, when the pulse current Ip or pulse energizing time TP or both are made lower than the plurality of pulse to one molten metal drop transfer range nP1D, a short circuit starts to generate and the current pulse does not synchronize with the molten metal transfer. The short circuit generates spatter. Accordingly, the short circuit transfer range DRP is excluded from the range for which the present invention is applicable.

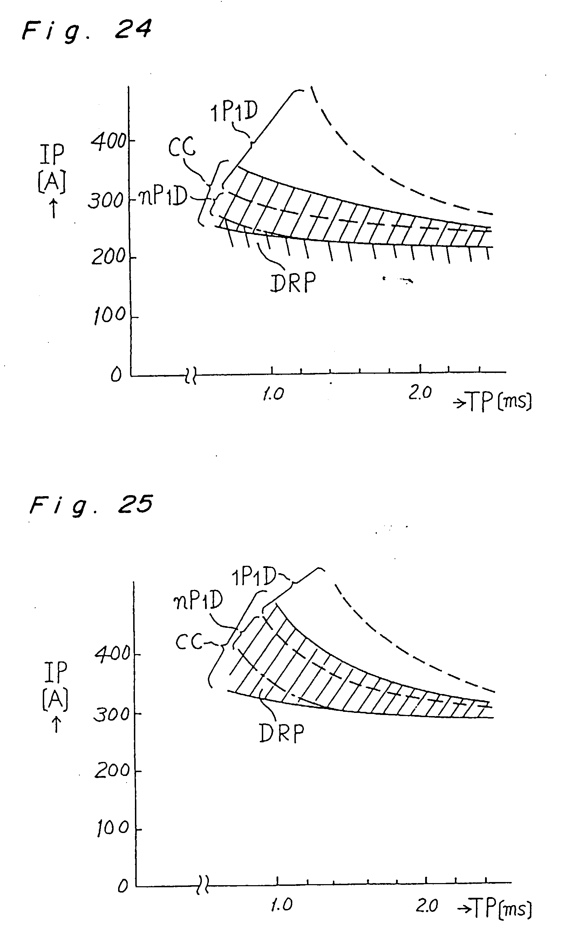

Fig. 24 is a graph showing a molten metal drop transfer form as a function of the pulse duration TP ms (horizontal axis) and the pulse current IP A (vertical axis) when the welding method is carried out with an aluminum wire A5183 by using the pulse current at a welding current average value la =100 A. Reference characters DRP, nP1D and 1P1D denote the short circuit transfer range, a plurality of pulses to one molten metal drop transfer range and one pulse to one molten metal drop transfer range respectively, as mentioned with Figs. 22 and 23. A symbol CC indicates a range which has the slight short circuit generated therein and comprises a total of the one pulse to plurality of molten metal drop transfer range, a lower part of the one pulse to plurality of molten metal drop transfer range and a upper part of the short circuit transfer range and is nearly the same as the meso spray transfer range described with reference to Fig. 14.

Fig. 25 is a graph showing a molten metal drop transfer form as a function of the pulse duration TP ms (horizontal axis) and the pulse current IP A (vertical axis) when the welding method is carried out with an aluminum wire A5183 by using the pulse current with a welding current average value la =120 A.

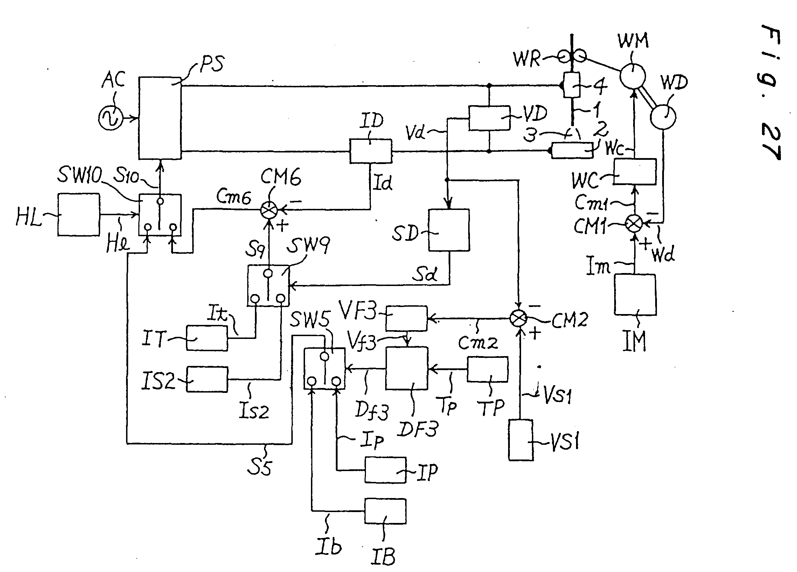

Fig. 26 is a graph showing the relationship between then average value of the arc welding current la A (horizontal axis) and the maximum value of the arc length variation value Le mm, in connection with a welding method operating in a plurality of pulses to one molten metal drop transfer range having a slight short circuit, shown by a solid line, and a welding method operating in a one pulse to one molten metal drop transfer range, shown by a dotted line, when an aluminum wire A5183 of a diameter 1.2 mm is used. At the average value of the welding current la =60 A, the welding method 1P1D shown by the dotted line has a maximum arc length variation value Le =2 mm whereas the welding method shown by a solid line CC has a maximum arc length variation value Le =4 mm, which is twice that of the 1P1D welding method. As a result, the welding method shown by a solid line CC can expand the field of application of the welding method 1P1D shown by a dotted line in connection with the welding of thin plates with a low current.

Fig. 27 is a block diagram of a welding apparatus of the embodiment practicing the pulse MAG arc welding method according to a further embodiment of the invention. The circuit is similar in many respects to the circuit of Fig. 19, but it has a controlling circuit for energizing the pulse current formed instead of the first constant current setting circuit IS1 and the constant current switching circuit SW8 of Fig. 19. A pulse current value setting circuit IP generates a pulse current value setting signal while a base current setting circuit IB generates a base current value setting signal lb. A pulse duration setting circuit TP generates a pulse duration setting signal Tp. A pulse frequency control signal generator circuit VF3 generates a pulse frequency control signal Vf3 in response to the arc voltage control signal Cm2. A pulse duration frequency control signal generator circuit DF3 generates a pulse duration frequency control signal Df3 comprising a pulse duration setting signal Tp and a pulse frequency control signal Vf3. A pulse base current switching circuit SW5 generates, at the first welding current, a pulse current setting signal Ip and a base current setting signal lb as well as a switching pulse base current signal S5 repeating at a frequency f determined by the first pulse duration frequency control signal Df3. Next, the second welding current, the pulse base current switching circuit SW5 generates a constant current setting signal Is2 set by constant current setting circuit IS2. Further, a short circuit switching circuit SW9 generates a short circuit switching signal S9 by switching between a constant current setting signal Is2 and a short circuit current setting signal It, whereas a pulse constant current switching circuit 10 outputs a pulse constant current switching signal S10 to a welding output control circuit PS by switching between a welding current control signal Cm9 and a switching pulse base current signal S5.

The welding method according to the invention may performed in such a manner that a first welding current for obtaining the first arc length is a first pulse current group and the second welding current for obtaining the second arc length is the second pulse current group.

It can be arranged that when the first pulse current group has a small current and a short arc length, the mode becomes a spray transfer mode having a slight short circuit generated therein as described with the welding method according to an earlier embodiment. Alternatively, when the first pulse current group has a relatively large pulse current value or a relatively long arc length, the mode is in a spray transfer mode having no slight short circuit.

The following description will be directed to a suitable range of a pulse current IP and a pulse duration TP capable of energizing the first pulse current group and the second pulse current group without causing the short circuit transfer mode and a transfer form.

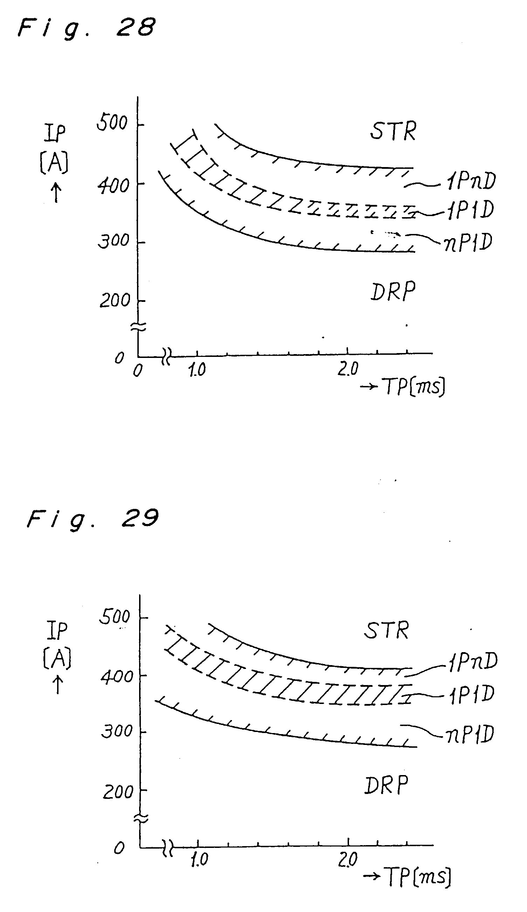

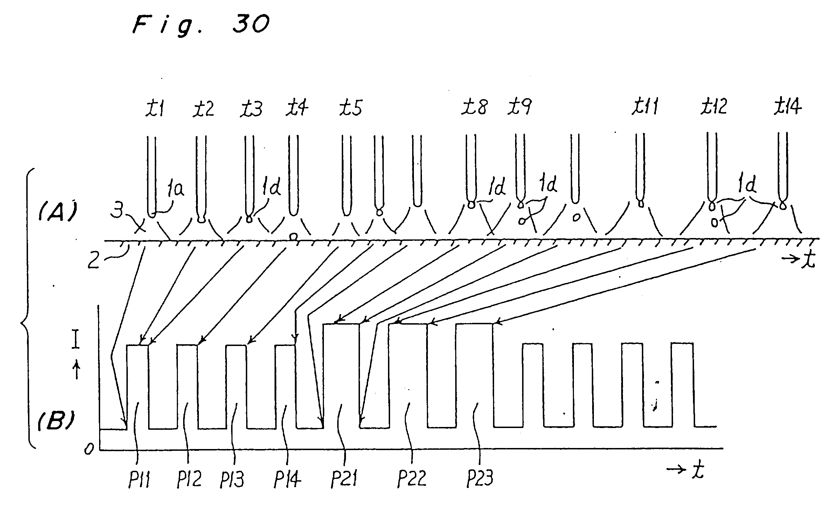

Fig. 28 is a graph showing that a range permitting the one pulse to one molten metal drop transfer mode is within a range 1P1D shown by an oblique line in connection with a pulse duration TP ms (horizontal axis) and a pulse current IP A (vertical axis) when the pulse MAG arc welding method is carried out at a welding current average value of 100 A at an arc length of 3 mm by using a soft steel wire of 1.2 mm diameter (JIS, YGW-12) and a sealed gas of a mixture of 80 % of argon gas and 20 % of carbon dioxide gas. Fig. 29 is a graph showing that a range permitting the one pulse to one molten metal drop transfer mode is within a range 1P1D shown by an oblique line in connection with a pulse duration TP ms (horizontal axis) and a pulse current IP A (vertical axis) when the pulse MAG arc welding method is carried out at a welding current average value of 100 A at an arc length of 3 mm by using a stainless steel wire of 1.2 mm diameter and a sealed gas of a mixture of 98 % of argon gas and 2 % of oxygen gas.

As shown in Figs. 28 and 29, the range of the oblique line is narrow. It is difficult for the welding method in a one pulse to one molten metal drop transfer mode to switch periodically a suitable pulse current, pulse duration or the both of them.

The following description will be directed to a welding method capable of enlarging the applicable range which has less short transfer mode generated therein than the range possible in the one pulse to one molten metal drop transfer mode.

With reference to Figs. 28 and 29, the arc length is made shorter by decreasing the pulse current value IP, the pulse duration TP or both to less than the 1P1D one pulse to one molten metal drop transfer range shown by a oblique line. Thus, at the time t3 shown in Fig. 30 (A), the state just after the separation of the molten bead 1d from the wire terminal 1a occurs in synchronism with the pulse P11 at the first position of the first pulse group. After that, the molten metal drop is not transferred with the current pulses P12 to P14 at the second to the fourth positions. That is, in the first pulse current group, there is generated a plurality of pulses to one molten metal drop mode in which one current pulse among a plurality of current pulses synchronizes with the one molten metal transfer. The plurality of pulses to one molten metal drop transfer range nP1D has no spatter generated therein and is practically useful in the same way as the one pulse to one molten metal drop range 1P1D.

However, when the pulse current Ip or pulse energizing time TP or both of them is made lower than required for the plurality of pulses to one molten metal drop transfer range nP1D, the short circuit starts to generate, and the pulse current does not synchronize with the molten metal transfer. The short circuit at the short circuit transfer range DRP shown in Figs. 28 and 29 generates spatter. Accordingly, the short circuit transfer range DRP is excluded from the range for which the present invention is applicable because the short circuit transfer range can not produce a scale bead obtained with the TIG filler arc welding method included in the aluminum MIG arc welding method which is one of the applications of the present invention.

With reference to Fig. 28, the arc length is made longer by increasing the pulse current value IP or the pulse duration TP to a size larger than the 1P1D one pulse to one molten metal drop transfer range shown by a oblique line. Thus, at the time t8 and t9 shown in Fig. 30 (A), a state is reached which causes, twice, the separation of a molten bead 1d from the wire terminal 1a. The pulse at this time synchronizes with the pulse P21 at the first position of the first pulse group. After that, the double molten metal drops 1d separate with the pulse current P22 at the second position. That is, during a pulse period between two current pulses, a plurality of molten metal drops are transferred. At least one of the transfers is a one pulse to plurality of molten metal drops transfer range 1PnD which is synchronizing with the pulse current.

When the pulse current value and the pulse duration are made larger than those in this range, the molten metal extends into a string so that the molten metal transfer mode is changed to a so called streaming transfer mode STR which is in no relation with the energizing of the pulse current, that is, which does not synchronize with the current pulses. Within this range STR, the arc length can not follow the variation in the wire extension length or wire feed rate, and produces a short circuit to generate spatter.

It is noted that a so called projection transfer range is a range at which the molten metal transfer synchronizes with the energizing of the pulses comprising those of three ranges of the one pulse to a plurality of molten metal drop range 1PnD, the one pulse to one molten metal drop range 1P1D, and a plurality of pulses to one molten metal drop range nP1D. Therefore, in the welding method according to another embodiment of the invention, the first pulse current group is set to a short range corresponding to the short arc length at the plurality of pulses to one molten metal drop transfer range nP1D whereas the second pulse current group is set to the long range corresponding to a long arc length at the one pulse to a plurality of molten metal drops 1PnD. This welding method can be said to be a method of switching between the both of the first and second pulse current groups. Further, such a welding method is intended to be applicable for the ranges of a plurality of pulse to one molten metal drop transfer range nP1D and the one pulse to a plurality of molten metal drops range 1PnD which are positioned outside of the one pulse to one molten metal drop transfer range 1P1D. As a result, the pulse current value and the pulse duration can be extended to a enlarged range. This makes it possible to enlarge the variation value of the arc length Le to extend the application field for various purposes.

Fig.29 is a graph showing molten metal transfer in connection with the pulse duration TP ms (horizontal axis) and the pulse current value Ip A (vertical axis) when the pulse MIG arc welding method is carried out by using a stainless steel. Reference characters STR, 1PnD, 1P1D, nP1D and DPR are expressed in a similar way to that of Fig. 28 and accordingly, need not be further described.

In a pulse MAG arc welding method carried out by energizing the pulse welding current obtained by switching between the first pulse current group and the second pulse current group, one welding method according to the invention feeds the wire at constant feed rate determined in advance and the pulse current value, the pulse period, the pulse duration (pulse energizing time) of each pulse of the first current group and a base current value are set to values with which the molten metal transfer from the consumable electrode to the welding material synchronizes with one of a plurality of current pulses to form the plurality of pulses to one molten metal drop transfer mode. The pulse current value, the pulse duration and the pulse frequency of the second pulse group and the base current are energized by a pulse welding current set to a value different from that of the first current group within a range to form the one pulse to one molten metal drop transfer mode. Then, the wire extension length between the terminal of the electric supply tip and the terminal of the wire is changed, while the arc length between the terminal of the wire and the surface of the welding material is switched periodically. When the arc length varies due to imbalance between the wire feed rate and the wire melting speed, the arc length is restored by changing the pulse period,the pulse duration, the base current or the pulse current so that the pulse MAG arc welding is carried out only by the spray transfer mode.

A modification of this welding method is performed using the one pulse to a plurality of molten metal drops transfer mode in place of the one pulse to one molten metal drop transfer mode of the second pulse current group described above.

In another modification, the welding is performed within the range at which the slight short circuit generates as mentioned with Figs. 24 and 25 when the pulse current ratio of the first pulse current group is relatively small or the arc length is short. Alternatively, the welding is performed within the one pulse to one molten metal drop transfer range excluding the range at which the slight short circuit generates.

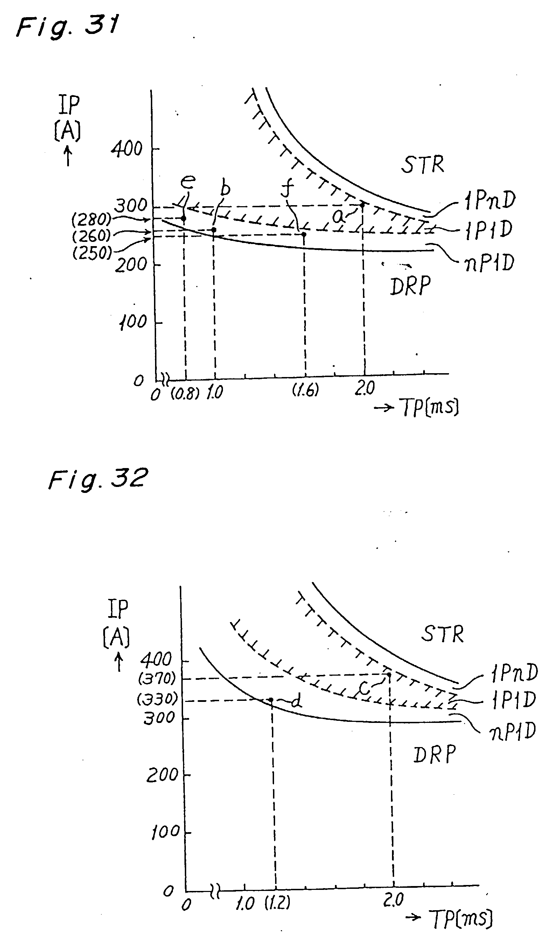

Fig. 31 is a graph showing the molten metal transfer mode in connection with a pulse duration TP ms (horizontal axis) and the pulse current value IP A (vertical axis) when welding is carried out at the welding current average value of Ia =100A by switching periodically between the first pulse current group and the second current group with an aluminum wire A5183 of 1.2 mm diameter. In Fig. 31, the relationship between the pulse current,the pulse duration and the molten metal transfer mode is obtained by photographing the molten metal transfer state at a high speed and by waveform analysis. Reference characters STR, 1PnD, 1P1D, nP1D and DRP denote respectively, the streaming transfer range, one pulse to plurality of molten metal drops transfer range, one pulse to one molten metal drop transfer range, a plurality of pulses to one molten metal drop transfer range and the short circuit transfer range in a similar way to Fig. 28.

The welding method is performed by setting the conditions of the first pulse current group as follows: the arc length is short at 2 mm. The pulse current value and the pulse duration at the plurality of pulses to one molten metal drop transfer range nP1D can be expressed by points b, e, and f in Fig. 31, that is, 260 A-1.0 ms, 280 A-0.8 ms, and 250 A-1.6 ms. The second pulse current conditions are that the arc length is long and the pulse current value and the pulse duration shown by a point a in the one pulse to one molten metal drop transfer range is 300 A-2.0 ms. The welding method is performed by switching between the first and second pulse current groups. When the arc length Lt or Lr MM is changed by changing the wire feed rate against the setting condition of the first pulse current group, that is, points b, e, and f, the number of the short circuit Nst times/sec increases rapidly with a decrease of the arc length below 2 mm. Therefore, an arc length less than 2 mm is not desirable. Accordingly, in the welding method according to the present invention, the arc length should be made longer than 2 mm in the setting conditions of the first pulse current group.

Fig. 32 is a graph showing the molten metal transfer mode in connection with a pulse duration TP ms (horizontal axis) and the pulse current value IP A (vertical axis) when the welding is carried out at the welding current average value of Ia =120A by switching periodically between the first pulse current group and the second current group with an aluminum wire A5183 of 1.6 mm diameter. In Fig. 32, reference characters STR, 1PnD, 1P1D, nP1D and DRP denote respectively the streaming transfer range, one pulse to a plurality of molten metal drops transfer range, one pulse to one molten metal drop transfer range, a plurality of pulses to one molten metal drop transfer range and the short circuit transfer range, in a similar way to Fig. 28.

The welding method is performed setting the conditions of the first pulse current group as follows: the arc length is short at 3 mm. The pulse current value and the pulse duration at the plurality of pulses to one molten metal drop transfer range nP1D can be expressed by a point d in Fig. 32, that is, 330 A-1.2 ms. Next, the conditions of second pulse current are that the arc length is long and the pulse current value and the pulse duration shown by c point in the one pulse to one molten metal drop transfer range 1P1D are 370 A and 2.0 ms, respectively. When the welding method is performed by switching the first, pulse current group, and the second pulse current, the arc length is made longer than 2 mm in the first pulse current group setting condition in a similar way to that described for Fig. 31.

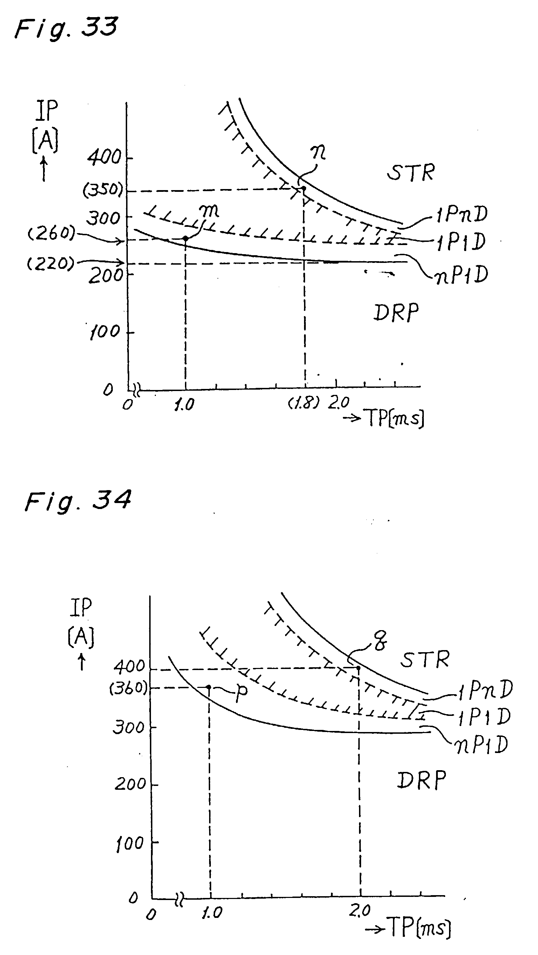

For the next embodiment reference is made to Fig. 33, which is a graph showing the molten metal drop transfer mode in the same way as Fig. 31. The first pulse current group setting conditions are that the arc length is short at 2 mm and the pulse current value and the pulse duration in the plurality of pulses to one molten metal drop transfer range can be expressed by a point m in Fig. 33, that is, 260 A-1.0 ms. The second pulse current group conditions are that the arc length is long, and the pulse current value and the pulse duration can be expressed by a point n in the one pulse to plurality of molten metal drops transfer range 1PnD, that is, 350 A-1.8 ms. When the arc length is less than 2 mm, especially 1.5 mm, the number of the short circuit rapidly increases. As a result, an arc length in the range lower than 2 mm is not desirable. The arc length should be made longer than 2 mm at the first pulse current group setting conditions in a similar way to that described with reference to Fig. 31.

Fig. 34 is a graph showing the molten metal drop transfer mode in a similar way to Fig. 32. In this example, the first pulse current group setting conditions are that the arc length is short at 3 mm, and the pulse current value and the pulse duration in the plurality of pulses to one molten metal drop transfer range nP1D can be expressed by a point p in Fig. 34, that is, 360 A-1.0 ms. Next, the second pulse current group conditions are that the arc length is long, and the pulse current value and the pulse duration can be expressed by a point q in the one pulse to plurality of molten metal drops transfer range 1PnD, that is, 400 A-2.0 ms. When the welding method is performed by switching between the first and second current groups, it is desirable to make the arc length longer than 2 mm at the first pulse current group setting conditions in a similar way to that described with reference to Fig. 33.

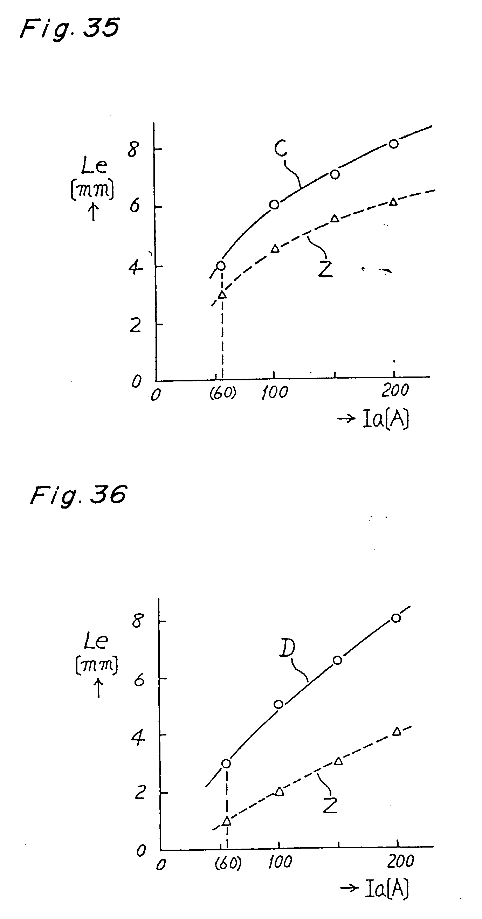

Fig. 35 is a graph showing the relationship between the average value of the arc welding current Ia A (horizontal axis) and the maximum variation value of the arc length Le mm, in connection with a welding method within a switching range (referred to as a projection range) between a plurality of pulses to one molten metal drop transfer range nP1D and a one pulse to a plurality of molten metal drops transfer range 1PnD, as shown by a solid line C, and a welding method in a one pulse to one molten metal grain transfer range (1P1D), as shown by a dotted line Z. In both cases an aluminum wire A5183 of diameter 1.2 mm is used. With reference to Fig. 35, at the average value of the welding current Ia =60 A, the welding method 1P1D shown by the dotted line has the maximum arc length variation value Le =3 mm whereas the welding method within the project range has the maximum arc length variation value Le =4 mm. Further, at the average value of the pulse current Ia =200A, the maximum value of the arc length according to the welding method of 1P1D is Le =6 mm whereas the maximum value of arc length according to the projection range is Le =8 m which is twice larger than that of the welding method at 1P1D range. As a result, the welding method within the project range can expand the application field to be carried out by the welding method 1P1D in connection with the welding of the thin plate with a low current.

Fig. 36 is a graph showing the relationship between the average value of the arc welding current Ia A (horizontal axis) and the maximum arc length variation value Le mm, in connection with a welding method within a projection range shown by a solid line D and a welding method in the 1P1D range shown by a dotted line Z, in each case using a stainless steel wire SUS308 of 1.2 mm diameter. At the average value of the welding current Ia =60 A, the welding method in the 1P1D range has a maximum arc length variation value Le =1.0 mm whereas the welding method in the projection range has a maximum arc length variation value Le =3 mm. Further, at the average value of the pulse current Ia =200A, the maximum value of the arc length using the method in the 1P1D range is Le =4 mm whereas the maximum value of arc length using the projection range is Le =8 mm which is twice that of the welding method in the 1P1D range. As a result, the welding method in the projection range can expand the application field in connection with the welding of thin plate with a low current.

In a pulse MAG arc welding method carried out by energizing the pulse welding current obtained by switching between the first pulse current group and the second pulse current group, the wire may be fed at constant feed rate determined in advance, and the pulse current value, the pulse period, the pulse duration (pulse energizing time) of each pulse of the first current group and a base current value be set to values at which the molten metal transfer from the consumable electrode to the welding material synchronizes with one of a plurality of current pulses to form the plurality of pulses to one molten metal drop transfer mode. The pulse current value, the pulse duration and the pulse frequency of the second pulse current group and the base current are energized by a pulse welding current set to a value different from that of the first current group within a range to form the one pulse to one molten metal drop transfer mode. Then, the wire extension length between the terminal of the electric supply tip and the terminal of the wire is changed, while the arc length between the terminal of the wire and the surface of the workpiece is switched periodically. When the arc length varies due to imbalance between the wire feed rate and the wire melting speed, the arc length is restored by changing the pulse period,the pulse duration, the base current or the pulse current so that the pulse MAG arc welding is carried out only by the spray transfer mode.

In another example, the welding method is performed in the one pulse to plurality of molten metal drops transfer mode in place of the one pulse to one molten metal drop transfer mode of the second pulse current group described in the welding method mentioned above.

In a further instance, the welding method can be performed within the range at which the slight short circuit generates as mentioned with reference to Figs. 24 and 25, when the pulse current value of the first pulse current group is relatively small or the arc length is short. Alternatively, the welding can be performed within the one pulse to one molten metal drop transfer range excluding the range shown in Figs. 24 and 25 at which the slight short circuit is generated.

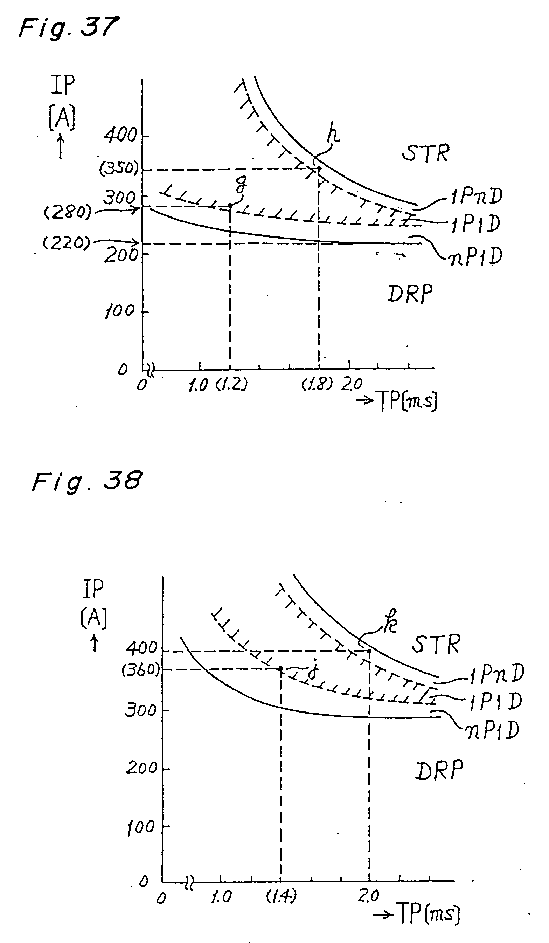

Fig. 37 is a graph showing the molten metal drop transfer mode in the same way as Fig. 31. It refers to a welding method in which the first pulse current group setting conditions are that the arc length is short at 3 mm, and the pulse current value and the pulse duration in the one pulse to one molten metal drop transfer range 1P1D can be expressed by a point g in Fig. 37, that is, 280 A-1.2 ms. Next, the second pulse current group setting conditions are that the arc length is long, and the pulse current value and the pulse duration can be expressed by a point h in the one pulse to a plurality of molten metal drops transfer range 1PnD, that is, 350 A-1.8 ms.

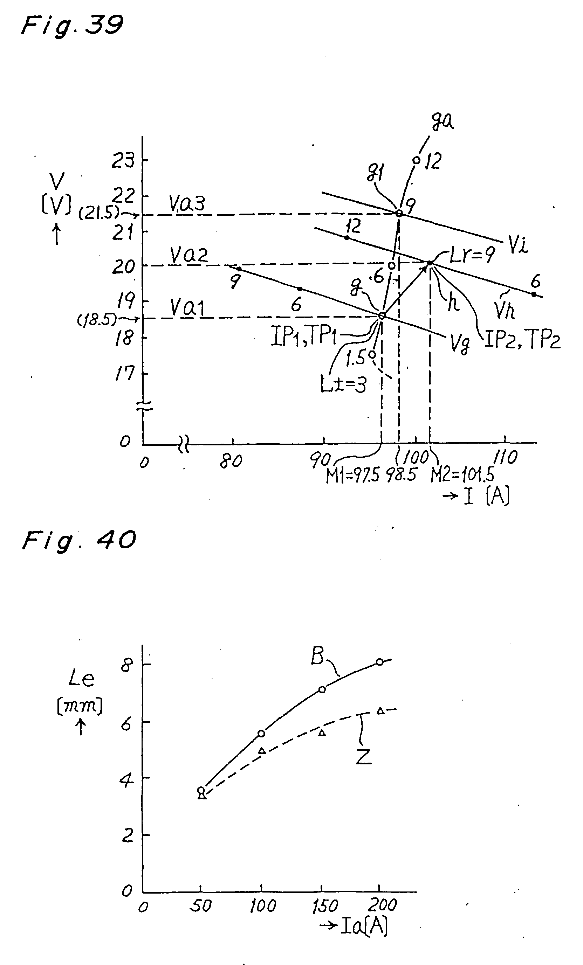

When the welding is performed by switching between the first and second current groups, the first and second pulse current groups are changed in the setting condition into points g and h, respectively so as to change the arc length to Lt and Lr with the constant wire feed rate WF =500 cm/min. The graph shown in Fig. 39 indicates the relationship between the average values of welding currents during the first and the second pulses energizing times M1 and M2 A (horizontal axis) and the arc voltages Va1 and Va2 V (vertical axis) corresponding to the average values of welding currents, respectively.

With reference to Fig. 39, at an operation point g of the first pulse current IP1 =280 A and the first pulse duration TP1 =1.2 ms, the following conditions are held; the arc length Lt =3 mm, the first arc voltage value Va1 =18.5 V, and the average value of the welding current during the first pulse energizing time M1 =97.5 A. At the operation point h of the second pulse current value IP2 =350 A and the second pulse duration TP2 =1.8 ms, the following conditions are held; the arc length Lr =9 mm, the second arc voltage value Va2 =20.0 V and the average value of the welding current during the second pulse energizing time M2 = 101.5 A.

When the first arc voltage setting circuit VS1 of the welding apparatus controls the first arc voltage setting value Vs1 to give an arc length of 9 mm, the pulse frequency or the base current value increases and moves to an operation point g1 on the curve ga. At this point, the arc voltage value is Va3 =21.5 V, and the welding current value is 98.5 A. It is interesting to compare the point g1 with a point h against the point g. Without changing the pulse current and pulse duration,but changing the pulse frequency or the base current value, a variation from the point g to a point g1 requires a variation of 3V in the arc voltage. On the other hand, a variation from the point g to the point h with changing the pulse current value and the pulse duration requires a variation rate in the welding current average value (101.5-97.5)/97.5x100 =4.1% whereas the variation in the arc voltage value is only Va2-Va1 =1.5 V . That is, when the arc length is changed from 3 mm to 9 mm, a variation from the point g to the point g1 requires the variation of 3 V in the arc voltage. However, a variation from the point g to the point h requires a slight increase (4%) in the welding current average value but a variation in the arc voltage of 1.5 V which is half of the voltage variation required for the former case.

This means that the variation in the arc length from the point g to the point h results not only in the variation in the arc voltage but also in an increase in the wire melting speed. Accordingly, at the point g, the increase in the wire melting speed permits the plurality of pulses to one molten metal drop mode to be completed and hence, it is possible to hold a stable arc free from short circuits. In Fig. 39, the straight lines Vg, Vh and Vi indicates the arc voltage obtained with the variation in the pulse frequency of the welding electric source or the variation in the base current while keeping the pulse current value and pulse duration the same as those of the operation points g, h and g1. Numerals 1, 5, 3, 6, 9 and 12 on the curves and the lines of Fig. 39 shows the arc lengths mm at the operation points of output current values and the arc voltage values.

Fig. 38 is a graph showing the molten metal drop transfer mode in a similar way to Fig. 32. Welding is carried out by setting the conditions of the first pulse current group as shown in the following: the arc length is short at 3 mm; the pulse current value and the pulse duration in the plurality of pulses to one molten metal drop transfer range nP1D can be expressed by a point j in Fig. 38, that is, 330 A and 1.2 ms for the pulse current value and the pulse duration. Next, the second pulse current setting conditions are that the arc length is long and the pulse current value and the pulse duration is shown by a point k in the one pulse to a plurality of molten metal drops transfer range 1PnD is 400 A and 2.0 ms. The welding method is carried out by switching between the first and second pulse current groups.

Fig. 40 is a graph showing the relationship between the average value of the arc welding current la A (horizontal axis) and the maximum value of the variation value of the arc length Le mm, in connection with a welding method within a switching range (referred to a nP1D-1PnD range or the projection range) between a plurality of pulses to one molten metal drop transfer range nP1D and a one pulse to a plurality of molten metal drops transfer range 1PnD, as shown by a solid line B, and a welding method in a one pulse to one molten metal grain transfer range 1P1D, as shown by a dotted line Z. In both cases an aluminum wire A5183 of diameter 1.2 mm is used. With reference to Fig. 40, at the average value of the welding current Ia =200 A, the welding method 1P1D shown by a dotted line has the maximum value of the arc length variation value Le =6 mm whereas the welding method within the projection range has the maximum value of the arc length variation value Le =8 mm. As a result, the welding method within the nP1D-1P1D range can expand the application field to be carried out by the welding method with the 1P1D range.

A welding method according to the invention may be performed in which the arc length is changed between a first arc length Lt and a second arc length Lr by switching the welding current value periodically.

The average value Ia of welding current in the pulse current can be expressed by the following equation with reference to Fig. 11:

$$Ia = [IP \times TP + IB (D - TP)]/D$$

where IP =pulse current, TP =pulse duration, IB =base current and D =pulse period (D =1/f; f is a pulse frequency).

Therefore, the average value Ia of welding current can be switched by switching one of IP, TP, IB and f with the switching frequency F.

To counter external disturbances due to the variation in the wire feed rate and the variation in the distance between the surface of the welding material and the electric supply tip, it is required to keep the first arc length Lt and the second arc length Lr at a value within the range predetermined and to prevent a short circuit or a too great enlargement of the arc length. In order to satisfy this requirement, it is necessary to change the average value of the welding current with the arc voltage control signal Cm2 obtained from the difference between the arc voltage setting signal Vs1 and the arc voltage detection signal Vd.

The average value of welding current Ia can be controlled by the above f, TP, IB or IP. The change in the pulse frequency f3, pulse duration TP3, base current IB or pulse current IP3 can control the wire melting speed to maintain the first and second arc lengths.

Such a welding method can be performed by the following four ways.

1. The pulse frequency f3 is controlled with the arc voltage control signal Cm3.
   The first welding current I1 and the second welding current I2 are switched using one or more of pulse current IP, pulse duration Tp and base current IB.
2. The pulse duration TP3 is controlled by the arc voltage control signal Cm2.
   The first welding current I1 and the second welding current I2 are switched using one or more of pulse current IP, pulse frequency f and base current IB.
3. The base current value IB3 is controlled by the arc voltage control signal Cm2.
   The first welding current I1 and the second welding current I2 are switched using one or more of pulse current IP, pulse duration TP and pulse frequency f.
4. The pulse current value IP3 is controlled by the arc voltage control signal Cm2.
   The first welding current I1 and the second welding current I2 are switched using one or more of pulse duration TP, pulse frequency f and base current value IB.

In comparison with those last examples, in which the arc voltage setting signal Vs1 used is common to the first and second arc lengths, it is alternatively possible to perform a welding method according to the invention in which the first arc length Lt is set by the arc voltage setting signal Vs1 and the second arc length Lr is set by a second arc voltage setting signal Vs2.

In one method, therefore, in order to switch between the first arc length Lt and the second arc length Lr, it is necessary to switch at least one setting value selected from the group of pulse frequency f, pulse duration TP, base current value and pulse current value IP. On the other hand, in the alternative method, the first arc voltage setting signal Vs1 and the second arc voltage setting signal Va2 are switched to each other. Thus, the first welding current value is controlled by the first arc voltage control signal Cm2 obtained from the difference between the first arc voltage setting signal Vs1 and the arc voltage detection signal Vd, whereas the second welding current value I2 is controlled by the second arc voltage control signal Cm2 obtained from the difference between the second arc voltage setting signal Vs2 and the arc voltage detection signal Vd.

As a result, the first arc voltage control signal Cm2 controls the pulse frequency f31, pulse duration TP31, base current IB31 or pulse current value IP31, while the second arc voltage control signal Cm2 controls the pulse frequency f32, pulse duration TP32, base current IB32 or pulse current value IP32.

Accordingly, in the alternative method, it is necessary to switch between the first arc voltage setting signal Vs1 and the second arc voltage setting signal Vs2. However, with the first method, it is not always necessary to switch the setting signal for the pulse current value IP, pulse duration TP, pulse frequency f or base current value IB.

For the purpose of expanding the application field of the alternative method, switching similar to that of the first method can be used for switching one, two or three setting signals for the pulse current value IP, pulse duration TP, pulse frequency f and base current value IB.

In a further example of a method according to the invention, the first arc voltage value Va1 and the second arc voltage value Va2 are 0.3 or 4 V and are maintained in a narrow adjustment range. The variation value of the arc length Le is largely affected by the arc voltage variation value ΔVa. Accordingly, the first arc voltage setting value Vs1 and the second arc voltage setting value Vs2 must be monotonically adjusted.

In this method there is memorized a second arc voltage setting value Vs2 corresponding to the first voltage setting Vs1 and then the second arc voltage setting value Vs2 read out corresponding to the first arc voltage setting Vs1 determined in advance in order to energize the first and second pulse current groups.

In another example of a welding method according to the invention, the appropriate setting values of the first arc voltage value Va1 and the second arc voltage value Va2 are determined in connection with the wire feed rate.

In this method, there is memorized in advance the first arc voltage setting value Vs1 corresponding to the wire feed rate Wf and also the second arc voltage setting value Vs2 corresponding to the first arc voltage setting value Vs1. Then, there is read out the first arc voltage setting value Vs1 corresponding to the predetermined wire feed rate setting value Wf and the second arc voltage Vs2 corresponding to the first arc voltage setting value Vs1, in order to energize the first and the second pulse current groups.

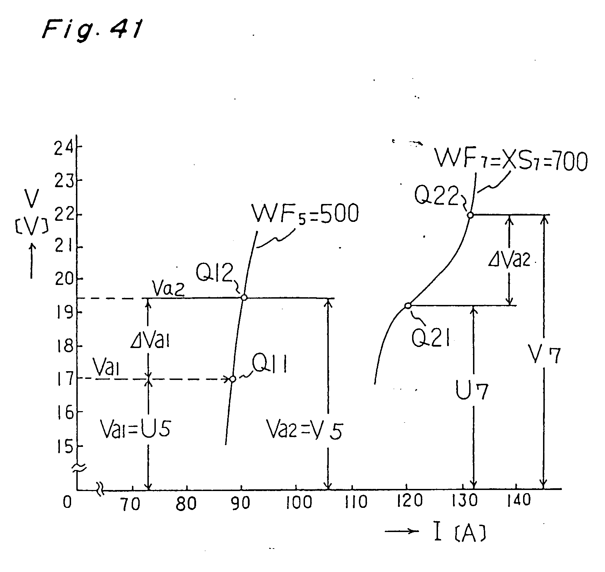

Fig. 41 is a graph showing the relationship between the welding current value I A (horizontal axis) and the arc voltage V (vertical axis) when the pulse MIG arc welding method is carried out with an aluminum alloy 5052 plate of 5 mm thickness at a wire feed rate WF5 =500cm/min and WF7 =700 cm/min by using an aluminum alloy 5183 of 1.2 mm diameter.

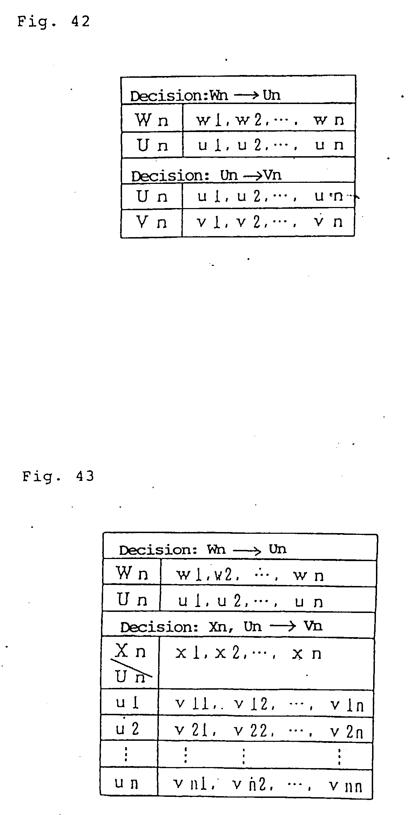

Fig. 42 includes a data table in which the first arc voltage setting values Un =U1, U2...are predetermined in connection with the wire feed rates Wn =W1, W2...when the wires are fed at predetermined wire feed rates and another data table in which the second arc voltage setting values Vn =V1, V2... are predetermined in connection with the first arc voltage setting values Un =U1, U2...

First, with reference to Figs. 41 and 42, the standard data formation will be described with the curve WF5 =500 which is directed to a wire feed rate of 500 cm/min in connection with the formation of the table of data to be memorized. In order to determine the operation point on this curve, it is necessary to determine the arc length corresponding to the arc voltage. When it is determined that the first arc voltage value is Va1 =17 V, the operation point is a point Q11. The program determines the arc voltage setting value Un =U1, U2...Un for obtaining the first arc voltage value Va1 corresponding to the wire feed rate in respect to the wire feed rates Wn =W1, W2...Wn as shown in the upper table of Fig. 42 and memorizes these data. Next, when it is determined that the variation value ΔVa of the arc voltage is, for example, 2.5 V, the second arc voltage value is determined as follows;

$$Va2 = Va1 + \Delta Va = 17 + 2.5 = 19.5 \text{ V}$$

and then the operation point is Q12. The program further determines second arc voltage setting values Vn =V1, V2...Vn for obtaining the second arc voltage Va2 =V1 in response to the first arc voltage setting values Un =U1, U2...Un memorized in advance as shown in the lower table in Fig. 42 and memorizes these data. The relationships between the setting values of Wn, Un, and Vn are predetermined in the following way; for example, W5 is a wire feed rate of 500 cm/min; U5 is an arc voltage of 17 V (operation point Q11); V5 is an arc voltage of 19.5 V (operation point Q12). In a similar way to the above, the following are predetermined; W7 is a wire feed rate of 700 cm/min; U7 is an arc voltage of 19.3 V (operation point Q21); V7 is an arc voltage of 19.3 + 2.5= 21.8 V.

The following describes a method in which the program reads out the memorized data as shown in Fig. 42 and controls the first and the second voltages Va1 and Va2. When Wn =W5 is selected from the wire feed rates Wn =W1, W2...Wn in Fig. 42, the wire feed rate is 500 cm/min. The program reads out the first arc voltage setting value U5 from the first arc voltage setting values Un =U1, U2,...Un in a corresponding way to the setting value W5 and controls the first arc voltage shown by an operation point Q11 to be 17 V. Further, the program reads out the second arc voltage setting value V5 corresponding to the setting value U5 and controls the second arc voltage shown by an operation point Q12 to be 19.5 V. When Wn =W7 is selected, the wire feed rate is 700 cm/min. The program reads out the first arc voltage setting value U7 in a corresponding way to the setting value W7 and controls the first arc voltage shown by an operation point Q21 to be 19.3 V. Further, the program reads out the second arc voltage setting value V7 corresponding to the setting value U7 and controls the second arc voltage shown by an operation point Q22 to be 21.8 V.

There has already been described above a welding method according to the present invention in which the welding electric source is switched between first and second welding current values with the wire feed rate held at a constant value and the welding current ratio is changed between I2 and I1 within the narrow range of 1.03 to 1.10.

This welding method may be modified to increase the wire melting rate to improve the weld reinforcement. In this modification, additionally, the wire feed rate is switched between first and second rates at a switching frequency F

=0.5 to 5 Hz and the ratio of the second welding current value I2 to the first current value I1 is changed within the narrow range of 1.05 to 1.20.

The switching of the wire feed rate according to the prior art has been carried out in practice at only 3 Hz due to the mechanical inertia because the variation value in the wire feed rate has been large. The welding method as presently modified can be carried out at the switching frequency of 5 Hz because the variation in the wire feed rate is low. It is noted that when the ratio of the second current value I2 to the first current value I1 is high, the effect according to the basic welding method of the present invention is decreased. Therefore, it is necessary to hold the ratio in a range between 1.05 and 1.20.

In an instance of the modified method just referred to, there is switching between the first wire feed rate setting signal Im1 and the second wire feed rate setting signal Im2 and also between the first arc voltage setting signal Vs1 and the second arc voltage setting signal Vs2, at the switching frequency F. The first pulse current group is energized by controlling the pulse frequency f31, pulse duration TP 31, base current value IB31 or pulse current value IP31 with the arc control signal Cm2 obtained with the difference between the first arc voltage setting signal Vs1 and the arc voltage detection signal Vd. The second pulse current group is energized by controlling the pulse frequency f32, pulse duration TP 32, base current value IB321 or pulse current value IP32 with the arc control signal Cm2 obtained with the difference between the second arc voltage setting signal Vs2 and the arc voltage detection signal Vd.

In an alterative instance of the modified method, the second arc voltage setting values Vs2 corresponding to the first arc voltage setting values Vs1 at the wire feed rates Im2 are memorised and the first and second pulse current groups are energised by reading out the second arc voltage setting values Vs2 corresponding to the first arc voltage setting values Vs1 determined in advance.

In yet another instance of the modified method, there are memorized the first arc voltage setting values Vs1 corresponding to the first wire feed rate setting values Im1, and the second arc voltage setting values Vs1 corresponding to the first arc voltage setting values Va1 at the second wire feed rates Im2. The first and second pulse current groups are energised by reading out the first arc voltage setting values Vs1 corresponding to the first wire feed rates Im1 determined in advance, and the second arc voltage setting values Vs2 corresponding to the second wire feed rates Im2 determined in advance.

Fig. 43 is a data table in which the first arc voltage setting values Un =U1, U2...Un are predetermined in connection with the wire feed rates Wn =W1, W2...Wn when a MAG arc welding method is carried out by switching periodically between the first and the second wire feed rates determined in advance, and another data table in which the second arc voltage setting values Vn =V1, V2... are predetermined in connection with the first arc voltage setting values Un at the second wire feed rates Xn =X1, X2...Xn.

First, with reference to Figs. 41 and 43, the standard data formation will be described with the curve WF5 =500 which is directed to a wire feed rate of 500 cm/min in connection with the formation of the table of data to be memorized. In order to determine the operation point on this curve, it is necessary to determine the arc length corresponding to the arc voltage. When it is determined that the first arc voltage value is Va1 =17 V, the operation point is a point Q11. The program determines the arc voltage setting value Un =U1, U2...Un for obtaining the first arc voltage value Va1 corresponding to the wire feed rate in respect to the wire feed rates Wn =W1, W2...Wn as shown in the upper table of Fig. 42 and memorizes these data. Next, when it is determined that the variation value $\Delta$Va of the arc voltage is, for example, 2.5 V, the second arc voltage value is determined as follows;

$$Va2 = Va1 + \Delta Va = 17 + 2.5 = 19.5 \text{ V}$$

The second arc voltage value Va2 corresponds to the operation point Q12 on the curve WF5 =500 having the operation point Q12 of the first arc voltage value Va1, and is a different value when switched to the second wire feed rate. For example, when the second wire feed rate is 700 cm/min and expressed by a curve WF7 =700, the operation point Q12 on the curve WF5 =500 becomes an operation point Q22 on the curve VF =700. Therefore, in order to determine the operation point of the second arc voltage value at the second wire feed rate, it is necessary to obtain both the first arc voltage value and the second wire feed rate. That is, the second arc voltage setting values Vn =V1, V2...Vn must be determined from the first arc voltage setting values Un =U1, U2...Un and the second wire feed rates Xn =X1, X2...Xn. The program determines the second voltage setting values Vn =V1, V2...Vn corresponding to the first arc voltage setting values Un =U1, U2...Un. The second arc voltage setting values Vn are these given as V11, V12...V1n for Xn =X1 ; as V21, V22 ...Vn2 for Xn =X2 ; VN =Vn1 , and is on, to Vn2...Vnn for Xn =Xn . These data are memorized. The relationship among the setting values of Wn, Un, and Xn are predetermined in the following way; for example, W5 is a wire feed rate of 500 cm/min; U5 is an arc voltage of 17 V (operation point Q11); W7 is a wire feed rate of 700 cm/min; U7 is an arc voltage of 21.8 V (operation point Q22).

The following description will be directed to a method in which the program reads out the memorized data as shown in Fig. 43 and controls the first and the second voltages Va1 and Va2. When Wn =W5 is selected from the wire feed rates Wn =W1, W2...Wn in Fig. 42, the wire feed rate is 500 cm/min. The program reads out the first arc voltage setting value U5 from the first arc voltage setting values Un =U1, U2,...Un in a corresponding way to the setting value W5 and controls the first arc voltage shown by an operation point Q11 to be 17 V. Further, when the program reads out Xn -X7 from the second wire feed rate setting values Xn =X1, X2...Xn, the second wire feed rate is 700 cm/min. The program reads out the second voltage setting value Vn = V75 from this setting value X7 and the setting value U5 read out previously and controls the second arc voltage shown by the operation point Q22 to be 21.8 V.

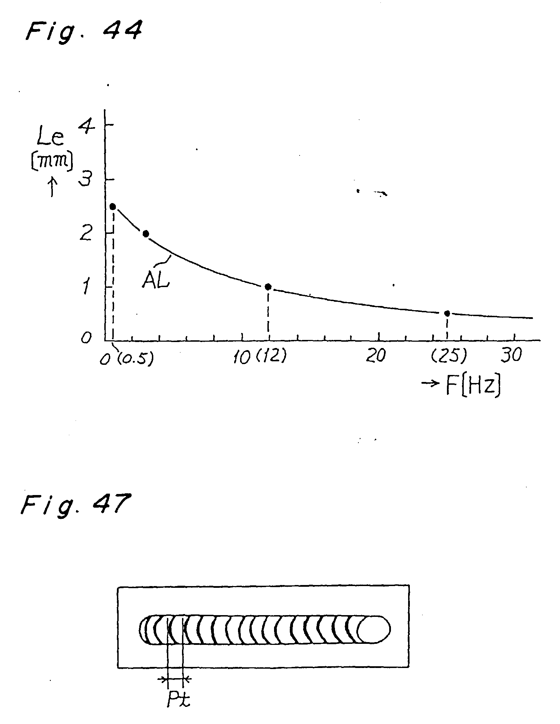

Fig. 44 is a graph showing the relationship between the variation value Le in the arc length between the first arc length Lt and the second arc length Lr (vertical axis) and the switching frequency F (horizontal axis) in a range between 0.5 to 25 Hz required for generating vibration in the molten metal pool to obtain the required effect when a MIG welding method according to the present invention is carried out with an aluminum AL plate.

In Fig. 44, a solid line indicates the lower limit of the variation value Le in the arc length for generating the vibration in the molten metal pool in order to obtain the effect of the present invention. Positions of F =0.5 Hz, F =12 Hz and F =25 Hz require the variation values Le more than Le =2.5 mm, Le =1 mm and Le =0.5 mm, respectively. In the welding of aluminum, the molten pool has a resonance frequency Fr of 20 to 25 Hz. Therefore, when the switching frequency F is more than 15 Hz, the resonance vibration permits the molten aluminum pool to vibrate sufficiently with the variation value Le of the arc length at a small value of 0.5mm.

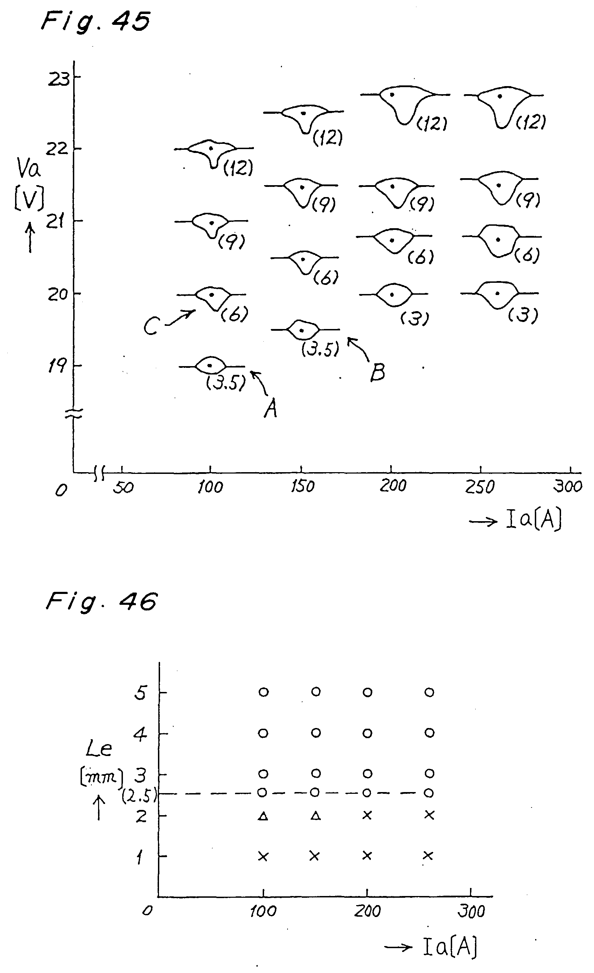

To illustrate an embodiment of this pulse MIG arc welding method for an aluminum plate, Fig. 45 is a graph having the average value of the welding current Ia A (referred to welding current I hereinafter) plotted along the horizontal axis and the average value of the arc voltage Va V (referred to arc voltage V hereinafter) plotted along the vertical axis, and shows the sectional form of the welding beads and the arc length as a function of Ia and Va. The welding conditions are as follows: an aluminum alloy A5052 plate with a thickness of 12 mm is welded at a welding speed of 25 cm/min using an aluminum alloy A5183 wire in a diameter of 1.2 mm as a consumable electrode.

With reference to Fig. 45, the welding conditions are changed, for example, from the set of conditions shown by a symbol A of welding current= 100 A, arc voltage= 19 V and arc length= 3.5 mm to a second set of conditions shown by a symbol B of welding current =150 A which is larger by 50 % than the former and arc voltage=19.5 V. The apparent arc length under the second conditions is indicated as 3.5 mm which is the same as that under the first conditions. Further, there is no significant difference in the sectional form of the welding bead between the two cases A and B. This means that it is not possible for this method to obtain the scale bead with a regular ripple pattern in a similar way to that of the TIG filler arc welding method.

On the other hand, if the welding conditions are changed from the first case shown by the symbol A to a second set of conditions shown by a symbol C at which the welding current is 100 A, the same as that of the first welding condition, and the arc voltage is increased to 20 V by adding 1 V, the arc length at C is increased to 6 mm with an increment of 2.5 mm. There is a significant difference in the sectional form of the welding bead between the the two cases A and C. This means that it is possible with this welding method to obtain the scale bead with a regular ripple pattern in a similar way to the TIG filler arc welding method. In such a way, it is possible to obtain the scale bead with a regular ripple pattern by increasing the apparent arc length by more than 2.5 mm between the first and second welding conditions.

Fig. 46 is a graph showing whether a scale bead with a regular ripple pattern is formed or not as a function of the relationship between the welding current I A (horizontal axis) and the arc length variation value Le mm (vertical axis). The symbol X indicates a range in which the scale bead is not formed and the arc length variation value is 1 to 2 mm, the symbol △ indicates a range in which the scale bead does not have regular ripple pattern and the arc length variation value is 2 mm, and the symbol ≠ indicates a range in which the scale bead with a regular ripple pattern is obtained in a similar way to the TIG filler arc welding method and the arc length variation value is more than 2.5 mm.

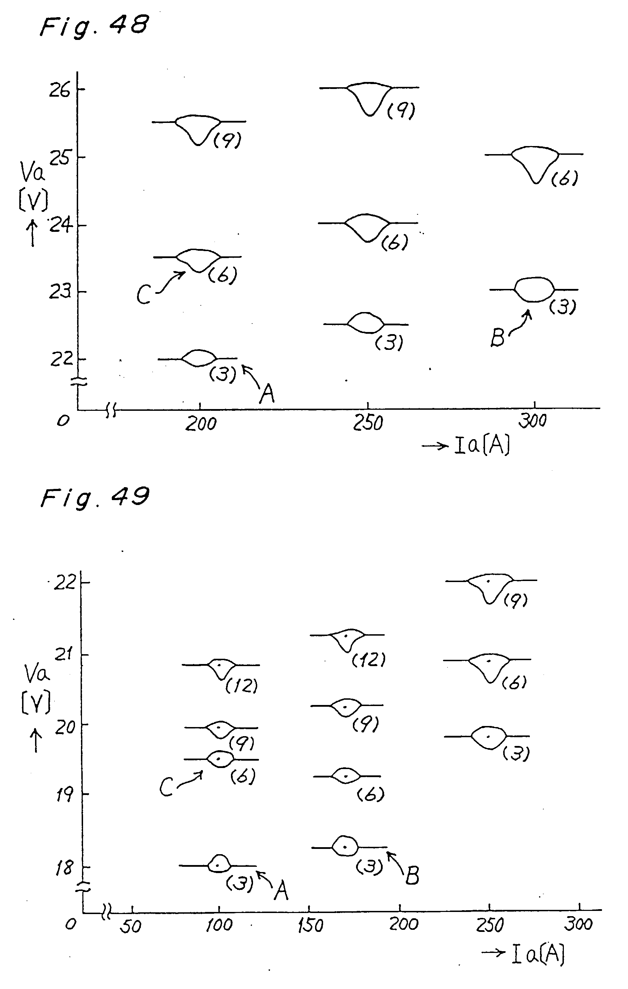

When an aluminum plate is welded with the pulse MIG arc welding method, changing the arc length by this greater amount, it is possible to obtain the scale bead shown in Fig. 47. The welding conditions in this example were as follows: The workpiece was an aluminum alloy A5052 plate with a thickness of 12 mm. The consumable electrode was an aluminum alloy A5183 wire with a diameter of 1.2 mm. The welding was carried out by switching between a first welding condition with a welding current 140 A and arc voltage 20.0 V and a second welding condition with a welding current 170 A and arc voltage 23.0 V with a switching frequency 2 Hz at a welding speed 40 cm/min. Since the MIG arc welding method executed on an aluminum material with an aluminum consumable electrode of 1.2 mm diameter has a critical current of 150 A, the pulse MIG arc welding method was adapted for the purpose of using only the spray transfer mode without the short circuit transfer mode.

Since the welding current value under the one or both sets of welding conditions was lower than the critical current corresponding to the diameter of the wire, the welding was carried out by the pulse MIG arc welding method for obtaining the spray transfer mode. When both welding conditions have the welding current higher than the critical current, it is possible for the constant dc current to obtain the scale bead with a regular ripple pattern in a similar way to the TIG filler arc welding method. An example in this case was as follows: the workpiece was an aluminum alloy A5052 plate with a thickness of 12 mm. The consumable electrode was an aluminum alloy A5183 wire with a diameter of 1.2 mm. The welding was carried out by keeping the welding current at a constant value of 180 A, higher than the critical current value, and switching between arc voltages of 22 V and 24 V with a switching frequency 2 Hz at a welding speed 40 cm/min. As a result, the arc length variation value was 4 mm. With these conditions it was possible to obtain a scale bead with regular ripple pattern.

The following example employs the pulse MIG arc welding method for copper. Copper has a melting point of 1085°C which is higher than that of aluminum. In addition, copper has a thermal conductivity of 0.95 cal/cm • sec • °C which is larger than 0.53 cal/cm • sec • °C of aluminum and has a high thermal diffusion coefficient to permit the molten copper to solidify rapidly. Accordingly, the molten copper pool enlarged with the variation in the arc length solidifies as it is and forms the scale bead after movement of the arc. A pure copper plate with a thickness of 6 mm was preheated to 400°C and was subjected to the MIG arc welding method with a pure copper consumable electrode of 1.2 mm diameter by switching periodically between the arc voltages 22 V and 25 V with a switching frequency 2 Hz at a welding current of 200 A and a welding speed of 35 cm/min. It was possible with these conditions to obtain the scale bead the same as that shown in Fig. 47.

Fig. 48 is a graph having the average value of the welding current Ia A plotted along the horizontal axis and the average value of the arc voltage Va V plotted along the vertical axis and shows the sectional form of the welding beads and the arc length obtained with the MIG arc welding method. These characteristics relate to the welding of a copper plate with a thickness of 10mm which is preheated to a temperature of 400°C and is welded at a welding seed of 25 cm/min using a copper consumable electrode with a diameter of 1.2 mm.

With reference to Fig. 48, the welding conditions are changed, for example, from the first welding conditions shown by a symbol A with welding current = 200 A, arc voltage = 22 V and arc length = 3 mm, to the second welding conditions shown by a symbol B with welding current = 300 A, which is larger by 50% than the former, and arc voltage = 23 V. When the apparent arc length with the second welding condition shows 3 mm, which is the same as that of the first welding condition, there is no significant difference in the sectional form of the welding bead between the two cases. This means that it is not possible then to obtain a scale bead with a regular ripple pattern in a similar way to that of the TIG filler arc welding method. On the other hand, if the welding conditions change between the first welding condition shown by a symbol A and a second welding condition shown by a symbol C at which the welding current is 200 A, the same as that of the first welding condition, and the arc voltage is increased to 23.5 V by adding 1.5 V, the arc length under the second condition is increased to 6 mm with an increment of 3 mm. There is a significant difference in the sectional form of the welding bead between the two sets of conditions. This means that it is possible for this welding method to obtain a scale bead with a regular ripple pattern in a similar way to the TIG filler arc welding method. In such a way, it is possible to control the penetration shape by changing alternatively the sectional form of the bead by increasing the apparent arc length by a size more than 3 mm between the first and second welding conditions.

The appearance of the bead is determined by the relationship between the welding speed WS cm/min and the switching frequency F Hz shown in Table 1 above. In general, the pitch Pt mm of the scale bead shown in Fig. 47 is governed by the following equation;

$$Pt = WS/60 \ F$$

The conventional TIG filler arc welding method generates a scale bead with a regular ripple pattern having a pitch Pt 1 to 5 mm. As a result, in view of the relationship between the above equation and the Table 1, it is possible for the MAG welding method described here to obtain a scale bead with a regular ripple pattern in a similar way to that of the TIG filler arc welding method even with a welding speed higher than that of the TIG filler arc welding method. For example, in a case when the welding speed WS =180 cm/min and the switching frequency F = 15 Hz, the pitch Pt is 2 mm. In a case when WS = 300 cm/min, and the switching frequency f = 15 Hz, the pitch Pt is 3.3 mm.

The embodiment illustrated by Fig. 49 is aimed at the pulse MIG arc welding method applied to a stainless steel. Fig. 49 is a graph having the average value of the welding current Ia A plotted along the horizontal axis and the average value of the arc voltage Va V plotted along the vertical axis and showing the sectional form of the welding beads and the arc length obtained with the MIG arc welding method. The results are for the welding of a stainless steel SUS304L plate with a thickness of 8 mm at a welding speed of 25 cm/min using a stainless steel SUS308 with a diameter of 1.2 mm.

The welding conditions are changed, for example, from a first welding condition shown by a symbol A of welding current = 100 A, arc voltage = 18 V and arc length = 3 mm to a second welding condition shown by a symbol B of welding current = 170 A, which is larger by 70% than the former, and arc voltage = 18.3 V. When the apparent arc length at the second welding condition shows 3 mm, which is the same as that of the first welding condition, there is no significant difference in the sectional form of the welding bead between the two cases. On the other hand, if the welding conditions are changed from the first welding condition shown by the symbol A to a second welding condition shown by a symbol C at which the welding current is 100 A, the same as that of the first welding condition, and the arc voltage is increased to 19.5 V by adding 1.5 V, the arc length is increased to 6 mm with an increment of 3 mm. There is a significant difference in the sectional form of the welding bead between the two cases. In such a way, it is possible to control the penetration shape by changing alternatively the sectional form of the bead by increasing the apparent arc length by more than 3 mm between the first and second welding conditions.

A steel such as stainless or alloy steel has a low thermal conductivity, for example, iron has a thermal conductivity of 0.14 cal/cm • sec • °C, which is much less than those of aluminum and copper. Therefore, it is difficult with steel to obtain a scale bead in a similar way to that of aluminum or copper. However, steel has an oxide film adhered thereto more weakly than aluminum and does not cause the arc to fly far away to the oxide film. The actual arc length is nearly equal to the theoretical arc length. Accordingly, with steels, it is possible to control the apparent arc length by adjusting the arc voltage. Hence, the periodic change in the arc voltage makes it possible to obtain a penetration shape differing from the conventional single form by melting together a plurality of bead sectional forms and the reinforcement.

A method according to this invention for butt welding can be carried out with a maximum gap value 3.0 mm at a welding speed of 30 cm/min and a maximum gap value of 1.5mm at a welding speed of 100 cm/min with a switching frequency of 0.5 to 15 Hz and a variation value Le of arc length more than 3 mm, as will now be further described.

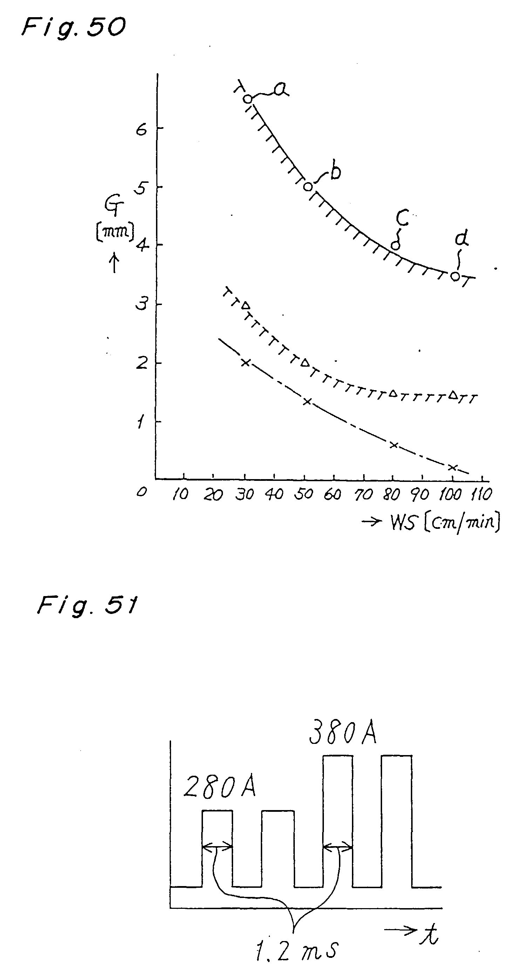

Fig. 50 is a graph showing a butt gap G mm at the welding line plotted along the vertical axis and welding speed WS cm/min plotted along the horizontal axis. With the two lower lines it shows ranges in which there is no melt down and a capability of welding when the welding speed is changed between 30 and 100 cm/min and the gap is also changed from 0.5 to 3 mm in connection with butt welding for an aluminum alloy A5052 plate of 1.5 mm thickness. The line delineated by the symbol X and a one point chain shows the upper limit of the gap capable of being welded when the welding is carried out with a variation in the welding speed at the pulse current value of 280 A and pulse duration 1.2 ms under the conventional unit pulse mode (one pulse to one molten metal drop transfer mode) by taking the average value of welding current 60 to 100 A. Welding at a low speed of 30 cm/min, the gap of 2.0 mm is the upper limit for the welding. At welding speeds higher than 30 cm/min, the upper limit is lowered. With a welding speed of 80 cm/min the upper limit for the welding gap is decreased to 0.5 mm. The boundary indicated by the symbol △ and the dotted line relates to the conditions shown in Fig. 51 where the first pulse current group is energized while lowering the arc voltage to 16.5 to 18.5 V in the one pulse to one molten metal drop transfer mode using for the first pulse current a pulse current value 280 A and pulse duration 1.2 ms, and the pulse current is increased to 380 A when energizing the second pulse current group, controlled by the pulse period to maintain the one pulse to one molten metal drop transfer mode. Even with a gap of 3 mm, it is then possible to carry out welding without melt down at a welding speed of 30 cm/min. Even when the welding speed is 100 cm/min, a gap of 1.5 mm can be welded. The reason for the high speed welding even with such a gap can be explained by the fact that the high speed welding is carried out by decreasing the arc length with the one pulse to one molten metal drop transfer mode. When the arc length is enlarged by increasing the pulse current value, pulse duration or the both of them, even with the gap at the butt joint the welding material at the vicinity of the gap is melted by the expansion of the arc to an area wider than the gap. It is possible to prevent the melt down and to raise the limit for the high speed welding by making the arc length shorter and building up the gap area.

A method according to the invention for lap welding can be carried out with a switching frequency of 0.5 to 15 Hz, and an arc length variation value more than 3 mm, with a gap maximum value of 3 mm at a welding speed 30 cm/min, and a gap maximum value of 2 mm at a welding speed 100 cm/min, as will now be further described.

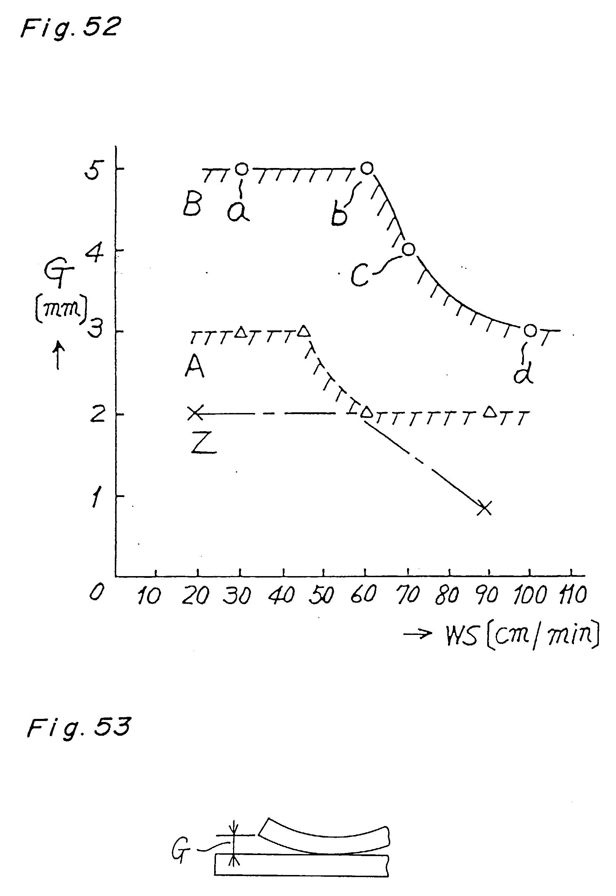

Fig. 52 is a graph having a gap G mm at the welding line plotted at along the vertical axis and a welding speed WS cm/min plotted along the horizontal axis. It shows a range (indicated by an oblique line) at which welding can be carried out without melt down when the welding speed is changed from 30 to 90 cm/min and the gap is also changed from 1 to 3 mm in connection with lap welding for aluminum alloy A5052 plate with a thickness of 1.5 mm. In Fig. 52, a symbol X and a one point chain shows the upper limit of the gap capable of being welded when the welding is carried out with a variation in the welding speed at the pulse current value of 280 A and pulse duration 1.2 ms under the conventional unit pulse mode (one pulse to one molten metal drop transfer mode) without switching the pulse by taking the average value of welding current 60 to 100 A. Welding at a low speed of 30 to 60 cm/min, the gap of 2.0 mm is the upper limit for the welding. At welding speeds higher than the above value, the upper limit is lowered. With a welding speed of 90 cm/min, the upper limit for the welding gap is decreased to 1 mm. After the first pulse current group is energized with the arc voltage lowered to 16.5 to 18.5 V in the one pulse to one molten metal drop transfer mode by using for the first pulse current a pulse current value 280 A and pulse duration 1.2 ms shown in Fig. 52 by a symbol △ and a dotted line, the pulse arc welding is carried out by increasing the pulse current to 380 A and at the same time energizing the second pulse current group, controlled by the pulse period to maintain the one pulse to one molten metal drop transfer mode. Even with a gap of 3 mm, it is possible to carry out the welding without the one side melt down of the upper plate at a welding speed of 20 to 45 cm/min. Even when the welding speed is 60 to 90 cm/min, a gap of 2 mm can be welded. The reason for the high speed welding even with such a gap can be explained by the fact that the arc length in the second pulse duty period T2 is longer than that in the first pulse duty period. In addition, this pulse current variation value can maintain the one pulse to one molten metal drop transfer mode by changing slightly the pulse period and can prevent the arc length from being too long. The second pulse current group having the long arc length melts the upper and lower plates. The first pulse current group having the short arc length produces a weak arc force and builds up the gap with the molten metal. This prevents the one side melt down at the upper plate and increases the size of the gap which can be welded. Accordingly, it is possible to prevent one side melt down of the upper plate even when the upper plate is deformed into a wave form with the thermal stress generated during the welding.

The method according to the invention may be carried out switching the duty ratio Ds between the first welding current energizing time T1 and the second welding current energizing time T2 in accordance with the formula Ds = T1/ (T1 + T2) . The ratio Ds may further be changed in accordance with the voltage detection value Vd.

The following description will be directed to a welding method incorporating such a voltage dependent change which is applicable for the butt welding and the lap welding methods described above.

These methods already described control the arc length so as to recover when the arc length varies with an external disturbance as described earlier. The methods have a much improved tolerance in respect of the gap size in connection with preventing melt down due to the gap of a butt joint or preventing melt down of the upper plate of a lap joint when there is a gap in the joint, or a gap due to the thermal deformation.

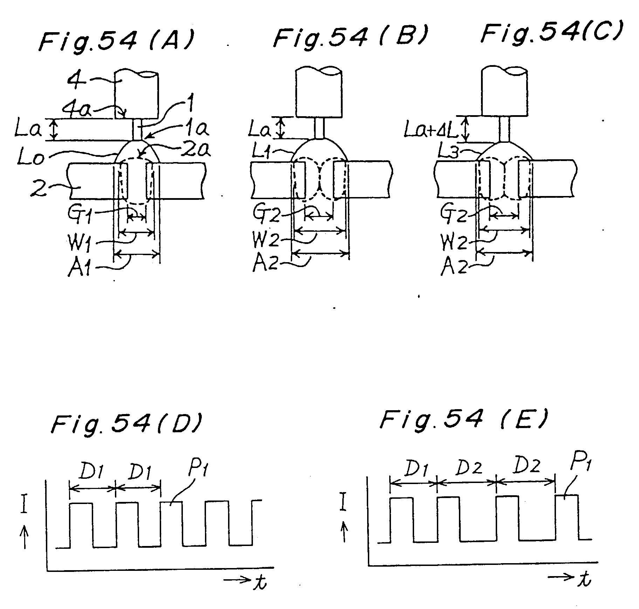

Variation of the welding gap causes the variation in the arc length. However, the previously described welding methods are not provided with a circuit for correcting the variation in the arc length resulting from gap variation and the possible effects of this will now be described with reference to Figs. 54(A) to (E) which are directed to the case in which the gap of a butt joint becomes larger in the welding direction.

As shown by Fig. 54(D), when the pulse current P1 is energized for a period determined by a frequency f1, it is assumed that a wire extension length between the terminal 4a of the electric supply tip and the terminal of the wire 1a is denoted by La when there is the gap G1 of butt joint as shown in Fig 54(A). L0 denotes an actual arc length, W1, a molten metal pool width, and A1, an outside diameter of the arc.

Next, as shown by Fig. 54 (E), when the pulse current P1 of the first pulse current group is energized for a period D1 determined by a frequency f1, the gap at the butt joint increases and the wire extension length becomes La. The increase in the gap G2 results in an increased molten metal pool width W2. Since the arc flies to the outside of the molten metal pool width W2, the outside diameter of the arc increases to A2. Accordingly, the actual arc length increases from L0 to L1 to increase the arc voltage. The arc voltage detection circuit VD detects the voltage increase and causes the pulse frequency to decrease from f1 to f2. As a result, the period of the pulse current P1 is increased as shown by D2 in Fig. 54 (E). Accordingly, the melting speed drops and the wire extension length increases.

The increase of the wire extension length to La + ΔL as shown in Fig. 54 (C) while the actual arc length decreases from L0 to L3 so that the arc voltage decreases. At the state shown in Fig. 54 (C), the wire terminal 1a is very close to the surface of the molten metal pool 2a, that is, the arc length is very short. If the change shown by Fig. 54 (C) were to continue, the wire terminal would dip into the molten metal pool to give arc cutting. Further, there would occur melt down caused by the partial melting of one side of the places being welded.

In Fig. 54 (B), the arc easily flies onto the oxide film. It is noted that an oxide is easily formed on an aluminum metal surface. The arc flies to the outside of molten metal pool where the oxide film is rather than to the inside of the molten metal pool where there is no oxide film. This causes the actual arc length to be longer than the theoretical arc length to increase the arc voltage.

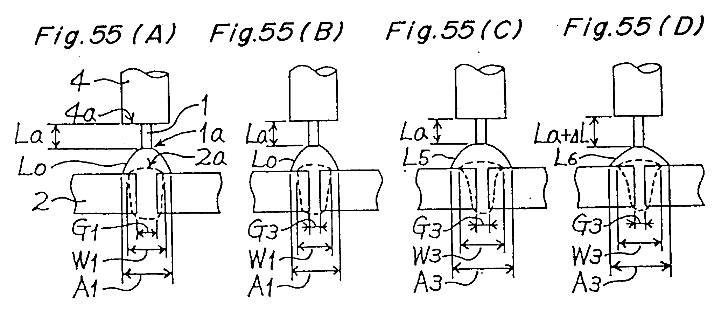

There will now be described with reference to Figs. 55 (A) to (D), the procedure when the gap of the butt joint becomes smaller.

As shown by Fig 55(A), the wire extension length is assumed to be La, the actual arc length L0, the molten metal pool width W1, and the outside diameter of the arc A1.

Next, as shown in Fig. 55 (B), the gap of the butt joint has decreased from G1 to G3. The wire extension length initially remains La after the decrease in the gap. As shown in Fig. 55 (C), the decrease in the gap causes an increase in the molten metal pool width and the reinforcement. The increase in the reinforcement causes the arc to fly to the outside of the molten metal pool width W3. Thus, the actual arc length L5 is larger than L0 to increase the arc voltage.

In Fig. 55 (B), the outside diameter A1 of the arc is larger than the molten metal pool width W1. In Fig. 55 (C), the outside diameter A3 is larger than the molten metal pool width W3. Further in view of Figs. 55 (B) and (C), W1 < W3 and then finally A3≠A1. The actual arc length L5 shown in Fig. 55 (C) is larger than the arc length L0 shown in Fig. 55 (A) to increase the arc voltage.

When this state continues, the detection circuit controls the arc length to shorten it due to detecting the increase in the arc voltage. Then, the wire extension length grows larger than La to become La + ΔL as shown in Fig. 55 (D). Finally, the wire terminal 1a comes into contact with the surface 2a of the reinforcement to cause arc cutting or to generate spatter.

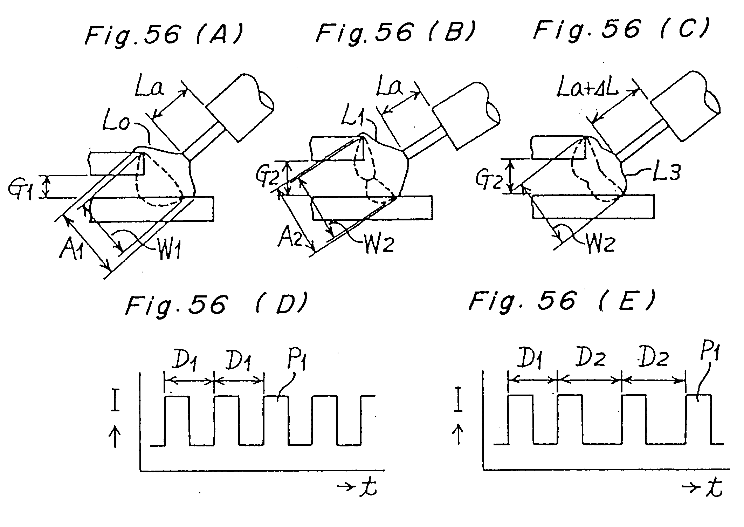

Figs. 56 (A) to (C) are structural model views illustrating the sequence of events when the gap at a lap joint becomes larger. Figs. 56 (D) and (E) are graphs showing against time the passage of the pulse currents corresponding to the conditions of Figs 56 (A) and (B), respectively.

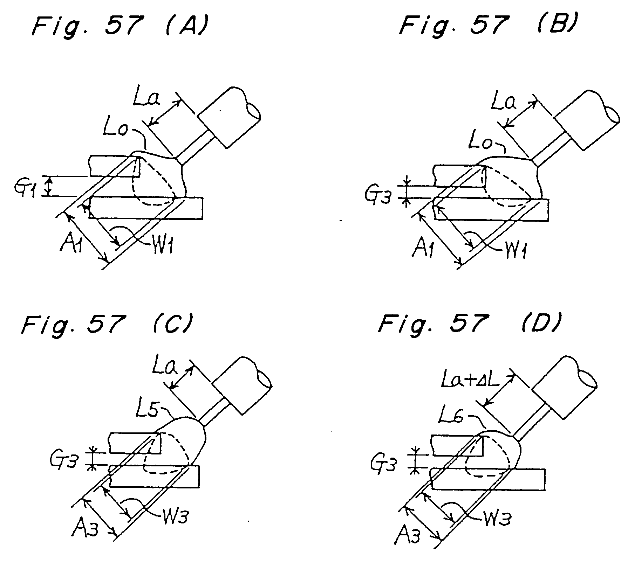

Figs 57 (A) to (D) are structural model views illustrating the phenomenon when the gap at a lap joint becomes smaller.

The sequences of events with lap joint gap variation illustrated by Figs. 56 (A) to (E) and Figs. 57 (A) to (D) is the same as that of the sequences with butt joint gap variation shown in Figs. 54 (A) to (E) and Figs. 55 (A) to (D), and need not be further described.

To avoid the aforementioned difficulties, the welding method can first detect the change in the arc voltage when the variation in the arc length occurs with the imbalance between the wire feed rate and wire melting speed due to an external disturbance. Then, the wire melting speed is changed by changing the pulse frequency in the circuit at a high response rate. In addition to recovering rapidly the arc length, the method detects the variation in the arc voltage at a low response rate to respond to the variation after a given time has passed when the gap is changed during lap welding or butt welding so as to continue the pulse MAG arc welding method after the arc length has be corrected in accordance with the variation in the gap.

Such a welding method is based on a pulse MAG arc welding method to perform the welding by using the pulse welding current obtained by switching between the first pulse current group and the second pulse current group different from the first pulse current group. The consumable electrode is fed at a predetermined feed rate while the pulse current value, pulse duty time, pulse frequency and base current value of the first pulse current group are set to values capable of forming a projection transfer mode in which the molten metal drop transfers from the consumable electrode to the welding material in a synchronizing way to each of the current pulses. The pulse current value, pulse duty time, pulse frequency and base current of the second pulse current group is set to a value different from that of the first pulse current group within the range to hold the projection transfer mode. Then, the arc length is periodically switched by energizing the pulse welding current. When the arc length varies due to the imbalance between the wire feed rate and the wire melting speed, the length is rapidly restored by changing quickly the pulse frequency, pulse duration, base current value or pulse current value with the detected arc voltage. At the same time, the variation of arc voltage with the variation in the gap is detected. A pulse MAG arc welding method is completed after the arc length is provided with the correction corresponding to the gap by controlling the duty ratio Ds between the first pulse duty time and the second pulse duty time in accordance with the detected arc voltage.

There will now be described another method of restoring the arc length after variation in the case of a pulse arc welding method switching between a first pulse current group and a second pulse current group, when the arc length varies with imbalance between the wire feed rate and the wire melting speed. The arc voltage is quickly detected to compare the arc voltage detection signal Vd to the first arc voltage setting signal Vs1 and to the second arc voltage setting signal Vs2. The pulse frequency control signal Vf3 is changed in accordance with the signal Cm2 obtained from the comparison among the above signals. In response to the variation of the pulse frequency control signal Vf3, the pulse current outputted from the welding electric source circuit PS varies in the frequency and causes the wire melting speed to vary. As a result, the arc length variation can be restored.

That is, when the arc voltage increases with the increase in the arc length, the decrease in the pulse frequency results in the increase in the pulse period. Then, the wire melting speed becomes lower, and the arc length accordingly decreases to return to the original length. In a reverse way, when the arc voltage decreases with the decrease in the arc length, the increase in the pulse frequency causes the pulse period to be shorter and the wire melting speed to be higher. As a result, the arc length increases to return to the original length.

The phenomenon occurring when the gap at a butt joint becomes larger and the variation in the arc voltage can be caused by the increase in the wire extension length to La $+\Delta L$ as shown in Fig 54 (C). As a consequence, the actual arc length is decreased from L0 to L3 and the arc voltage decreases. There is a time delay until the occurrence of the decrease in the arc voltage corresponding to the switching frequency (1 to 15 Hz) between the first pulse duty time T1 and the second pulse duty time T2. This switching period does not respond to the variation in the arc voltage having a high variation speed similarly to the arc variation due to the imbalance between the wire feed rate and the wire melting speed but to the variation in the arc voltage generated with the decrease in the arc length caused by the decrease in the wire melting speed due to the decrease in the pulse frequency.

There will now be described arc length correction when the arc voltage decreases with the variation in the gap.

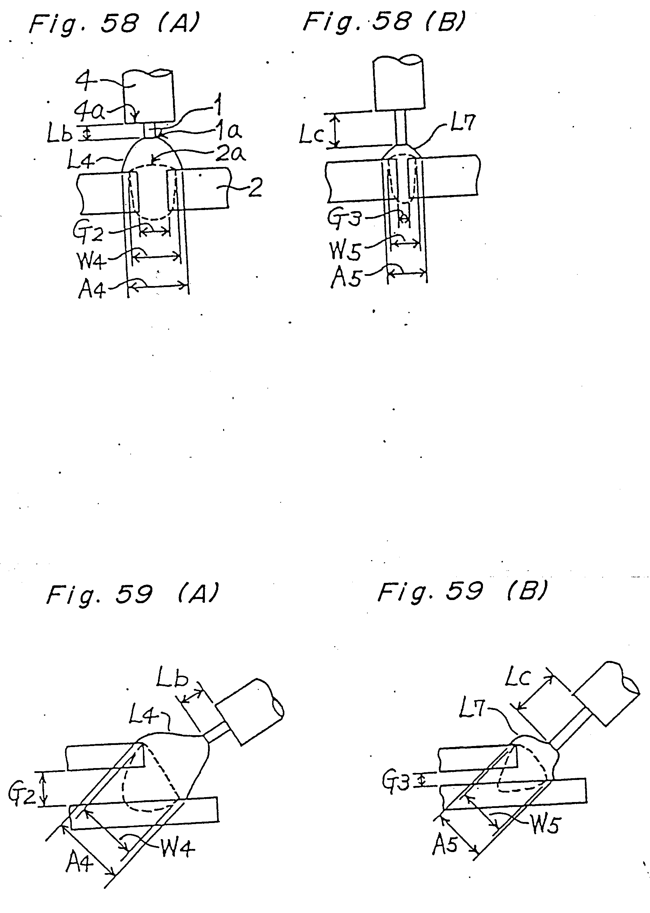

As shown in Fig. 54 (C), when the arc voltage decreases with the increase in the gap size, the detection signal to detect the decrease in the arc voltage causes, for example, the second pulse duty time T2 having a large average value of pulse current to be longer or the first pulse current duty time T1 having a small average pulse current to be shorter. Alternatively, T1 is made shorter while T2 is made longer with the value of (T1 + T2) remaining constant. As a result, it is possible to increase the arc length with the increase in the wire melting speed as shown in Fig. 58 (A). The wire extension length can be made shorter from La to Lb before the variation in the gap . Then, the actual arc length is L4 (L4 $\neq$L0). This causes the arc outside diameter to increase to A4 (A4 $\neq$A2) and the molten metal pool width also to increase to W4 (W4$\neq$W2). Thus, the welding material 2 is melted sufficiently at the both side of the gap. Therefore, the reinforcement is in a flat shape to prevent generation of a welding defect. Further, the arc length correction and the flat shape of the reinforcement causes the arc length between the wire terminal 1a and the surface 2a of the molten metal pool to be longer and prevents the contact between the wire terminal 1a and the surface 2a of the molten metal pool and finally the generation of arc cutting.

The phenomenon occurring when the gap at a butt joint is smaller acts in a reverse way and the arc voltage variation causes the actual arc length L5 to be larger than L0 and the arc voltage to increase as shown in Fig. 55 (C).

There is a time delay until the increase in the arc voltage which occurs where the arc flies to the outside of the reinforcement formed with the molten wire at the same arc length in spite of the smaller gap. This time delay responds to the switching frequency (0.5 to 15 Hz) between the first and second pulse duty times T1 and T2 and to the variation in the arc voltage resulting from the variation in gap.

There will now be described the arc length correction when the arc voltage increases with the variation in the gap. When the actual arc length extends to the outside of the reinforcement due to the decrease in the gap and causes the arc voltage to increase as shown in Fig. 55 (C), the detection signal to detect the increase in the arc voltage causes, for example, the second pulse duty time T2 having the large average value of pulse current to be shorter or the first pulse current duty time T1 having a small average value of pulse current to be longer. Alternatively, T1 is made longer while T2 is made shorter with the value of (T1 + T2) remaining constant. As a result, it is possible to decrease the arc length with the decrease in the wire melting speed as shown in Fig. 58 (B). The wire extension length can be made longer from La before the variation in the gap to Lc. Then, the actual arc length is L7 (L7<L0). This causes the arc outside diameter to be shorter to A5 (A5<A1) and the molten metal pool width to be also smaller to W5 (W5<W1). Thus, the arc length is shortened with the decrease in the gap size. It is possible to obtain a stable arc and to prevent contact between the wire terminal 1a and the surface 2a of the molten metal pool and to avoid causing arc cutting.

Figs 59 (A) and (B) are structural model views illustrating the arc length correction when the gap of a lap joint varies. The method of arc length correction with the variation in the gap of lap joint shown in Figs. 59 (A) and (B) is the same as that of the arc length correction with the gap of the butt joint shown in Figs. 58 (A) and (B) and therefore does not need to be described further.

Reference will now be made against Fig. 50, where the welding conditions are that the welding current average value is 100 to 175 A, and arc voltage is 17.5 to 21 V. Switching between the first pulse current group with pulse current value 280 A and pulse duration 1.2 msec and the second pulse current group with pulse current value 380 A and pulse duration 1.2 ms occurs with a switching frequency of 2.5 Hz.

In Fig. 50, the symbol △ and a dotted line show the upper limit of the gap capable of being welded when the welding is carried out with the duty ratio Ds held at the constant value of 0.5 in a welding method within the scope of claim 25 . The gap of 3 mm is an upper limit which can be welded at the lower welding speed of 30 cm/min. With the welding speed higher than 30 cm/min, the upper limit of the gap for welding is lowered. When the welding speed is higher than 70 cm/min, the upper limit of the gap is decreased to 1.5 mm.

Pulse arc welding can be carried out at the same conditions as the above other than that the duty ratio Ds is made variable from 0.3 to 0.7 in dependence upon an arc voltage detection signal. As shown in Fig. 50 by the boundary marked by by a open circle and a solid line, at the lower welding speed of 30 cm/min, the limit size of the gap which can be welded is increased from 3 mm which is obtained with the constant duty ratio Ds, to 6.5 mm. At the welding speed of 70 cm/min, the limiting gap size for welding is 1,5 mm with the constant duty ratio Ds but can be extended to 3.5 mm at a variable Ds.

The reason for the increase in the limiting size of gap for welding as compared with the method using a constant duty ratio Ds is that the arc length correction is made by controlling the duty ratio Ds by the arc voltage detection signal as described in Figs. 58 (A) and (B) with the problem mentioned in Figs. 54 (C) and 55 (D)

Referring again to Fig. 52, in which the gap G mm at the welding line is plotted along the vertical axis and the welding speed WS cm/min plotted along the horizontal axis, this shows a range (indicated by an oblique line) in which there is no melt down and a capability of welding when the welding speed is changed between 30 and 100 cm/min and the gap is also changed from 2 to 5 mm in connection with lap welding for aluminum alloy A5052 plate of 1.5 mm thickness.

In Fig. 52, the welding condition is that the welding current average value is 60 to 120 A, and arc voltage is 16.5 to 19 V. The first pulse current group of the pulse current value 280 A having the pulse duration 1.2 msec and the second pulse current group of the pulse current value 380 A of the pulse duration 1.2 ms are switched to each other with the switching frequency 2.5 Hz.

In Fig. 52, the symbols △ and a dotted line show the upper limit of the gap capable of being welded when the welding is carried out with the duty ratio Ds held at the constant value of 0.5. The gap of 3 mm is an upper limit which can be welded at the low welding speed of 30 to 50 cm/min. With the welding speed higher than the above value, the upper limit for the welding is lowered. When the welding speed is higher than 60 cm/min, the upper limit of the gap for welding is decreased to 2 mm.

A pulse arc welding is carried out under the same conditions as the above other than that the duty ratio Ds is made variable from 0.3 to 0.7 in dependence upon variations in an arc voltage detection signal. As shown by the open circles and a solid line, at the low welding speed of 30 to 60 cm/min, the limiting size of gap which can be welded can be increased from 3 mm, which is obtained with the constant duty ratio Ds, to 5 mm with the variable Ds. At a gap of 5 mm, there is no partial melt down and capability of welding. At a welding speed of 100 cm/min, the limiting size of the gap for welding can be extended from 2 mm with the constant duty ratio Ds to 3 mm with a variable Ds.

The reason for achieving a larger limiting size of gap for welding than that for a constant duty ratio Ds is that the arc length correction is made by controlling the duty ratio Ds by the arc voltage detection signal as described in Figs.

59 (A) and (B) with the problem mentioned in Figs. 56 (C) and 57 (D).

A welding method according to invention may comprise the step of switching the wire feed rate WF between first and second wire feed rates with a switching frequency F = 0. 5 to 5 Hz and maintaining the ratio between the second welding current value I2 and the first welding current value I1 to between 1.05 and 1.20. The following examples will be directed to the use of this method step in butt welding and in lap welding.

The method adjusts the shape of the reinforcement by switching the wire feed rate with the controlled duty ratio Ds in addition to giving an arc length correction corresponding to the gap by controlling the duty ratio.

Reference has already been made to the method in which a detection signal detects the decrease in the arc voltage with the increase in the gap and makes the arc length correction by controlling the duty ratio Ds to increase the arc length. In this way, it is possible to extend the limiting size of the gap for welding beyond that for a constant Ds.

In the examples of butt and lap welding methods now being described, it is possible to extend the range over which there is no melt down by correcting the arc length when the gap is larger. However, with the increase in the gap size, a lack of molten metal will result in a low build-up of the reinforcement and in a flat appearance of the bead.

A welding method has already been described in which the detection signal detects the decrease in the arc voltage when there is a large variation in the gap size and corrects the arc length by controlling the duty ratio Ds to increase the arc length. At the same time, the wire feed rate is increased in accordance with the duty ratio Ds to increase the welding current as well as the amount of molten metal. The molten metal can then fill the enlarged gap and build up the reinforcement to give a bead of good appearance.

Conversely, a welding method has already been described in which the detection signal detects the increase in the arc voltage with decrease in the gap size and corrects the arc length by controlling the duty ratio Ds to decrease the arc length. It is possible to make the limiting size of the gap for welding larger than when using a constant duty ratio Ds as in the example of butt welding described above with reference to Fig. 50.

In the butt and lap welding methods now being described, the shortening of the arc length with decrease in the gap size can extend the range at which the welding can be carried out. However, with the decrease in gap size, there can be too much molten metal giving the reinforcement too high a build-up.

However, when detecting the increase in the arc voltage with decrease in the gap size and correcting the arc length by controlling the duty ratio Ds to decrease the arc length, the wire feed rate can be decreased in accordance with the switched duty ratio Ds so that the welding current as well as the amount of molten metal decreases. It is thereby possible to prevent contact between the wire terminal and the surface of the molten metal resulting in arc cutting, even with the shortened arc length, by decreasing the height of the reinforcement

The following Table 2 provides a comparison of butt welding at constant and switched wire feed rates respectively.

Table 2

| | Constant feed rate | feed rate switching | |
|---|---|---|---|
| | average value of welding current Ia (A) | welding current of first pulse M1 (A) | welding current of second pulse M2 (A) |
| a | 100 | 100 | 120 |
| b | 110 | 110 | 130 |
| c | 130 | 130 | 155 |
| d | 150 | 150 | 175 |

In connection with the method shown in Fig. 50 for butt welding, Table 2 indicates, for the points a to d on the full line curve, firstly the average value of welding current Ia using a constant wire feed rate, and then the average values of the welding currents M1 and M2 for first and second pulse duty times T1 and T2 respectively when the wire feed rate is switched.

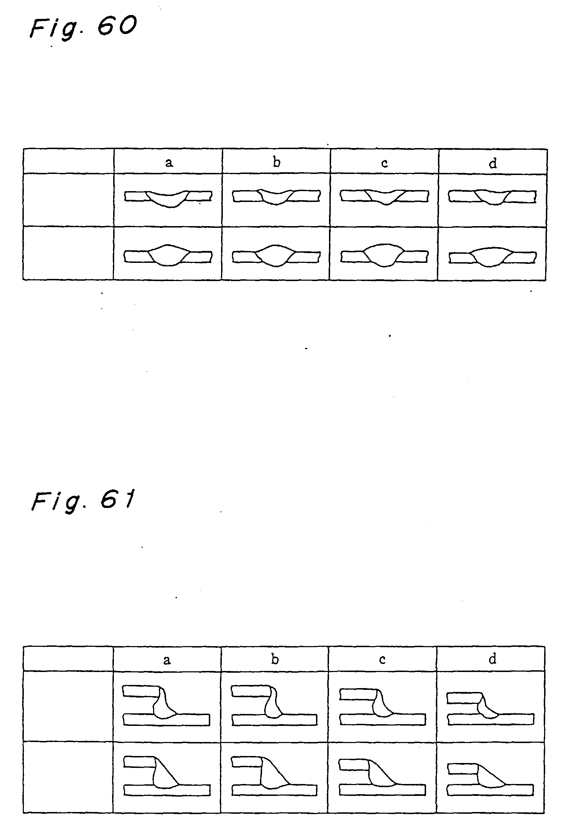

Fig. 60 shows sectional views of the beads obtained at points a to d on the full line of Fig. 50, the upper row when the welding is carried out at a constant wire feed rate and the lower row when the welding is carried out while switching the wire feed rate.

Comparing the sectional views of the beads obtained by the two different methods, it is clear that the beads obtained at a constant wire feed rate have insufficient reinforcement, whereas the beads obtained using a switched wire feed rate have sufficient reinforcement, produced from the increased amount of molten wire resulting from the increase in the welding currents 10 to 20% more than the average value at a constant feed rate.

The following Table 3 provides a comparison of lap welding at constant and switched wire feed rates respectively.

Table 3

| | Constant feed rate | feed rate | switching |
|---|---|---|---|
| | average value of welding current la (A) | welding current of first pulse M1 (A) | welding current of second pulse M2 (A) |
| a | 60 | 60 | 70 |
| b | 70 | 70 | 85 |
| c | 85 | 85 | 100 |
| d | 100 | 100 | 120 |

In connection with the method shown in Fig. 52 for lap welding, Table 3 indicates for the points a to d on the full line curve, firstly the average value of welding current la using a constant value of the wire feed rate, and then the average values of the welding currents M1 and M2 for first and second pulse duty times T1 and T2 respectively when the wire feed rate is switched.

Fig. 61 shows sectional views of the beads obtained by the two different methods. Comparing the upper row of beads from welding carried out at a constant wire feed rate and the lower row of beads from welding carried out when the wire feed rate is switched, it is clear that the first group of beads have insufficient reinforcement whereas the second group of beads have sufficient reinforcement, produced from the increased amount of molten wire resulting from the increase in the welding current by 10 to 20% more than the average value at a constant feed rate.

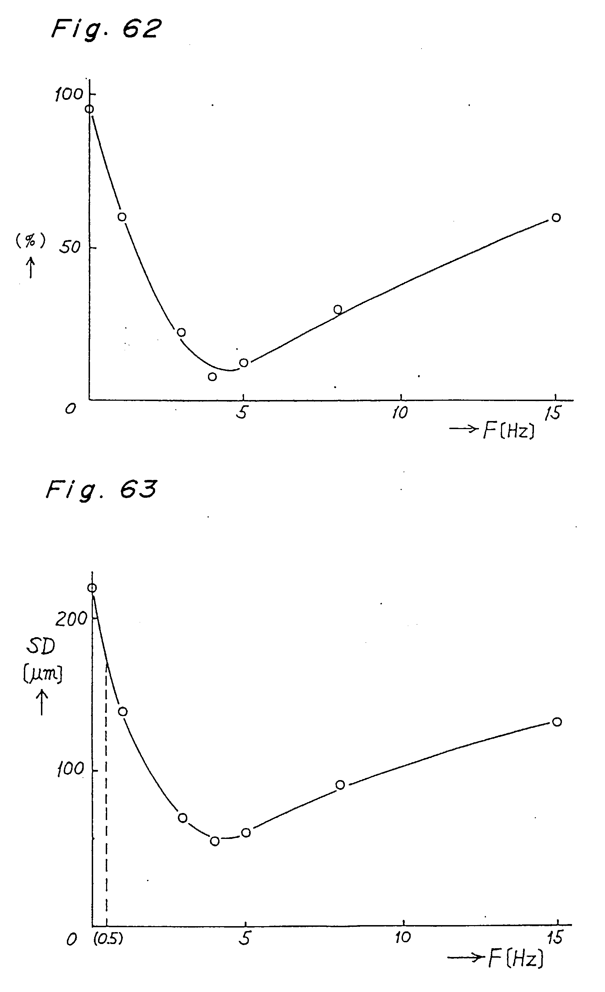

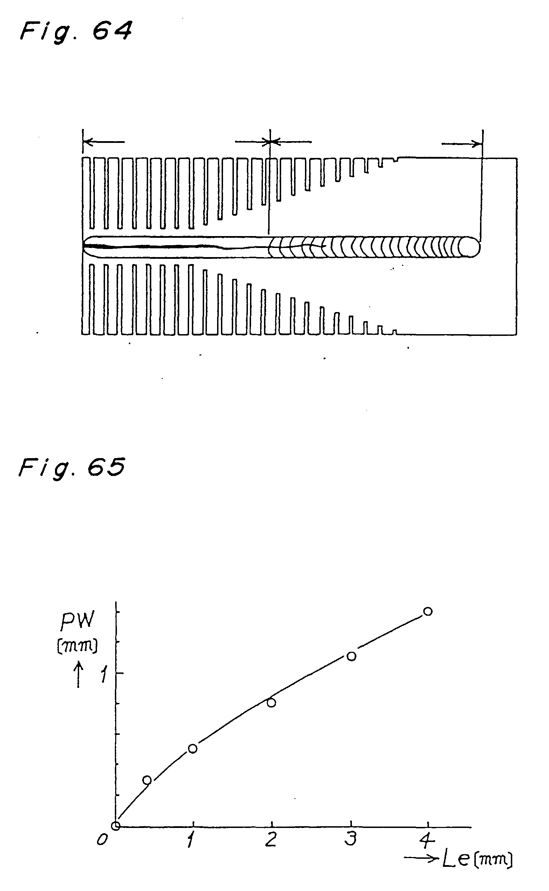

Fig. 62 is a graph showing crack test results using a test specimen as shown in Fig. 64 and having the crack ratio (LC/LW)x100% plotted along the vertical axis and the pulse current switching frequency plotted along the horizontal axis. LC denotes the crack length (mm) and LW denotes the welding length (mm). It is clear from Fig. 62 that the crack ratio is minimum at a switching frequency of 4 Hz.

Fig. 63 is a graph showing the relationship between the switching frequency and the average grain size of the welded metal subjected to the same welding conditions as those for Fig. 62. It is clear from Fig. 63 that the average grain size is also at a minimum at a switching frequency of about 4 Hz. Accordingly, it is clear that the decrease in the average grain size of the welded metal results in the decrease in the crack ratio.

Fig. 64 is a structural model view illustrating the comparison between the beads obtained from the conventional pulse MIG arc welding method and from the pulse MIG arc welding method described herein in which the arc length is charged to obtain a finer grain size. A first welded length over the left hand half of the figure was produced by conventional pulse MIG arc welding method and the other half was produced subsequently by the MIG arc welding method of the present invention. The conventional method generated cracks over all the welded length. The method of the present invention carried out subsequently did not generate cracks after a delay time during which a slight cracking was generated. This confirms the effect of the method of the present invention.

Fig. 65 is a graph showing the relationship between variation of the arc length Le mm (horizontal axis) and molten metal pool vibration width PW mm (vertical axis). The welding was performed with the pulse current switched at a frequency of 4 Hz. As shown in Fig. 65, the increase in the variation value Le increases the molten metal pool vibration width PW.

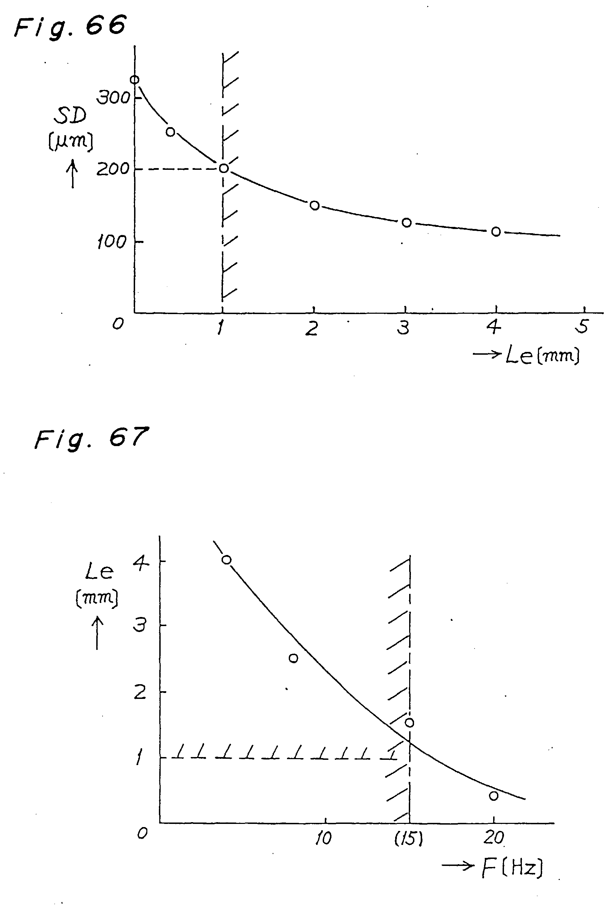

Fig. 66 is a graph showing the relationship between arc length variation value Le mm (horizontal axis) and average grain size SD micro millimeter (vertical axis). The welding was performed with the pulse current switched at a frequency of 4 Hz. It is clear from Fig. 66 that the average grain size becomes larger than 200 microns ($\mu$m) when the arc length variation Le is less than 1 mm. Since the cracking is easily generated at the average grain size more than 200 microns, the arc length variation value Le is required to be more than one mm.

Fig. 67 is a graph showing the relationship between switching frequency F Hz (horizontal axis) and the arc length variation value Le mm (vertical axis). From Fig. 66, it is clear that the arc length variation Le is required to be more than 1 mm in order to make the average grain size SD less than 200 microns. In order to achieve this requirement, Fig. 67 indicates that the switching frequency F is required to be less than 15 Hz. It is difficult for the melt length of the wire extension length to follow the switching frequency F at a frequency higher than 15 Hz. On the other hand, it is clear from Fig. 63 that an average grain size SD less than 200 microns can be achieved by a switching frequency F higher than 0.5 Hz. It can be concluded that to achieve this desired grain size in the welding method of the present invention, it is required that the arc length variation value Le is less than 1 mm and the switching frequency F is 0.5 to 15 Hz.

A welding method for stainless steel will now be described which helps to avoid the generation of cracks and improves the accuracy in the non-destructive test by agitating the stainless steel molten pool in order to obtain the fine grain size.

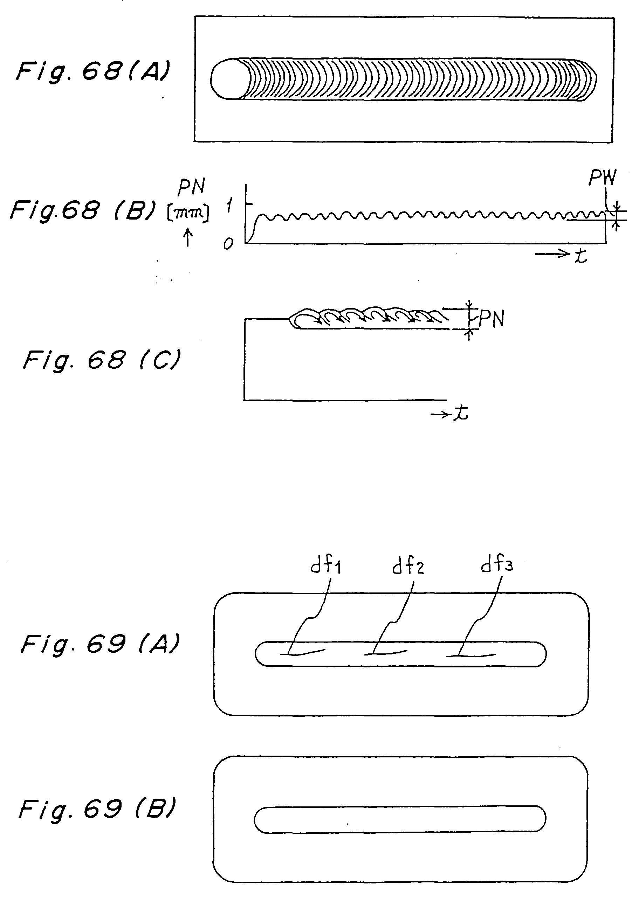

Fig. 68 (A) is a perspective view of the bead obtained when a stainless steel of 4 mm thickness is welded in a method according to the invention, at an average value of the welding current 100 A and a pulse current of average arc voltage of 19 V at a welding speed of 30 cm/min with stainless wire of 1.0 mm diameter by the pulse MIG arc welding method to generate a variation of the arc length. Fig. 68 (B) and (C) are graphs showing the variation in the vibration width PW and the height PN of the molten metal pool respectively against a time base.

The bead obtained with the above welding conditions has a wave pattern of solidified metal as shown in Fig. 68 (A). The vibration of the molten metal pool during welding was photographed by a high speed video camera and analyzed with video analyzing apparatus. The amplitude of vibration PW was 1.0 mm as shown in Fig. 68 (B). It is clear from Fig. 68 (C) that convection in the molten metal pool from the surface to the interior is sufficient to produce fine grain boundaries in the solidified metal having columnar crystals. Since the cracking due to the solidification usually moves along the grain boundaries, the fine grain structure inhibits cracking. The cracking will be filled with the molten metal in an accelerated way due to the molten metal vibration induced by the cracking itself ( referred to as the healing phenomenon in welding solidification metallurgy) when the vibration in the molten metal is large. In view of this point, the large vibration is useful for the prevention of cracking.

Fig. 69 (A) is a perspective view of the bead after a radiographic test on the welding bead obtained with the welded stainless steel 18Cr8Ni subjected to the conventional MIG welding method. In can be seen that the welding bead shows a black shadow at the positions df1, df2 and df3 along the grain boundaries of large crystals. These black shadows can be seen in the bead when cracking generates at the welding metal. It is difficult to determine whether the black shadow is due to the cracking or not.

Fig. 69 (B) is a perspective view of the bead after a radiographic test on the welding bead with stainless steel 18Cr8Ni subjected to a MIG arc welding method according to claim 28. The disturbance of the molten metal pool due to the periodic variation in the arc length causes the grain size to decrease. Accordingly, the black shadows appearing in Fig. 69 (A) cannot be seen. It is concluded that the pulse MIG arc welding method according to the present invention gives to welded stainless steel a shall grain size and prevents the generation of cracking. The radiographic test did not produce black shadows which may have suggested possible cracking.

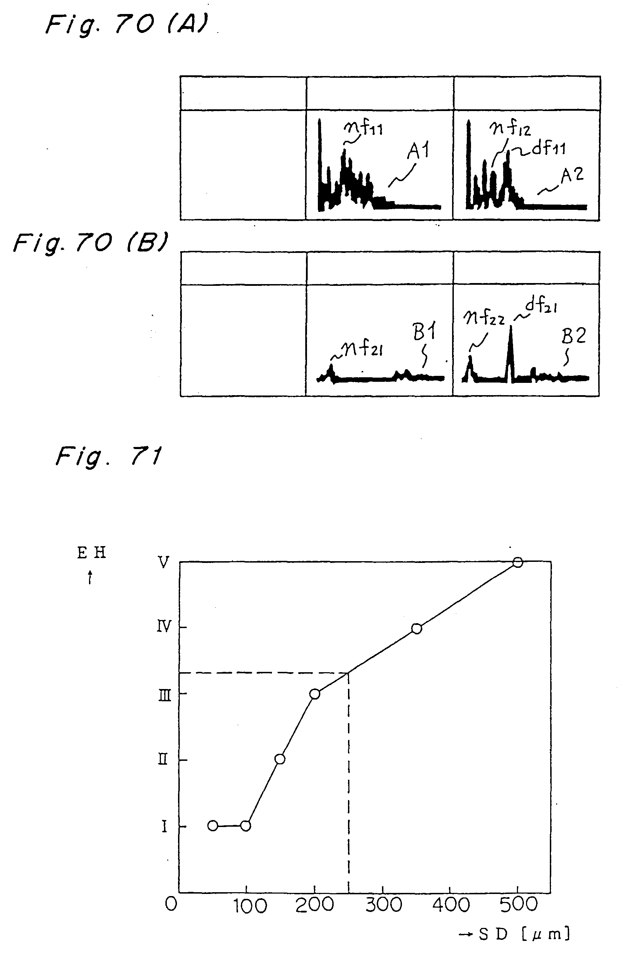

Fig. 70 (A) is a graph showing an echo profile from an ultrasonic test on 18-8 stainless steel subjected to the conventional MIG welding method. It is seen that the sample having no defect due to the welding shows various peaks nf11 whereas the sample having the defect prepared in advance to the test shows the various peaks nf12 ad df11. The peak df11 seems to correspond to the defect but the peaks nf12 have no reason to appear and make the ultrasonic test uncertain. The detection accuracy for the defect is very low.

On the other hand, Fig. 70 (B) is a graph showing an echo profile from an ultrasonic test on 18-8 stainless steel subjected to the pulse MIG arc welding method according to claim 28. It is seen that the sample having no defect shows an echo figure showing a slight peak nf21 whereas the sample having a defect prepared in advance to the test shows a peak df21 corresponding clearly to the defect and a slight peak nf22. The slight peak nf21 and nf22 may result from the fine grain size and are apparently different from the large peak df21 in height. Therefore, the defect due to the welding can be clearly detected by the radiographic test in connection with the pulse MIG arc welding method according to the invention.

Fig. 71 is a graph showing the relationship between the level range I to V for the echo height EH detected in accordance with the JIS (Japanese Industrial Standard) Z3060 (vertical axis) and the average grain size SD in microns (horizontal axis). The range III is a standard of echo height for determining the class in accordance with JIS Z3060. The echo height higher than range III appears with a grain size larger than 300 microns. When the average grain size is higher than 250 microns, the bead has a long stray crystal generated at the center thereof. The radiographic test on such a sample detects a black shadow df1 to df3 along with the stray crystal and decreases the detection accuracy on the defect.

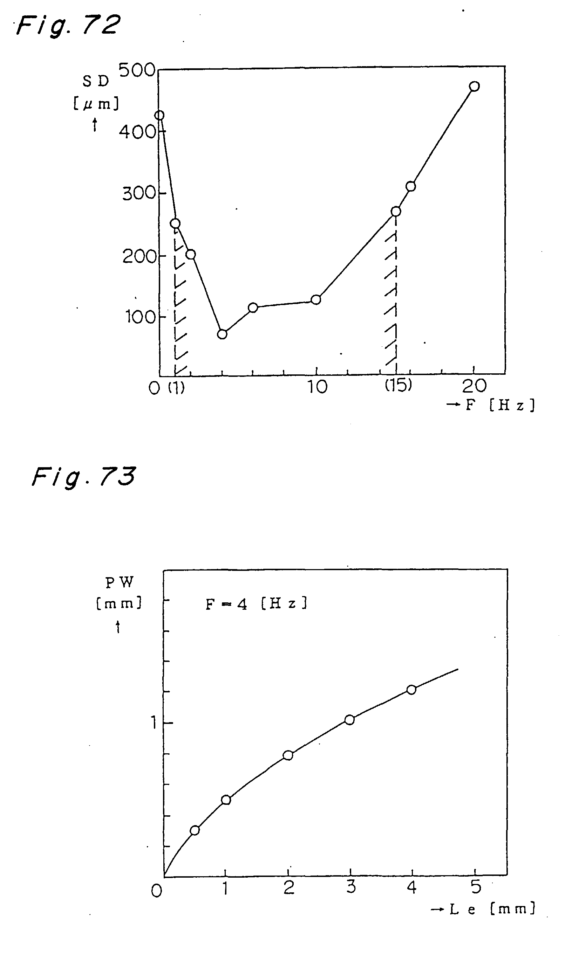

Fig. 72 is a graph showing the relationship between the switching frequency F Hz (horizontal axis) and the average grain size in microns with the welding conditions the same as those of Fig. 71. It is clear that a switching frequency of 4 Hz shows the minimum grain size while a frequency range lower than 1 Hz or more than 15 Hz generates an average grain size more than 300 microns. An average grain size of more than 300 microns decreases the accuracy of non-destructive tests such as the radiographic test and the ultrasonic test.

Fig. 73 is a graph showing the relationship between the arc length variation value of the Le mm (horizontal axis) and the vibration width of molten metal pool PW mm (vertical axis). The welding is carried out by switching the pulse current at a frequency of 4 Hz. An increase in the variation value of the arc length results in the increase in the vibration width of the molten metal pool.

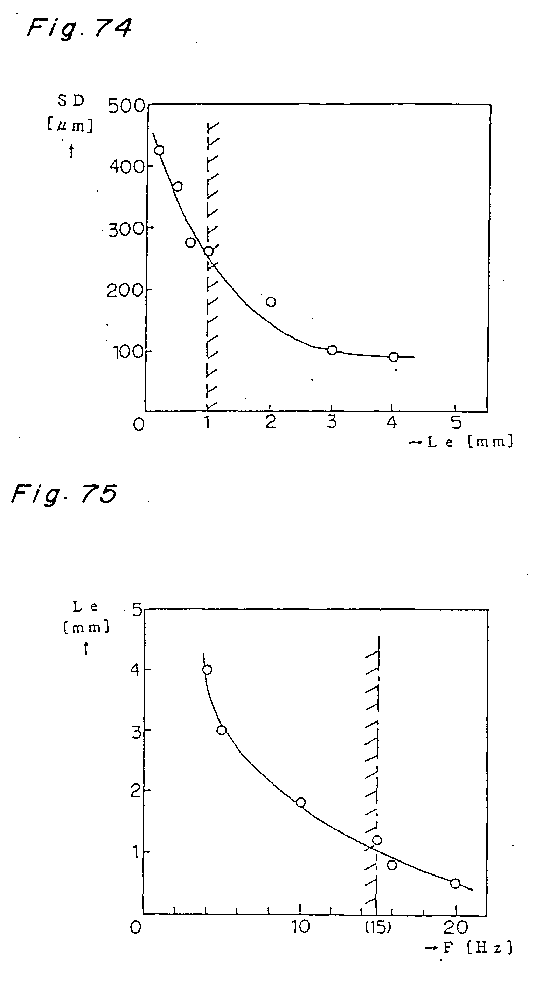

Fig. 74 is a graph showing the relationship between the arc length variation value Le mm (horizontal axis) and the average grain size in micro millimeters (vertical axis). The welding is carried out by switching the pulse current at a frequency of 4 Hz. An increase in the variation of the arc length results in the decrease in the average grain size due to the increased disturbance of the molten metal pool. A variation value of the arc length of less than 1 millimeter gives an average grain size higher than 250 microns. An average grain size higher than 300 microns decreases the accuracy of non-destructive tests and also generates cracking more frequently. Therefore, to keep the grain size below 300 microns the variation in the arc length should be more than 1 micron millimeter.

Fig. 75 is a graph showing the relationship between the switching frequency Hz (horizontal axis) and the variation in the arc length Le mm (vertical axis). As shown, to keep the grain size below 300 microns the variation value in the arc length is more than 1 millimeter. As a result, the switching frequency must be lower than 15 Hz. With the switching frequency more than 15 Hz, it is difficult for the variation in the extension length at the terminal of the molten metal to follow the switching frequency. Also, a average grain size SD lower than 250 microns requires a frequency more than 1 Hz as mentioned in connection with Fig. 72. Hence, it the switching frequency should be between 1 to 15 Hz and the variation in the arc length should be more than 1 mm.

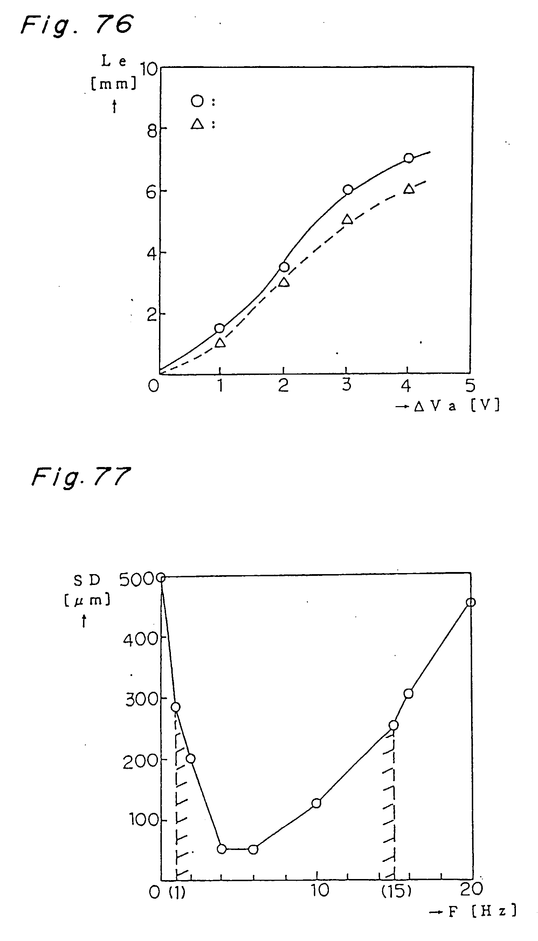

Fig. 76 is a graph showing the relationship between the arc voltage variation value ΔVa V (horizontal axis) and the arc length variation value Le mm (vertical axis) in MIG arc welding without pulse. The welding conditions are; the welding electric current =200A, the first arc voltage =23 V and the arc length =3 mm in the first set of welding conditions with a given constant rate of feed of stainless steel SUS 308 of 1.0 mm diameter. The relation between the arc voltage variation value ΔVa V and the arc length variation value Le in the second set of welding conditions is shown by a dotted line and △ symbols. The stainless steel SUS 308 of 1.2 mm diameter is fed at a given constant rate. The first welding condition is; the welding current = 250 A, the first arc vlotage= 25 V and the arc length =3 mm. The relation between the arc voltage variation in the ΔVa V and the arc length variation value Le with the second set of welding conditions is shown by a solid line and open circles. The arc length is changed within the spray transfer range since the first and the second welding conditions operate with the welding current higher than the critical value Ic.

Fig. 77 is a graph showing the relationship between the switching frequency F Hz (horizontal axis) and the average grain size SD microns (vertical axis) in MIG arc welding without pulse. The welding conditions are that the welding electric current =200A, the first arc voltage =23 V and the arc length =3 mm in the first set of welding conditions with a given constant rate of feeding of stainless steel SUS 308 of 1.0 mm diameter. In the second set of welding conditions the arc voltage is 26 V. It is clear from Fig. 77 that a switching frequency of 4 Hz shows the minimum grain size while the frequency range lower than 1 Hz or more than 15 Hz generates an average grain size more than 300 microns in a similar way to Fig. 72 . A average grain size more than 300 microns decreases the accuracy of non-destructive tests such as the radiographic test and the ultrasonic test.

There will now be described how the generation of porosity can be inhibited by vibrating a molten aluminum pool while welding with a switching frequency of 0.5 to 25 Hz and an arc length variation Le of more than 1 mm.

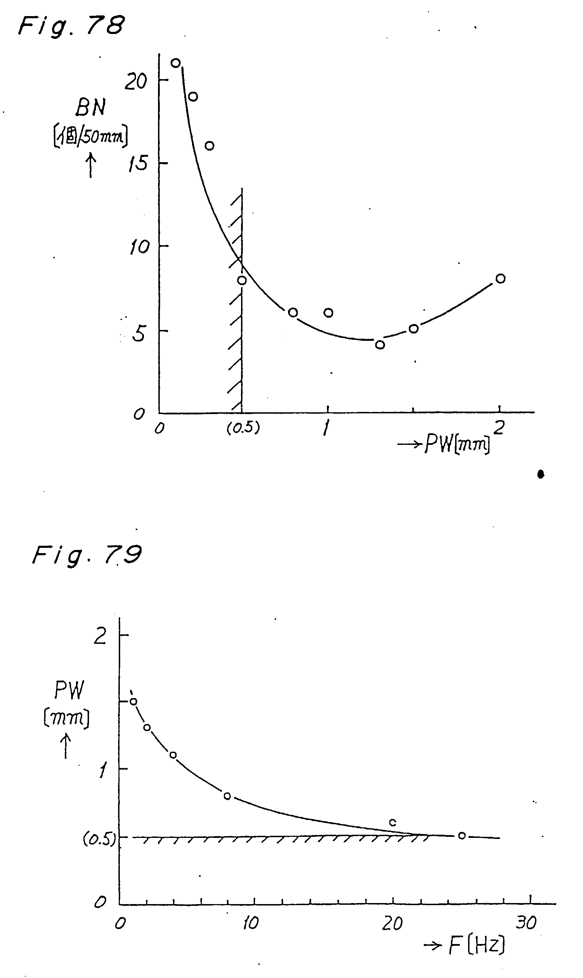

Fig. 78 is a graph showing the relationship between the molten metal pool width Pw mm (horizontal axis )and a degree of porosity (pieces /50 mm) over a welding length of 50 mm (vertical axis) with the welding having the pulse current to flow. It is clear that a molten metal pool width PW less than 0.5 mm shows a rapid increase in porosity. To decrease the porosity requires the molten metal pool width larger than 0.5 mm. The welding conditions for the data in Fig. 78 relates to welding aluminum plate in argon gas including intentionally 0.1 % of hydrogen using aluminum wire of 1.6 mm diameter to determine the degree of porosity.

The first pulse current group P1 has a pulse current IP1 =280 A, a pulse duration TP1 =1.2 ms, a base current value IB1 =30 A, and a pulse frequency = about 100 Hz. The second pulse current group P2 has a pulse current value =300 A, a pulse duration TP =2.0 ms, a base current value IB2 =30 A and a pulse frequency = 70 Hz. The first and second pulse current groups P1 and P2 are switched periodically between each other at a frequency of 4 Hz. In the pulse current duty time, the first and second arc voltages Va1 and Va2 are 17.5 V and 20 V, respectively, and the arc length variation Le is 3.5 mm.

Fig. 79 is a graph showing the relationship between switching frequency F Hz (horizontal axis) and the molten metal pool width PW mm (vertical axis) with the welding energized by the pulse current. It is seen that a molten metal pool width greater than 0.5 mm requires a switching frequency lower than 25 Hz.

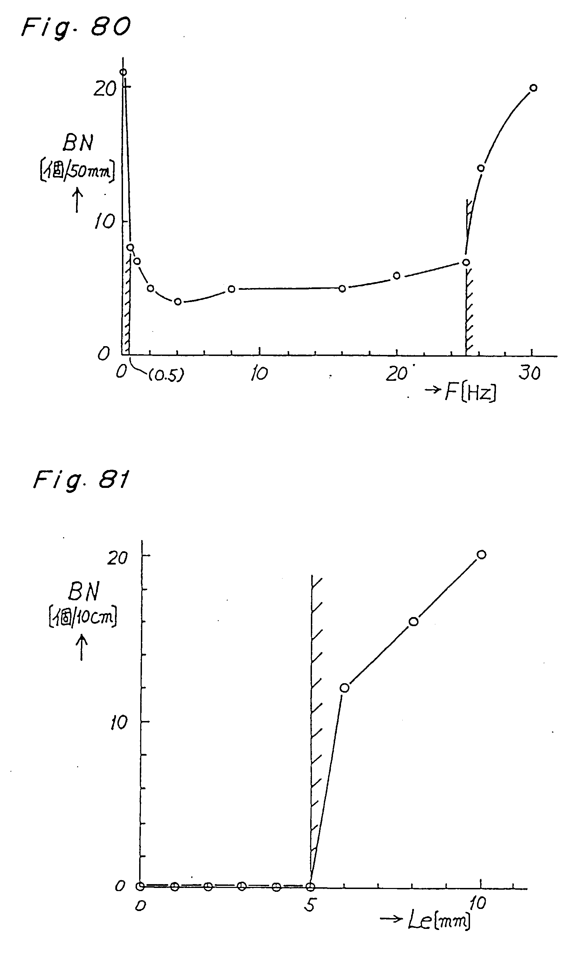

Fig. 80 is a graph showing the relationship between switching frequency F Hz (horizontal axis) and the amount of porosity BN (vertical axis) over a welding length of 50 mm (pores/50 mm) when the welding is carried out under the same conditions as the example of of Fig. 79. As shown, the amount of porosity increases rapidly with a switching frequency lower than 0.5 Hz or higher than 25 Hz. The porosity can be limited by keeping the switching frequency between 0.5 and 25 Hz. A switching frequency lower than 0.5 Hz can not vibrate the molten metal pool. On the other hand, with a switching frequency higher than 25 Hz the variation in the molten metal length at the terminal of the wire extension length does not follow the frequency F.

Fig. 81 is a graph showing the relationship between the amount of porosity BN (pores/10 mm) over a welding length of 10 mm (vertical axis) and the arc length variation Le mm (horizontal axis) when aluminum alloy A5052 plate of thickness 3 mm is welded with aluminum alloy wire having a diameter of 1.2 mm. The conditions were as follows: the average value of the welding current Ia=100 A, the average value of the arc voltage Va =19 V and the switching frequency = 0.5 to 2 Hz. It is clear from Fig. 81 that an arc length variation value Le more than 5 mm causes a rapid increase in the amount of porosity. This comes from the following reason: with the gas sealed nozzles commercially available, the arc length is set to a minimum size of 3 mm for the purpose of preventing a short circuit. The variation in the arc length of more than 5 mm results in an arc length more than 8 mm. The terminal 1a of the wire reaches the vicinity of the gas sealed nozzle and disturbs the sealing gas atmosphere. The resulting deficiency in the gas atmosphere causes the generation of porosity. Therefore, it is appropriate to keep the arc length variation Le lower than 5 mm.

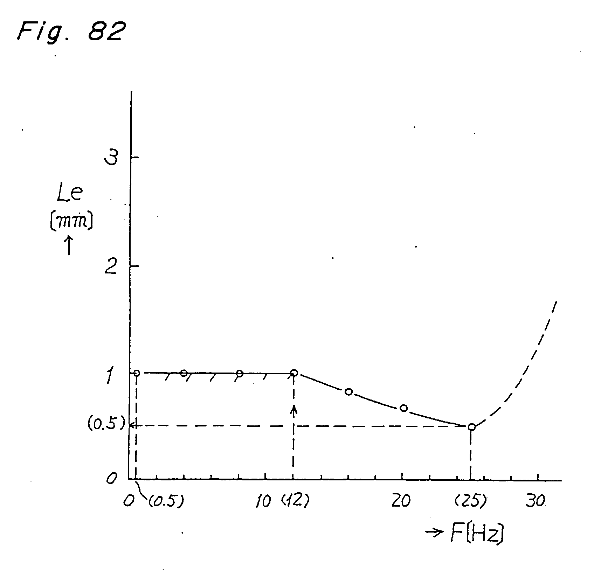

Fig.82 is a graph showing the relation between the switching frequency F Hz necessary for obtaining a vibration width of the molten metal pool more than 0.5 mm (horizontal axis) against arc length variation value Le (vertical axis). It is seen that the molten metal pool vibration width more than 0.5 mm can be obtained at the range upper the curve by the welding method according to claim 29. In the frequency range F =0.5 to F= 12 Hz, the arc length variation Le is required to be more than 1 mm, while at a switching frequency F =25 Hz, the arc length variation Le is required to be more than 0.5 mm. As described with reference to Fig. 81, the variation value in the arc length should be more than 0.5 mm and less than 5 mm. The arc welding method requires the switching frequency to be 0.5 to 25 Hz. It is necessary to keep the arc length variation value Le in a range more than 0.5 mm and less than 5 mm in accordance with the increase in the switching frequency.

In Fig. 82, the arc length variation value Le necessary for obtaining the molten metal pool width more than 0.5 mm is 1 mm at a range of switching frequency F less than 12 Hz and then is smaller with the increase in the switching frequency. However it is possible to obtain a molten metal pool width of more than 0.5 mm at the increased frequency range. This may be due to the following reason. With reference to Fig. 81, the welding conditions are as follows: the average value of the welding current Ia =100 A, the average value of the welding voltage Va =19 V and welding speed WS =40 cm/min. As a result, the molten metal pool diameter is about 1 cm. The relationship between the molten metal pool diameter and the resonance frequency of the metal Fr can be expressed by the following equation 1:

$$Fr = (\text{surface tension/density x diameter of molten metal pool})^{1/2}$$

Aluminum has a surface tension of 900 dyn/cm and density of 2.5 g/cc. From the equation 1 therefore, for a molten metal pool diameter of 1 cm, Fr =19 Hz.

This is a resonance frequency of the molten aluminum pool. When the switching frequency is equivalent to this Fr, a small arc length variation value Le permits the molten aluminum pool to vibrate to a considerable degree.

In practice, the usual MIG welding method can produce a resonance frequency of the molten metal pool of about 10 to 25 Hz. Hence, a switching frequency of 10 to 25 Hz permits the molten metal pool to vibrate easily. However, it is necessary to change forcibly the arc length to a large degree in order to vibrate the molten metal pool with a frequency other than 10 to 25 Hz. A switching frequency less than 10 Hz permits the arc length to vary easily to a large degree. However, at a switching frequency higher than 25 Hz, it is necessary for the vibration of the molten metal pool to obtain a large arc length variation value Le. As a practical matter, the variation in the molten metal length at the wire extension length cannot follow the switching frequency. Therefore, it is concluded that the suitable switching frequency is 0.5 to 25 Hz.

Welding apparatus according to the present invention is arranged to be capable of switching between first and second pulse current groups to obtain first and second arc lengths.

Examples of apparatus according to the invention will now be described in which the arc voltage is controlled by the pulse frequency. A pulse base current control circuit for outputting the pulse base control signal comprises a pulse frequency control signal generator for outputting a pulse frequency control signal controlling the pulse frequency. The first pulse current setting circuit for outputting the first pulse base current setting signal comprises the pulse current setting circuit for setting the pulse current value setting signal, the pulse duration setting circuit for setting the pulse duration setting signal, and a base current setting circuit for setting the base current setting signal.

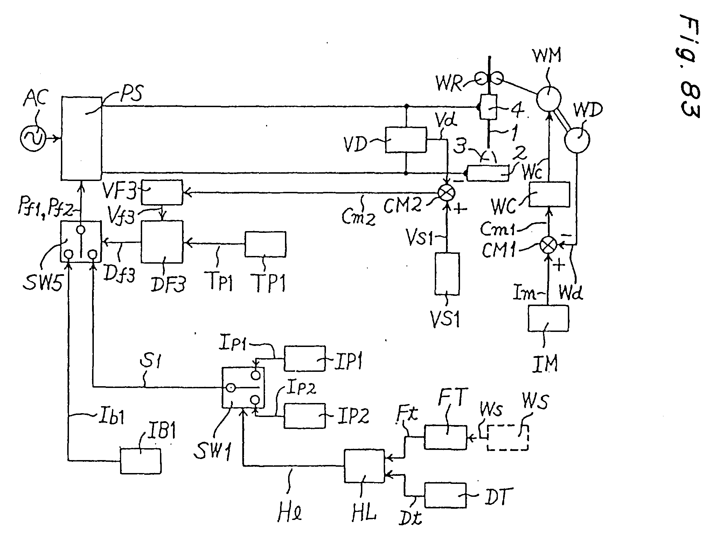

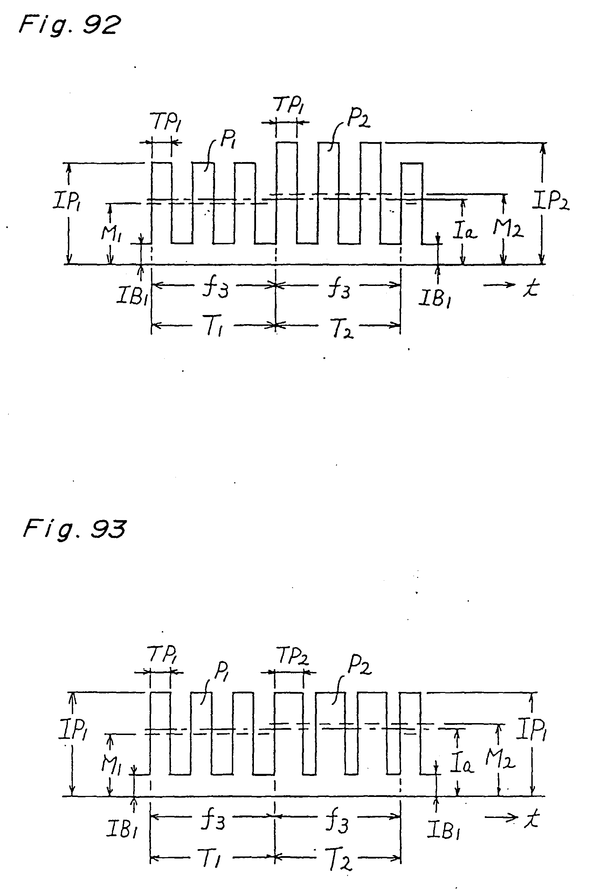

Fig. 83 is a block diagram of a first of these examples and produces the welding waveform shown in Fig. 92.

In Fig. 83, a welding power control circuit PS having a proprietary AC supply provides power between a power supply tip 4 of a consumable electrode 1 and a workpiece 2, generating an arc 3. The consumable electrode 1 is fed by a wire feed roller Wr rotated by a feed motor WM. A wire feed rate control circuit WC receives a control signal Cm1 from a wire feed rate comparison circuit CM1 (the first comparison circuit hereinafter) to compare a signal Im described later with a feed rate detection signal Wd of a detection circuit WD of a wire feed motor WM and outputs a feed rate control signal Wc. An arc voltage setting circuit VS1 outputs an arc voltage setting signal Vs1. A second comparison circuit CM2 outputs an arc voltage control signal Cm2 from the difference between the arc voltage setting signal Vs1 and arc voltage detection signal Vd of arc voltage detection circuit VD. A duty frequency setting circuit FT sets the frequency F of a switching signal H1 to switch between the first pulse duty time T1 and the second pulse duty time T2, and outputs a duty frequency signal Ft which is suitably in a range from 0.5 to 25 Hz. The welding speed is closely related to the switching frequency F to obtain a suitable welding result. The switching circuit HL receives the duty frequency signal Ft corresponding to the welding speed when the duty frequency setting circuit FT receives the speed setting signal Ws of the welding speed setting circuit WS. A duty ratio setting circuit DT sets the ratio of the second pulse duty time T2 in the second welding condition to the first pulse duty time T1 in the first welding condition and outputs a duty ratio signal Dt. The switching circuit HL outputs a switching signal H1 to switch periodically between the first and second pulse duty times T1 and T2 upon receiving the signals Ft and Dt. The first and second pulse current value setting circuits IP1 and IP2 output the first and second pulse current value setting signals Ip1 and Ip2, respectively. The circuit SW1 outputs a pulse current switching signal S1 obtained by switching between the signals Ip1 and Ip2 in accordance with the switching signal H1.

A pulse frequency circuit VF3 outputs a pulse frequency control signal Vf3 in accordance with the arc voltage control signal Cm2. The pulse duration frequency control signal generator DF3 outputs a pulse duration frequency control signal Df3 in accordance with a pulse duration setting signal Tp1 and the pulse frequency control signal Vf3. By switching with a pulse duration frequency control signal Df3, a pulse base current switching circuit SW5 outputs a pulse control signal Pf1 comprising a pulse current switching signal Ip1 and a base current setting signal Ib1 of the first welding condition, in alteration with a pulse control signal Pf2 comprising a pulse current switching signal Ip2 and a base current setting signal Ib1 of the second welding condition. Both signals Pf1 and Pf2 are inputted to the welding power control circuit PS.

In Fig. 92 showing the waveform produced by this circuit, P1 denotes the pulses of the first pulse current group having a first pulse current value IP1, a first pulse duration TP1, a first pulse frequency f3 and a first base current IB1. P2 denotes the pulses of the second pulse current group having a second pulse current value IP2, a second pulse duration TP1 the same as the first pulse duration, a second pulse frequency f3 the same as the first pulse frequency and a second base current IB1 the same as the first base current. The first and second pulse duty times T1 and T2 alternate with each other with the switching signal H1 at a switching period T1+T2 of a low frequency of, for example, 0.5 to 25 Hz.

M1 and M2 denote the average value of the welding current at the first and the second pulse duty times T1 and T2, respectively, Ia denotes an average value of the welding current.

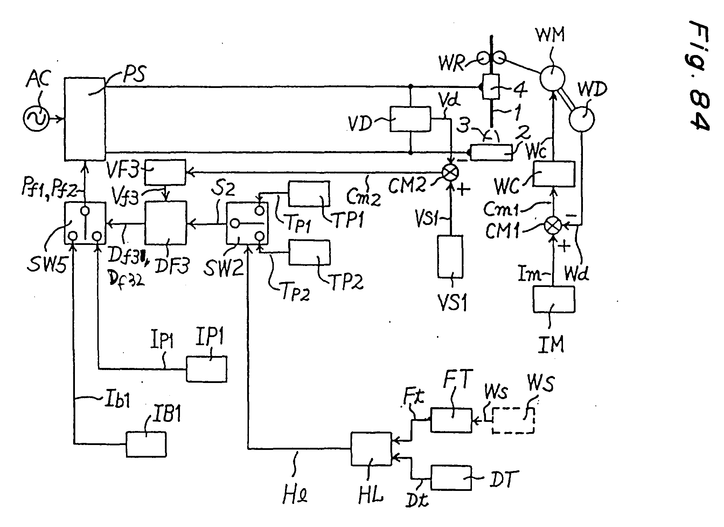

Fig. 84 is a block diagram of a second example in which the arc voltage is controlled by the pulse frequency and which produces the welding waveform shown in Fig. 93.

In Fig. 84, those elements already appearing in Fig. 83 are denoted with the same reference characters as in Fig. 83 and will not be further described.

The first and second pulse duration setting circuits TP1 and TP2 output the first and second pulse duration setting signals Tp1 and Tp2, respectively. The circuit SW2 outputs a pulse duration switching signal S2 obtained by switching between the signals Tp1 and Tp2 in dependance on the switching signal H1.

A pulse frequency signal circuit VF3 outputs a pulse frequency control signal Vf3 in accordance with the arc voltage control signal Cm2. The pulse duration frequency control signal generator DF3 outputs a first pulse duration frequency control signal Df31 consisting of the pulse duration setting signal Tp1 and the pulse frequency control signal Vf3 in accordance with the first welding condition and a second pulse duration frequency control signal Df32 consisting of a second pulse duration setting signal Tp2 and the pulse frequency control signal Vf3 in accordance with the second welding condition. A pulse base current switching circuit SW5 outputs a pulse control signal Pf1 obtained by switching, with a pulse duration frequency control signal Df31, between a pulse current switching signal Ip1 of the first welding condition and a base current setting signal Ib1 of the first welding condition, and a pulse control signal Pf2 obtained by switching, with a pulse duration frequency control signal Df32, between a pulse current switching signal Ip2 of the second welding condition and a base current setting signal Ib1 of the second welding condition. Both signals Pf1 and Pf2 are inputted to the welding power control circuit PS.

In Fig. 93, showing the waveform produced by this circuit, P2 denotes the pulses of the second pulse current group having a second pulse current value IP1 the same as the first pulse current value, a second pulse duration TP2, a second pulse frequency f3 the same as the first pulse frequency and a second base current IB1 the same as the first base current. Other characteristics are the same as those of Fig. 92 and need not be further described.

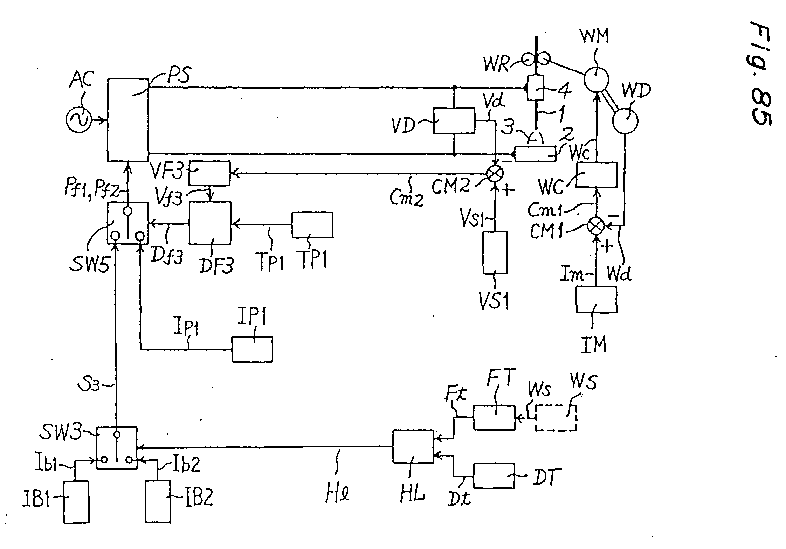

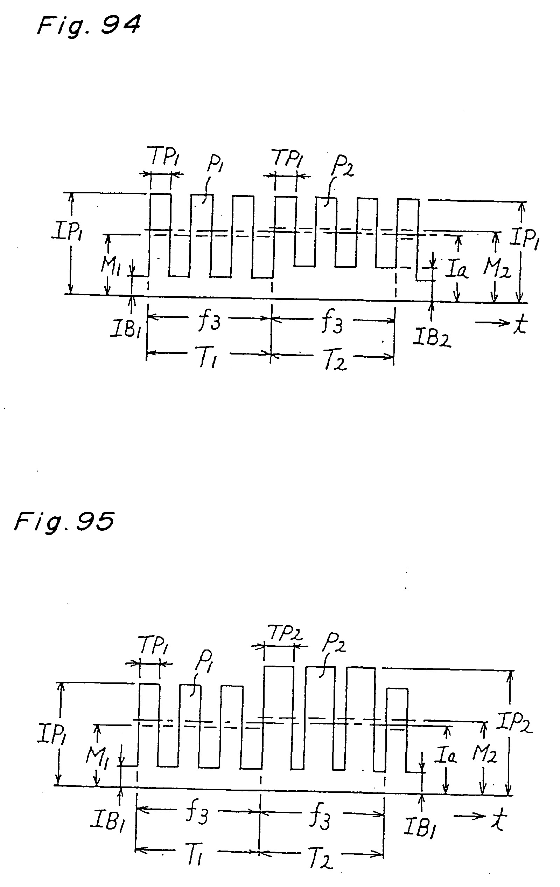

Fig. 85 is a block diagram of a third example in which the arc voltage is controlled by the pulse frequency and which produces the welding waveform shown in Fig. 94.

In Fig. 85, those elements already appearing in Fig. 83 are denoted with the same reference characters as in Fig. 83 and will not be further described.

The first and second base current setting circuits IB1 and IB2 output the first and second base current setting signals Ib1 and Ib2, respectively. The circuit SW3 outputs a base current switching signal S3 obtained by switching between the signals Ib1 and Ib2 in dependence upon the switching signal H1.

A pulse frequency signal VF3 outputs a pulse frequency control signal Vf3 in accordance with the arc voltage control signal Cm2. The pulse duration frequency control signal generator DF3 outputs a pulse duration frequency control signal Df3 consisting of the pulse duration setting signal Tp1 and the pulse frequency control signal Vf3 in accordance with the first welding condition. A pulse base current switching circuit SW5 outputs a pulse control signal Pf1 obtained by switching, with the pulse duration frequency control signal Df3, between the pulse current switching signal Ip1 of the first welding condition and the base current setting signal Ib1 of the first welding condition, and the pulse control signal Pf2 obtained by switching, with the pulse duration frequency control signal Df3, between the pulse current switching signal Ip2 of the second welding condition and the base current setting signal Ib2 of the second welding condition. Both signals Pf1 and Pf2 are inputted to the welding power control circuit PS.

In Fig. 94, showing the waveform produced by this circuit, P2 denotes the pulses of the second pulse current group having a second pulse current value IP1 the same as the first pulse current value, a second pulse duration TP1 the same as the first pulse duration, a second pulse frequency f3 the same as the first pulse frequency and a second base current IB2. Other characteristics are the same as those of Fig. 92 and need not be further described.

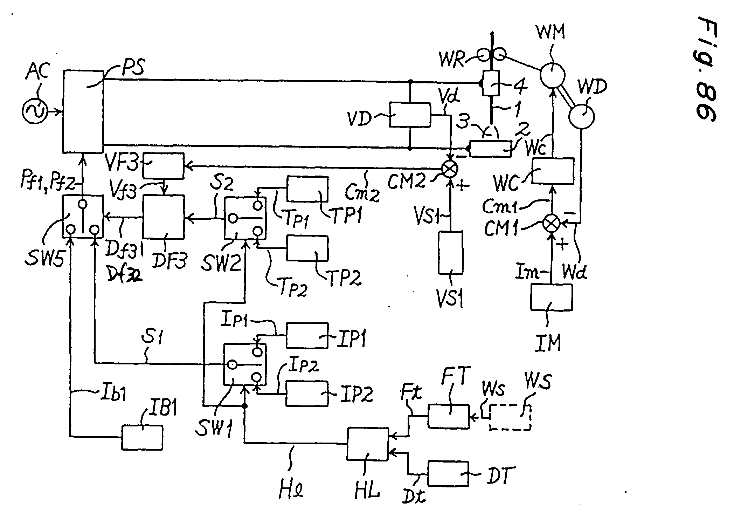

Fig. 86 is a block diagram of a forth example in which the arc voltage is controlled by the pulse frequency and which produces the welding waveform shown in Fig. 95.

In Fig. 86, those elements already appearing in Fig. 83 are denoted with the same reference characters as in Fig. 83 and will not be further described.

A second pulse base current setting circuit for outputting the second pulse base current setting signal comprises the pulse current value setting circuit IP2 for setting the pulse current value setting signal Ip2, a second pulse duration setting circuit TP2 for setting a second pulse duration setting signal Tp2 and a base current setting circuit IB1 for setting the base current setting signal Ib1.

A switching setting circuit for outputting a switching setting signal comprises the pulse current value switching circuit SW1 for outputting a pulse current switching signal S1 by switching between the first and second pulse current setting signals Ip1 and Ip2 and the pulse duration switching circuit SW2 for outputting a pulse duration switching signal S2 by switching between the first and second pulse duration setting signals Tp1 and Tp2.

A pulse control signal generator for receiving the pulse base current control signal and the switching setting signal comprises the pulse frequency signal generator circuit VF3 for outputting the pulse frequency control signal Vf3 upon receiving the arc voltage control signal Cm2, a pulse duration frequency signal generator DF3 for outputting a first pulse duration frequency signal Df31 consisting of the pulse frequency signal Vf3 and the first pulse duration signal TP1, and a second pulse duration frequency signal Df32 consisting of the pulse frequency signal Vf3 and the pulse duration signal Tp2. In addition, the pulse base current switching circuit SW5 outputs a pulse control signal Pf1 obtained by switching, with a pulse duration frequency control signal Df3, between the pulse current switching signal IP1 of the first welding condition and the base current setting signal Ib1 of the first welding condition, and the pulse control signal Pf2 obtained by switching, with the pulse duration frequency control signal Df3, between the pulse current switching signal Ip2 of the second welding condition and the base current setting signal Ib1 of the second welding condition. Both signals Pf1 and Pf2 are inputted to the welding power control circuit PS.

In Fig. 95, showing the waveform produced by this circuit, P2 denotes the pulses of the second pulse current group having a second pulse current value IP2, a second pulse duration TP2, a second pulse frequency f3 the same as the first pulse frequency and a second base current IB1 the same as the first base current. Others characteristics are the same as those of Fig. 92 and need not be described further.

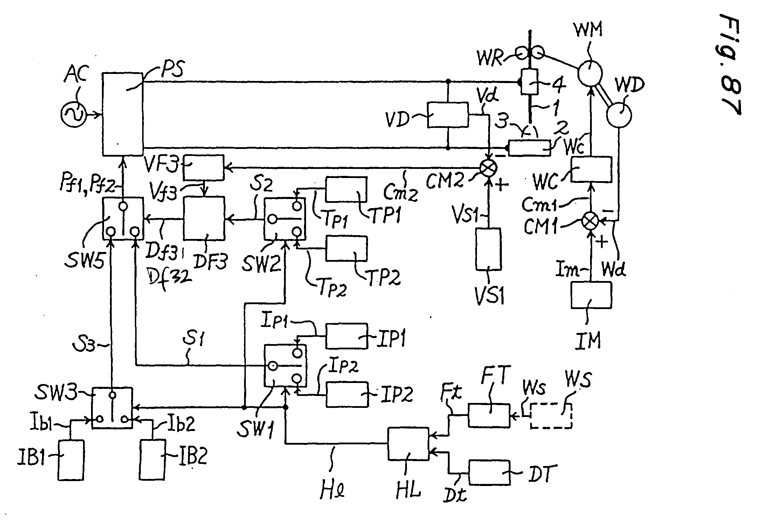

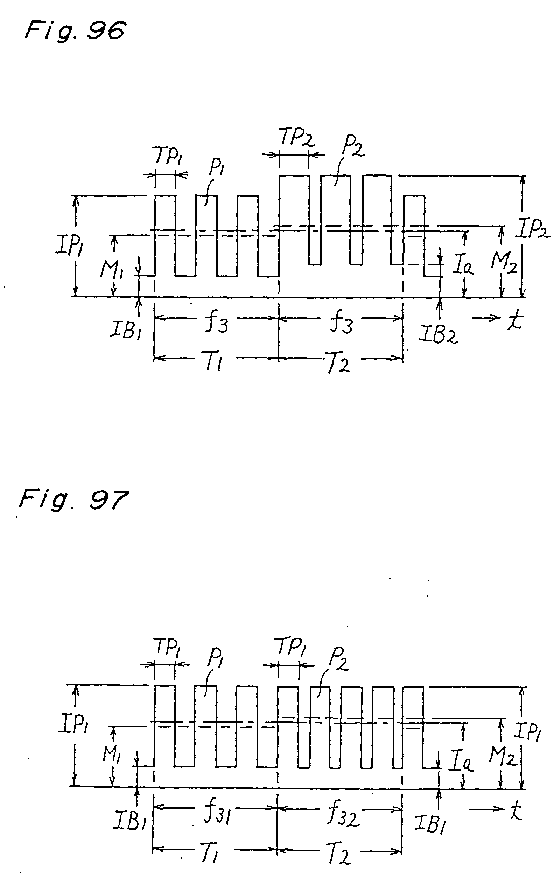

Fig. 87 is a block diagram of a fifth example in which the arc voltage is controlled by the pulse frequency and which produces the welding waveform shown in Fig. 96.

In Fig. 87, those elements already appearing in Fig. 83 are denoted with the same reference characters as in Fig. 83 and will not be further described.

A second pulse base current setting circuit for outputting the second pulse base current setting signal comprises the second pulse current value setting circuit IP2 for setting the pulse current value setting signal Ip2, the second pulse duration setting circuit TP2 for setting the second pulse duration setting signal Tp2 and the second base current setting circuit IB2 for setting the second base current setting signal Ib2.

A switching setting circuit for outputting a switching setting signal comprises the pulse current value switching circuit SW1 for outputting a pulse current switching signal S1 by switching between the first and second pulse current setting signals Ip1 and Ip2, the pulse duration switching circuit SW2 for outputting a pulse duration switching signal S2 by switching between the first and second pulse duration setting signals Tp1 and Tp2, and a base current switching circuit SW3 for outputting a base current switching signal S3 obtained by switching between the first and second base current setting signals Ib1 and Ib2.

A pulse control signal generator for receiving the pulse base current control signal and the switching setting signal comprises the pulse frequency signal generator circuit VF3 for outputting the pulse frequency control signal Vf3 upon receiving the arc voltage control signal Cm2, the pulse duration frequency signal generator DF3 for outputting the first pulse duration frequency signal Df31 consisting of the pulse frequency signal Vf3 and the first pulse duration signal Tp1 and the pulse duration frequency signal Df32 consisting of the pulse frequency signal Vf3 and the pulse duration signal Tp2. The pulse base current switching circuit SW5 outputs a pulse control signal Pf1 obtained by switching, with the pulse duration frequency control signal Df31, between a pulse current switching signal Ip1 of the first welding condition and a base current setting signal Ib1 of the first welding condition, and a pulse control signal Pf2 obtained by switching, with a pulse duration frequency control signal Df32, between a pulse current switching signal Ip2 of the second welding condition and a base current setting signal Ib1 of the second welding condition. Both signals Pf1 and Pf2 are in putted to the welding power control circuit PS.

In Fig. 96, showing the waveform produced by this circuit, P2 denotes the pulses of the second pulse current group having a second pulse current value IP2, a second pulse duration TP2, a second pulse frequency f3 the same as the first pulse frequency and a second base current IB2.

The examples of Figs. 92 to 95 deal with the case in which values of the second welding condition is larger than those of the first welding condition, that is, IP1<IP2, TP1<TP2,or IB1<IB2. However, the condition M1<M2 permits values in the second welding condition to be lower than those of the first welding condition; that is IB1>IB2, when IP1<IP2, and TP1<TP2. Other characteristics are the same as the those in Fig. 92 and need not be described further.

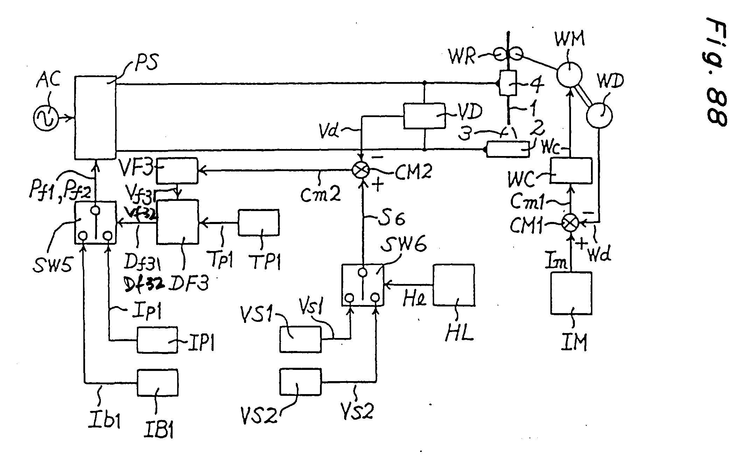

Fig. 88 is a block diagram of a further embodiment of apparatus according to the waveform for producing the welding waveform shown in Fig. 97.

In Fig. 88, those elements already appearing in Fig. 83 are denoted with the same reference characters as in Fig. 83 and will not be further described.

The welding apparatus shown in Fig. 88 has the following functions. The first and second arc voltage value setting circuits VS1 and VS2 set the arc voltage values in the first and second welding conditions, respectively, and output the first and second arc voltage setting signals Vs1 and Vs2, respectively.

An arc voltage switching circuit SW6 outputs an arc voltage switching signal S1 by switching between first and second arc voltage setting signals Vs1 and Vs2 with the switching signal H1. The second comparison circuit CM2 outputs the arc voltage control signal from the difference between the signal S6 and the arc voltage detection signal Vd of the arc voltage detection circuit VD.

A pulse frequency signal generator circuit VF3 outputs a signal switching, with the frequency F of the switching signal H1, between the pulse frequency control signal Vf31 corresponding to first welding condition and the second pulse frequency control signal Vf32 corresponding to the second welding condition in accordance with the arc voltage control signal Cm2. A pulse duration frequency signal generator DF3 outputs the first pulse duration frequency signal Df31 consisting of the first pulse frequency signal Vf31 and the first pulse duration signal Tp1 in accordance with the first welding condition and the pulse duration frequency signal Df32 in accordance with the second welding condition in a similar way to that for the first pulse duration frequency signal Df31. A base pulse current switching circuit SW5 outputs the pulse control signal Pf1 obtained by switching between the pulse current value setting signal Ip1 and the base current setting signal Ibl with the first pulse duration frequency signal Df31 in the first welding condition and the pulse control signal Pf2 obtained by switching between the pulse current value setting signal Ip1 and the base current setting signal Ib1 with the second pulse duration frequency signal Df32 in the second welding condition. Both pulse control signals Pf1 and Pf2 are inputted to the welding power control circuit PS.

In Fig. 97, showing the waveform produced by this circuit, P1 denotes the pulses of the first pulse current group having a first pulse current value IP1, a first pulse duration TP1, a first pulse frequency f3 and a first base current IB1. P2 denotes the pulses of the second pulse current group having a second pulse current value IP1 the same as the first pulse current value, a second pulse duration TP1 the same as the first pulse duration, a second pulse frequency f3 the same as the first pulse frequency and a second base current IB1 the same as the first base current. Other characteristics are the same as those of Fig.92 and need not be described further.

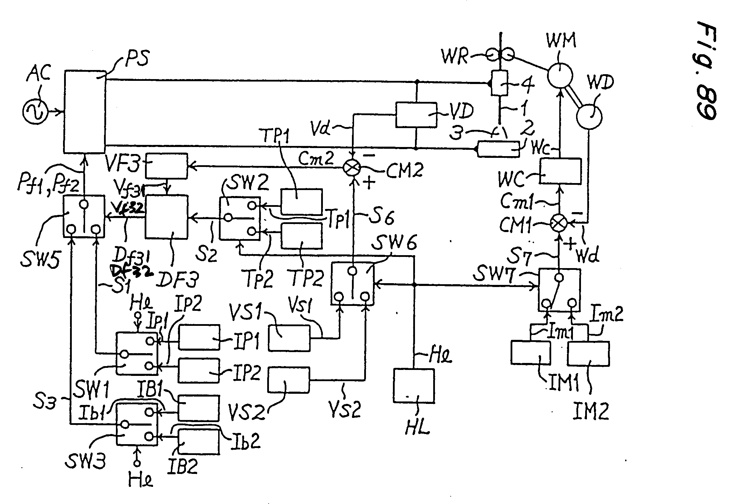

Fig. 89 is a block diagram of another embodiment of apparatus according to the invention for producing the welding waveform shown in Fig. 96.

In Fig. 89, those elements already appearing in Fig. 87 are denoted with the same reference characters as in Fig. 87 and will not be further described.

A first difference from Fig. 87 is that the structure in Fig. 89 comprises first and second arc voltage setting circuits VS1 and VS2 in place of the arc voltage setting circuit VS1 of Fig. 87. These circuits set the average values of arc voltage at the first and second pulse duty times T1 and T2 and output the first and second arc voltage setting signals Vs1 and Vs2. An arc voltage switching circuit SW6 outputs an arc voltage switching signal S6 by switching between first and second arc voltage setting signals Vs1 and Vs2 with the switching signal H1. The second comparison circuit CM2 outputs an arc voltage control signal Cm2 from the difference between the signal S6 and the arc voltage detection signal Vd of the arc voltage detection circuit VD. A pulse frequency signal generator circuit VF3 outputs the pulse frequency control signal Vf3 obtained by switching between first and second pulse frequency control signals Vf31 and Vf32, corresponding to the first and second welding conditions respectively, with the frequency of the switching signal H1 upon receiving the arc voltage control signal Cm2. First and second pulse duration setting circuits TP1 and TP2 output first and second pulse duration signals Tp1 and Tp2. A pulse duration frequency signal generator DF3 outputs the first pulse duration frequency signal Df31 composed from the pulse frequency signal Vf3 and the first pulse duration signal Tp1 in the first welding condition, and the pulse duration frequency signal Df32 composed from the pulse frequency signal Vf3 and the pulse duration signal Tp2 in the second welding condition. First and second pulse current value setting circuits IP1 and IP2 output first and second pulse current value setting signals Ip1 and Ip2. First and second base current setting circuits IB1 and IB2 output first and second base current setting signals Ib1 and Ib2.

A base pulse current switching circuit SW5 outputs a first pulse control signal Pf1 obtained by switching between the pulse current value setting signal Ip1 of the signal S1 and the base current setting signal Ib1 of the signal S3 with the first pulse duration frequency signal Df31, and a second pulse control signal Pf2 obtained by switching between the second pulse current value setting signal lp2 of the second signal S2 and the base current setting signal lb2 of the signal S3 with the second pulse duration frequency signal Df32. Both signals Pf1 and Pf2 are inputted to the welding power control circuit PS.

The welding apparatus shown in Fig. 89 also comprises a wire feeding rate switching circuit SW7 for a wire feeding rate switching signal S7 by switching between the first welding current setting signal Im1 sent from the first welding current setting circuit IM1 and the second welding current setting signal Im2 sent from the second welding current setting circuit IM2.

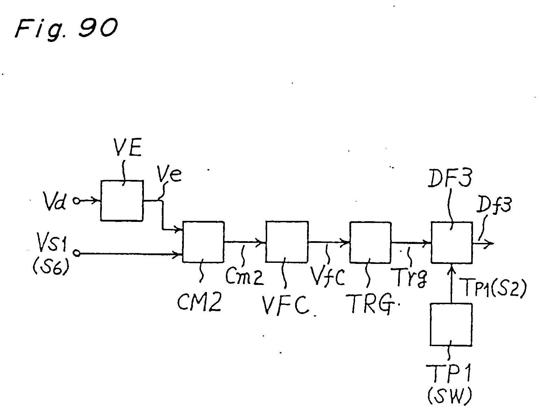

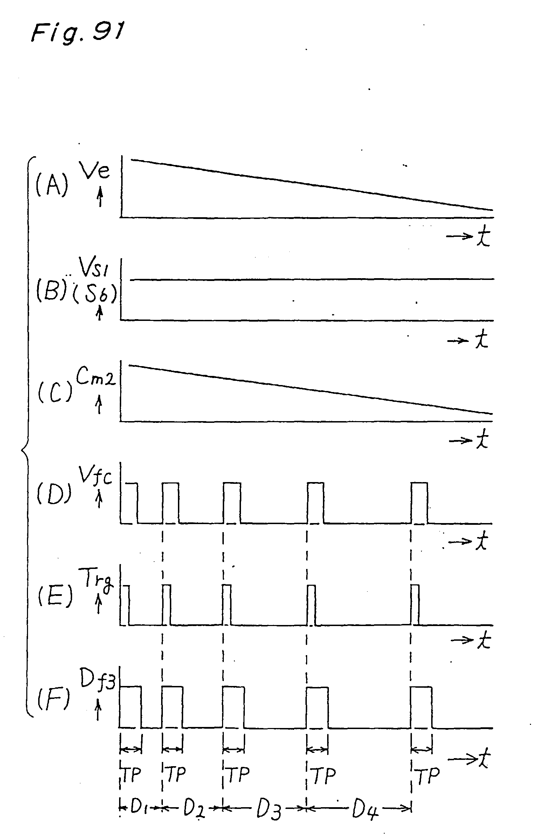

Fig. 90 is a block diagram showing in more detail a part of some of the circuits already described in Figs. 83 to 89, from the input of the arc voltage detection signal Vd to the output of the pulse duration frequency control signal here indicated as Df3. Fig. 91 is a graph showing against a time base the course of the input and output signals at the various stages of the circuit shown in Fig. 90. In Fig. 90, VE denotes a smoothing circuit for outputting a smoothed signal Ve shown in Fig. 91 (A) upon receiving the arc voltage detection signal Vd. CM2 denotes the second comparison circuit for outputting the arc voltage control signal Cm2 shown in Fig. 91 (C) upon receiving the flat signal Ve and the arc voltage setting signal Vs1 shown in Fig. 91 (B) or the arc voltage switching signal S6. VFC denotes a Vf convertor for outputting the pulse frequency signal Vfc shown in Fig 91 (D) having a frequency corresponding to the arc voltage control signal Cm2. TRG denotes a trigger circuit for outputting a trigger signal Trg in a given pulse duration shown in Fig. 91 (E) in synchronism with the pulse frequency signal Vfc. TP1 or SW2 is the pulse duration setting circuit for outputting the pulse duration setting signal Tp1 or S2, respectively. DF3 denotes the pulse duration frequency control circuit comprising a mono-multi vibrator circuit for outputting the pulse duration frequency control signal Df3 shown in Fig. 91 (F) upon receiving the trigger signal and the pulse duration setting signal Tp1 or S2.

There will next be described cases where the arc voltage is controlled by the pulse duration.

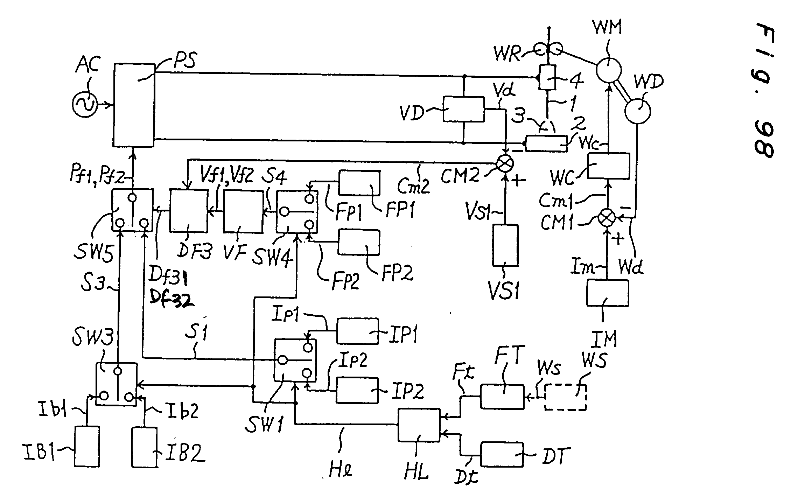

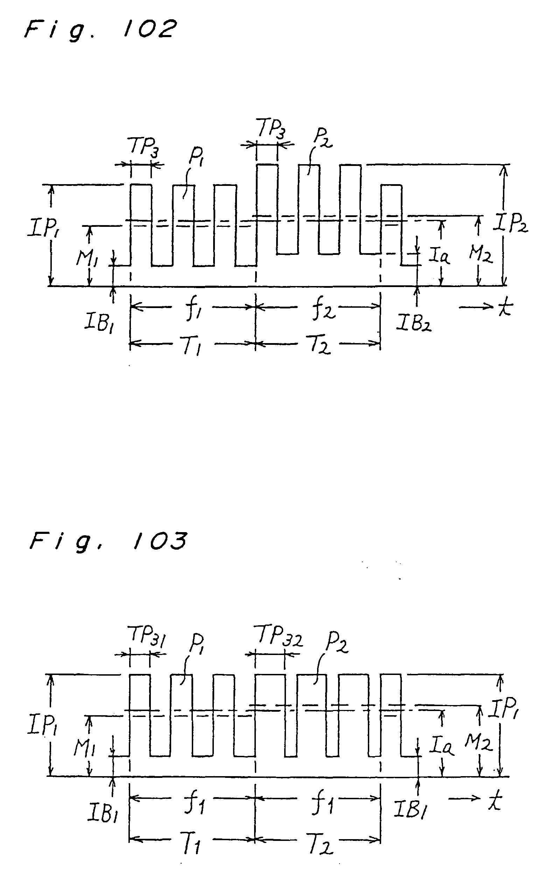

Fig. 98 is a block diagram of a first of these examples of the use of pulse duration control and it produces the welding waveform shown in Fig. 102,

In Fig. 98, those elements already appearing in Fig. 87 are denoted with the same reference characters as in Fig. 87 and will not be further described,

First and second pulse current setting circuits IP1 and IP2 output first and second pulse current setting signals lp1 and lp2. The pulse current switching circuit SW1 outputs a pulse current value switching signal S1 by switching between first and second pulse current value setting signals lp1 and lp2 with the switching signal H1. First and second pulse frequency setting circuits FP1 and FP2 set first and second pulse frequencies f1 and f2, respectively, and output first and second pulse frequency setting signals Fp1 and Fp2, respectively. A pulse frequency switching circuit SW4 outputs a pulse frequency switching signal S4 obtained by switching the first and second pulse frequency setting signals Fp1 and Fp2. A pulse frequency signal generator circuit VF outputs first and second pulse frequency signals Vf1 and Vf2 upon receiving the pulse frequency switching signal S4. The pulse duration frequency signal generator DF3 outputs the first pulse duration frequency signal Df31 consisting of the first pulse frequency signal Vf1 and the pulse duration signal Tp2 corresponding to the arc voltage control signal Cm2, and the second pulse duration frequency signal Df32 consisting of the second pulse frequency signal Vf2 and the pulse duration signal Tp2. The base pulse current switching circuit SW5 outputs the first and second pulse control signals Pf1 and Pf2. The first pulse control signal is obtained by switching between a signal energizing the first pulse current setting signal lp1 at a period corresponding to the pulse duration determined by the pulse duration control signal formed into the first pulse duration frequency control signal Df31 and the base current setting signal lb1 with the first pulse duration frequency control signal Df31. The second pulse control signal Pf2 is obtained by switching between a signal energizing the second pulse current setting signal lp2 at a period corresponding to the pulse duration determined by the pulse duration control signal formed into the second pulse duration frequency control signal Df32 and the base current setting signal lb2 with the second pulse duration frequency signal Df32. Both pulse control signals Pf1 and Pf2 are inputted to the welding power control circuit PS.

In Fig. 102, P1 denotes pulses of a first pulse current group having a first pulse current value IP1, a first pulse duration TP3, a first pulse frequency f1 and a first base current IB1. P2 denotes pulses of a second pulse current group having a second pulse current value IP2, a second pulse duration TP3, a second pulse frequency f2 and a second base current IB2. M1 and M2 denote the average value of the welding current in the first and second pulse current duty times T1 and T2 respectively. la denotes the average value of the welding current.

Fig. 102 is directed to a case when the values of the second welding condition are larger than those of the first welding condition, that is, IP1<IP2, FP1<FP2,or IB1<IB2. However, the condition M1<M2 permits values of the second welding condition lower than those of the first welding condition; that is IB1>IB2, when IP1<IP2, and FP1<FP2.

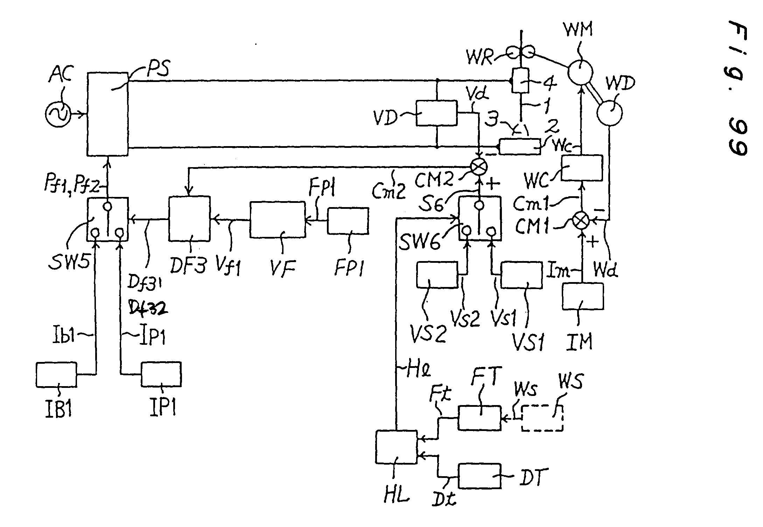

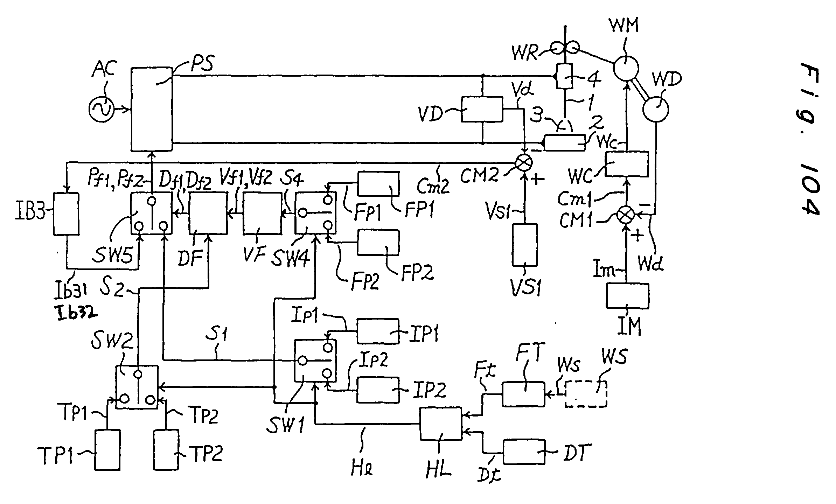

Fig. 99 is a block diagram of a second example of the use of pulse duration control and it produces the welding waveform shown in Fig. 103.

In Fig. 99, those elements already appearing in Fig. 98 are denoted with the same reference characters as in Fig. 87 and will not be further described.

First and second arc voltage setting circuits VS1 and VS2 set average values for first and second pulse duty times T1 and T2, respectively, and output first and second arc voltage setting signals Vs1 and Vs2, respectively. An arc voltage switching circuit SW6 outputs an arc voltage switching signal S6 by switching between first and second arc voltage setting signals Vs1 and Vs2 with the switching signal H1. The second comparison circuit CM2 outputs the arc voltage control signal Cm2 from the difference between the signal S6 and the arc voltage detection signal Vd of the arc voltage detection circuit Vd. The pulse frequency setting circuit FP1 outputs the pulse frequency setting signal Fp1 corresponding to the pulse duration (D1 = D2).

The pulse frequency signal generator circuit VF outputs the first pulse frequency signal Vf1 upon receiving the pulse frequency setting signal Fp1. A pulse duration frequency signal generator DF3 is switched in response to the switching between the arc voltage setting signals Vs1 and Vs2. Thus, the signal generator DF3 outputs the first pulse duration frequency signal Df31 formed from the pulse frequency signal Vf1 and the first arc voltage control signal Cm2 for controlling the pulse duration in accordance with the first arc voltage setting signal Vs1, and the pulse duration frequency signal Df32 formed from the pulse frequency signal Vf1 and the second arc voltage control signal Cm2 for controlling the pulse duration in accordance with the second arc voltage setting signal Vs2. The base pulse current switching circuit SW5 outputs the pulse control signal Pf1 and Pf2. The first pulse control signal Pf1 is obtained by switching, with the first pulse duration frequency control signal Df31, between a signal energizing the pulse current value setting signal Ip1 at the period corresponding to the pulse duration determined by the pulse duration controlling signal formed into a first pulse duration frequency control signal Df31. The pulse control signal Pf2 is obtained by switching, with the second pulse duration frequency control signal Df32, between a signal energizing the pulse current value setting signal Ip2 at the period corresponding to the pulse duration determined by the pulse duration controlling signal formed into a second pulse duration frequency control signal Df32. Both pulse control signals Pf1 and Pf2 are inputted into the welding power control circuit PS.

In Fig. 103, P1 denotes pulses of a first pulse current group having a first pulse current value IP1, a first pulse duration TP31, a first pulse frequency f1 and a first base current IB1. P2 denote pulses of a second pulse current group having a second pulse current value IP1 the same as the first pulse current value, a second pulse duration TP32, a second pulse frequency f1 the same as the first pulse frequency and a second base current IB1 the same as the first base current.

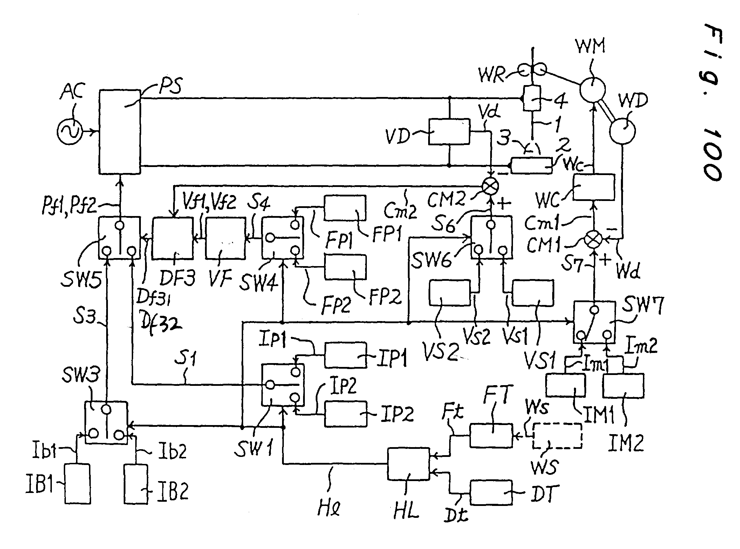

Fig. 100 is a block diagram of a third example of the use of pulse duration control and it produces the welding waveform shown in Fig. 102.

In Fig. 100, those elements already appearing in Fig. 98 are denoted with the same reference characters as in Fig. 98 and will not be further described.

In Fig. 100, a first point of difference from the apparatus of Fig. 98 is that the apparatus in Fig. 100 comprises first and second arc voltage setting circuits VS1 and VS2 in place of the single arc voltage setting circuit VS1 of Fig. 98. These circuits set the average values of arc voltage in the first and second pulse duty times T1 and T2 and output first and second arc voltage setting signals Vs1 and Vs2. An arc voltage switching circuit SW6 outputs an arc voltage switching signal S6 by switching between the first and second arc voltage setting signals Vs1 and Vs2 with the switching signal H1. For controlling the pulse duration, the second comparison circuit CM2 outputs an arc voltage control signal Cm2 from the difference between the signal S6 and the arc voltage detection signal Vd of the arc voltage detection circuit VD. The pulse frequency signal generator circuit VF outputs the first and second pulse frequency signals Vf1 and Vf2 with the switching frequency of the signal H1 upon receiving the pulse frequency switching signals S4. The pulse duration frequency signal generator DF3 outputs the first pulse duration frequency signal Df31 corresponding to the first pulse duration control signal and the first pulse frequency setting signal Fp1, and the second pulse duration frequency signal Df32 corresponding to the second pulse duration control signal and the second pulse frequency setting signal Fp2. A base pulse current switching circuit SW5 outputs the pulse control signal Pf1 and Pf2. The first pulse control signal Pf1 is obtained by switching between the pulse current value setting signal Ip1 of the signal S1 and the base current setting signal Ib1 of the signal S3 with the first pulse duration frequency signal Df31. The second pulse control signal Pf2 is obtained by switching between the second pulse current value setting signal Ip2 of the second signal S2 and the base current setting signal Ib21 of the signal S3 with the second pulse duration frequency signal Df32. Both signals Pf1 and Pf2 are inputted to the welding power control circuit PS.

A second point of difference between the apparatus of Figs. 100 and 98 is that the apparatus of Fig. 100 comprises, in place of the average current value setting circuit IM in Fig. 98, first and second welding current setting circuits IM1 and IM2 for outputting first and second welding current setting signals Im1 and Im2, and also a wire feed rate switching circuit SW7 for sending the first comparison circuit CM1 a wire feed rate switching signal S7 obtained by switching between the first and second welding current setting signals Im1 and Im2 with the switching signal H1.

These additional circuits can achieve the following effects. The average values of welding current M1 and M2 in the first and second pulse duty times T1 and T2 respectively, can be obtained by switching the wire feed rate between the first and second welding current setting circuits Im1 and Im2. The effect achieved by switching the arc length can be increased by changing periodically the average values M1 and M2 within a range to maintain the spray transfer mode in each of the pulse duty times T1 and T2. In particular when the gap at the joint becomes larger, an increase in the welding current due to the increase in the wire feed rate results in an increase in the amount of molten metal. Thus, the enlarged gap can be filled with the increased amount of molten metal to give a bead of good appearance. On the other hand, when the joint gap becomes smaller, a decrease in the welding current can decrease the amount of the molten metal. The smaller gap can still be filled with the decreased amount of molten metal amount and the resultant bead has a good appearance.

The examples described with reference to Figs. 98 and 100 are directed to a welding apparatus comprising the second pulse current setting circuit IP2, the second pulse frequency setting circuit FP2 and the second base current setting circuit IB2, each such pairing of circuits being within the scope of the invention.

Further, the welding apparatus shown in Fig. 100 comprises the wire feed rate switching circuit SW7 for outputting the wire feed rate switching signal S7 obtained by switching the first welding current setting signal Im1 generated from the first welding current setting circuit IM1 and the second welding current setting signal Im2 generated from the second welding current setting circuit IM2. This is an optional feature.

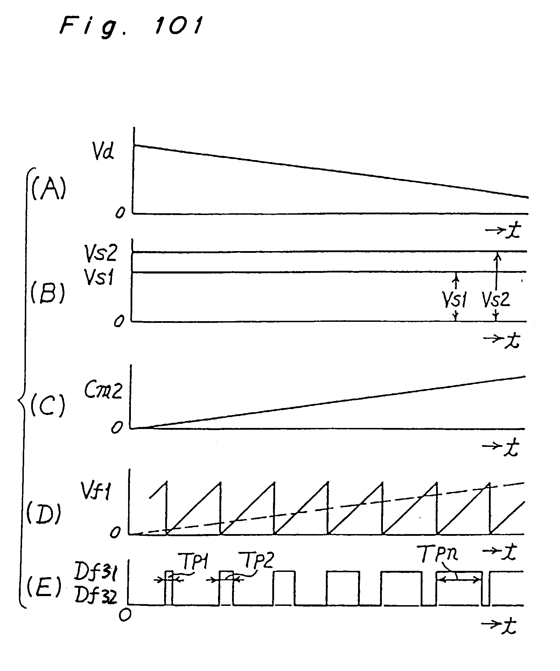

Figs 101 (A) to (E) are graphs showing on a time base the waveform of the pulse duration control signals shown in the block diagrams in Figs. 98 to 100. Fig. 101 (A) shows a case when the arc voltage detection signal Vd decreases gradually with time. Fig. 101 (B) shows the first and the second arc voltage setting signals Vs1 and Vs2. Fig. 101(C) shows the arc voltage control signal Cm2 which increases gradually with time in accordance with the arc voltage detection signal Vd shown in Fig. 101 (A). Fig. 101 (D) shows the pulse frequency signal Vf1. Fig. 101 (E) shows the pulse duration frequency control signal Df31 or Df32 generated from the pulse duration frequency control signal generator DF3. It is seen that the pulse duration frequency signal decreases gradually in the pulse duration (TP1 to TPn) in accordance with the increase in the arc voltage control signal Cm2.

There will now be described examples in which the arc voltage is controlled with the base current value. A pulse base current control circuit for outputting the pulse base current control signal comprises a base current control circuit IB3 for outputting the base current control signal Ib3 upon receiving the arc voltage control signal Cm2. A first pulse base current setting circuit for outputting the first pulse base current setting signal comprises a pulse current value setting circuit IP1 for setting the pulse current value setting signal Ip1, a pulse duration setting circuit TP1 for setting a pulse duration setting signal Tp1 and a pulse frequency setting circuit FP1 for setting a pulse frequency setting signal Fp1.

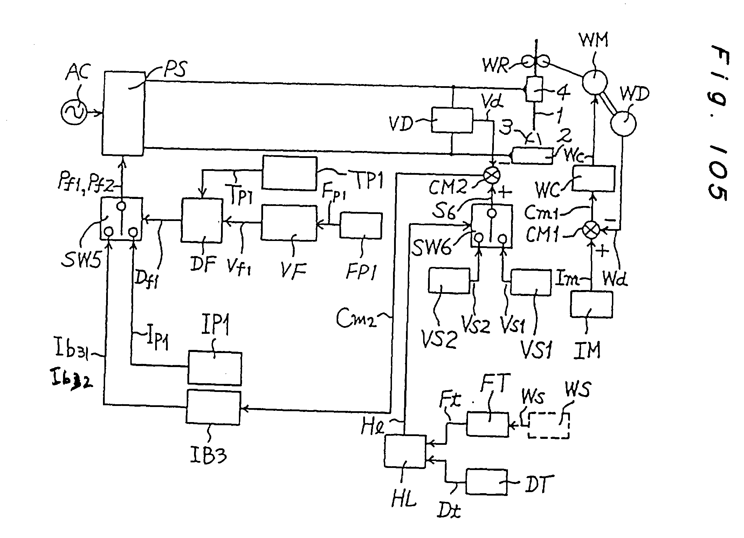

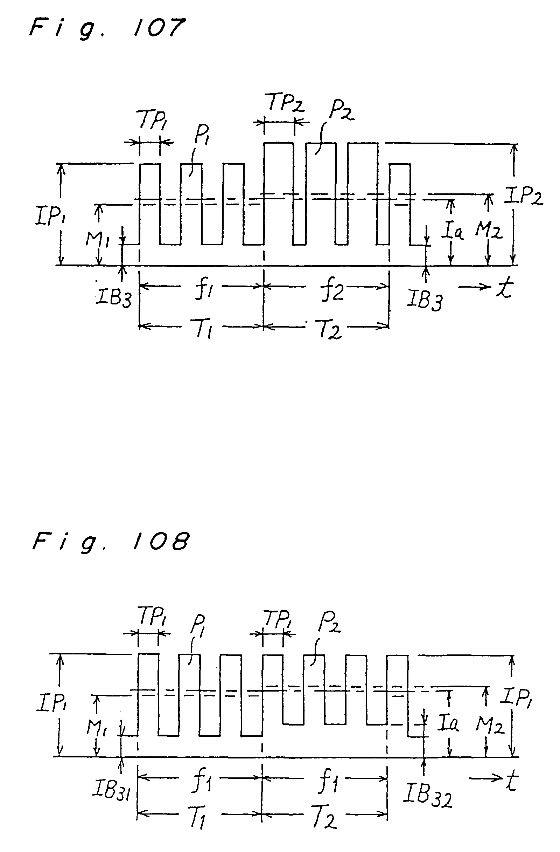

Fig. 104 is a block diagram of a first of these examples and it generates the wave form shown in Fig. 107.

In Fig. 104, those elements already appearing in Fig. 83 are denoted with the same reference characters as in Fig. 83 and will not be further described.

The apparatus comprises a base current controlling circuit IB3 and switching signal generator H1 for outputting the switching signal H1 obtained by switching between the first and second pulse duty times T1 and T2. In the first pulse duty time T1, the switching signal H1 actuates the first pulse current group determined by the pulse current value and pulse duration and the first base current value controlled by the pulse period and the first arc voltage control signal Cm2 with a smaller arc length. In the second pulse duty time T2, the switching signal H1 actuates the second pulse current group determined by the pulse current value and pulse duration and the second base current value controlled by the pulse period and the second arc voltage control signal Cm2 with a longer arc length. Further, the various setting values of the first and second pulse current groups are set to change the arc length in the first and second pulse duty times T1 and T2 in the following manner. The first base current value Ib31 of the first pulse duty time T1 is set as a value to give a plurality of pulses to one molten metal drop transfer mode for the shorter arc length. On the other hand, the second base current value Ib32 is changed within the range to give the one pulse to one molten metal drop transfer or one pulse to a plurality of molten metal drops transfer mode at the longer arc length.

The first and second pulse current value setting circuits IP1 and IP2 set the first and second pulse current values, and output the first and second pulse current value setting signals Ip1 and Ip2, respectively. A pulse current value switching circuit SW1 outputs the pulse current value switching signal S1 obtained by switching between the signal Ip1 and the signal IP2 with the switching signal H1.

The first and second pulse duration setting circuits TP1 and TP2 set the first and second pulse durations, and output the first and second pulse duration setting signals Tp1 Tp2, respectively. A pulse duration switching circuit SW2 outputs the pulse duration switching signal S2 obtained by switching between the signals Tp1 and TP2 with the switching signal H1.

The first and second pulse frequency setting circuits FP1 and FP2 set the first and second pulse frequencies, and output the first and second pulse frequency setting signals Fp1 and Fp2, respectively. A pulse frequency switching circuit SW4 outputs the pulse frequency switching signal S4 obtained by switching between the signals Fp1 and FP2 with the switching signal H1.

A pulse frequency signal generator circuit VF outputs the first and second pulse frequency signals Vf1 and Vf2 upon receiving the pulse frequency switching signal S4. A pulse duration frequency signal generator DF outputs the first pulse duration frequency signal Df1 corresponding to the first pulse frequency signal Vf1 and the first pulse duration signal Tp1, and the second pulse duration frequency signal Df2 corresponding to the second pulse frequency signal Vf2 and the second pulse duration signal Tp2. A base pulse current switching circuit SW5 first outputs a pulse control signal Pf1 obtained by switching, with the first pulse duration frequency signal Df1, between the first base current control signal Ib31 and a signal for energizing the first pulse current value setting signal Ip1 at the period corresponding to the pulse duration determined by the pulse duration setting signal Tp1 which is formed into the first pulse duration frequency signal Df1 at the first pulse time T1. Next, the base pulse current switching circuit SW5 outputs a pulse control signal Pf2 obtained by switching, with the second pulse duration frequency signal Df2, between the second base current control signal Ib32 and a signal for energizing the second pulse current value setting signal Ip2 at the period corresponding to the pulse duration determined by the second pulse duration setting signal Tp2 which is formed into the second pulse duration frequency signal Df2 at the second pulse time T2. Both pulse control signals Pf1 and Pf2 are outputted to the welding power control circuit PS.

The welding apparatus in this embodiment comprises at least one setting circuit from the group of the second current value setting circuit IP2 and the second pulse frequency setting circuit FP2 and the second pulse duration setting circuit TP2, in addition to the first pulse current value setting circuit Ip1,the first pulse frequency setting circuit FP1 and the first pulse duration setting circuit TP1. The switching signal H1 of the switching signal generator HL switches the first and second pulse duty times T1 and T2 and actuates the first pulse current group determined by the controlled first base current value IB31, the first pulse current value IP1, the first pulse duration TP1 and the first pulse period D1 in the first pulse duty time T1. In the second pulse duty time T2, the switching signal H1 actuates the second pulse current group determined by the controlled second base current value IB32, the second pulse current value IP2, the second pulse duration TP2 and the second pulse period D2.

In Fig. 107, P1 denote pulses of first pulse current group having a first pulse current value IP1, a first pulse duration TP1, a first pulse frequency f1 and a first base current IB3. P2 denotes pulses of a second pulse current group consisting of a second pulse current value IP2, a second pulse duration TP2, a second pulse frequency f2 and a second base current IB3.

M1 and M2 denote the average value of the welding current in the first and second pulse current duty times T1 and T2, respectively. Ia denotes an average value of a welding current.

Fig. 107 indicates a case in which the values of the second welding condition are larger than those of the first welding condition, that is, IP1<IP2, FP1<FP2, or TP1<TP2. However, a relationship M1<M2 permits values of the second welding condition lower than those of the first welding condition; that is FP1>FP2, when IP1<IP2, and TP1<TP2.

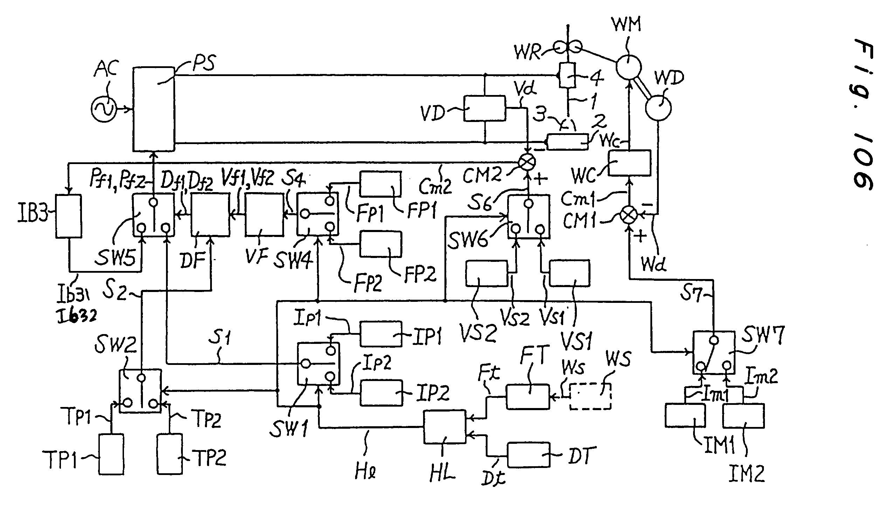

Fig. 105 is a block diagram of a second of this group of examples and generates the wave form shown in Fig. 108.

In Fig. 105, those elements already appearing in Fig. 104 are denoted with the same reference characters as in Fig. 104 and will not be further described.

In Fig. 105, the first and second arc voltage setting circuits VS1 and VS2 set the average value of arc voltage in the first and second pulse duty times T1 and T2, respectively, and output the first and second arc voltage setting signals Vs1 and Vs2, respectively. An arc voltage switching circuit SW6 outputs the arc voltage switching signal S6 by switching between the signals Vs1 and Vs2 with the switching signal H1. The second comparison circuit CM2 outputs the arc voltage control signal Cm2 from the difference between the signal S6 and the arc voltage detection signal Vd of the arc voltage detection circuit VD. A base current control circuit IB3 outputs first and second base current control signals Ib31 and Ib32 corresponding to the first and second base current values in response to the switching of Vs1 and Vs2 by receiving the first and second arc voltage control signals Cm2 for the first and second pulse duty times T1 and T2.

A pulse current value setting circuit IP1 for setting the pulse current value outputs the pulse current setting signal Ip1. A pulse frequency setting circuit FP1 outputs the pulse frequency setting signal Fp1 corresponding to the pulse period (D1 = D2) . The pulse duration setting circuit TP1 for setting the pulse duration outputs the pulse duration setting signal Tp1. The pulse frequency signal generator VF outputs the pulse frequency signal Vf1 upon receiving the pulse frequency setting signal Fp1. The pulse duration frequency signal generator DF outputs the pulse duration frequency signal Df1 consisting of the pulse duration setting signal Tp1 and the pulse frequency setting signal Vf1. Next, the base pulse current switching circuit SW5 outputs pulse control signals Pf1 and Pf2. The pulse control signal Pf1 is obtained by switching, with the pulse duration frequency signal Df1, between the first base current control signal Ib31 and a signal for energizing the pulse current value setting signal Ip1 at the period corresponding to the pulse duration determined by the pulse duration setting signal Tp1 which is formed into the pulse duration frequency signal Df1 for the first pulse time T2. The second pulse control signal Pf2 is obtained by switching, with the pulse duration frequency signal Df1, between the second base current control signal Ib32 and a signal for energizing the pulse current value setting signal Ip1 at the period corresponding to the pulse duration determined by the pulse duration setting signal Tp1 which is formed into the second pulse duration frequency signal Df1 for the second pulse time T2 also. Both pulse control signals Pf1 and Pf2 are inputted to the welding current power control circuit PS.

The welding apparatus of Fig. 105 sends the wire feed motor WM the average current setting signal Im set by the average current setting circuit IM. The pulse current groups are set or controlled so as to have the average current

value la corresponding to the wire feeding rate and the arc voltage setting value. The welding apparatus does not switch the average value of the welding current by switching the wire feed rate in a different way from conventional welding apparatus and is not affected by the response delay to the wire feed motor WM. The welding apparatus comprises the base current control circuit IB3 and a switching signal generator HL for outputting the switching signal H1 obtained by switching between the first and second pulse duty times T1 and T2. In the first pulse duty time T1, the switching signal H1 actuates the first pulse current group determined by the first base current value which is controlled by the first arc voltage control signal Cm2 at the predetermined pulse current value, pulse duration, pulse period and the shorter arc length. In the second pulse duty time T2, the switching signal H1 actuates the second pulse current group determined by the second base current value which is controlled by the second arc voltage control signal Cm2 at the predetermined pulse current value, pulse duration, pulse period and the longer arc length. Further, the various setting values at the first and second pulse current groups are chosen to give the plurality of pulses to one molten metal drop transfer mode or one pulse to one molten metal drop transfer mode of a shorter arc length in the first pulse duty time T1. In the second pulse duty time T2, these values are changed within the range to give the one pulse to one molten metal drop transfer mode or the one pulse to plurality of molten metal drops transfer mode at a longer arc length. In such a way, the welding apparatus changes the arc length between the first and second pulse duty times T1 and T2.

In Fig. 108, denotes pulses of a first pulse current group having a first pulse current value IP1, a first pulse duration TP1, a first pulse frequency f1 and a first base current IB31. P2 denotes pulses of a second pulse current group having a second pulse current value IP1 the same as the first pulse current, a second pulse duration TP1 the same as the first pulse duration, a second pulse frequency f1 the same as the first pulse frequency and a second base current IB32.

M1 and M2 denote the average value of the welding current in the first and second pulse current duty times T1 and T2, respectively. la denotes an average value of a welding current.

Fig. 106 is a block diagram of a third of this group of examples and generates the wave form shown in Fig. 107.

In Fig. 106, those elements already appearing in Fig. 104 are denoted with the same reference characters as in Fig. 104 and will not be further described.

In Fig. 106, a first difference from Fig. 104 is that the first and second arc voltage setting circuits VS1 and VS2 set the average value of arc voltage in the first and second pulse duty times T1 and T2, respectively and output the first and second arc voltage setting signals Vs1 and Vs2 in palce of the first arc voltage setting circuit VS1 shown in Fig. 104. The arc voltage switching circuit SW6 outputs the arc voltage switching signal S6 by switching between the signals Vs1 and Vs2 with the switching signal H1. The second comparison circuit CM2 outputs the arc voltage control signal Cm2 from the difference between the signal S6 and the arc voltage detection signal Vd of the arc voltage detection circuit VD. The arc voltage control signal thus changes in dependence upon the switching of Vs1 and Vs2 for the first and second pulse duty times T1 and T2. The base current control circuit IB3 outputs the first and second base current control signals Ib31 and Ib32 corresponding to the first base current value IB31 and the second base current value IB32 upon receiving the first arc voltage control signal Cm2 in the first pulse duty time T1 and the second arc voltage control signal Cm2 in the second arc duty time T2, respectively.

A second difference between Figs. 106 and 104 is that in place of the average current value setting circuit IM, the welding apparatus shown in Fig. 106 comprises the first and second welding current setting circuits IM1 and IM2 for outputting the first and second welding current setting signals Im1 and Im2, respectively, and the wire feed rate switching circuit SW7 for sending the first comparison circuit CM1 the wire feed rate switching signal S7 obtained by switching between the first and second welding current setting signals Im1 and Im2 with the switching signal H1.

The description with reference to Figs. 104 and 106 is directed to the welding apparatus comprising the second pulse current setting circuit IP2 and the second pulse duration setting circuit TP2 and the second pulse frequency setting circuit FP2.

Further, the welding apparatus shown in Fig. 106 comprises the wire feeding rate switching circuit SW7 for outputting the wire feeding rate switching signal S7 obtained by switching between the first welding current setting signal Im1 generated from the first welding current setting circuit Im1 and the second welding current setting signal Im2 generated from the second welding current setting circuit IM2.

Further embodiments of the invention will now be described in which the arc voltage is controlled with the base current value. A pulse base current control circuit for outputting a pulse base current control signal comprises a circuit outputting the pulse current control signal upon receiving an arc voltage control signal.

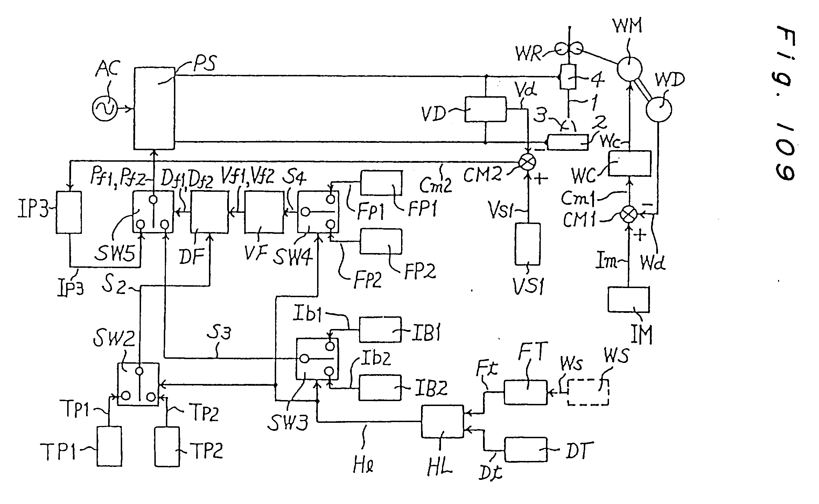

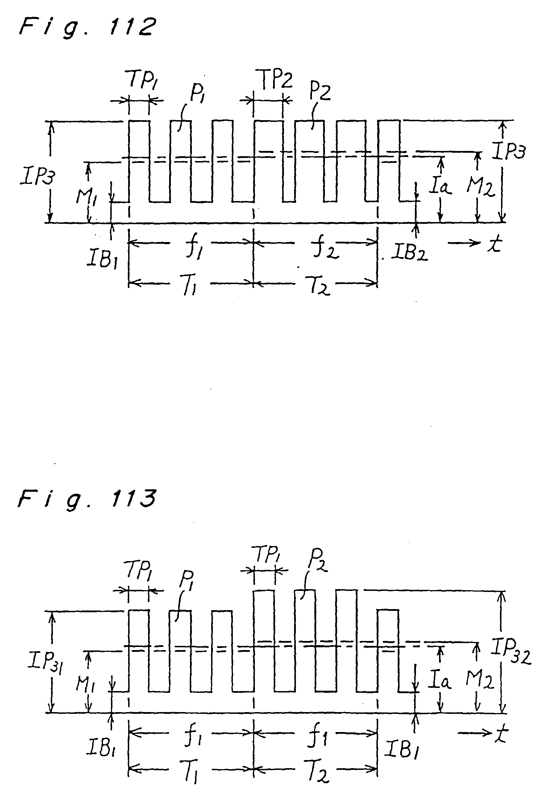

Fig. 109 is a block diagram of a first of three examples in this further group of embodiments, this example generating the wave form shown in Fig. 112.

In Fig. 109, those elements already appearing in Fig. 83 are denoted by the same reference characters as in Fig. 83 and are will not be further described.

First and second pulse duration setting circuits TP1 and TP2 output the first and second pulse duration setting signals Tp1 and Tp2, respectively. A pulse duration switching circuit SW2 outputs a pulse duration switching signal S2 by switching between the first and second pulse duration setting signals Tp1 and Tp2 with a switching signal H1.

First and second pulse frequency setting circuits FP1 and and FP2 set first and second pulse frequency setting signals Fp1 and Fp2, respectively. A pulse frequency switching circuit SW4 outputs the pulse frequency switching signal S4 obtained by switching between the pulse frequency setting signals Fp1 and Fp2.

First and second base current value setting circuits IB1 and IB2 output first and second base current value setting signals Ib1 and Ib2, respectively. A base current value switching circuit SW3 outputs the base current value switching signal S3 obtained by switching between the base current value setting signals Ib1 and Ib2.

A pulse frequency signal generator circuit VF outputs first and second pulse frequency signals Vf1 and Vf2 upon receiving the pulse frequency switching signal S4. A pulse duration frequency signal generator DF outputs the first pulse duration frequency signal Df1 composed from the first pulse frequency signal Vf1 and the first pulse duration signal Tp1, and the second pulse duration frequency signal Df2 composed from the second frequency signal Vf2 and the second pulse duration signal Tp2. A base pulse current switching circuit SW5 outputs alternately pulse control signals Pf1 and Pf2. The first pulse control signal Pf1 is obtained by switching, with the first pulse duration frequency signal Df1, between the signal for energizing the pulse current control signal Ip3 and the first base current value setting signal Ib1 at the period corresponding to the pulse duration determined by the first pulse duration setting signal Tp1 which is formed into the first pulse duration frequency signal Df1 for the first pulse time T1. The second pulse control signal Pf2 is obtained by switching, with the second pulse duration frequency signal Df2, between the signal for energizing the pulse current control signal Ip3 and the second base current value setting signal Ib2 at the period corresponding to the pulse duration determined by the second pulse duration setting signal Tp2 which is formed into the second pulse duration frequency signal Df2 for the second pulse time T2. Both pulse control signals Pf1 and Pf2 are outputted to the welding power control circuit.

The welding apparatus in this form of the invention comprises at least one of the second pulse duration setting circuit TP2, the second pulse frequency setting circuit FP2 and the second base current setting circuit IB2 in addition to the first pulse duration setting circuit TP1, the first pulse frequency setting circuit Fp1 and the first base current setting circuit IB1. The switching signal generator HL outputs a switching signal H1 by switching between the first and second pulse duty times T1 and T2. The switching signal actuates the first pulse current group determined by the first pulse current value IP31, the first pulse duration Tp1 and the first base current value IB1 over the first pulse duty time T1. Over the second pulse duty time T2, the switching signal H1 actuates the second pulse current group determined by the second pulse current value IP32, the second pulse duration Tp2 the second frequency f2 and the second base current value IB2. The first pulse current P1 in the first pulse duration time T1 is set to a value giving the plurality of pulses to one molten metal drop transfer mode or the one pulse to one molten metal drop transfer mode. The second pulse current P2 in the second pulse duty time T2 changes one or more of the pulse duration, the pulse frequency and the base current values from those of the first pulse current to be set a condition giving the one pulse to one molten metal drop transfer mode or the one pulse to plurality of molten metal drops transfer mode. Accordingly, the apparatus can change the arc length in the first and second pulse duty times T1 and T2.

The welding apparatus sends the wire feed motor WA the average current setting signal Im set by the average current setting circuit IM. The pulse current groups are set and controlled so as to be the average current value Ia corresponding to the wire feed rate and the arc voltage setting value. The welding apparatus does not switch the average value of the welding current by switching the wire feed rate in a different way from conventional welding apparatus and is not affected by the response delay to the wire feeding motor WM. The welding apparatus comprises the pulse current control circuit IP3 and the switching signal generator HL for outputting the switching signal H1 obtained by switching between the first pulse duty time T1 and the second pulse duty time T2. In the first pulse duty time T1, the switching signal H1 causes energization of the first pulse current group determined by the first base current value which is controlled by the first arc voltage control signal Cm2 at the predetermined pulse current value, pulse duration, pulse period and the short arc length. In the second pulse duty time T2, the switching signal H1 causes energization of the second pulse current group determined by the second base current value which is controlled by the second arc voltage control signal Cm2 at the predetermined pulse current value, pulse duration, pulse period and the longer arc length. Further, the various setting values at the first and second pulse current groups are set to form the plurality of pulses to one molten metal drop transfer mode or one pulse to one molten metal drop transfer mode of a short arc length in the first pulse duty time T1. In the second pulse duty time T2, these values are changed within the range to form the one pulse to one molten metal drop transfer mode or the one pulse to plurality of molten metal drops transfer mode with a longer arc length. In such a way, the welding apparatus is capable of changing the arc length between the first and second pulse duty times T1 and T2.

In Fig. 112, P1 denotes pulses of a first pulse current group having a first pulse current value IP3, a first pulse duration TP1, a first pulse frequency f1 and a first base current IB1. P2 denotes pulses of a second pulse current group having a second pulse current value IP3, a second pulse duration TP2, a second pulse frequency f2 and a second base current IB2.

M1 and M2 denote the average value of the welding current in the first and second pulse current duty times T1 and T2, respectively. Ia denotes an average value of a welding current.

Fig. 112 indicates a case in which the values of the second welding condition are larger than those of the first welding condition, that is, TP1<TP2, FP1<FP2,or IB1<IB2. However, a relationship M1<M2 permits values of the second welding condition lower than those of the first welding condition; that is IB1>IB2, when TP1<TP2, and FP1<FP2.

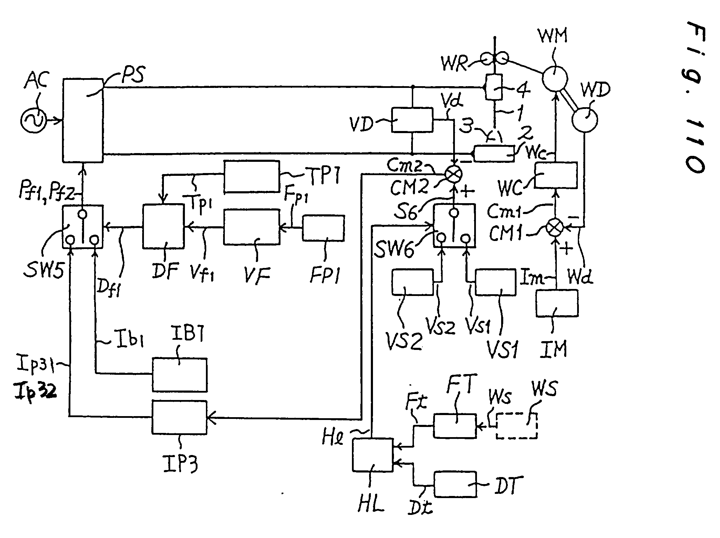

Fig. 110 is a block diagram of the second of this further group of embodiments, this example generating the wave form shown in Fig. 113.

In Fig. 110, elements the same as those appearing in Fig. 109 are denoted by the same reference characters as in Fig. 109 and will not be further described.

In Fig. 110, first and second arc voltage setting circuits VS1 and VS2 set the average value of arc voltage in the first and second pulse duty times T1 and T2, respectively, and output the first and second arc voltage setting signals Vs1 and Vs2, respectively. An arc voltage switching circuit SW6 outputs the arc voltage switching signal S6 by switching between the signals Vs1 and Vs2 with the switching signal H1. The second comparison circuit CM2 outputs the arc voltage control signal Cm2 from the difference between the signal S6 and the arc voltage detection signal Vd of the arc voltage detection circuit VD. The pulse current control circuit IP3 outputs the first and second pulse current control signals Ip31 and Ip32 corresponding to the first and second pulse current values IP31 and IP32 upon receiving the first and second arc voltage control signals Cm2 in the first and second pulse duty times T1 and T2, respectively, in response to the switching of Vs1 and Vs2.

A pulse frequency setting circuit FP1 outputs the pulse frequency setting signal Fp1 corresponding to the pulse period (D1 = D2) . The pulse duration setting circuit TP1 outputs the pulse duration setting signal Tp1. The base current setting circuit IB1 outputs the base current setting signal Ib1. The pulse frequency signal generator VF outputs the pulse frequency signal Vf1 upon receiving the pulse frequency setting signal Fp1. The pulse duration frequency signal generator DF outputs the pulse duration frequency signal Df1 consisting of the pulse duration setting signal Tp1 and the pulse frequency setting signal Vf1. The base pulse current switching circuit SW5 outputs a pulse control signal Pf1 obtained by switching, with the pulse duration frequency signal Df1, between a signal for energizing the first pulse current control signal Ip31 and the base current setting signal Ib1 at the period corresponding to the pulse duration determined by the pulse duration setting signal Tp1 which is formed into the pulse duration frequency signal Df1 for the first pulse time T1, and a pulse control signal Pf2 obtained by switching, with the pulse duration frequency signal Df1, between a signal for energizing the second pulse current value control signal Ip32 and the base current setting signal Ib1 at the period corresponding to the pulse duration determined by the pulse duration setting signal Tp1 which is formed into the pulse duration frequency signal Df1 for the second pulse time T2 also. Both pulse control signals Pf1 and Pf2 are inputted to the welding current power control circuit PS.

In Fig. 113, P1 denotes pulses of a first pulse current group having a first pulse current value IP31, a first pulse duration TP1, a first pulse frequency f1 and a first base current IB1. P2 denotes pulses of a second pulse current group having a second pulse current value IP32, a second pulse duration TP1 the same as the first pulse duration, a second pulse frequency f1 the same as the first pulse frequency and a second base current IB1 the same as the first base current.

M1 and M2 denote the average value of the welding current in the first and second pulse current duty times T1 and T2, respectively. Ia denotes an average value of a welding current.

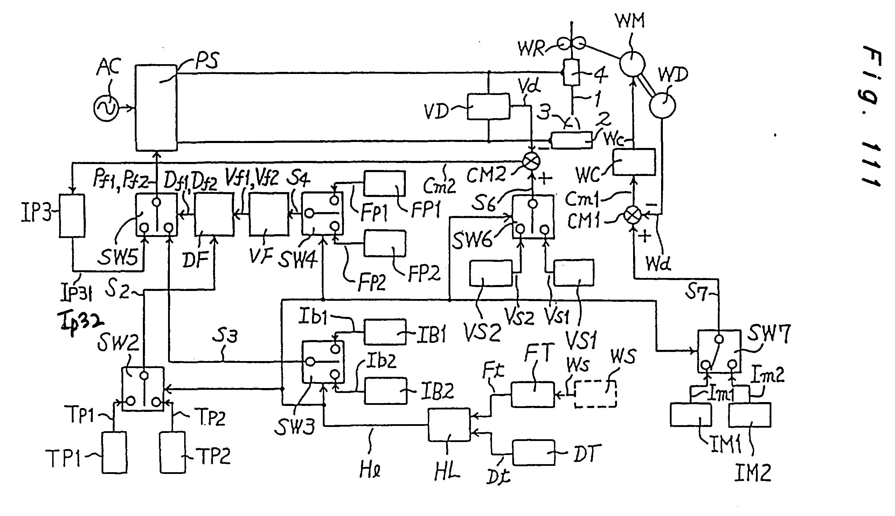

Fig. 111 is a block diagram of the second of this further group of embodiments, this example generating the wave form shown in Fig. 112.

In Fig. 111, elements the same as those appearing in Fig. 109 are denoted by the same reference characters as in Fig. 109 and will not be further described.

In Fig. 111, a first difference from Fig. 109 is that in place of the arc voltage setting circuit VS1 shown in Fig. 109, first and second arc voltage setting circuits VS1 and VS2 set the average values of arc voltage in the first and second pulse duty times T1 and T2, respectively, and output the first and second arc voltage setting signals Vs1 and Vs2, respectively. An arc voltage switching circuit SW6 outputs the arc voltage switching signal S6 by switching between the signals Vs1 and Vs2 with the switching signal H1. The second comparison circuit CM2 outputs the arc voltage control signal Cm2 from the difference between the signal S6 and the arc voltage detection signal Vd of the arc voltage detection circuit VD. The pulse current control circuit IP3 outputs the first and second pulse current control signals Ip31 and Ip32 corresponding to the first and second pulse current values IP31 and IP32 upon receiving the first arc voltage control signal Cm2 in the first pulse duty time T1 and the second arc voltage control signal Cm2 in the second arc duty time T2.

A second difference between Figs. 111 and 109 is that the diagram of Fig. 111 shows, in place of the average current value setting circuit IM, first and second welding current setting circuits IM1 and IM2 for outputting first and second welding current setting signals Im1 and Im2, and the wire feed rate switching circuit SW7 for sending the first comparison circuit CM1 the wire feed rate switching signal S7 obtained by switching between the first and second welding current setting signals Im1 Im2 with the switching signal H1.

Both Figs. 109 and 111 show the welding apparatus comprising the second pulse duration setting circuit TP2, the second pulse frequency setting circuit FP2 and the second base current setting circuit IB2.

A further embodiment of welding apparatus according to the invention not separately illustrated the first and second welding current setting circuits IM1 and IM2 for outputting the first and second welding current setting signals Im1 and Im2, respectively, and the wire feed rate switching circuit SW7 for sending the wire feed rate control circuit WC the wire feed rate switching signal S7 obtained by switching between the first and second welding current setting signals Im1 and Im2 with a switching frequency F of 0.5 to 5 Hz. These features are shown in Figs. 89, 100, 106 and 111.

The average values of welding current M1 and M2 in the first and second pulse duty times T1 and T2 can obtained by switching the wire feed rate between the first and second welding current setting circuits IM1 and IM2. The effect achieved by switching the arc length can be increased by switching periodically between the first pulse duty time T1 having the shorter arc length in which the average values M1 and M2 are set within a range that maintains a plurality of pulses to one molten metal drop transfer mode or the one pulse to one molten metal drop transfer mode, and the second pulse duty time T2 having the longer arc length in which the average values M1 and M2 are set within a range that maintains the one pulse to one molten metal drop transfer mode or the one pulse to plurality of molten metal drops transfer mode. In particular, in a case of an enlarged joint gap, an increase in the welding current due to the increase in the wire feed rate results in an increase in the amount of molten metal. Thus, the enlarged gap can be filled with the additional molten metal to give a resultant bead of good appearance. On the other hand, in a case where the joint gap is smaller, the decrease in the welding current can decrease the amount of molten metal. The smaller gap can be filled with the smaller amount of molten metal to give the resultant bead a good appearance.

To summarise briefly some of the features of the welding method according to the present invention.

(1) The welding of aluminum can be achieved giving a bead with a regular ripple pattern. (2) The welding of copper and copper alloys can be achieved giving a bead with a regular ripple pattern. (3) In the welding of aluminum, cracking can be prevented or reduced by making the grain size smaller. (4) In the welding of aluminum, the generation of porosity can be better controlled. (5) Butt welding can be performed avoiding melt down even with an enlarged butt joint gap. (6) Lap welding can be performed avoiding partial melting even with an enlarged gap at the lap joint. (7) In the welding of stainless steel, the penetration shape can be controlled and the penetration depth can be kept constant value in the direction of advance of the welding bead.

The conventional welding method has the disadvantages that the arc length can become too long and be unstable due to the lag of mechanical adjustments, so that frequently sputter is produced due to short circuiting and that sometimes extension or burn back of the welding wire occurs. The welding method according to the present invention can be operated so as to ameliorate or avoid these disadvantages. In addition, since the present welding method does not rely upon producing the scale bead by switching periodically between the spray transfer mode and the short circuit transfer mode, it can produce a scale bead with a regular ripple pattern in a similar way to that of the TIG welding method and also can prevent the generation of sputter.

Further, by controlling the first pulse current group to obtain the plurality of pulses to one molten metal drop mode or the one pulse to one molten metal drop transfer mode, it is possible to decrease the arc length to a minimum value of 2 to 3 mm, near to the short circuit distance which causes slight short circuit. Therefore, it is possible with the welding method according to the present invention to carry out high speed welding of thin plate in a similar way to that for the pulse arc welding in a conventional mode of one pulse to one molten metal drop transfer mode. It is possible to increase the arc length periodically by increasing one or two factors of the pulse current, pulse duration, pulse frequency or the base current value controlled within a range to form the one pulse to one molten metal drop transfer mode or the one pulse to plurality of molten metal drop transfer mode in connection with the second pulse current group. Hence, the welding method can be operated achieve the various effects to prevent melt down the upper plate when lap welding with a gap or when a gap appears due to thermal deformation, to prevent drop down in vertical up welding to improve the appearance of the bead and to hold the penetration shape at each of oscillating positions with oscillating welding.

As mentioned above, it is possible to control the first current group to be in a one pulse to one molten metal drop transfer mode or the plurality of pulses to one metal drop transfer mode and to shorten the arc length to 2 to 3 mm to cause slight short circuits. In addition, the generation of conventional short circuit and sputter occurs seldom. In connection with the second pulse current group, it is possible to shorten the arc length by forming the one pulse to one molten metal drop transfer mode or the one pulse to a plurality of molten metal drops transfer mode. Accordingly, the arc length of the second pulse current group can be made 4 to 5 mm. The conventional welding method has the disadvantage of making the arc length too long and of extending the arc widely in a high current period. The welding method according to present invention can be performed so as to be free from this disadvantage and thus avoid a defective gas shield. The welding method according to the present invention can be performed to give superior performance in the cleaning process of aluminum welding and is able to prevent the generation of an unstable arc having an excessive extension between the consumable electrode and the cathode of an aluminum workpiece.

In connection with the MIG arc welding for stainless steel having a low thermal conductivity, the periodic variation in the arc length makes it possible to control the penetration shape by melting the molten pools in different penetration shapes into one body. This process can expand the allowable gap size for lap welding and butt welding and hold the penetration depth at a constant value in the welding direction to control the sectional form of the welding bead.

Further, among the various arc welding methods within the scope of the present invention, in connection with the MIG arc welding for aluminum or copper having a high thermal conductivity, the variation in the welding current due to the periodical switching of the wire feed rate can change periodically the amount of molten metal. This process makes it possible to form a round scale bead in accordance with the variation in the height of reinforcement. In connection with the MAG arc welding for stainless steel having a low thermal conductivity, the periodic variation in the welding current due to the periodic switching of the wire feed rate makes it possible to change the rate of melting of the wire so as to control the amount of molten metal of the reinforcement in addition to the effect of periodic switching of the arc length.

## Claims

1.   A MAG or MIG arc welding method for achieving a molten metal transfer by changing an arc length while feeding a consumable wire at a predetermined wire feeding rate and suppressing a change in an arc force said method comprising the steps of:

(a) changing the melting rate of the consumable feed wire by switching between a first welding current having a value I1 and a second welding current having a value I2 which is larger than said first welding current value I1 at a switching frequency F maintained within a range from about 0.5 Hz to about 25 Hz;
(b) maintaining said arc at a first length Lt having a value larger than 2 mm when said first welding current is supplied and at a second length Lr having a value larger than said first arc length Lt when said second welding current is supplied; and
(c) maintaining a ratio between said second welding current value I2 and said first welding current value I1 from about 1.03 to about 1.20.

2.   A MAG or MIG arc welding method according to claim 1, wherein said first welding current value I1 and said second welding current value I2 are set so that a differential voltage $\Delta Va$ between a first arc voltage Va1 at said first arc length Lt and a second arc voltage Va2 at said second arc length Lr is maintained within a range from about 0.3 V to about 4.0 V.

3.   A MAG or MIG arc welding method according to claim 2, wherein the wire is fed at a predetermined wire feeding rate and said ratio between said second welding current value I2 and said first welding current value is 1.03 to 1.10.

4.   A MAG or MIG arc welding method according to claim 2, wherein said switching frequency F increases with an increase in a welding speed WS.

5.   A MAG or MIG arc welding method according to claim 2, wherein a duty ratio $Ds = T1/(T1 + T2)$ between a first welding current duty time T1 and a second welding current duty time T2 is switched.

6.   A MAG or MIG arc welding method according to claim 5, wherein said duty ratio Ds varies with a variation in an arc voltage detection signal Vd.

7.   A MAG or MIG arc welding method according to claim 1, wherein said first welding current value I1 is set to a value capable of generating a first spray transfer with a momentary short-circuit at said first arc length Lt and said second welding current value I2 is set to a value capable of generating a second spray transfer without a momentary short-circuit at said second arc length Lr.

8.   The MAG arc welding method according to claim 1, wherein said first welding current I1 is a pulse current having a pulse current value, a pulse width, a pulse frequency and a base current value, said pulse current value being set to a value capable of generating a first spray transfer with a momentary short circuit at said first arc length Lt, and said second welding current value I2 is set to a value capable of generating a second spray transfer without a momentary short circuit at said second arc length Lr.

9.   A MAG or MIG arc welding method according to claim 8, wherein the pulse current values, pulse duration, pulse frequencies and base currents of said first and second welding currents are each set to generate respective first and second molten metal transfer rates from said consumable wire to a welding material, in said first transfer rate molten metal drops moving from the consumable electrode to a welding material in a range of one metal drop to a plurality of current pulses in a synchronised manner with the welding current, and in said second transfer rate molten metal drops moving in a range of one metal drop to one current pulse in a synchronised manner with the welding current.

10. A MAG or MIG arc welding method according to claim 1, wherein said first welding current is a first pulse current group comprising a series of first current pulses and having first pulse current parameters including a first pulse current value, a first pulse width, a first pulse frequency and a first base current value, said first pulse current parameters being set to obtain said first arc length, and said second welding current is a second pulse current group comprising a series of second current pulses and having second pulse current parameters including a second pulse current value, a second pulse width, a second pulse frequency and a second base current value, said second pulse current parameters being set to obtain said second arc length.

11. A MAG or MIG arc welding method according to claim 10, wherein each of said parameters of the first pulse current group is set to generate a first molten metal transfer from said consumable wire in a mode in which molten metal drops move, while generating a slight short circuit, from the consumable electrode to a welding material in a mode yielding one metal drop to a plurality of current pulses in a synchronised manner with said first current pulses, while at least one of said parameters of the second pulse current group are set differently from those of the first pulse current group to generate a second molten metal transfer from said consumable wire in a mode yielding one molten metal drop to one current pulse in a synchronised manner with said second current pulses.

12. A MAG or MIG arc welding method according to claim 10, wherein each of said parameters of the first pulse current group is set to generate a first molten metal transfer from said consumable wire in a mode in which each molten metal drop moves, while generating a slight short circuit, from the consumable electrode to a welding material in a mode yielding one metal drop to one current pulse in a synchronised manner with the pulses of said first pulse current group, while at least one of said parameters of the second pulse current group are set differently from said first pulse current group to generate a second molten metal transfer mode in which each molten metal drop moves from a consumable electrode to a welding material in a mode in which one current pulse yields a plurality of molten metal drops or in a mode in which one current pulse yields on molten metal drop in a synchronising way to more than one of pulse currents.

13. A MAG or MIG arc welding method according to claim 10, wherein each of said parameters of the first pulse current group is set to generate a first molten metal transfer from said consumable wire to a welding material in a mode in which a plurality of current pulses yields one molten metal drop in a synchronised manner with the first current pulses, while at least one of said parameters of the second pulse current group is set differently from said first pulse current group to generate a second molten metal transfer in a mode in which each current pulse yields at least one molten metal drop or a mode in which each current pulse yields a plurality of metal drops in a synchronised manner with said second current pulses.

14. A MAG or MIG arc welding method according to claim 10, wherein said first pulse current parameters are set to generate a first molten metal transfer from said consumable wire to a welding material at a first transfer rate of one molten metal drop every at least one first current pulse, said first molten metal transfer being synchronised with said first current pulses, and said second pulse current parameters are set to generate a second molten metal transfer from said consumable wire to said welding material at a second transfer rate of at least one molten metal drop every at least one second current pulse, said second molten metal transfer being synchronised with said second current pulses.

15. A MAG or MIG arc welding method according to claim 10, further comprising switching at least one of said pulse current parameters with a switching frequency F, changing the first and second arc lengths Lt,Lr by energizing the respective pulse current groups, generating an arc voltage control signal Cm2 from the difference between an arc voltage setting signal Vs1 and an arc voltage detection signal Vd, changing the pulse frequency f3, pulse duration TP3, base current value IB3 or pulse current value IP3 with said arc voltage control signal Cm2, and maintaining said first and second arc lengths by controlling said wire melting speed.

16. A MAG or MIG arc welding method according to claim 10 further comprising switching first arc voltage setting signals Vs1 and Vs2 with a switching frequency F, generating an arc voltage control signal Cm2 from the difference between the arc voltage setting signal Vs1 and an arc voltage detection signal Vd, energizing the first pulse current group by controlling a pulse frequency f3, a pulse duration TP3, a base current value IB3 or a pulse current value IP3 with said arc voltage control signal Cm2 and energizing the second pulse current group by controlling a pulse frequency f32, a pulse duration TP32, a base current value IB32 or a pulse current value IP32 with said arc voltage control signal Cm2 obtained from the difference between the arc voltage setting signal Vs2 and an arc voltage detection signal Vd.

17. A MAG or MIG arc welding method according to claim 16 further comprising memorizing the second arc voltage setting value Vs2 corresponding to the first arc voltage setting value Vs1 reading out the second arc voltage setting value Vs2 corresponding to the predetermined first arc voltage setting value Vs1, and energizing the first and second pulse current groups.

18. A MAG or MIG arc welding method according to claim 16 further comprising memorizing the first arc voltage setting value Vs1 corresponding to each of a plurality of wire feeding rate setting values Wf, memorizing the second arc voltage setting value Vs2 corresponding to the first arc voltage setting value Vs1, reading out the first arc voltage setting value Vs1 corresponding to each of the wire feeding rate setting values Wf and the second arc voltage setting value Vs2 corresponding to the predetermined first arc voltage setting value Vs1, and energizing the first and second pulse current groups.

19. A MAG or MIG arc welding method according to claim 1, wherein said wire feeding rate is switched between first and second rates at a frequency within a range from about 0.5 Hz to about 5 Hz so that the ratio of said second welding current value I2 to said first welding current value I1 is maintained within a range from about 1.05 to about 1.20.

20. A MAG or MIG arc welding method according to claim 19 further comprising switching between first and second wire feeding rate setting signals Im1 and Im2 and between first and second arc voltage setting signals Vs1 and Vs2 with a switching frequency F, generating an arc voltage control signal Cm2 from the difference between the arc voltage setting signal Vs1 and an arc voltage detection signal Vd, energizing the first pulse current group by controlling a pulse frequency f31, a pulse duration TP31, a base current value IB31 or a pulse current value IP31 with said arc voltage control signal Cm2 and energizing the second pulse current group by controlling a pulse frequency f32, a pulse duration TP32, a base current value IB32 or a pulse current value IP32 with said arc voltage control signal Cm2 obtained from the difference between the arc voltage setting signal Vs2 and an arc voltage detection signal Vd.

21. A MAG or MIG arc welding method according to claim 19 further comprising memorizing second arc voltage setting values Vs2 corresponding to the first arc voltage setting values Vs1 at a plurality of second wire feeding rate setting values Im2, reading out the second arc voltage setting value Vs2 corresponding to the predetermined first arc voltage setting value Vs1, and energizing the first and second pulse current groups.

22. A MAG or MIG arc welding method according to claim 19 further comprising memorizing first arc voltage setting values Vs1 corresponding to each of a plurality of first wire feeding rate setting values Im1, memorizing each of the second arc voltage setting values Vs2 corresponding to each of the first arc voltage setting values Vs1 at respective second wire feeding rate setting values Im2, reading out the first arc voltage setting value Vs1 corresponding to the predetermined wire feeding rate setting value Im1 and the second arc voltage setting value Vs2 corresponding to the predetermined first arc voltage setting value Vs1, and energizing the first pulse current group and the second pulse current group.

23. A MAG or MIG arc welding method according to claim 1, wherein said switching frequency F and an arc length difference Le between said first arc length Lt and said second arc length Lr are set within a range defined by a graph having an axis of abscissas representative of said switching frequency F and an axis of ordinates representative of said arc length difference Le, said range being defined by an area above a curved plot on said graph, said curve being defined by a line connecting a first point located at F = 0.5 Hz and Le = 2.5 mm, a second point located at F = 12 Hz and Le = 1.0 mm, and a third point located at F = 25 Hz and Le = 0.5 mm.

24. A MAG or MIG arc welding method according to claim 23, wherein said arc length difference Le is set to a value that is larger than 3 mm and is located above a line connecting said first and third points, said switching frequency F is within a range from 0.5 Hz to 15 Hz, and aluminum welding is performed thereby obtaining an aluminum welding bead having a regular ripple pattern.

25. A MAG or MIG arc welding method according to claim 23, wherein said arc length difference Le is set to a value that is located above a line connecting said first and third points, said switching frequency F is within a range from 0.5 Hz to 15 Hz, and butt welding with a maximum gap of 1.5 mm is performed at a welding speed of 100 cm/min, said welding speed decreasing from 100 cm/min to 30 cm/min as the maximum gap increases from 1.5 mm to 3 mm.

26. A MAG or MIG arc welding method according to claim 23, wherein said arc length difference Le is set to a value that it is located above a line connecting said first and third points, said switching frequency F is within a range from 0.5 Hz to 15 Hz, and lap fillet welding with a maximum lapping gap of 2 mm is performed at a welding speed of 100 cm/min, said welding speed decreasing from 100 cm/min to 30 cm/min as the maximum lapping gap increases from 2 mm to 3 mm.

27. A MAG or MIG arc welding method according to claim 23, wherein said arc length difference Le is set to a value that it is located above a line connecting said first and third points said switching frequency F is within a range from 0.5 Hz to 15 Hz, and aluminum welding is performed whereby a resulting molten aluminum pool is agitated to produce a welding bead having a fine grain, thus lowering solidification cracking of said welding bead.

28. A MAG or MIG arc welding method according to claim 23, wherein said switching frequency F is within a range from 0.5 Hz to 15 Hz, said arc length difference Le is set to a value that is located above a line connecting said first and third points, and stainless steel welding is performed whereby a resulting molten stainless steel pool is agitated to produce a welding bead having a fine grain, thus, lowering solidification cracking and enhancing non-destructive test accuracy of said welding bead.

29. A MAG or MIG arc welding method according to claim 23, wherein said switching frequency F is within a range from 0.5 Hz to 25 Hz, said arc length difference Le is set to a value located above a line connecting said first and third points, and aluminum welding is performed whereby a molten aluminum pool is stirred to prevent porosity from occurring in a resulting welding bead.

30. A pulse MAG or MIG arc welding apparatus for carrying out an arc welding operation by supplying a pulse welding current while switching the same between a first pulse current group (P1) for generating a short arc length and a second pulse current group (P2) for generating a long arc length, said apparatus comprising:

an arc voltage detection circuit (VD) for detecting an arc voltage value and outputting an arc voltage detection signal (Vd) corresponding thereto;
an arc voltage setting circuit (VS) for setting a value of arc voltage in accordance with welding conditions and outputting an arc voltage setting signal (Vs) corresponding thereto;
a comparison circuit (CM2) for comparing said arc voltage detection signal (Vd) and arc voltage setting signal (Vs) and outputting a difference between said two signals as an arc voltage control signal;
a pulse condition control signal generation circuit (IPB) for generating a pulse condition control reference signal (Ipb) for controlling a preselected condition from among four pulse control conditions in common with said first and second pulse current groups (P1),(P2) in accordance with said arc voltage control signal (Cm2), said four pulse control conditions comprising pulse frequency, pulse width, base current value and peak current value;
a first pulse current setting circuit (IS1) for setting the remaining three pulse control conditions for said first pulse current group (P1) which have not been preselected and for outputting first pulse current group (P1) setting signals corresponding to said remaining pulse control conditions;
a second pulse current setting circuit (IS2) for setting the remaining three pulse control conditions for said second pulse current group (P2) which have not been preselected and for outputting second pulse current group (P2) setting signals including setting signals corresponding to said remaining pulse control conditions;
a switching circuit (HL) for generating a switching signal (H1) for switching said first and second pulse current setting circuits (IS1),(IS2) alternatively at a frequency ranging from 0.5 to 25 Hz;
a pulse frequency signal generation circuit for generating a pulse frequency signal (Vf1,Vf2) in response to either the pulse frequency control reference signal (Fp3) if there is output from said pulse condition control signal generation circuit (IPB), or, the pulse frequency setting signal (Fp) output alternatively from each of said first and second pulse current setting circuits (IS1),(IS2) if said pulse frequency control signal (Vf3) is not output from said pulse condition control signal generation circuit (IPB);
a pulse frequency and width signal generation circuit (DF(3)) for outputting a pulse frequency and width signal (Df3) in response to the pulse frequency control signal (Vf3) and pulse width setting signal (Tp) if the pulse frequency control reference signal (Fp3) is output from said pulse condition control signal generation circuit (IPB), the pulse frequency signal (Vf1,Vf2) and pulse width control signal (Tp3) if the pulse width control signal (Tp3) is output from said pulse condition control signal generation circuit (IPB), or
the pulse frequency signal (Vf1,Vf2) and pulse width setting signal (Tp) if the peak current control signal (Ip3) or base current control signal (Ib3) is output from said pulse condition control signal generation circuit (IPB);

a pulse current control circuit for outputting first pulse control signal (Pf1) and second pulse control signal (Pf2) alternatively in response to

the pulse frequency and width signal (Df3), the peak current setting signal (Ip) and base current setting signal (Ib) if the pulse frequency control reference signal (Fp3) or the pulse width control signal (Tp3) is output from said pulse condition control signal generation circuit,

the pulse frequency and width signal (Df3), the peak current control signal (Ip3) and base current setting signal (Ib) if the peak current control signal (Ip3) is output from said pulse condition control signal generation circuit (IPB), or

the pulse frequency and width signal (Df3), the peak current setting signal (Ip) and base current control signal (Ib3) if the base current control signal (Ib3) is output from said pulse condition control signal generation circuit (IPB); and

a welding power source control circuit (PS) for outputting the first pulse current group (P1) when the first pulse control signal (Pf1) is output from said pulse current control circuit and the second pulse current group (P2) when the second pulse control signal (Pf2) is output from said pulse current control circuit.

31. A pulse MAG or MIG arc welding apparatus according to claim 30 wherein said pulse condition control signal generation circuit (IPB) generates a pulse frequency control reference signal (Fp3) for controlling the pulse frequency in common with said first and second pulse current groups (P1),(P2) as said pulse condition control signal (Ipb) and said pulse frequency signal (Vf1,Vf2) generation circuit generates a pulse frequency signal (Vf1,Vf2) in response to said pulse frequency control reference signal (Fp3) input thereto.

32. A pulse MAG or MIG arc welding apparatus according to claim 30 wherein said pulse condition control signal generation circuit (IPB) generates a pulse width control signal (Tp3) for controlling the pulse width in common with said first and second pulse current groups (P1),(P2) as said pulse condition control signal (Ipb) and said pulse frequency and width signal generation circuit (DF(3)) outputs a pulse frequency and width signal (DF3) in response to said pulse frequency signal (Vf1,Vf2) from said pulse frequency signal (Vf1,Vf2) generation circuit and said pulse width control signal (Pp3) from said pulse condition control signal generation circuit (IPB).

33. A pulse MAG or MIG arc welding apparatus according to claim 30 wherein said pulse condition control signal generation circuit (IPB) generates a peak current value control signal for controlling the peak current value in common with said first and second pulse current groups (P1),(P2) as said pulse condition control signal (Ipb).

34. A pulse MAG or MIG arc welding apparatus according to claim 30 wherein said pulse condition control signal generation circuit (IPB) generates a base current value control signal for controlling the base current in common with said first and second pulse current groups (P1),(P2) as said pulse condition control signal (Ipb).

35. A pulse MAG or MIG arc welding apparatus for carrying out an arc welding operation by supplying a pulse welding current that switches between a first pulse current group (P1) for generating a short arc length and a second pulse current group (P2) for generating a long arc length, said apparatus comprising:

an arc voltage detection circuit (VD) for detecting an arc voltage value and outputting an arc voltage detection signal (Vd) corresponding thereto;

a first arc voltage setting circuit (VS1) for setting a value of arc voltage in according with welding conditions and outputting a first arc voltage setting signal (Vs1) corresponding thereto;

a second arc voltage setting circuit (VS2) for setting a value of arc voltage in accordance with welding conditions and outputting a second arc voltage setting signal (Vs2) corresponding thereto;

a comparison circuit (CM2) for comparing said arc voltage detecting signal and arc voltage setting signal (Vs) and outputting a difference between said two signals as an arc voltage control signal (Cm2);

a pulse condition control signal generation circuit (IPB) for generating a pulse condition control signal (Ipb) for controlling one preselected pulse control condition from among four pulse control conditions in common with s aid first and second pulse current groups (P1),(P2) in accordance with said arc voltage control signal (Cm2), said four pulse control conditions comprising pulse frequency, pulse width, base current value and peak current value;

a pulse current setting circuit (IS) for setting remaining three pulse control conditions for said first pulse current group (P1) and said second pulse current group (P2) which have not been preselected and for outputting pulse current group setting signals including setting signals corresponding to remaining said three pulse control conditions other than said pulse condition control signal (Ipb);

a switching circuit (HL) for generating a switching signal (H1) for switching said first and second pulse current setting circuits (IS1),(IS2) alternatively at a frequency ranging from 0.5 to 25 Hz;

a pulse frequency signal (Vf1,Vf2) generation circuit for generating a pulse frequency signal (Vf1,Vf2) in response to either the pulse frequency control reference signal (Fp3) if output from said pulse condition control signal generation circuit (IPB), or, the pulse frequency setting signal (Fp) output from said pulse current setting circuit (IS) if not output from said pulse condition control signal generation circuit (IPB);

a pulse frequency and width signal generation circuit (DF(3)) for outputting a pulse frequency and width signal (Df3) in response to the pulse frequency control signal (Vf3) and pulse width setting signal (Tp) if the pulse frequency control reference signal (Fp3) is output from said pulse condition control signal generation circuit (IPB), or

the pulse frequency signal (Vf1,Vf2) and pulse width control signal (Tp3) if the pulse width control signal (Tp3) is output from said pulse condition control signal generation circuit (IPB), or

the pulse frequency signal (Vf1,Vf2) and pulse width setting signal (Tp) if the peak current control signal (Ip3) or base current control signal (Ib3) is output from said pulse condition control signal generation circuit (IPB);

a pulse current control circuit for outputting first pulse control signal (Pf1) and second pulse control signal (Pf2) alternatively in response to

the pulse frequency and width signal (Df3), the peak current setting signal (Ip) and base current setting signal (Ib) if the pulse frequency control reference signal (Fp3) or the pulse width control signal (Tp3) is output from said pulse condition control signal generation circuit (IPB), or

the pulse frequency and width signal (Df3), the peak current control signal (Ip3) and base current setting signal (Ib) if the peak current control signal (Ip3) is output from said pulse condition control signal generation circuit (IPB), or

the pulse frequency and width signal (Df3), the peak current setting signal (Ip) and base current control signal (Ib3) if the base current control signal (Ib3) is output from said pulse condition control signal generation circuit; and

a welding power source control circuit (PS) for outputting the first pulse current group (P1) when the first pulse control signal (Pf1) is output from said pulse current control circuit and the second pulse current group (P2) when the second pulse control signal (Pf2) is output from said pulse current control circuit.

36. A pulse MAG or MIG arc welding apparatus according to claim 35 wherein said pulse current setting circuit (IS) comprises:

a first pulse current setting circuit (IS1) for setting remaining three pulse control conditions for said first pulse current group (P1) which have not been preselected and for outputting first pulse current group (P1) setting signals including setting signals corresponding to remaining said three pulse control conditions other than said pulse condition control signal (Ipb);

a second pulse current setting circuit (IS2) for setting remaining three pulse control conditions for said second pulse current group (P2) which have not been preselected and for outputting second pulse current group (P2) setting signals including setting signals corresponding to said remaining said three pulse control conditions other than said pulse condition control signal (Ipb); and

said pulse frequency and width signal generation circuit (DF(3)) generates

a pulse frequency and width signal (Df3) in response to the pulse frequency control signal (Vf3) and pulse width setting signal (Tp) if the pulse frequency control reference signal (Fp3) is output from said pulse condition control signal generation circuit (IPB), or

the pulse frequency signal (Vf1,Vf2) and pulse width control signal (Tp3) if the pulse width control signal (Tp3) is output from said pulse condition control signal generation circuit (IPB), or

the pulse frequency signal (Vf1,Vf2) and pulse width setting signal (Tp) if the peak current control signal (Ip3) or base current control signal (Ib3) is output from said pulse condition control signal generation circuit (IPB); and

said switching circuit (HL) outputs a switching signal (H1) for alternatively switching between said first and second arc voltage setting circuits (VS1),(VS2) and between said first and second pulse current setting circuits (IS1),(IS2).

37. A pulse MAG or MIG arc welding apparatus according to claim 35, wherein said pulse condition control signal generation circuit (IPB) generates a pulse frequency control reference signal (Fp3) for controlling the pulse frequency in common with said first and second pulse current groups (P1),(P2) as said pulse condition control signal (Ipb) and said pulse frequency signal (Vf1,Vf2) generation circuit generates a pulse frequency signal (Vf1,Vf2) in response to said pulse frequency control reference signal (Fp3) input thereto.

**38.** A pulse MAG or MIG arc welding apparatus according to claim 35 wherein said pulse condition control signal generation circuit (IPB) generates a pulse width control signal (Tp3) for controlling the pulse width in common with said first and second pulse current groups (P1),(P2) as said pulse condition control signal (Ipb) and said pulse frequency and width signal generation circuit (DF(3)) outputs a pulse frequency and width signal (Df3) in response to said pulse frequency signal (Vf1,Vf2) from said pulse frequency signal (Vf1,Vf2) generation circuit and said pulse width control signal (Tp3) from said pulse condition control signal generation circuit (IPB).

**39.** A pulse MAG or MIG arc welding apparatus according to claim 35 wherein said pulse condition control signal generation circuit (IPB) generates a peak current value control signal for controlling the peak current value in common with said first and second pulse current groups (P1),(P2) as said pulse condition control signal (Ipb).

**40.** A pulse MAG or MIG arc welding apparatus according to claim 35 wherein said pulse condition control signal generation circuit (IPB) generates a base current value control signal for controlling the base current in common with said first and second pulse current groups (P1),(P2) as said pulse condition control signal (Ipb).

**41.** A pulse MAG or MIG arc welding apparatus according to claim 35 further comprising a first wire feeding rate setting circuit (IM1) for outputting a first wire feeding rate setting signal (Im1) and a second wire feeding rate setting circuit (IM2) for outputting a second wire feeding rate setting signal (Im2) and a wire feeding rate switching circuit (SW7) sending a wire feeding rate control circuit (WC) a wire feeding rate signal (S7) obtained by switching between said first wire feeding rate setting signal (Im1) and said second wire feeding rate setting signal (Im2).

**Patentansprüche**

**1.** MAG- oder MIG-Lichtbogenschweißverfahren zum Erreichen eines geschmolzenen Metalltransfers durch Ändern einer Bogen- bzw. Lichtbogenlänge, während ein abschmelzbarer bzw. selbstverzehrender bzw. verzehrbarer Draht mit einer vorbestimmten Drahtzuführrate bzw. -geschwindigkeit zugeführt wird und eine Änderung einer Lichtbogenkraft unterdrückt wird, wobei das Verfahren die folgenden Schritte umfaßt:

(a) Ändern der Schmelzrate bzw. -geschwindigkeit des verzehrbaren Zuführdrahtes durch Schalten bzw. Umschalten zwischen einem ersten Schweißstrom mit einer Stärke I1 und einem zweiten Schweißstrom mit einer Stärke I2, welche größer als die erste Schweißstromstärke I1 ist, mit einer Schaltfrequenz F, welche innerhalb eines Bereiches von ungefähr 0.5 Hz bis ungefähr 25 Hz gehalten wird;

(b) Beibehalten des Lichtbogens in einer ersten Länge Lt, die einen Wert von größer als 2 mm aufweist, wenn der erste Schweißstrom zugeführt wird, und in einer zweiten Länge Lr, die einen Wert aufweist, der größer als die erste Bogenlänge Lt ist, wenn der zweite Schweißstrom zugeführt wird; und

(c) Beibehalten eines Verhältnisses zwischen der zweiten Schweißstromstärke I2 und der ersten Schweißstromstärke I1 zwischen ungefähr 1.03 bis ungefähr 1.20.

**2.** MAG- oder MIG-Lichtbogenschweißverfahren gemäß Anspruch 1, wobei die erste Schweißstromstärke I1 und die zweite Schweißstromstärke I2 so eingestellt sind, daß eine Differenzspannung $\Delta$Va zwischen einer ersten Lichtbogenspannung Va1 bei der ersten Lichtbogenlänge Lt und einer zweite Lichtbogenspannung Va2 bei der zweiten Lichtbogenlänge Lr innerhalb eines Bereiches zwischen ungefähr 0.3 V bis ungefähr 4.0V gehalten wird.

**3.** MAG- oder MIG-Lichtbogenschweißverfahren gemäß Anspruch 2, wobei der Draht mit einer vorbestimmten Drahtzuführrate bzw. -geschwindigkeit zugeführt wird und das Verhältnis zwischen der zweiten Schweißstromstärke I2 und der ersten Schweißstromstärke 1.03 bis 1.10 ist.

**4.** MAG- oder MIG-Lichtbogenschweißverfahren gemäß Anspruch 2, wobei die Schaltfrequenz F sich mit einer Erhöhung einer Schweißgeschwindigkeit WS erhöht.

**5.** MAG- oder MIG-Lichtbogenschweißverfahren gemäß Anspruch 2, wobei ein Betriebs- bzw. Arbeitszyklusverhältnis Ds = T1 /(T1 + T2) zwischen einer ersten Schweißstrombetriebs- bzw. arbeitszykluszeit T1 und einer zweiten Schweißstrombetriebs- bzw. arbeitszykluszeit T2 geschaltet wird.

**6.** MAG- oder MIG-Lichtbogenschweißverfahren gemäß Anspruch 5, wobei das Arbeitszyklusverhältnis Ds mit einer Variation eines Lichtbogendetektionssignals Vd variiert.

7. MAG- oder MIG-Lichtbogenschweißverfahren gemäß Anspruch 1, wobei die erste Schweißstromstärke I1 auf eine Stärke eingestellt wird, die zur Erzeugung eines ersten Sprüh- bzw. Spritztransfers mit einem momentanen bzw. kurzzeitigem Kurzschluß bei der ersten Lichtbogenlänge Lt geeignet ist, und die zweite Schweißstromstärke I2 auf eine Stärke eingestellt wird, die zur Erzeugung eines zweiten Sprüh- bzw. Spritztransfers ohne einen momentanen bzw. kurzzeitigen Kurzschluß bei der zweiten Lichtbogenlänge Lr geeignet ist.

8. MAG-Lichtbogenschweißverfahren gemäß Anspruch 1, wobei der erste Schweißstrom I1 ein Impuls- bzw. Pulsstrom mit einer Impuls- bzw. Pulsstromstärke, einer Pulsbreite, einer Pulsfrequenz und einer Grund- bzw. Basisstromstärke ist, wobei die Pulsstromstärke auf einen Wert eingestellt wird, der zur Erzeugung eines ersten Sprüh- bzw. Spritztransfers mit einem momentanen bzw. kurzzeitigen Kurzschluß bei der ersten Lichtbogenlänge Lt geeignet ist, und wobei die zweite Schweißstromstärke I2 auf einen Wert eingestellt wird, der zur Erzeugung eines zweiten Sprüh- bzw. Spritztransfers ohne einen momentanen bzw. kurzzeitigen Kurzschluß bei der zweiten Lichtbogenlänge Lr geeignet ist.

9. MAG- oder MIG-Lichtbogenschweißverfahren gemäß Anspruch 8, wobei die Pulsstromstärken, Pulsdauer, Pulsfrequenzen und Basisströme des ersten und zweiten Schweißstromes jeweils so eingestellt werden, um eine jeweilige erste und zweite geschmolzene Metall- bzw. Schmelzmetalltransferrate bzw. -geschwindigkeit des verzehrbaren Drahts auf ein Schweißmaterial zu erzeugen, wobei sich in der ersten Transferrate bzw. -geschwindigkeit geschmolzene Metalltropfen von der verzehrbaren Elektrode zu einem Schweißmaterial in einem Bereich von einem Metalltropfen für bzw. pro eine Vielzahl von Strompulsen in einer synchronisierten Weise mit dem Schweißstrom bewegen und sich in der zweiten Transferrate bzw. -geschwindigkeit geschmolzene Metalltropfen in einem Bereich von einem Metalltropfen für bzw. pro einen Strompuls in einer synchronisierten Weise mit dem Schweißstrom bewegen.

10. MAG- oder MIG-Lichtbogenschweißverfahren gemäß Anspruch 1, wobei der erste Schweißstrom eine erste Impuls- bzw. Pulsstromgruppe ist, welche eine Reihe von ersten Strompulsen umfaßt und erste Impuls- bzw. Pulsstromparameter aufweist, welche eine erste Pulsstromstärke, eine erste Pulsbreite, eine erste Pulsfrequenz und eine erste Grund- bzw. Basisstromstärke beinhalten, wobei die ersten Pulsstromparameter eingestellt sind, um die erste Lichtbogenlänge zu erhalten und wobei der zweite Schweißstrom eine zweite Impuls- bzw. Pulsstromgruppe ist, welche eine Reihe von zweiten Strompulsen umfaßt und zweite Impuls- bzw. Pulsstromparameter aufweist, welche eine zweite Pulsstromstärke, eine zweite Pulsbreite, eine zweite Pulsfrequenz und eine zweite Grund- bzw. Basisstromstärke beinhalten, wobei die zweiten Pulsstromparameter eingestellt sind, um die zweite Lichtbogenlänge zu erhalten.

11. MAG- oder MIG-Lichtbogenschweißverfahren gemäß Anspruch 10, wobei jeder der Parameter der ersten Pulsstromgruppe eingestellt wird, um einen ersten geschmolzenen Metalltransfer bzw. Schmelzmetalltransfer von dem verzehrbaren Draht in einem Modus zu erzeugen, in welchem sich geschmolzene Metalltropfen, während sie einen geringfügigen Kurzschluß erzeugen, von der verzehrbaren Elektrode zu einem Schweißmaterial in einem Modus bewegen, der einen Metalltropfen für eine bzw. pro Vielzahl von Strompulsen in einer synchronisierten Weise mit den ersten Strompulsen ergibt, während zumindest einer der Parameter der zweiten Pulsstromgruppe unterschiedlich von jenen der ersten Pulsstromgruppe eingestellt wird, um einen zweiten geschmolzenen Metalltransfer von dem verzehrbaren Draht in einem Modus zu erzeugen, welcher einen geschmolzenen Metalltropfen für einen bzw. pro Strompuls in einer synchronisierten Weise mit den zweiten Strompulsen ergibt.

12. MAG- oder MIG-Lichtbogenschweißverfahren nach Anspruch 10, wobei jeder der Parameter der ersten Pulsstromgruppe eingestellt wird, um einen geschmolzenen Metalltransfer von dem verzehrbaren Draht in einem Modus zu erzeugen, in welchem sich jeder geschmolzene Metalltropfen, während er einen geringfügigen Kurzschluß erzeugt, von der verzehrbaren Elektrode zu einem Schweißmaterial in einem Modus bewegt, welcher einen Metalltropfen für einen bzw. pro Strompuls in einer synchronisierten Weise mit den Pulsen der ersten Pulsstromgruppe ergibt, während zumindest einer der Parameter der zweiten Pulsstromgruppe unterschiedlich von der ersten Pulsstromgruppe eingestellt wird, um einen zweiten geschmolzenen Transfermodus zu erzeugen, in welchem sich jeder geschmolzene Metalltropfen von einer verzehrbaren Elektrode zu einem Schweißmaterial in einem Modus bewegt, in welchem ein Strompuls eine Vielzahl von geschmolzenen Metalltropfen ergibt, oder in einem Modus, in welchem ein Strompuls einen geschmolzenen Metalltropfen in einer synchronisierten Weise für mehr als einen der Pulsströme bzw. pro mehreren Strompulsen ergibt.

13. MAG- oder MIG-Lichtbogenschweißverfahren nach Anspruch 10, wobei jeder der Parameter der ersten Pulsstromgruppe eingestellt wird, um einen ersten geschmolzenen Metalltransfer von dem verzehrbaren Draht auf ein Schweißmaterial in einem Modus zu erzeugen, in welchem eine Vielzahl von Strompulsen einen geschmolzenen Metalltropfen in einer synchronisierten Weise mit den ersten Strompulsen ergibt, während zumindest einer der Parameter der zweiten Pulsstromgruppe unterschiedlich von der ersten Pulsstromgruppe eingestellt wird, um einen zweiten geschmolzenen Metalltransfer in einem Modus zu erzeugen, in welchem jeder Strompuls zumindest einen geschmolzenen Metalltropfen ergibt, oder in einem Modus, in welchem jeder Strompuls eine Vielzahl von Metalltropfen in einer synchronisierten Weise mit den zweiten Strompulsen ergibt.

14. MAG- oder MIG-Lichtbogenschweißverfahren nach Anspruch 10, wobei die ersten Pulsstromparameter eingestellt werden, um einen ersten geschmolzenen Metalltransfer von dem verzehrbaren Draht zu einem Schweißmaterial in einer ersten Transferrate bzw. -geschwindigkeit von einem geschmolzenen Metalltropfen für jeden zumindest einen ersten Strompuls zu erzeugen, wobei der erste geschmolzene Metalltransfer mit den ersten Strompulsen synchronisiert ist und die zweiten Pulsstromparameter eingestellt werden, um einen zweiten geschmolzenen Metalltransfer von dem verzehrbaren Draht zu dem Schweißmaterial in einer zweiten Transferrate bzw. -geschwindigkeit von zumindest einem Metalltropfen für jeden zumindest einen zweiten Strompuls zu erzeugen, wobei der zweite geschmolzene Metalltransfer mit den zweiten Strompulsen synchronisiert ist.

15. MAG- oder MIG-Lichtbogenschweißverfahren nach Anspruch 10 mit einem Umschalten bzw. Schalten von zumindest einem der Pulsstromparameter mit einer Schaltfrequenz F, Ändern der ersten und zweiten Lichtbogenlänge Lt, Lr durch Erregen der jeweiligen Pulsstromgruppen, Erzeugen eines Lichtbogenspannungsteuer- bzw. -regelungssignals Cm2 aus der Differenz zwischen einem Lichtbogenspannungeinstellsignal Vs1 und einem Lichtbogenspannungdetektionssignal Vd, Ändern der Pulsfrequenz F3, Pulsdauer TP3, Grund- bzw. Basisstromstärke IB3 oder Pulsstromstärke IP3 mit dem Lichtbogenspannungsteuer- bzw. -regelungssignal Cm2 und Beibehalten der ersten und zweiten Lichtbogenlänge durch Steuern bzw. Regeln der Drahtschmelzgeschwindigkeit.

16. MAG- oder MIG-Lichtbogenschweißverfahren nach Anspruch 10 mit einem Umschalten bzw. Schalten von ersten Lichtbogenspannungeinstellsignalen Vs1 und Vs2 mit einer Schaltfrequenz F, Erzeugen eines Lichtbogenspannungsteuer- bzw. -regelsignals Cm2 aus der Differenz zwischen dem Lichtbogenspannungeinstellsignal Vs1 und einem Lichtbogenspannungdetektionssignals Vd, Erregen der ersten Pulsstromgruppe durch Steuern bzw. Regeln einer Pulsfrequenz F3, einer Pulsdauer TP3, einer Grund- bzw. Basisstromstärke IB3 oder einer Pulsstromstärke IP3 mit dem Lichtbogenspannungsteuer- bzw. -regelsignal Cm2 und Erregen der zweiten Pulsstromgruppe durch Steuern bzw. Regeln einer Pulsfrequenz F32, einer Pulslänge TP32, einer Grund- bzw. Basisstromstärke IB32 oder einer Pulsstromstärke IP32 mit dem Lichtbogenspannungsteuer- bzw. -regelsignal Cm2, welches aus der Differenz zwischen dem Lichtbogenspannungeinstellsignal Vs2 und einem Lichtbogenspannungdetektionssignal Vd erhalten wird.

17. MAG- oder MIG-Lichtbogenschweißverfahren nach Anspruch 16 mit einem Festhalten bzw. Speichern des zweiten Lichtbogenspannungeinstellwerts Vs2, welcher dem ersten Lichtbogenspannungeinstellwert Vs1 entspricht, Auslesen des zweiten Lichtbogenspannungseinstellwertes Vs2, welcher dem vorbestimmten ersten Lichtbogenspannungeinstellwertes Vs1 entspricht, und Erregen der ersten und zweiten Pulsstromgruppe.

18. MAG- oder MIG-Lichtbogenschweißverfahren nach Anspruch 16 mit einem Festhalten bzw. Speichern des ersten Lichtbogenspannungseinstellwerts Vs1, welcher jedem einer Vielzahl von Drahtzuführrateeinstellwerten bzw. Drahtzuführgeschwindigkeiteinstellwerten Wf entspricht, Festhalten bzw. Speichern des zweiten Lichtbogenspannungeinstellwerts Vs2, welcher dem ersten Lichtbogenspannungeinstellwert Vs1 entspricht, Auslesen des ersten Lichtbogenspannungeinstellwerts Vs1, welcher jedem der Drahtzuführrateeinstellwerte bzw. Drahtzuführgeschwindigkeiteneinstellwerte Wf entspricht, und des zweiten Lichtbogenspannungeinstellwerts Vs2, welcher dem vorbestimmten ersten Lichtbogenspannungeinstellwert Vs1 entspricht, und Erregen der ersten und Zweiten Pulsstromgruppe.

19. MAG- oder MIG-Lichtbogenschweißverfahren nach Anspruch 1, wobei die Drahtzuführrate bzw. -geschwindigkeit zwischen einer ersten und einer zweiten Rate mit einer Frequenz in einem Bereich von ungefähr 0.5 Hz bis ungefähr 5 Hz geschaltet wird, so daß das Verhältnis der zweiten Schweißstromstärke I2 zu der ersten Schweißstromstärke I1 innerhalb eines Bereiches von ungefähr 1.05 bis ungefähr 1.20 beibehalten wird.

20. MAG- oder MIG-Lichtbogenschweißverfahren nach Anspruch 19 mit einem Umschalten bzw. Schalten zwischen ersten und zweiten Drahtzuführrateeinstellsignalen bzw. Drahtzuführungssignalen IM1 und IM2 und zwischen ersten und zweiten Lichtbogenspannungeinstellsignalen Vs1 und Vs2 mit einer Umschaltfrequenz F, Erzeugen eines Lichtbogenspannungsteuer- bzw. -egelsignals Cm2 aus der Differenz zwischen dem Lichtbogenspannungeinstellsignal Vs1 und einem Lichtbogenspannungdetektionssignals Vd, Erregen der ersten Pulsgruppe durch Steuern bzw. Regeln einer Pulsfrequenz F31, einer Pulsdauer TP31, einer Grund- bzw. Basisstromstärke IB31 oder einer Pulsstromstärke IP31 mit dem Lichtbogenspannungsteuer- bzw. regelsignal Cm2 und Erregen der zweiten Pulsstromgruppe durch Steuern bzw. Regeln einer Pulsfrequenz F32, einer Pulsdauer TP32, einer Grund- bzw. Basisstromstärke IB32 oder einer Pulsstromstärke IP32 mit dem Lichtbogenspannungsteuer- bzw. regelsignal Cm2, welches aus der Differenz zwischen dem Lichtbogenspannungsteuersignal Vs2 und einem Lichtbogenspannungdetektionssignal Vd erhalten wird.

21. MAG- oder MIG-Lichtbogenschweißverfahren nach Anspruch 19 mit einem Festhalten bzw. Speichern von zweiten Lichtbogenspannungeinstellwerten Vs2, welche den ersten Lichtbogenspannungeinstellwerten Vs1 bei einer Vielzahl von zweiten Drahtzuführrateeinstellwerten bzw. Drahtzuführgeschwindigkeiteinstellwerten IM2 entsprechen, Auslesen des zweiten Lichtbogeneinstellwertes Vs2, welcher dem vorbestimmten ersten Lichtbogeneinstellwert Vs1 entspricht, und Erregen der ersten und zweiten Pulsstromgruppe.

22. MAG- oder MIG-Lichtbogenschweißverfahren nach Anspruch 19 mit einem Festhalten bzw. Speichern von ersten Lichtbogenspannungeinstellwerten Vs1, welche jedem einer Vielzahl von ersten Drahtzuführrateeinstellwerten bzw. Drahtzuführgeschwindigkeiteinstellwerten IM1 entsprechen, Festhalten bzw. Speichern von jedem der zweiten Lichtbogenspannungeinstellwerten Vs2, welche jedem der ersten Lichtbogenspannungeinstellwerte Vs1 bei jeweiligen zweiten Drahtzuführrateeinstellwerten bzw. Drahtzuführgeschwindigkeiteinstellwerten IM2 entsprechen, Auslesen des ersten Lichtbogenspannungeinstellwerts Vs1, welcher dem vorbestimmten Drahtzuführrateeinstellwert bzw. Drahtzuführgeschwindigkeiteneinstellwert IM1 entspricht, und des zweiten Lichtbogenspannungeinstellwerts Vs2, welcher dem vorbestimmten ersten Lichtbogenspannungeinstellwert Vs1 zugeordnet ist, und Erregen der ersten Pulsstromgruppe und der zweiten Pulsstromgruppe.

23. MAG- oder MIG-Lichtbogenschweißverfahren nach Anspruch 1, wobei die Schaltfrequenz F und eine Lichtbogenlängendifferenz Le zwischen der ersten Lichtbogenlänge Lt und der zweiten Lichtbogenlänge Lr innerhalb eines Bereiches eingestellt werden, der durch einen Graphen mit einer Abszissenachse, welche die Schaltfrequenz F darstellt, und einer Ordinatenachse, welche die Lichtbogendifferenz Le darstellt, definiert ist, wobei der Bereich durch ein Gebiet über einer gekrümmten Kurve auf diesem Graph definiert ist, wobei die Kurve durch eine Linie definiert ist, welche einen ersten Punkt bei F = 0.5 Hz und Le = 2.5 mm, einen zweiten Punkt bei F = 12 Hz und Le = 1.0 mm und einen dritten Punkt bei F = 25 Hz und Le = 0.5 mm verbindet.

24. MAG- oder MIG-Lichtbogenschweißverfahren nach Anspruch 23, wobei die Lichtbogenlängendifferenz Le auf einen Wert eingestellt wird, der größer als 3 mm und oberhalb einer Linie angeordnet ist, welcher den ersten und dritten Punkt verbindet, wobei die Schaltfrequenz F innerhalb eines Bereiches von 0.5 Hz - 15 Hz liegt und dadurch Aluminiumschweißen ausgeführt wird, wobei eine Aluminiumschweißraupe mit einem regelmäßigen Welligkeitsmuster erhalten wird.

25. MAG- oder MIG-Lichtbogenschweißverfahren nach Anspruch 23, wobei die Lichtbogenlängendifferenz Le auf einen Wert eingestellt wird, der oberhalb einer Linie liegt, welche den ersten und dritten Punkt verbindet, wobei die Schaltfrequenz F innerhalb eines Bereiches von 0.5 Hz - 15 Hz liegt und Stumpf- bzw. Stoßschweißen mit einem maximalen Spalt bzw. Fuge von 1.5 mm mit einer Schweißgeschwindigkeit von 100 cm/min. durchgeführt wird, wobei die Schweißgeschwindigkeit von 100 cm/min. - 30 cm/min. abnimmt, wenn die maximale Fuge von 1.5 mm auf 3 mm ansteigt.

26. MAG- oder MIG-Lichtbogenschweißverfahren nach Anspruch 23, wobei die Lichtbogenlängendifferenz Le auf einen Wert eingestellt wird, der oberhalb einer Linie liegt, welche einen ersten und dritten Punkt verbindet, wobei die Schaltfrequenz F innerhalb eines Bereiches von 0.5 Hz - 15 Hz liegt und Überlappkehlnahtschweißen (engl: lap fillet welding) mit einer maximalen Überlappfuge von 2 mm mit einer Schweißgeschwindigkeit von 100 cm/min. ausgeführt wird, wobei die Schweißgeschwindigkeit von 100 cm/min. auf 30 cm/min. abnimmt, wenn die maximale Überlappfuge von 2 mm auf 3 mm ansteigt.

27. MAG- oder MIG-Lichtbogenschweißverfahren nach Anspruch 23, wobei die Lichtbogenlängendifferenz Le auf einen Wert eingestellt wird, der oberhalb einer Linie liegt, die den ersten und dritten Punkt verbindet, wobei die Schaltfrequenz F innerhalb eines Bereiches von 0.5 Hz - 15 Hz liegt und Aluminiumschweißen ausgeführt wird, wodurch ein resultierendes geschmolzenes Aluminiumschweißbad vermischt wird, so daß eine Schweißraupe mit einer feinen Körnung hergestellt wird, wodurch eine Verfestigungsrißbildung der Schweißraupe reduziert wird.

**28.** MAG- oder MIG-Lichtbogenschweißverfahren nach Anspruch 23, wobei die Schaltfrequenz F in einem Bereich 0.5 Hz - 15 Hz liegt, die Lichtbogenlängendifferenz Le auf einen Wert eingestellt wird, der oberhalb einer Linie, die den ersten und den dritten Punkt verbindet, und Schweißen von rostfreiem Stahl bzw. rostfreies-Stahlschweißen ausgeführt wird, wodurch ein resultierendes rostfreies Stahlschweißbad vermischt wird, so daß eine Schweißraupe mit einer feinen Körnung hergestellt wird und dadurch eine Verfestigungsrißbildung gesenkt und eine zerstörungsfreie Prüfgenauigkeit der Schweißraupe gesteigert wird.

**29.** MAG- oder MIG-Lichtbogenschweißverfahren nach Anspruch 23, wobei die Schaltfrequenz F innerhalb eines Bereiches von 0.5 Hz - 25 Hz liegt, wobei eine Lichtbogenlängendifferenz Le auf einen Wert eingestellt wird, der oberhalb einer Linie liegt, welche den ersten und dritten Punkt verbindet, und Aluminiumschweißen ausgeführt wird, wodurch ein geschmolzenes Aluminiumschweißbad gerührt wird, um ein Auftreten einer Porosität in einer resultierenden Schweißraupe zu verhindern.

**30.** Impuls- bzw. Puls-MAG- oder -MIG-Lichtbogenschweißvorrichtung zum Ausführen eines Lichtbogenschweißens durch Bereitstellen bzw. Zuführen eines Impuls- bzw. Pulsschweißstroms, während dieser zwischen einer ersten Pulsstromgruppe (P1) zur Erzeugung einer kurzen Lichtbogenlänge und einer zweiten Pulsstromgruppe (P2) zum Erzeugen einer langen Lichtbogenlänge geschaltet bzw. umgeschaltet wird, mit:

einem Lichtbogenspannungdetektionsschaltkreis (VD) zur Detektion eines Lichtbogenspannungswertes und Ausgeben eines Lichtbogenspannungdetektionssignals (Vd), welches diesem entspricht;
ein Lichtbogeneinstellschaltkreis (VS) zum Einstellen eines Wertes der Lichtbogenspannung gemäß den Schweißbedinungen und zum Ausgeben eines Lichtbogenspannungeinstellsignals (Vs), welches diesem entspricht bzw. zugeordnet ist;
einem Vergleichsschaltkreis (CM2) zum Vergleichen des Lichtbogenspannungdetektionssignals (Vd) und des Lichtbogenspannungeinstellsignals (Vs) und zum Ausgeben einer Differenz zwischen den zwei Signalen als ein Lichtbogenspannungsteuer- bzw. -regelsignal;
einem Impuls- bzw. Pulszustandssteuer- bzw. -regelsignalerzeugungsschaltkreis (IPB) zum Erzeugen eines Pulszustandsteuer- bzw. -regeldifferenzsignals (Ipb) zum Steuern bzw. Regeln eines vorgewählten Zustandes unter vier Impuls- bzw. Pulssteuer- bzw. -regelzuständen, welche mit der ersten und zweiten Pulsstromgruppe (P1, P2) gemein sind, gemäß dem Lichtbogenspannung-steuer- bzw. regelsignal (Cm2), wobei die vier Pulssteuer- bzw. regelzustände eine Pulsfrequenz, Pulsbreite, Basisstromstärke und Spitzenstromstärke umfassen;
einem ersten Pulsstromeinstellschaltkreis (IS1) zum Einstellen der verbleibenden drei Pulssteuer- bzw. -regelzustände für die erste Pulsstromgruppe (P1), die nicht vorgewählt wurden, und zum Ausgeben von ersten Pulsstromgruppe- (P1) -einstellsignalen, welche den verbleibenden Pulsregel- bzw. -steuerzuständen zugeordnet sind;
einem zweiten Pulsstromeinstellschaltkreis (IS2) zum Einstellen der verbleibenden drei Pulssteuer- bzw. -regelungszuständen für die zweite Pulsstromgruppe (P2), die nicht vorgewählt wurden, und zum Ausgeben von zweiten Pulsstromgruppen- (P2) -einstellsignalen, welche Einstellsignale beinhalten, die den verbleibenden Pulssteuer- bzw. -regelungszuständen zugeordnet sind; einen Umschalt- bzw. Schaltschaltkreis (HL) zum Erzeugen eines Umschalt- bzw. Schaltsignals (H1) zum wahlweisen Schalten bzw. Umschalten des ersten und zweiten Pulsstromsteuerschaltkreises (IS1), (IS2) mit einer Frequenz in einem Bereich von 0.5 Hz - 25 Hz;
einem Pulsfrequenzsignalerzeugungsschaltkreis zum Erzeugen eines Pulsfrequenzsignals (Vf1, Vf2) als Antwort auf entweder das Pulsfrequenzsteuer- bzw. regelreferenzsignal (Fp3), wenn es eine Ausgabe des Pulszustandsteuer- bzw. -regelsignalerzeugungsschaltkreises (IPB) gibt, oder im anderen Falle die Pulsfrequenzeinstellsignals- (Fp) - ausgabe von jedem des ersten und zweiten Pulsstromeinstellschaltkreises (IS1), (IS2), wenn das Pulsfrequenzsteuer- bzw. -regelungssignal (Vf3) nicht von dem Pulszustandsteuer- bzw. -regelsignalausgabeschaltkreis (IPB) ausgegeben wird;
einem Pulsfrequenz- und Breitesignalerzeugungsschaltkreis (DF(3)) zur Ausgabe eines Pulsfrequenz- und Breitensignals (Df3) als Antwort auf das Pulsfrequenzsteuer- bzw. -regelsignal (Vf3) und Pulsbreiteeinstellsignal (Tp), wenn das Pulsfrequenzsteuer- bzw. -regelreferenzsignal (Fp3) von dem Pulszustandssteuer- bzw. -regelsignalerzeugungsschaltkreis (IPB) ausgegeben wird, als Antwort auf das Pulsfrequenzsignal (Vf1, Vf2) und Pulsbreitesteuer- bzw. -regelsignal (Tp3), wenn das Pulsbreitesteuer- bzw. -regelsignal (Tp3) von dem Pulszustandsteuer- bzw. -regelsignalerzeugungsschaltkreis (IPB) ausgegeben wird, oder als Antwort auf das Pulsfrequenzsignal (Vf1, Vf2) und Pulsbreiteeinstellsignal (Tp), wenn das Spitzenstromsteuer- bzw. -regelsignal (Ip3) oder Grund- bzw. Basisstromsteuer- bzw. -regelsignal (Ib3) von dem Pulszustandsteuer- bzw. -regelsignalerzeugungsschaltkreis (IPB) ausgegeben wird; einem Pulsstromsteuer- bzw. -regelschaltkreis zum wahlweisen Ausgeben eines ersten Pulssteuer- bzw. -regelsignals (Pf1) und zweiten Pulssteuer- bzw. -regelsignals (Pf2) als Antwort auf

das Pulsfrequenz- und Breitensignal (Df3), das Spitzenstromeinstellsignal (Ip) und Basisstromeinstellsignal (Ib), wenn das Pulsfrequenzsteuer- bzw. regelreferenzsignal (Fp3) oder das Pulsbreitesteuer- bzw. -regelsignal (Tp3) von dem Pulszustandsteuer- bzw. -regelsignalerzeugungsschaltkreis ausgegeben wird,

das Pulsfrequenz- und Breitesignal (Df3), das Spitzenstromsteuer- bzw. regelsignal (Ip3) und Basisstromeinstellsignal (Ib), wenn das Spitzenstromsteuer- bzw. -regelsignal (Ip3) von dem Pulszustandsteuer- bzw. -regelsignalerzeugungsschaltkreis (IPB) ausgegeben wird, oder

das Pulsfrequenz- und Breitesignal (Df3), das Spitzenstromeinstellsignal (Ip) und Basisstromsteuer- bzw. -regelsignal (Ib3), wenn das Basisstromsteuer- bzw. -regelsignal (Ib3) von dem Pulszustandsteuer- bzw. -regelsignalerzeugungsschaltkreis (IPB) ausgegeben wird; und

einem Schweißstrom- bzw. -leistungsquellesteuer- bzw. -regelschaltkreis (PS) zum Ausgeben der ersten Pulsstromgruppe (P1), wenn das erste Pulssteuer- bzw. -regelsignal (Pf1) von dem Pulsstromsteuer- bzw. -regelsignal ausgegeben wird, und der zweiten Pulsstromgruppe (P2), wenn das zweite Pulssteuer- bzw. -regelsignal (Pf2) von dem Pulsstromsteuer- bzw. -regelschaltkreis ausgegeben wird.

31. Puls-MAG- oder -MIG-Lichtbogenschweißvorrichtung nach Anspruch 30, wobei der Pulszustandsteuer- bzw. -regelsignalerzeugungsschaltkreis (IPB) ein Pulsfrequenzsteuer- bzw. -regelreferenzsignal (Fp3) zum Steuern bzw. Regeln der Pulsfrequenz erzeugt, die mit der ersten und zweiten Pulsstromgruppe (P1, P2) gemein ist, als das Pulszustandsteuer- bzw. -regelsignal (Ipb) und der Pulsfrequenzsignal- (Vf1, Vf2) -erzeugungsschaltkreis ein Pulsfrequenzsignal (Vf1, Vf2) als Antwort auf das Pulsfrequenzsteuer- bzw. -regelreferenzsignal (Fp3) erzeugt, das darin eingegeben wird.

32. Puls-MAG- oder -MIG-Lichtbogenschweißvorrichtung nach Anspruch 30, wobei der Pulszustandsteuer- bzw. -regelsignalerzeugungsschaltkreis (IPB) ein Pulsbreitesteuer- bzw. -regelsignal (Tp3) erzeugt zum Steuern bzw. Regeln der Pulsbreite, die mit der ersten und zweiten Pulsstromgruppe (P1), (P2) gemein ist, als das Pulszustandsteuer- bzw. -regelsignal (Ipb) und der Pulsfrequenz- und Breitesignalerzeugungsschaltkreis (Df3) gibt ein Pulsfrequenz- und Breitesignal (DF(3)) als Antwort auf das Pulsfrequenzsignal (Vf1, Vf2) von dem Pulsfrequenzsignal- (Vf1, Vf2) -erzeugungsschaltkreis und das Pulsbreitesteuer- bzw. -regelsignal (Pp3) von dem Pulszustandsteuer- bzw. - regelsignalerzeugungssschaltkreis (IPB) ausgibt.

33. Puls-MAG- oder -MIG-Lichtbogenschweißvorrichtung nach Anspruch 30, wobei der Pulszustandsteuer- bzw. -regelsignalerzeugungsschaltkreis (IPB) ein Spitzenstromstärkesteuer- bzw. -regelsignal zum Steuern bzw. Regeln der Spitzenstromstärke, die mit der ersten und zweiten Pulsstromgruppe (P1), (P2) gemein ist, als das Pulszustandsteuer- bzw. -regelsignal (Ipb) erzeugt.

34. Puls-MAG- oder MIG-Lichtbogenschweißvorrichtung nach Anspruch 30, wobei der Pulszustandsteuer- bzw. -regelsignalerzeugungsschaltkreis (IPB) ein Basisstromstärkesteuer- bzw. -regelsignal zum Steuern bzw. Regeln des Basisstroms, der mit der ersten und zweiten Pulsstromgruppe (P1), (P2) gemein ist, als das Pulszustandsteuer- bzw. -regelsignal (Ipb) erzeugt.

35. Puls-MAG- oder MIG-Lichtbogenschweißvorrichtung zum Ausführen eines Lichtbogenschweißens durch Anlegen bzw. Zuführen eines Pulsschweißstromes, welcher zwischen einer ersten Pulsstromgruppe (P1) zur Erzeugung einer kurzen Lichtbogenlänge und einer zweiten Pulsstromgruppe (P2) zum Erzeugen einer langen Lichtbogenlänge schaltet bzw. geschaltet wird, mit: einem Lichtbogenspannungsdetektionsschaltkreis (VD) zum Detektieren eines Lichtbogenspannungswertes und Ausgeben eines diesem entsprechenden Lichtbogenspannungdetektionssignals (Vd);

einem ersten Lichtbogenspannungseinstellschaltkreis (VS1) zum Einstellen eines Wertes einer Lichtbogenspannung gemäß Schweißzuständen und Ausgeben eines diesem entsprechenden ersten Lichtbogenspannungseinstellsignals (Vs1);

einem zweiten Lichtbogenspannungseinstellschaltkreis (VS2) zum Einstellen eines Wertes einer Lichtbogenspannung gemäß Schweißzuständen und Ausgeben eines diesem entsprechenden Lichtbogenspannungeinstellsignals (Vs2);

einem Vergleichsschaltkreis (CM2) zum Vergleichen des Lichtbogenspannungdetektionssignals und Lichtbogenspannungeinstellsignals (Vs) und Ausgeben einer Differenz zwischen den zwei Signalen als ein Lichtbogenspannungsteuer- bzw. -regelsignal (Cm2);

einem Pulszustandsteuer- bzw. -regelsignalerzeugungsschaltkreis (IPB) zum Erzeugen eines Pulszustandsteuer- bzw. -regelsignals (Ipb) zum Steuern bzw. Regeln eines vorgewählten Pulssteuer- bzw. -regelzustands unter vier Pulssteuer- bzw. -regelzuständen, welche der ersten und zweiten Pulsstromgruppe (P1), (P2) gemein sind, in Übereinstimmung mit dem Lichtbogenspannungsteuer- bzw. -regelsignal (Cm2), wobei die vier Pulssteuer- bzw. Regelzustände, die Pulsfrequenz, Pulsbreite, Basisstromstärke und Spitzenstromstärke umfassen;

einem Pulsstromeinstellschaltkreis (IS) zum Einstellen von verbleibenden drei Pulssteuer- bzw. -regelzuständen für die erste Pulsstromgruppe (P1) und die zweite Pulsstromgruppe (P2), welche nicht vorgewählt wurden, und zum Ausgeben von Pulsstromgruppeeinstellsignalen, welche Einstellsignale beinhalten, welche den verbleibenden drei Pulssteuer- bzw. -regelzuständen entsprechen, die sich von dem Pulszustandsteuer- bzw. -regelsignal (Ipb) unterscheiden;

einem Umschalt- bzw. Schaltschaltkreis (HL) zum Erzeugen eines Umschalt- bzw. Schaltsignals (H1) zum wahlweisen Umschalten bzw. Schalten des ersten und zweiten Pulsstromeinstellschaltkreises (IS1), (IS2) mit einer Frequenz zwischen 0.5 Hz - 25 Hz;

einem Pulsfrequenzsignal- (Vf1, Vf2) -erzeugungsschaltkreis zum Erzeugen eines Pulsfrequenzsignals (Vf1, Vf2) als Antwort auf entweder das Pulsfrequenzsteuer- bzw. regelreferenzsignal (Fp3), wenn dieses von dem Pulszustandsteuer- bzw. regelsignalerzeugungsschaltkreis (IPB) ausgegeben wird, oder das Pulsfrequenzeinstellsignal (Fp), welches von dem Pulsstromeinstellschaltkreis (IS) ausgegeben wird, wenn nicht von dem Pulszustandsteuer- bzw. -regelsignalerzeugungsschaltkreis (IPB) ausgegeben;

einem Pulsfrequenz- und Breitesignalerzeugungsschaltkreis (DF(3)) zum Ausgeben eines Pulsfrequenz- und Breitesignals (Df3) als Antwort auf das Pulsfrequenzsteuer- bzw. -regelsignal (Vf3) und Pulsbreiteeinstellsignal (Tp), wenn das Pulsfrequenzsteuer- bzw. -regelreferenzsignal (Fp3) von dem Pulszustandsteuer- bzw. regelsignalerzeugungsschaltkreis (IPB) ausgegeben wird, oder

des Pulsfrequenzsignals (Vf1, Vf2) und Pulsbreitesteuer- bzw. -regelsignals (Tp3), wenn das Pulsbreitesteuer- bzw. -regelsignal (Tp3) von dem Pulszustandsteuer- bzw. -regelsignalerzeugungsschaltkreis (IPB) ausgegeben wird, oder

des Pulsfrequenzsignals (Vf1, Vf2) und Pulsbreiteeinstellsignals (Tp), wenn das Spitzenstromsteuer- bzw. -regelsignal (Ip3) oder Basisstromsteuer- bzw. regelsignal (Ib3) von dem Pulszustandsteuer- bzw. regelsignalerzeugungsschaltkreis (IPB) ausgegeben wird;

einem Pulsstromsteuer- bzw. regelschaltkreis zum wahlweisen Ausgeben eines ersten Pulssteuer- bzw. -regelsignals (Pf1) und zweiten Pulssteuer- bzw. -regelsignals (Pf2) als Antwort auf

das Pulsfrequenz- und Breitesignal (Df3), das Spitzenstromeinstellsignal (Ip) und Basisstromeinstellsignal (Ib), wenn das Pulsfrequenzsteuer- bzw. regelreferenzsignal (Fp3) oder das Pulsbreitesteuer- bzw. -regelsignal (Tp3) von dem Pulszustandsteuer- bzw. -regelsignalerzeugungsschaltkreis (IPB) ausgegeben wird, oder

das Pulsfrequenz- und Breitesignal (Df3), das Spitzenstromsteuer- bzw. regelsignal (Ip3) und Basisstromeinstellsignal (Ib), wenn das Spitzenstromsteuer- bzw. -regelsignal (Ip3) von dem Pulszustandsteuer- bzw. -regelsignalerzeugungsschaltkreis (IPB) ausgegeben wird, oder

das Pulsfrequenz- und Breitesignal (Df3), das Spitzenstromeinstellsignal (Ip) und Basisstromsteuer- bzw. -regelsignal (Ib3), wenn das Basisstromsteuer- bzw. -regelsignal (Ib3) von dem Pulszustandsteuer- bzw. -regelsignalerzeugungsschaltkreis ausgegeben wird; und

ein Schweißstrom- bzw. Schweißleistungsquellensteuer- bzw. -regelschaltkreis (PS) zum Ausgeben der ersten Pulsstromgruppe (P1), wenn das erste Pulssteuer- bzw. regelsignal (Pf1) von dem Pulsstromsteuer- bzw. -regelschaltkreis ausgegeben wird, und der zweiten Pulsstromgruppe (P2), wenn das zweite Pulssteuer- bzw. -regelsignal (Pf2) von dem Pulsstromsteuer- bzw. regelschaltkreis ausgegeben wird.

36. Puls-MAG- oder MIG-Lichtbogenschweißvorrichtung nach Anspruch 35, wobei der Pulsstromeinstellschaltkreis (IS) umfaßt:

einen ersten Pulsstromeinstellsschaltkreis (IS1) zum Einstellen von verbleibenden drei Pulssteuer- bzw. -regelzuständen für die erste Pulsstromgruppe (P1), welche nicht vorgewählt wurden, und zum Ausgeben von ersten Pulsstromgruppe- (P1) -einstellsignalen, welche Einstellsignale beinhalten, die den verbleibenden drei Pulssteuer- bzw. regelzuständen zugeordnet sind, die verschieden von dem Pulszustandsteuer- bzw. -regelsignal (Ipb) sind;

einen zweiten Pulsstromeinstellschaltkreis (IS2) zum Einstellen von drei verbleibenden Pulssteuer- bzw. -regelzuständen für die zweite Pulsstromgruppe (P2), die nicht vorgewählt wurden, und zum Ausgeben von zweiten Pulsstromgruppe- (P2) -einstellsignalen, welche Einstellsignale beinhalten, die den verbleibenden drei Pulssteuer- bzw. -regelzuständen zugeordnet sind, die von dem Pulszustandsteuer- bzw. -regelsignal (Ipb) verschieden sind; und wobei

der Pulsfrequenz- und Breitesignalerzeugungsschaltkreis (DF(3)) erzeugt ein Pulsfrequenz- und Breitesignal (Df3) als Antwort auf das Pulsfrequenzsteuer- bzw. -regelsignal (Vf3) und Pulsbreiteeinstellsignal (Tp), wenn das Pulsfrequenzsteuer- bzw. -regelreferenzsignal (Fp3) von dem Pulszustandsteuer- bzw. -regelsignalerzeugungsschaltkreis (IPB) ausgegeben wird, oder das Pulsfrequenzsignal (Vf1, Vf2) und Pulsbreitesteuer- bzw. regelsignal (Tp3), wenn das Pulsbreitesteuer- bzw. -regelsignal (Tp3) von dem Pulszustandsteuer- bzw. -regelsignalerzeugungsschaltkreis (IPB) ausgegeben wird, oder das Pulsfrequenzsignal (Vf1, Vf2) und Pulsbreiteeinstellsignal (Tp), wenn das Spitzenstromsteuer- bzw. -regelsignal (Ip3) oder Basisstromsteuer- bzw. regelsignal (Ib3) von dem Pulszustandsteuer- bzw. regelsignalerzeugungsschaltkreis (IPB) ausgegeben wird; und wobei

der Umschalt- bzw. Schaltschaltkreis (HL) ein Umschalt- bzw. Schaltsignal (H1) zum wahlweisen Schalten bzw. Umschalten zwischen dem ersten und zweiten Lichtbogenspannungseinstellschaltkreis (VS1, VS2) und zwischen dem ersten und zweiten Pulsstromeinstellschaltkreis (IS1, IS2) ausgibt.

37. Puls-MAG- oder -MIG-Lichtbogenschweißvorrichtung nach Anspruch 35, wobei der Pulszustandsteuer- bzw. - regelsignalerzeugungsschaltkreis (IPB) ein Pulsfrequenzsteuer- bzw. -regelreferenzsignal (Fp3) zum Steuern bzw. Regeln der Pulsfrequenz, die der ersten und zweiten Pulsstromgruppe (P1), (P2) gemein ist, als das Pulszustandsteuer- bzw. -regelsignal (Ipb) erzeugt und der Pulsfrequenzsignal- (Vf1, Vf2) -erzeugungsschaltkreis ein Pulsfrequenzsignal (Vf1, Vf2) als Antwort auf das darin eingeführte Pulsfrequenzsteuer- bzw. - regelreferenzsignal (Fp3) erzeugt.

38. Puls-MAG- oder -MIG-Lichtbogenschweißvorrichtung nach Anspruch 35, wobei der Pulszustandsteuer- bzw. regelsignalerzeugungsschaltkreis (IPB) ein Pulsbreitesteuer- bzw. -regelsignal (Tp3) zum Steuern bzw. Regeln der Pulsbreite, welche der ersten und zweiten Pulsstromgruppe (P1), (P2) gemein ist, als das Pulszustandsteuer- bzw. -regelsignal (Ipb) erzeugt und der Pulsfrequenz- und Breitesignalerzeugungsschaltkreis (DF(3)), ein Pulsfrequenz- und Breitesignal (Df3) als Antwort auf das Pulsfrequenzsignal (Vf1, Vf2) von dem Pulsfrequenzsignal- (Vf1, Vf2) - erzeugungsschaltkreis und in Antwort auf das Pulsbreitesteuer- bzw. -regelsignal (Tp3) von dem Pulszustandsteuer- bzw. - regelsignalerzeugungsschaltkreis (IPB) ausgibt.

39. Puls-MAG- oder -MIG-Lichtbogenschweißvorrichtung nach Anspruch 35, wobei der Pulszustandsteuer- bzw. regelsignalerzeugungsschaltkreis (IPB) ein Spitzenstromstärkesteuer- bzw. regelsignal zum Steuern bzw. Regeln der Spitzenstromstärke, welche der ersten und zweiten Pulsstromgruppe (P1), (P2) gemein ist, als das Pulszustandsteuer- bzw. -regelsignal (Ipb) erzeugt.

40. Puls-MAG- oder -MIG-Lichtbogenschweißvorrichtung nach Anspruch 35, wobei der Pulszustandsteuer- bzw. - regelsignalerzeugungsschaltkreis (IPB) ein Basisstromstärkesteuer- bzw. regelsignal zum Steuern bzw. Regeln des Basisstroms, welcher der ersten und zweiten Pulsstromgruppe (P1), (P2) gemein ist, als das Pulszustandsteuer- bzw. -regelsignal (Ipb) erzeugt.

41. Puls-MAG- oder -MIG-Lichtbogenschweißvorrichtung nach Anspruch 35 mit einem ersten Drahtzuführrateeinstellschaltkreis bzw. Drahtzuführgeschwindigkeiteinstellschaltkreis (IM1) zum Ausgeben eines ersten Drahtzuführrateeinstellsignals bzw. Drahtzuführgeschwindigkeiteinstellsignals (Im1) und ein zweiter Drahtzuführrateeinstellschaltkreis bzw. Drahtzuführgeschwindigkeiteinstellschaltkreis (IM2) zum Ausgeben eines zweiten Drahtzuführrateeinstellsignals bzw. Drahtzuführgeschwindigkeiteinstellsignals (Im2) und einen Drahtzuführrateumschalt- bzw. -schaltschaltkreis bzw. Drahtzuführgeschwindigkeitumschaltschaltkreis (SW7), welcher einem Drahtzuführratesteuer- bzw. -regelschaltkreis bzw. Drahtzuführgeschwindigkeitsteuer- bzw. -regelschaltkreis (WC) ein Drahtzuführratesignal bzw. ein Drahtzuführgeschwindigkeitssignal (S7) sendet, welches durch Umschalten bzw. Schalten zwischen dem ersten Drahtzuführrateeinstellsignal (Im1) und zweiten Drahtzuführrateeinstellsignal (Im2) erhalten wird.

**Revendications**

1. Procédé de soudage à l'arc MAG ou MIG pour effectuer un transfert de métal fondu en changeant une longueur d'arc tout en alimentant en fil fusible à une vitesse d'alimentation en fil fusible prédéterminée et en supprimant un changement de force de l'arc, ledit procédé comprenant les étapes de:

   (a) changer la vitesse de fusion du fil fusible d'appoint en commutant entre un premier courant de soudage ayant une valeur I1 et un deuxième courant de soudage ayant une valeur I2 qui est plus grande que ladite première valeur de courant de soudage I1 à une fréquence de commutation F maintenue dans une plage d'environ 0,5 Hz à environ 25 Hz;
   (b) maintenir ledit arc à une première longueur Lt ayant une valeur supérieure à 2 mm lorsque ledit premier courant de soudage est fourni et à une deuxième longueur Lr ayant une valeur supérieure à ladite première longueur d'arc Lt lorsque ledit deuxième courant de soudage est fourni; et

(c) maintenir un rapport entre ladite deuxième valeur de courant de soudage I2 et ladite première valeur de courant de soudage I1 d'environ 1,03 à environ 1,20.

2. Procédé de soudage à l'arc MAG ou MIG suivant la revendication 1, dans lequel ladite première valeur de courant de soudage I1 et ladite deuxième valeur de courant de soudage I2 sont réglées de telle façon qu'une tension différentielle ΔVa entre une première tension d'arc Va1 pour ladite première longueur d'arc Lt et une deuxième tension d'arc Va2 pour ladite deuxième longueur d'arc Lr soit maintenue dans une plage d'environ 0,3 V à environ 4,0 V.

3. Procédé de soudage à l'arc MAG ou MIG suivant la revendication 2, dans lequel le fil est amené à une vitesse d'alimentation en fil prédéterminée et ledit rapport entre ladite deuxième valeur de courant de soudage I2 et ladite première valeur de courant de soudage I1 est de 1,03 à 1,10.

4. Procédé de soudage à l'arc MAG ou MIG suivant la revendication 2, dans lequel ladite fréquence de commutation F augmente lorsque la vitesse de soudage WS augmente.

5. Procédé de soudage à l'arc MAG ou MIG suivant la revendication 2, dans lequel on commute un rapport de service $Ds = T1/(T1 + T2)$ entre un temps actif du premier courant de soudage T1 et un temps actif du deuxième courant de soudage T2.

6. Procédé de soudage à l'arc MAG ou MIG suivant la revendication 5, dans lequel ledit rapport de service Ds varie avec la variation d'un signal de détection de tension d'arc Vd.

7. Procédé de soudage à l'arc MAG ou MIG suivant la revendication 1, dans lequel ladite première valeur de courant de soudage I1 est réglée à une valeur capable de générer un premier transfert par pulvérisation avec un court-circuit momentané pour ladite première longueur d'arc Lt et ladite deuxième valeur de courant de soudage I2 est réglée à une valeur capable de générer un deuxième transfert par pulvérisation sans court-circuit momentané pour ladite deuxième longueur d'arc Lr.

8. Procédé de soudage à l'arc MAG suivant la revendication 1, dans lequel ledit premier courant de soudage I1 est un courant pulsé ayant une valeur de courant pulsé, une largeur d'impulsion, une fréquence d'impulsion et une valeur de courant de base, ladite valeur de courant pulsé étant réglée à une valeur capable de générer un premier transfert par pulvérisation avec un court-circuit momentané pour ladite première longueur d'arc Lt et ladite deuxième valeur de courant de soudage I2 étant réglée à une valeur capable de générer un deuxième transfert par pulvérisation sans court-circuit momentané pour ladite deuxième longueur d'arc Lr.

9. Procédé de soudage à l'arc MAG ou MIG suivant la revendication 8, dans lequel les valeurs de courant pulsé, la durée d'impulsion, la fréquence d'impulsion et le courant de base desdits premier et deuxième courants de soudage sont chacun réglés de façon à générer des premier et deuxième taux de transfert respectifs de métal fondu dudit fil fusible vers un matériau à souder, le déplacement des gouttes de métal fondu du fil fusible vers un matériau à souder étant, pour ledit premier taux de transfert, de l'ordre d'une goutte de métal pour une pluralité d'impulsions de courant de manière synchronisée avec le courant de soudage, et le déplacement des gouttes de métal fondu étant, pour ledit deuxième taux de transfert, de l'ordre d'une goutte de métal pour une impulsion de courant de manière synchronisée avec le courant de soudage.

10. Procédé de soudage à l'arc MAG ou MIG suivant la revendication 1, dans lequel ledit premier courant de soudage est un premier groupe de courant pulsé comprenant une série de premières impulsions de courant et ayant des premiers paramètres de courant pulsé incluant une première valeur de courant pulsé, une première largeur de courant pulsé, une première fréquence de courant pulsé et une première valeur de courant de base, lesdits premiers paramètres de courant pulsé étant réglés pour obtenir ladite première longueur d'arc, et ledit deuxième courant de soudage est un deuxième groupe de courant pulsé comprenant une série de deuxièmes impulsions de courant et ayant des deuxièmes paramètres de courant pulsé incluant une deuxième valeur de courant pulsé, une deuxième largeur de courant pulsé, une deuxième fréquence de courant pulsé et une deuxième valeur de courant de base, lesdits deuxièmes paramètres de courant pulsé étant réglés pour obtenir ladite deuxième longueur d'arc.

11. Procédé de soudage à l'arc MAG ou MIG suivant la revendication 10, dans lequel chacun desdits paramètres du premier groupe de courant pulsé est réglé afin de générer un premier transfert de métal fondu dudit fil fusible selon un mode dans lequel des gouttes de métal se déplacent, tout en générant un léger court-circuit, du fil fusible vers un matériau à souder selon un mode amenant une goutte de métal pour une pluralité d'impulsions de courant de manière synchronisée avec lesdites premières impulsions de courant, tandis qu'au moins un desdits paramètres du deuxième groupe de courant pulsé est réglé différemment de celui du premier groupe de courant pulsé afin de générer un deuxième transfert de métal fondu dudit fil fusible selon un mode amenant une goutte de métal pour une impulsion de courant de manière synchronisée avec lesdites deuxièmes impulsions de courant.

12. Procédé de soudage à l'arc MAG ou MIG suivant la revendication 10, dans lequel chacun desdits paramètres du premier groupe de courant pulsé est réglé afin de générer un premier transfert de métal fondu dudit fil fusible selon un mode dans lequel chaque goutte de métal fondu se déplace, tout en générant un léger court-circuit, du fil fusible vers un matériau à souder selon un mode amenant une goutte de métal pour une impulsion de courant de manière synchronisée avec les impulsions dudit premier groupe de courant pulsé, tandis qu'au moins un desdits paramètres du deuxième groupe de courant pulsé est réglé différemment de celui dudit premier groupe de courant pulsé afin de générer un deuxième mode de transfert de métal fondu dans lequel chaque goutte de métal fondu se déplace du fil fusible vers un matériau à souder selon un mode dans lequel une impulsion de courant amène une pluralité de gouttes de métal fondu ou selon un mode dans lequel une impulsion de courant amène une goutte de métal fondu de manière synchronisée avec plus d'un courant pulsé.

13. Procédé de soudage à l'arc MAG ou MIG suivant la revendication 10, dans lequel chacun desdits paramètres du premier groupe de courant pulsé est réglé afin de générer un premier transfert de métal fondu dudit fil fusible vers un matériau à souder selon un mode dans lequel une pluralité d'impulsions de courant amène une goutte de métal fondu de manière synchronisée avec les premières impulsions de courant, tandis qu'au moins un desdits paramètres du deuxième groupe de courant pulsé est réglé différemment de celui dudit premier groupe de courant pulsé afin de générer un deuxième transfert de métal fondu selon un mode dans lequel chaque impulsion de courant amène au moins une goutte de métal fondu ou selon un mode dans lequel chaque impulsion de courant amène une pluralité de gouttes de métal fondu de manière synchronisée avec lesdites deuxièmes impulsions de courant.

14. Procédé de soudage à l'arc MAG ou MIG suivant la revendication 10, dans lequel lesdits premiers paramètres de courant pulsé sont réglés afin de générer un premier transfert de métal fondu dudit fil fusible vers un matériau à souder à un premier taux de transfert d'une goutte de métal fondu toutes les au moins une premières impulsions de courant, ledit premier transfert de métal fondu étant synchronisé avec lesdites premières impulsions de courant, et lesdits deuxièmes paramètres de courant pulsé sont réglés afin de générer un deuxième transfert de métal fondu dudit fil fusible vers ledit matériau à souder à un deuxième taux de transfert d'au moins une goutte de métal fondu toutes les au moins une deuxièmes impulsions de courant, ledit deuxième transfert de métal fondu étant synchronisé avec lesdites deuxièmes impulsions de courant.

15. Procédé de soudage à l'arc MAG ou MIG suivant la revendication 10, comprenant en outre la commutation d'au moins un desdits paramètres de courant pulsé à une fréquence de commutation F, le changement des première et deuxième longueurs d'arc Lt, Lr en activant les groupes de courant pulsé respectifs, la génération d'un signal de commande de tension d'arc Cm2 à partir de la différence entre un signal de réglage de tension d'arc Vs1 et un signal de détection de tension Vd, le changement de la fréquence d'impulsion f3, de la durée d'impulsion TP3, de la valeur du courant de base IB3 ou de la valeur de courant pulsé IP3 à l'aide dudit signal de commande de tension d'arc Cm2, et le maintien desdites première et deuxième longueurs d'arc en contrôlant ladite vitesse de fusion du fil.

16. Procédé de soudage à l'arc MAG ou MIG suivant la revendication 10, comprenant en outre la commutation de premiers signaux de réglage de la tension d'arc Vs1 et Vs2 à une fréquence de commutation F, la génération d'un signal de commande de tension d'arc Cm2 à partir de la différence entre le signal de réglage de tension d'arc Vs1 et un signal de détection de tension Vd, l'activation du premier groupe de courant pulsé en contrôlant une fréquence d'impulsion f3, une durée d'impulsion TP3, une valeur de courant de base IB3 ou une valeur de courant pulsé IP3 à l'aide dudit signal de commande de tension d'arc Cm2, et l'activation du deuxième groupe de courant pulsé en contrôlant une fréquence d'impulsion f32, une durée d'impulsion TP32, une valeur de courant de base IB32 ou une valeur de courant pulsé IP32 à l'aide dudit signal de commande de tension d'arc Cm2 obtenu à partir de la différence entre le signal de réglage de tension d'arc Vs2 et un signal de détection de tension Vd.

17. Procédé de soudage à l'arc MAG ou MIG suivant la revendication 16, comprenant la mémorisation de la deuxième valeur de réglage de tension d'arc Vs2 correspondant à la première valeur de réglage de tension d'arc Vs1, la lecture de la deuxième valeur de réglage de tension d'arc Vs2 correspondant à la première valeur prédéterminée de réglage de tension d'arc Vs1 et l'activation des premier et deuxième groupes de courant pulsé.

18. Procédé de soudage à l'arc MAG ou MIG suivant la revendication 16, comprenant en outre la mémorisation de la première valeur de réglage de tension d'arc Vs1 correspondant à chacune des valeurs d'une pluralité de valeurs de réglage de la vitesse d'alimentation en fil Wf, la mémorisation de la deuxième valeur de réglage de tension d'arc Vs2 correspondant à la première valeur de réglage de tension d'arc Vs1, la lecture de la première valeur de réglage de tension d'arc Vs1 correspondant à chacune des valeurs de réglage de la vitesse d'alimentation en fil Wf et de la deuxième valeur de réglage de tension d'arc Vs2 correspondant à la première valeur prédéterminée de réglage de tension d'arc Vs1 et l'activation des premier et deuxième groupes de courant pulsé.

19. Procédé de soudage à l'arc MAG ou MIG suivant la revendication 1, dans lequel on commute ladite vitesse d'alimentation en fil entre des première et deuxième vitesses à une fréquence située dans une plage d'environ 0,5 Hz à environ 5 Hz, de sorte que le rapport de ladite deuxième valeur de courant de soudage I2 sur ladite première valeur de courant de soudage I1 soit maintenu dans une plage d'environ 1,05 à environ 1,20.

20. Procédé de soudage à l'arc MAG ou MIG suivant la revendication 19, comprenant en outre la commutation à une fréquence F entre un premier et un deuxième signal de réglage de vitesse d'alimentation en fil Im1 et Im2 et entre un premier et un deuxième signal de réglage de tension d'arc Vs1 et Vs2, la génération d'un signal de commande de tension d'arc Cm2 à partir de la différence entre le signal de réglage de tension d'arc Vs1 et un signal de détection de tension d'arc Vd, l'activation du premier groupe de courant pulsé en contrôlant une fréquence d'impulsion f31, une durée d'impulsion TP31, une valeur de courant d'arc de base IB31 ou une valeur de courant pulsé IP31 à l'aide dudit signal de commande de tension d'arc Cm2 et l'activation du deuxième groupe de courant pulsé en contrôlant une fréquence d'impulsion f32, une durée d'impulsion TP32, une valeur de courant de base IB32 ou une valeur de courant pulsé IP32 à l'aide dudit signal de commande de tension d'arc Cm2 obtenu de la différence entre le signal de réglage de tension d'arc Vs2 et un signal de détection de tension d'arc Vd.

21. Procédé de soudage à l'arc MAG ou MIG suivant la revendication 19, comprenant en outre la mémorisation des deuxièmes valeurs de réglage de tension d'arc Vs2 correspondant aux premières valeurs de réglage de tension d'arc Vs1 pour une pluralité de deuxièmes valeurs de réglage de la vitesse d'alimentation en fil Im2, la lecture de la deuxième valeur de réglage de tension d'arc Vs2 correspondant à la première valeur prédéterminée de réglage de tension d'arc Vs1 et l'activation des premier et deuxième groupes de courant pulsé.

22. Procédé de soudage à l'arc MAG ou MIG suivant la revendication 19, comprenant en outre la mémorisation des premières valeurs de réglage de tension d'arc Vs1 correspondant à chacune des valeurs d'une pluralité de premières valeurs de réglage de la vitesse d'alimentation en fil Im1, la mémorisation de chacune des deuxièmes valeurs de réglage de tension d'arc Vs2 correspondant à chacune des premières valeurs de réglage de tension d'arc Vs1 pour des deuxièmes valeurs respectives de réglage de la vitesse d'alimentation en fil Im2, la lecture de la première valeur de réglage de tension d'arc Vs1 correspondant à la première valeur prédéterminée de vitesse d'alimentation en fil Im1 et de la deuxième valeur de réglage de tension d'arc Vs2 correspondant à la première valeur prédéterminée de réglage de tension d'arc Vs1 et l'activation des premier et deuxième groupes de courant pulsé.

23. Procédé de soudage à l'arc MAG ou MIG suivant la revendication 1, dans lequel ladite fréquence de commutation F et une différence de longueur d'arc Le entre ladite première longueur d'arc Lt et ladite deuxième longueur d'arc Lr sont réglées dans une plage définie par un graphique ayant un axe des abscisses représentant ladite fréquence de commutation F et un axe des ordonnées représentant ladite différence de longueur d'arc Le, ladite plage étant définie par une aire située au-dessus d'une courbe dessinée sur ledit graphique, ladite courbe étant définie par une ligne reliant un premier point situé en F = 0,5 HZ et Le = 2,5 mm, un deuxième point situé en F = 12 Hz et Le = 1,0 mm et un troisième point situé en F = 25 Hz et Le = 0,5 mm.

24. Procédé de soudage à l'arc MAG ou MIG suivant la revendication 23, dans lequel ladite différence de longueur d'arc Le est réglée à une valeur qui est supérieure à 3 mm et est située au-dessus d'une ligne reliant lesdits premier et troisième points, ladite fréquence de commutation F est dans une plage de 0,5 Hz à 15 Hz et on effectue une soudure d'aluminium en obtenant un cordon de soudure d'aluminium ayant une forme de vagues régulières.

25. Procédé de soudage à l'arc MAG ou MIG suivant la revendication 23, dans lequel ladite différence de longueur d'arc Le est réglée à une valeur qui est située au-dessus d'une ligne reliant lesdits premier et troisième points, ladite fréquence de commutation F est dans une plage de 0,5 Hz à 15 Hz et on effectue une soudure de bout avec un écartement maximum de 1,5 mm à une vitesse de soudage de 100 cm/min, ladite vitesse de soudage diminuant de 100 cm/min à 30 cm/min lorsque l'écartement maximum augmente de 1,5 mm à 3 mm.

26. Procédé de soudage à l'arc MAG ou MIG suivant la revendication 23, dans lequel ladite différence de longueur d'arc Le est réglée à une valeur qui est située au-dessus d'une ligne reliant lesdits premier et troisième points, ladite fréquence de commutation F est dans une plage de 0,5 Hz à 15 Hz et on effectue une soudure d'angle à recouvrement avec un écartement de recouvrement maximum de 2 mm à une vitesse de soudage de 100 cm/min, ladite vitesse de soudage diminuant de 100 cm/min à 30 cm/min lorsque l'écartement de recouvrement maximum augmente de 2 mm à 3 mm.

27. Procédé de soudage à l'arc MAG ou MIG suivant la revendication 23, dans lequel ladite différence de longueur d'arc Le est réglée à une valeur qui est située au-dessus d'une ligne reliant lesdits premier et troisième points, ladite fréquence de commutation F est dans une plage de 0,5 Hz à 15 Hz et on effectue une soudure d'aluminium, une masse d'aluminium fondu formée étant agitée afin de produire un cordon de soudure ayant un grain fin, réduisant ainsi les crevasses de solidification dudit cordon de soudure.

28. Procédé de soudage à l'arc MAG ou MIG suivant la revendication 23, dans lequel ladite fréquence de commutation F est dans une plage de 0,5 Hz à 15 Hz, ladite différence de longueur d'arc Le est réglée à une valeur qui est située au-dessus d'une ligne reliant lesdits premier et troisième points et on effectue une soudure d'acier inoxydable, une masse d'acier inoxydable fondu formée étant agitée afin de produire un cordon de soudure ayant un grain fin, réduisant ainsi les crevasses de solidification et améliorant la précision du test non destructif dudit cordon de soudure.

29. Procédé de soudage à l'arc MAG ou MIG suivant la revendication 23, dans lequel ladite fréquence de commutation F est dans une plage de 0,5 Hz à 25 Hz, ladite différence de longueur d'arc Le est réglée à une valeur qui est située au-dessus d'une ligne reliant lesdits premier et troisième points et on effectue une soudure d'aluminium, une masse d'aluminium fondu étant agitée afin d'éviter l'apparition de porosité dans un cordon de soudure résultant.

30. Appareil de soudage à l'arc MAG ou MIG à impulsions pour effectuer une opération de soudage à l'arc en appliquant un courant de soudage pulsé tout en commutant en même temps celui-ci entre un premier groupe de courant pulsé (P1) afin de générer une courte longueur d'arc et un deuxième groupe de courant pulsé (P2) afin de générer une grande longueur d'arc, ledit appareil comprenant:

un circuit de détection de tension d'arc (VD) pour détecter une valeur de tension d'arc et produire un signal de détection de tension d'arc (Vd) correspondant à celle-ci;
un circuit de réglage de tension d'arc (VS) pour régler une valeur de tension d'arc en fonction de conditions de soudage et produire un signal de réglage de tension d'arc (Vs) correspondant à celle-ci;
un circuit de comparaison (CM2) pour comparer ledit signal de détection de tension d'arc (Vd) et ledit signal de réglage de tension d'arc (Vs) et exprimer une différence entre lesdits deux signaux sous la forme d'un signal de commande de tension d'arc;
un circuit de génération d'un signal de commande de condition d'impulsion (IPB) pour générer un signal de référence de commande de condition d'impulsion (Ipb) pour commander une condition présélectionnée parmi quatre conditions de commande d'impulsions en commun avec lesdits premier et deuxième groupes de courant pulsé (P1), (P2) suivant ledit signal de commande de tension d'arc (Cm2), lesdites quatre conditions de commande d'impulsions comprenant la fréquence d'impulsion, la largeur d'impulsion, la valeur de courant de base et la valeur de courant de pointe;
un premier circuit de réglage de courant pulsé (IS1) pour régler, pour ledit premier groupe de courant pulsé (P1), les trois autres conditions de commande d'impulsions qui n'ont pas été présélectionnées et pour exprimer des signaux de réglage du premier groupe de courant pulsé (P1) correspondant auxdites conditions restantes de commande d'impulsions;
un deuxième circuit de réglage de courant pulsé (IS2) pour régler, pour ledit deuxième groupe de courant pulsé (P2), les trois autres conditions de commande d'impulsions qui n'ont pas été présélectionnées et pour exprimer des signaux de réglage du deuxième groupe de courant pulsé (P2) incluant des signaux de réglage correspondant auxdites conditions restantes de commande d'impulsions;
un circuit de commutation (HL) pour générer un signal de commutation (H1) pour commuter lesdits premier et deuxième circuits de réglage de courant pulsé (IS1), (IS2) en alternance à une fréquence allant de 0,5 à 25 Hz;
un circuit de génération d'un signal de fréquence d'impulsion afin de générer un signal de fréquence d'impulsion (Vf1, Vf2) en réaction soit au signal de référence de commande de fréquence d'impulsion (Fp3) s'il y a une sortie dudit circuit de génération d'un signal de commande de condition d'impulsion (IPB), ou au signal de réglage de fréquence d'impulsion (Fp) produit en alternance par chacun desdits premier et deuxième circuits de réglage de courant pulsé (IS1), (IS2), si ledit signal de commande de fréquence d'impulsion (Vf3) n'est pas produit par ledit circuit de génération d'un signal de commande de condition d'impulsion (IPB);

un circuit de génération d'un signal de fréquence et de largeur d'impulsion (DF(3)) pour produire un signal de fréquence et de largeur d'impulsion (Df3) en réaction au signal de commande de fréquence d'impulsion (Vf3) et au signal de réglage de largeur d'impulsion (Tp) si le signal de référence de commande de fréquence d'impulsion (Fp3) est produit par ledit circuit de génération d'un signal de commande de condition d'impulsion (IPB),

au signal de fréquence d'impulsion (Vf1, Vf2) et au signal de commande de largeur d'impulsion (Tp3) si le signal de commande de largeur d'impulsion (Tp3) est produit par ledit circuit de génération d'un signal de commande de condition d'impulsion (IPB), ou

au signal de fréquence d'impulsion (Vf1, Vf2) et au signal de réglage de largeur d'impulsion (Tp) si le signal de commande de courant de pointe (Ip3) ou le signal de commande de courant de base (Ib3) est produit par ledit circuit de génération d'un signal de commande de condition d'impulsion (IPB);

un circuit de commande de courant pulsé pour produire en alternance un premier signal de commande d'impulsion (Pf1) et un deuxième signal de commande d'impulsion (Pf2) en réaction

au signal de fréquence et de largeur d'impulsion (Df3), au signal de réglage de courant de pointe (Ip) et au signal de réglage de courant de base (Ib) si le signal d référence de commande de fréquence d'impulsion (Fp3) ou le signal de commande de largeur d'impulsion (Tp3) est produit par ledit circuit de génération d'un signal de commande de condition d'impulsion,

au signal de fréquence et de largeur d'impulsion (Df3), au signal de commande du courant de pointe (Ip3) et au signal de réglage du courant de base (Ib) si le signal de commande du courant de pointe (Ip3) est produit par ledit circuit de génération d'un signal de commande de condition d'impulsion (IPB), ou

au signal de fréquence et de largeur d'impulsion (Df3), au signal de réglage du courant de pointe (Ip) et au signal de commande du courant de base (Ib3) si le signal de commande du courant de base (Ib3) est produit par ledit circuit de génération d'un signal de commande de condition d'impulsion (IPB); et

un circuit de commande de source de puissance de soudage (PS) pour produire le premier groupe de courant pulsé (P1) lorsque le premier signal de commande d'impulsion (Pf1) est produit et le deuxième groupe de courant pulsé (P2) lorsque le deuxième signal de commande d'impulsion (Pf2) est produit par ledit circuit de commande de courant pulsé.

31. Appareil de soudage à l'arc MAG ou MIG à impulsions suivant la revendication 30, dans lequel ledit circuit de génération d'un signal de commande de condition d'impulsion (IPB) génère un signal de référence de commande de fréquence d'impulsion (Fp3) pour commander la fréquence d'impulsion en commun avec lesdits premier et deuxième groupes de courant pulsé (P1), (P2) en tant que ledit signal de commande de condition d'impulsion (Ipb) et ledit circuit de génération d'un signal de fréquence d'impulsion (Vf1, Vf2) génère un signal de fréquence d'impulsion (Vf1, Vf2) en réaction audit signal de référence de commande de fréquence d'impulsion (Fp3) qui y est introduit.

32. Appareil de soudage à l'arc MAG ou MIG à impulsions suivant la revendication 30, dans lequel ledit circuit de génération d'un signal de commande de condition d'impulsion (IPB) génère un signal de commande de largeur d'impulsion (Tp3) pour commander la largeur d'impulsion en commun avec lesdits premier et deuxième groupes de courant pulsé (P1), (P2) en tant que ledit signal de commande de condition d'impulsion (Ipb) et ledit circuit de génération d'un signal de fréquence et de largeur d'impulsion (DF(3)) produit un signal de fréquence et de largeur d'impulsion (DF3) en réaction audit signal de fréquence d'impulsion (Vf1, Vf2) dudit circuit de génération d'un signal de fréquence d'impulsion (Vf1, Vf2) et audit signal de commande de largeur d'impulsion (Pp3) dudit circuit de génération d'un signal de commande de condition d'impulsion (IPB).

33. Appareil de soudage à l'arc MAG ou MIG à impulsions suivant la revendication 30, dans lequel ledit circuit de génération d'un signal de commande de condition d'impulsion (IPB) génère un signal de commande de valeur de courant de pointe pour commander la valeur du courant de pointe en commun avec lesdits premier et deuxième groupes de courant pulsé (P1), (P2) en tant que signal de commande de condition d'impulsion (Ipb).

34. Appareil de soudage à l'arc MAG ou MIG à impulsions suivant la revendication 30, dans lequel ledit circuit de génération d'un signal de commande de condition d'impulsion (IPB) génère un signal de commande de valeur de courant de base pour commander le courant de base en commun avec lesdits premier et deuxième groupes de courant pulsé (P1), (P2) en tant que signal de commande de condition d'impulsion (Ipb).

35. Appareil de soudage à l'arc MAG ou MIG à impulsions pour effectuer une opération de soudage à l'arc en appliquant un courant de soudage pulsé qui alterne entre un premier groupe de courant pulsé (P1) afin de générer une courte longueur d'arc et un deuxième groupe de courant pulsé (P2) afin de générer une grande longueur d'arc, ledit appareil comprenant:

un circuit de détection de tension d'arc (VD) pour détecter une valeur de tension d'arc et produire un signal de détection de tension d'arc (Vd) correspondant à celle-ci;

un premier circuit de réglage de tension d'arc (VS1) pour régler une valeur de tension d'arc en fonction de conditions de soudage et produire un premier signal de réglage de tension d'arc (Vs1) correspondant à celle-ci;

un deuxième circuit de réglage de tension d'arc (VS2) pour régler une valeur de tension d'arc en fonction de conditions de soudage et produire un deuxième signal de réglage de tension d'arc (Vs2) correspondant à celle-ci;

un circuit de comparaison (CM2) pour comparer ledit signal de détection de tension d'arc (Vd) et ledit signal de réglage de tension d'arc (Vs) et exprimer une différence entre lesdits deux signaux sous la forme d'un signal de commande de tension d'arc (Cm2);

un circuit de génération d'un signal de commande de condition d'impulsion (IPB) pour générer un signal de commande de condition d'impulsion (Ipb) pour commander une condition présélectionnée parmi quatre conditions de commande d'impulsions en commun avec lesdits premier et deuxième groupes de courant pulsé (P1), (P2) suivant ledit signal de commande de tension d'arc (Cm2), lesdites quatre conditions de commande d'impulsions comprenant la fréquence d'impulsion, la largeur d'impulsion, la valeur de courant de base et la valeur de courant de pointe;

un circuit de réglage de courant pulsé (IS) pour régler, pour ledit premier groupe de courant pulsé (P1) et ledit deuxième groupe de courant pulsé (P2), les trois autres conditions de commande d'impulsions qui n'ont pas été présélectionnées et pour exprimer des signaux de réglage du groupe de courant pulsé incluant des signaux de réglage correspondant auxdites trois conditions restantes de commande d'impulsions autres que ledit signal de commande de condition d'impulsion (Ipb);

un circuit de commutation (HL) pour générer un signal de commutation (H1) pour commuter lesdits premier et deuxième circuits de réglage de courant pulsé (IS1), (IS2) en alternance à une fréquence allant de 0,5 à 25 Hz;

un circuit de génération d'un signal de fréquence d'impulsion (Vf1, Vf2) pour générer un signal de fréquence d'impulsion (Vf1, Vf2) en réaction soit au signal de référence de commande de fréquence d'impulsion (Fp3) s'il est produit par ledit circuit de génération d'un signal de commande de condition d'impulsion (IPB), ou au signal de réglage de fréquence d'impulsion (Fp) produit par ledit circuit de réglage de courant pulsé (IS), s'il n'est pas produit par ledit circuit de génération d'un signal de commande de condition d'impulsion (IPB);

un circuit de génération d'un signal de fréquence et de largeur d'impulsion (DF(3)) pour produire un signal de fréquence et de largeur d'impulsion (Df3) en réaction au signal de commande de fréquence d'impulsion (Vf3) et au signal de réglage de largeur d'impulsion (Tp) si le signal de référence de commande de fréquence d'impulsion (Fp3) est produit par ledit circuit de génération d'un signal de commande de condition d'impulsion (IPB), ou

au signal de fréquence d'impulsion (Vf1, Vf2) et au signal de commande de largeur d'impulsion (Tp3) si le signal de commande de largeur d'impulsion (Tp3) est produit par ledit circuit de génération d'un signal de commande de condition d'impulsion (IPB), ou

au signal de fréquence d'impulsion (Vf1, Vf2) et au signal de réglage de largeur d'impulsion (Tp) si le signal de commande de courant de pointe (Ip3) ou le signal de commande de courant de base (Ib3) est produit par ledit circuit de génération d'un signal de commande de condition d'impulsion (IPB);

un circuit de commande de courant pulsé pour produire en alternance un premier signal de commande d'impulsion (Pf1) et un deuxième signal de commande d'impulsion (Pf2) en alternance en réaction

au signal de fréquence et de largeur d'impulsion (Df3), au signal de réglage de courant de pointe (Ip) et au signal de réglage de courant de base (Ib) si le signal de référence de commande de fréquence d'impulsion (Fp3) ou le signal de commande de largeur d'impulsion (Tp3) est produit par ledit circuit de génération d'un signal de commande de condition d'impulsion (IPB), ou

au signal de fréquence et de largeur d'impulsion (Df3), au signal de commande du courant de pointe (Ip3) et au signal de réglage du courant de base (Ib) si le signal de commande du courant de pointe (Ip3) est produit par ledit circuit de génération d'un signal de commande de condition d'impulsion (IPB), ou

au signal de fréquence et de largeur d'impulsion (Df3), au signal de réglage du courant de pointe (Ip) et au signal de commande du courant de base (Ib3) si le signal de commande du courant de base (Ib3) est produit par ledit circuit de génération d'un signal de commande de condition d'impulsion (IPB); et

un circuit de commande de source de puissance de soudage (PS) pour produire le premier groupe de courant pulsé (P1) lorsque le premier signal de commande d'impulsion (Pf1) est produit par ledit circuit de commande de courant pulsé et le deuxième groupe de courant pulsé (P2) lorsque le deuxième signal de commande d'impulsion (Pf2) est produit par ledit circuit de commande de courant pulsé.

**36.** Appareil de soudage à l'arc MAG ou MIG à impulsions suivant la revendication 35, dans lequel ledit circuit de réglage de courant pulsé (IS) comprend:

un premier circuit de réglage de courant pulsé (IS1) pour régler, pour ledit premier groupe de courant pulsé (P1), les trois autres conditions de commande d'impulsions qui n'ont pas été présélectionnées et pour exprimer des signaux de réglage du premier groupe de courant pulsé (P1) incluant des signaux de réglage correspondant auxdites trois conditions restantes autres que ledit signal de commande de condition d'impulsion (Ipb);

un deuxième circuit de réglage de courant pulsé (IS2) pour régler, pour ledit deuxième groupe de courant pulsé (P2), les trois autres conditions de commande d'impulsions qui n'ont pas été présélectionnées et pour exprimer des signaux de réglage du deuxième groupe de courant pulsé (P2) incluant des signaux de réglage correspondant auxdites trois conditions restantes autres que ledit signal de commande de condition d'impulsion (Ipb); et

ledit circuit de génération d'un signal de fréquence et de largeur d'impulsion (DF(3)) génère

un signal de fréquence et de largeur d'impulsion (Df3), en réaction au signal de commande de fréquence d'impulsion (Vf3) et au signal de réglage de largeur d'impulsion (Tp) si le signal de référence de commande de fréquence d'impulsion (Fp3) est produit par ledit circuit de génération d'un signal de commande de condition d'impulsion (IPB), ou

au signal de fréquence d'impulsion (Vf1, Vf2) et au signal de commande de largeur d'impulsion (Tp3) si le signal de commande de largeur d'impulsion (Tp3) est produit par ledit circuit de génération d'un signal de commande de condition d'impulsion (IPB), ou

au signal de fréquence d'impulsion (Vf1, Vf2) et au signal de réglage de largeur d'impulsion (Tp) si le signal de commande de courant de pointe (Ip3) ou le signal de commande de courant de base (Ib3) est produit par ledit circuit de génération d'un signal de commande de condition d'impulsion (IPB); et

ledit circuit de commutation (HL) produit un signal de commutation (H1) pour commuter en alternance entre lesdits premier et deuxième circuits de réglage de tension d'arc (VS1), (VS2) et entre lesdits premier et deuxième circuits de réglage de courant pulsé (IS1), (IS2).

**37.** Appareil de soudage à l'arc MAG ou MIG à impulsions suivant la revendication 35, dans lequel ledit circuit de génération d'un signal de commande de condition d'impulsion (IPB) génère un signal de référence de commande de fréquence d'impulsion (Fp3) pour commander la fréquence d'impulsion en commun avec lesdits premier et deuxième groupes de courant pulsé (P1), (P2) en tant que signal de commande de condition d'impulsion (Ipb) et ledit circuit de génération d'un signal de fréquence d'impulsion (Vf1, Vf2) génère un signal de fréquence d'impulsion (Vf1, Vf2) en réaction audit signal de référence de commande de fréquence d'impulsion (Fp3) appliqué à celui-ci.

**38.** Appareil de soudage à l'arc MAG ou MIG à impulsions suivant la revendication 35, dans lequel ledit circuit de génération d'un signal de commande de condition d'impulsion (IPB) génère un signal de référence de commande de largeur d'impulsion (Tp3) pour commander la largeur d'impulsion en commun avec lesdits premier et deuxième groupes de courant pulsé (P1), (P2) en tant que signal de commande de condition d'impulsion (Ipb) et ledit circuit de génération d'un signal de fréquence et de largeur d'impulsion (DF(3)) génère un signal de fréquence et de largeur d'impulsion (Df3) en réaction audit signal de fréquence d'impulsion (Vf1, Vf2) dudit circuit de génération d'un signal de fréquence d'impulsion (Vf1, Vf2) et audit signal de commande de largeur d'impulsion (Tp3) dudit circuit de génération d'un signal de commande de condition d'impulsion (IPB).

**39.** Appareil de soudage à l'arc MAG ou MIG à impulsions suivant la revendication 35, dans lequel ledit circuit de génération d'un signal de commande de condition d'impulsion (IPB) génère un signal de commande de valeur de courant de pointe pour commander la valeur du courant de pointe en commun avec lesdits premier et deuxième groupes de courant pulsé (P1), (P2) en tant que signal de commande de condition d'impulsion (Ipb).

**40.** Appareil de soudage à l'arc MAG ou MIG à impulsions suivant la revendication 35, dans lequel ledit circuit de génération d'un signal de commande de condition d'impulsion (IPB) génère un signal de commande de valeur de courant de base pour commander la valeur du courant de base en commun avec lesdits premier et deuxième groupes de courant pulsé (P1), (P2) en tant que signal de commande de condition d'impulsion (Ipb).

**41.** Appareil de soudage à l'arc MAG ou MIG à impulsions suivant la revendication 35, comprenant en outre un premier circuit de réglage de la vitesse d'alimentation en fil (IM1) pour produire un premier signal de réglage de la vitesse d'alimentation en fil (Im1) et un deuxième circuit de réglage de la vitesse d'alimentation en fil (IM2) pour produire un deuxième signal de réglage de la vitesse d'alimentation en fil (Im2) et un circuit de commutation de la vitesse d'alimentation en fil (SW7) envoyant à un circuit de commande de la vitesse d'alimentation en fil (WC) un signal de réglage de la vitesse d'alimentation en fil (S7) obtenu par commutation entre ledit premier signal de réglage de la vitesse d'alimentation en fil (lm1) et ledit deuxième signal de réglage de la vitesse d'alimentation en fil (lm2).

Fig. 1

Fig. 2

Fig. 3

Fig. 4(A)

Fig. 4(B)

Fig. 4(C)

Fig. 5(A)

Fig. 5(B)

*Fig. 6*

*Fig. 7*

Fig. 8

Fig. 9

Fig. 10

Fig. 11

Fig. 12

Fig. 13

Fig. 14(A)

Fig. 14(B)

# F i g. 15

Fig. 16

Fig. 17

# F i g. 18

Fig. 19

*Fi g. 20(A)*

*Fi g. 20(B)*

*Fi g. 20(C)*

*Fig. 21*

## Fig. 22

## Fig. 23

## Fig. 26

Fig. 24

Fig. 25

Fig. 27

EP 0 478 796 B1

Fig. 28

Fig. 29

Fig. 30

Fig. 31

Fig. 32

Fig. 33

Fig. 34

Fig. 35

Fig. 36

Fig. 37

Fig. 38

Fig. 39

Fig. 40

Fig. 41

Fig. 42

| Decision: Wn ⟶ Un | |
|---|---|
| W n | w1, w2, ⋯, w n |
| U n | u1, u2, ⋯, u n |
| Decision: Un ⟶ Vn | |
| U n | u1, u2, ⋯, u n ⟶ |
| V n | v1, v2, ⋯, v n |

Fig. 43

| Decision: Wn ⟶ Un | |
|---|---|
| W n | w1, w2, ⋯, w n |
| U n | u1, u2, ⋯, u n |
| Decision: Xn, Un ⟶ Vn | |
| X n / U n | x1, x2, ⋯, x n |
| u 1 | v11, v12, ⋯, v1n |
| u 2 | v21, v22, ⋯, v2n |
| ⋮ | ⋮ ⋮ ⋮ |
| u n | vn1, vn2, ⋯, vnn |

Fig. 44

Fig. 47

Fig. 45

Fig. 46

Fig. 48

Fig. 49

Fig. 50

Fig. 51

Fig. 52

Fig. 53

Fig.54 (A)  Fig.54 (B)  Fig.54(C)

Fig.54 (D)  Fig.54 (E)

EP 0 478 796 B1

Fig.55 (A)  Fig.55 (B)  Fig.55 (C)  Fig.55 (D)

Fig. 56 (A)     Fig. 56 (B)     Fig. 56 (C)

Fig. 56 (D)     Fig. 56 (E)

EP 0 478 796 B1

Fig. 57 (A)

Fig. 57 (B)

Fig. 57 (C)

Fig. 57 (D)

Fig. 58 (A)

Fig. 58 (B)

Fig. 59 (A)

Fig. 59 (B)

## Fig. 60

## Fig. 61

Fig. 62

Fig. 63

*Fig. 64*

*Fig. 65*

Fig. 66

Fig. 67

Fig. 68 (A)

Fig. 68 (B) $\frac{PN}{[mm]}$

Fig. 68 (C)

Fig. 69 (A)

$df_1$    $df_2$    $df_3$

Fig. 69 (B)

Fig. 70 (A)

Fig. 70 (B)

Fig. 71

*Fig. 72*

*Fig. 73*

Fig. 74

Fig. 75

Fig. 76

Fig. 77

*Fig. 78*

*Fig. 79*

Fig. 80

Fig. 81

Fig. 82

Fig. 83

EP 0 478 796 B1

Fig. 84

Fig. 85

EP 0 478 796 B1

124

EP 0 478 796 B1

Fig. 86

# Fig. 87

Fig. 88

Fig. 89

Fig. 90

## Fig. 91

Fig. 92

Fig. 93

*Fig. 94*

*Fig. 95*

Fig. 96

Fig. 97

Fig. 98

Fig. 99

EP 0 478 796 B1

Fig. 100

Fig. 101

*Fig. 102*

*Fig. 103*

EP 0 478 796 B1

Fig. 104

139

Fig. 105

Fig. 106

Fig. 107

Fig. 108

Fig. 109

Fig. 110

EP 0 478 796 B1

Fig. 111

Fig. 112

Fig. 113